(19) Europäisches Patentamt
European Patent Office
Office européen des brevets

(11) **EP 4 554 206 A1**

(12) **EUROPEAN PATENT APPLICATION**
published in accordance with Art. 153(4) EPC

(43) Date of publication:
**14.05.2025 Bulletin 2025/20**

(21) Application number: **22949718.5**

(22) Date of filing: **04.07.2022**

(51) International Patent Classification (IPC):
*H04N 19/105* (2014.01)    *H04N 19/107* (2014.01)
*H04N 19/50* (2014.01)     *H04N 19/119* (2014.01)

(52) Cooperative Patent Classification (CPC):
H04N 19/105; H04N 19/107; H04N 19/119;
H04N 19/50

(86) International application number:
**PCT/CN2022/103734**

(87) International publication number:
**WO 2024/007128 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WANG, Fan
Dongguan, Guangdong 523860 (CN)**

(74) Representative: **Taor, Simon Edward William et al
Venner Shipley LLP
200 Aldersgate
London EC1A 4HD (GB)**

(54) **VIDEO ENCODING AND DECODING METHODS, APPARATUS, AND DEVICES, SYSTEM, AND STORAGE MEDIUM**

(57)    A video coding method and apparatus, a device, a system, and a storage medium are provided. In the disclosure, a first weight derivation mode and $K$ first prediction modes are taken as a combination, so that the first weight derivation mode and the $K$ first prediction modes are indicated in the form of a combination. In this way, there is no need to transmit separately syntax corresponding to the $K$ first prediction modes and syntax corresponding to the first weight derivation mode in a bitstream, which can save codewords, thereby improving encoding efficiency. In addition, in the disclosure, even if a current-component block corresponds to multiple first-component coding units (CU) and prediction modes for the multiple first-component CUs are not completely the same, the first weight derivation mode and the $K$ first prediction modes in a first combination can still be determined accurately, thereby realizing accurate prediction of the current-component block by using the first weight derivation mode and the $K$ first prediction modes.

```
┌─────────────────────────────────────┐
│ DECODE BITSTREAM TO DETERMINE FIRST  │──── S101
│           COMBINATION                │
└─────────────────────────────────────┘
                   │
                   ▼
┌─────────────────────────────────────┐
│ PREDICT CURRENT-COMPONENT BLOCK      │
│ ACCORDING TO FIRST WEIGHT DERIVATION │──── S102
│ MODE AND K FIRST PREDICTION MODES, TO│
│ OBTAIN PREDICTION VALUE OF CURRENT-  │
│ COMPONENT BLOCK                      │
└─────────────────────────────────────┘
```

FIG. 16

EP 4 554 206 A1

**Description**

TECHNICAL FIELD

This disclosure relates to the field of video coding technology, and more particularly, to a video coding method and apparatus, a device, a system, and a storage medium.

BACKGROUND

Digital video technology can be applied to various video apparatuses, such as digital televisions, smart phones, computers, electronic readers, or video players, etc. With development of video technology, the data amount in video data is large. In order to facilitate transmission of video data, the video apparatus implements video compression technology, so that video data can be transmitted or stored more efficiently.

There is temporal redundancy or spatial redundancy in a video, and redundancy in the video can be eliminated or reduced through prediction, thereby improving compression efficiency. Currently, in order to improve prediction effect, multiple prediction modes can be used to predict a current block. However, when predicting the current block by using multiple prediction modes, more information needs to be transmitted in a bitstream, and as a result, an encoding cost will be increased.

SUMMARY

Embodiments of the disclosure provide a video coding method and apparatus, a device, a system, and a storage medium, which can reduce encoding cost.

In a first aspect, a video decoding method is provided in the disclosure. The method is applied to a decoder. The method includes the following. A bitstream is decoded to determine a first combination, where the first combination includes a first weight derivation mode and K first prediction modes, and K is a positive integer and K > 1. Prediction is performed on a current-component block according to the first weight derivation mode and the K first prediction modes, to obtain a prediction value of the current-component block, where the current-component block includes a second-component block or a third-component block.

In a second aspect, a video encoding method is provided in embodiments of the disclosure. The method includes the following. A first combination is determined, where the first combination includes a first weight derivation mode and $K$ first prediction modes, and K is a positive integer and K > 1. Prediction is performed on a current-component block according to the first weight derivation mode and the K first prediction modes, to obtain a prediction value of the current-component block, where the current-component block includes a second-component block or a third-component block.

In a third aspect, a video decoding apparatus is provided in the disclosure. The apparatus is configured to perform the method described above in the first aspect or various implementations of the first aspect. Specifically, the apparatus includes functional units for performing the method described above in the first aspect or various implementations of the first aspect.

In a fourth aspect, a video encoding apparatus is provided in the disclosure. The apparatus configured to perform the method described above in the second aspect or various implementations of the second aspect. Specifically, the apparatus includes functional units for performing the method described above in the second aspect or various implementations of the second aspect.

In a fifth aspect, a video decoder is provided. The video decoder includes a processor and a memory. The memory is configured to store computer programs. The processor is configured to invoke and execute the computer programs stored in the memory, so as to perform the method described above in the first aspect or various implementations of the first aspect.

In a sixth aspect, a video encoder is provided. The video encoder includes a processor and a memory. The memory is configured to store computer programs. The processor is configured to invoke and execute the computer programs stored in the memory, so as to perform the method described above in the second aspect or various implementations of the second aspect.

In a seventh aspect, a video coding system is provided. The video coding system includes a video encoder and a video decoder. The video decoder is configured to perform the method described above in the first aspect or various implementations of the first aspect, and the video encoder is configured to perform the method described above in the second aspect or various implementations of the second aspect.

In an eighth aspect, a chip is provided. The chip is configured to implement the method described above in any one of the first aspect to the second aspect or in various implementations of the first aspect and the second aspect. Specifically, the chip includes a processor. The processor is configured to invoke and execute computer programs from a memory, to cause a device equipped with the chip to perform the method described above in any one of the first aspect to the second aspect or in various implementations of the first aspect and the second aspect.

In a ninth aspect, a computer-readable storage medium is provided. The computer-readable storage medium is configured to store computer programs which are operable with a computer to perform the method described above in any one of the first aspect to the second aspect or in various implementations of the first aspect and the second aspect.

In a tenth aspect, a computer program product is provided. The computer program includes computer program instructions which are operable with a computer to perform the method described above in any one of the first aspect to the second aspect or in various implementations of the first aspect and the second aspect.

In an eleventh aspect, a computer program is provided. The computer program, when executed by a computer, is operable with the computer to perform the method described above in any one of the first aspect to the second aspect or in various implementations of the first aspect and the second aspect.

In a twelfth aspect, a bitstream is provided. The bitstream is generated based on the method described above in the second aspect. Optionally, the bitstream includes a first index, where the first index indicates a first combination formed by one weight derivation mode and K prediction modes, and K is a positive integer and $K > 1$.

Based on the above technical solutions, in the disclosure, the first weight derivation mode and the K first prediction modes are taken as a combination, so that the first weight derivation mode and the K first prediction modes are indicated in the form of a combination. In this way, there is no need to transmit separately syntax corresponding to the K first prediction modes and syntax corresponding to the first weight derivation mode in a bitstream, which can save codewords, thereby improving encoding efficiency. In addition, in embodiments of the disclosure, even if the current-component block corresponds to multiple first-component CUs and prediction modes for the multiple first-component CUs are not completely the same, the first weight derivation mode and the K first prediction modes in a first combination can still be determined accurately, thereby realizing accurate prediction of the current-component block by using the first weight derivation mode and the K first prediction modes.

BRIEF DESCRIPTION OF THE DRAWINGS

FIG. 1 is a schematic block diagram of a video coding system according to embodiments of the disclosure.

FIG. 2 is a schematic block diagram of a video encoder according to embodiments of the disclosure.

FIG. 3 is a schematic block diagram of a video decoder according to embodiments of the disclosure.

FIG. 4 is a schematic diagram illustrating weight allocation.

FIG. 5 is a schematic diagram illustrating weight allocation.

FIG. 6A is a schematic diagram illustrating inter prediction.

FIG. 6B is a schematic diagram illustrating weighted inter prediction.

FIG. 7A is a schematic diagram illustrating intra prediction.

FIG. 7B is a schematic diagram illustrating intra prediction.

FIG. 8A to FIG. 8I each are a schematic diagram illustrating intra prediction.

FIG. 9 is a schematic diagram illustrating intra prediction modes.

FIG. 10 is a schematic diagram illustrating intra prediction modes.

FIG. 11 is a schematic diagram illustrating intra prediction modes.

FIG. 12 is a schematic diagram illustrating matrix-based intra prediction (MIP).

FIG. 13 is a diagram illustrating weighted prediction.

FIG. 14 is a schematic diagram illustrating matching of a first-component block.

FIG. 15 is a schematic diagram illustrating principles of cross-component linear model (CCLM) prediction according to embodiments of the disclosure.

FIG. 16 is a schematic flowchart of a video decoding method provided in an embodiment of the disclosure.

FIG. 17A to FIG. 17D each are a schematic diagram illustrating a manner for block partitioning.

FIG. 17E is a schematic diagram illustrating coding tree unit (CTU) partitioning.

FIG. 17F is a schematic diagram illustrating a manner for block partitioning of a luma component and a chroma component according to embodiments of the disclosure.

FIG. 18 is a schematic diagram illustrating a current-component block and blocks at specific locations according to embodiments of the disclosure.

FIG. 19A is a schematic diagram illustrating weight allocation.

FIG. 19B is another schematic diagram illustrating weight allocation.

FIG. 20 is a schematic flowchart of a video encoding method provided in an embodiment of the disclosure.

FIG. 21 is a schematic block diagram of a video decoding apparatus provided in an embodiment of the disclosure.

FIG. 22 is a schematic block diagram of a video encoding apparatus provided in an embodiment of the disclosure.

FIG. 23 is a schematic block diagram of an electronic device provided in embodiments of the disclosure.

FIG. 24 is a schematic block diagram of a video coding system provided in embodiments of the disclosure.

DETAILED DESCRIPTION

The disclosure can be applied to the field of picture coding, video coding, hardware video coding, dedicated circuit video coding, real-time video coding, etc. For example, the solution in the disclosure can be incorporated into audio video coding standards (AVS), such as H.264/audio video coding (AVC) standard, H.265/high efficiency video coding (HEVC) standard, and H.266/versatile video coding (WC) standard. Alternatively, the solution in the disclosure can be incorporated into other proprietary or industry standards, including ITU-TH.261, ISO/IECMPEG-1Visual, ITU-TH.262 or ISO/IECMPEG-2Visual, ITU-TH.263, ISO/IECMPEG-4Visual, ITU-TH.264 (also known as ISO/IECMPEG-4AVC), including scalable video coding (SVC) and multi-view video coding (MVC) extensions. It should be understood that the techniques in the disclosure are not limited to any particular coding standard or technology.

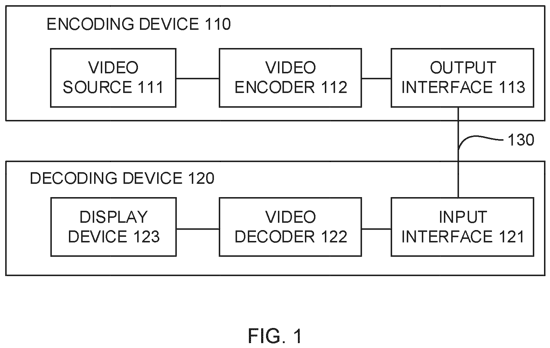

For ease of understanding, a video coding system in embodiments of the disclosure is firstly introduced with reference to FIG. 1.

FIG. 1 is a schematic block diagram of a video coding system according to embodiments of the disclosure. It should be noted that FIG. 1 is only an example, and the video coding system in embodiments of the disclosure includes but is not limited to that illustrated in FIG. 1. As illustrated in FIG. 1, the video coding system 100 includes an encoding device 110 and a decoding device 120. The encoding device is configured to encode (which can be understood as compress) video data to generate a bitstream, and transmit the bitstream to the decoding device. The decoding device is configured to decode the bitstream generated by the encoding device, to obtain decoded video data.

The encoding device 110 in embodiments of the disclosure can be understood as a device having a video encoding function, and the decoding device 120 can be understood as a device having a video decoding function, that is, the encoding device 110 and the decoding device 120 in embodiments of the disclosure include a wider range of devices, including smartphones, desktop computers, mobile computing devices, notebook (such as laptop) computers, tablet computers, set-top boxes, televisions, cameras, display devices, digital media players, video game consoles, vehicle-mounted computers, and the like.

In some embodiments, the encoding device 110 can transmit encoded video data (such as bitstream) to the decoding device 120 via a channel 130. The channel 130 can include one or more media and/or apparatuses capable of transmitting the encoded video data from the encoding device 110 to the decoding device 120.

In an example, the channel 130 includes one or more communication media that enable the encoding device 110 to transmit the encoded video data directly to the decoding device 120 in real-time. In this example, the encoding device 110 can modulate the encoded video data according to a communication standard and transmit the modulated video data to the decoding device 120. The communication medium includes a wireless communication medium, such as a radio frequency spectrum. Optionally, the communication medium can also include a wired communication medium, such as one or more physical transmission lines.

In another example, the channel 130 includes a storage medium that can store video data encoded by the encoding device 110. The storage medium includes a variety of local access data storage media, such as optical discs, digital versatile discs (DVDs), flash memory, and the like. In this example, the decoding device 120 can obtain the encoded video data from the storage medium.

In another example, the channel 130 can include a storage server that can store video data encoded by the encoding device 110. In this example, the decoding device 120 can download the stored encoded video data from the storage server. Optionally, the storage server can store the encoded video data and can transmit the encoded video data to the decoding device 120. For example, the storage server can be a web server (e.g., for a website), a file transfer protocol (FTP) server, and the like.

In some embodiments, the encoding device 110 includes a video encoder 112 and an output interface 113. The output interface 113 can include a modulator/demodulator (modem) and/or a transmitter.

In some embodiments, the encoding device 110 can further include a video source 111 in addition to the video encoder 112 and the input interface 113.

The video source 111 can include at least one of a video capture apparatus (for example, a video camera), a video archive, a video input interface, or a computer graphics system, where the video input interface is configured to receive video data from a video content provider, and the computer graphics system is configured to generate video data.

The video encoder 112 encodes the video data from the video source 111 to generate a bitstream. The video data can include one or more pictures or a sequence of pictures. The bitstream contains encoding information of a picture or a sequence of pictures. The encoding information can include encoded picture data and associated data. The associated data can include a sequence parameter set (SPS), a picture parameter set (PPS), and other syntax structures. The SPS can contain parameters applied to one or more sequences. The PPS can contain parameters applied to one or more pictures. The syntax structure refers to a set of zero or multiple syntax elements arranged in a specified order in the bitstream.

The video encoder 112 directly transmits the encoded video data to the decoding device 120 via the output interface 113. The encoded video data can also be stored on a storage medium or a storage server for subsequent reading by the decoding device 120.

In some embodiments, the decoding device 120 includes an input interface 121 and a video decoder 122.

In some embodiments, the decoding device 120 can further include a display device 123 in addition to the input interface 121 and the video decoder 122.

The input interface 121 includes a receiver and/or a modem. The input interface 121 can receive encoded video data via the channel 130.

The video decoder 122 is configured to decode the encoded video data to obtain decoded video data, and transmit the decoded video data to the display device 123.

The display device 123 displays the decoded video data. The display device 123 can be integrated together with the decoding device 120 or external to the decoding device 120. The display device 123 can include various display devices, such as a liquid crystal display (LCD), a plasma display, an organic light emitting diode (OLED) display, or other types of display devices.

In addition, FIG. 1 is only an example, and the technical solutions of embodiments of the disclosure are not limited to FIG. 1. For example, the technology of the disclosure can also be applied to one-sided video encoding or one-sided video decoding.

In the following, a video encoding framework in embodiments of the disclosure will be introduced.

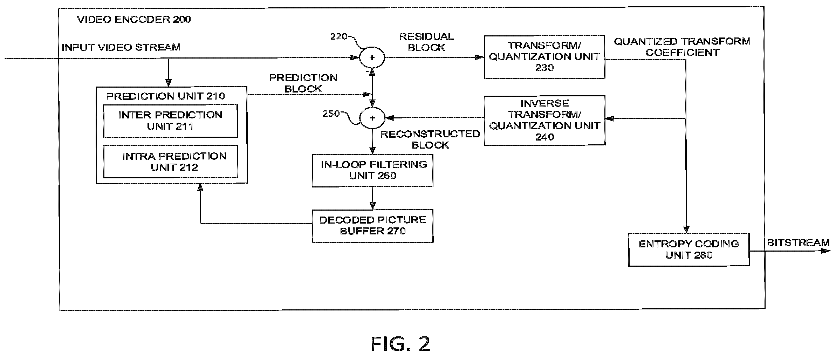

FIG. 2 is a schematic block diagram of a video encoder 200 according to embodiments of the disclosure. It should be understood that the video encoder 200 can be configured to perform lossy compression or lossless compression on a picture. The lossless compression can be visually lossless compression or mathematically lossless compression.

The video encoder 200 can be applied to picture data in luma-chroma (YCbCr, YUV) format. For example, a YUV ratio can be 4:2:0, 4:2:2, or 4:4:4, where Y represents luminance (Luma), Cb (U) represents blue chrominance, and Cr (V) represents red chrominance. U and V represent chrominance (Chroma) for describing colour and saturation. For example, in terms of color format, 4:2:0 represents that every 4 pixels have 4 luma components and 2 chroma components (YYYYCbCr), 4:2:2 represents that every 4 pixels have 4 luma components and 4 chroma components (YYYYCbCrCbCr), and 4:4:4 represents full pixel display (YYYYCbCrCbCrCbCrCbCr).

For example, the video encoder 200 reads video data, and for each picture in the video data, partitions the picture into several coding tree units (CTU). In some examples, the CTU can be called "tree block", "largest coding unit" (LCU), or "coding tree block" (CTB). Each CTU can be associated with a pixel block of the same size as the CTU within the picture. Each pixel can correspond to one luminance (luma) sample and two chrominance (chroma) samples. Thus, each CTU can be associated with one luma sample block and two chroma sample blocks. The CTU can have a size of 128×128, 64×64, 32×32, and so on. The CTU can be further partitioned into several coding units (CUs) for coding. The CU can be a rectangular block or a square block. The CU can be further partitioned into a prediction unit (PU) and a transform unit (TU), so that coding, prediction, and transformation are separated, which is more conducive to flexibility in processing. In an example, the CTU is partitioned into CUs in a quadtree manner, and the CU is partitioned into TUs and PUs in a quadtree manner.

The video encoder and video decoder can support various PU sizes. Assuming that a size of a specific CU is 2N×2N, the video encoder and video decoder can support PUs of 2N×2N or N×N for intra prediction, and support symmetric PUs of 2N×2N, 2N×N, N×2N, N×N, or similar size for inter prediction; and the video encoder and video decoder can also support asymmetric PUs of 2$N$×nU, 2$N$×nD, nL×2$N$, or nR×2$N$ for inter prediction.

In some embodiments, as illustrated in FIG. 2, the video encoder 200 can include a prediction unit 210, a residual unit 220, a transform/quantization unit 230, an inverse transform/quantization unit 240, a reconstruction unit 250, an in-loop filtering unit 260, a decoded picture buffer 270, and an entropy coding unit 280. It should be noted that the video encoder 200 can include more, fewer, or different functional components.

Optionally, in the disclosure, a current block can be referred to as a current CU or a current PU. A prediction block can be referred to as a prediction picture block or a picture prediction block. A reconstructed picture block can be referred to as a reconstructed block or a picture reconstructed block.

In some embodiments, the prediction unit 210 includes an inter prediction unit 211 and an intra prediction unit 212. Since there is a strong correlation between neighbouring samples in a video picture, intra prediction is used in the video coding technology to eliminate spatial redundancy between neighbouring samples. Since there is a strong similarity between neighbouring pictures in a video, inter prediction is used in the video coding technology to eliminate temporal redundancy between neighbouring pictures, thereby improving encoding efficiency.

The inter prediction unit 211 can be used for inter prediction. The inter prediction can include motion estimation and motion compensation. In inter prediction, reference can be made to picture information of different pictures. In inter prediction, motion information is used to find a reference block from a reference picture, and a prediction block is generated according to the reference block to eliminate temporal redundancy. A frame used for inter prediction can be a P frame and/or a B frame, where P frame refers to a forward prediction frame, and B frame refers to bidirectional prediction frame. In inter prediction, the motion information is used to find a reference block from a reference picture, and a prediction block is generated according to the reference block. The motion information includes a reference picture list containing the reference picture, a reference picture index, and a motion vector. The motion vector can be an integer-sample motion vector or a fractional-sample motion vector. If the motion vector is the fractional-sample motion vector, interpolation filtering on the reference picture is required to generate a required fractional-sample block. Here, an integer-sample block or fractional-sample block found in the reference picture according to the motion vector is called a reference block. In some technologies, the reference block can be used directly as a prediction block, and in some technologies, the prediction block will be generated based on the reference block. Generating the prediction block based on the reference block can also be understood as taking the reference block as a prediction block and then processing to generate a new prediction block based on the prediction block.

The intra prediction unit 212 is configured to predict sample information of the current picture block only with reference to information of the same picture, so as to eliminate spatial redundancy. A frame used for intra prediction can be an I frame.

There are multiple prediction modes for intra prediction. Taking the international digital video coding standard H series as an example, there are 8 angular prediction modes and 1 non-angular prediction mode in H.264/AVC standard, which are extended to 33 angular prediction modes and 2 non-angular prediction modes in H.265/HEVC. The intra prediction mode used in HEVC includes a planar mode, direct current (DC), and 33 angular modes, and there are 35 prediction modes in total. The intra prediction mode used in VVC includes planar, DC, and 65 angular modes, and there are 67 prediction modes in total.

It should be noted that with increase of the number of angular modes, intra prediction will be more accurate, which will be more in line with demand for development of high-definition and ultra-high-definition digital video.

The residual unit 220 can generate a residual block of the CU based on a sample block of the CU and a prediction block of a PU of the CU. For example, the residual unit 220 can generate the residual block of the CU such that each sample in the residual block has a value equal to a difference between a sample in the sample block of the CU and a corresponding sample in the prediction block of the PU of the CU.

The transform/quantization unit 230 can quantize a transform coefficient. The transform/quantization unit 230 can quantize a transform coefficient associated with a TU of a CU based on a quantization parameter (QP) value associated with the CU. The video encoder 200 can adjust the degree of quantization applied to a transform coefficient associated with the CU by adjusting the QP value associated with the CU.

The inverse transform/quantization unit 240 can perform inverse quantization and inverse transform respectively on the quantized transform coefficient, to reconstruct a residual block according to the quantized transform coefficient.

The reconstruction unit 250 can add samples in the reconstructed residual block to corresponding samples in one or more prediction blocks generated by the prediction unit 210, to generate a reconstructed picture block associated with the TU. By reconstructing sample blocks of each TU of the CU in this way, the video encoder 200 can reconstruct the sample block of the CU.

The in-loop filtering unit 260 is configured to process an inverse-transformed and inverse-quantized sample, compensate distorted information, and provide a better reference for subsequent sample encoding. For example, the in-loop filtering unit 260 can perform deblocking filtering operations to reduce blocking artifacts of the sample block associated with the CU.

In some embodiments, the in-loop filtering unit 260 includes a deblocking filtering unit and a sample adaptive offset/adaptive loop filtering (SAO/ALF) unit, where the deblocking filtering unit is configured for deblocking, and the SAO/ALF unit is configured to remove a ringing effect.

The decoded picture buffer 270 can store reconstructed sample blocks. The inter prediction unit 211 can use reference pictures including reconstructed sample blocks to perform inter prediction on PUs of other pictures. In addition, the intra prediction unit 212 can use the reconstructed sample blocks in the decoded picture buffer 270 to perform intra prediction on other PUs in the same picture as the CU.

The entropy coding unit 280 can receive the quantized transform coefficient from the transform/quantization unit 230. The entropy coding unit 280 can perform one or more entropy coding operations on the quantized transform coefficient to generate entropy coded data.

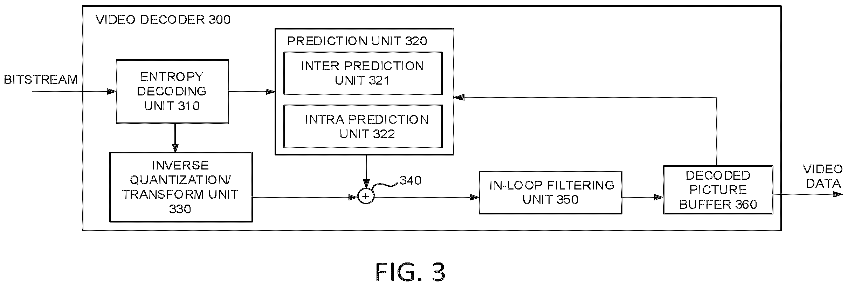

FIG. 3 is a schematic block diagram of a video decoder according to embodiments of the disclosure.

As illustrated in FIG. 3, the video decoder 300 includes an entropy decoding unit 310, a prediction unit 320, an inverse quantization/transform unit 330, a reconstruction unit 340, an in-loop filtering unit 350, and a decoded picture buffer 360. It should be noted that the video decoder 300 can include more, fewer, or different functional components.

The video decoder 300 can receive a bitstream. The entropy decoding unit 310 can parse the bitstream to extract syntax elements from the bitstream. As part of parsing the bitstream, the entropy decoding unit 310 can parse entropy-coded syntax elements in the bitstream. The prediction unit 320, the inverse quantization/transform unit 330, the reconstruction unit 340, and the in-loop filtering unit 350 can decode video data according to the syntax elements extracted from the bitstream, that is, generate decoded video data.

In some embodiments, the prediction unit 320 includes an intra prediction unit 322 and an inter prediction unit 321.

The intra prediction unit 322 can perform intra prediction to generate a prediction block of a PU. The intra prediction unit 322 can use an intra-prediction mode to generate a prediction block of the PU based on a sample block of spatially neighbouring PUs. The intra prediction unit 322 can also determine an intra prediction mode of the PU from one or more syntax elements parsed from the bitstream.

The inter prediction unit 321 can construct a first reference picture list (list 0) and a second reference picture list (list 1) according to the syntax elements parsed from the bitstream. In addition, the entropy decoding unit 310 can parse motion information of the PU if the PU is encoded by using inter prediction. The inter prediction unit 321 can determine one or more reference blocks of the PU according to the motion information of the PU. The inter prediction unit 321 can generate a prediction block of the PU based on one or more reference blocks of the PU.

The inverse quantization/transform unit 330 can perform inverse quantization on (that is, dequantize) a transform coefficient associated with a TU. The inverse quantization/transform unit 330 can use a QP value associated with a CU of the TU to determine the degree of quantization.

After inverse quantization of the transform coefficient, the inverse quantization/transform unit 330 can perform one or more inverse transformations on the inverse-quantized transform coefficient in order to generate a residual block associated with the TU.

The reconstruction unit 340 uses the residual block associated with the TU of the CU and the prediction block of the PU of the CU to reconstruct a sample block of the CU. For example, the reconstruction unit 340 can add samples in the residual block to corresponding samples in the prediction block to reconstruct the sample block of the CU to obtain the reconstructed picture block.

The in-loop filtering unit 350 can perform deblocking filtering to reduce blocking artifacts of the sample block associated with the CU.

The video decoder 300 can store the reconstructed picture of the CU in the decoded picture buffer 360. The video decoder 300 can use the reconstructed picture in the decoded picture buffer 360 as a reference picture for subsequent prediction, or transmit the reconstructed picture to a display device for display.

A basic process of video coding is as follows. At an encoding end, a picture is partitioned into blocks, and for a current block, the prediction unit 210 performs intra prediction or inter prediction to generate a prediction block of the current block. The residual unit 220 can calculate a residual block based on the prediction block and an original block of the current block, that is, a difference between the prediction block and the original block of the current block, where the residual block can also be referred to as residual information. The residual block can be transformed and quantized by the transform/quantization unit 230 to remove information that is not sensitive to human eyes, so as to eliminate visual redundancy. Optionally, the residual block before being transformed and quantized by the transform/quantization unit 230 can be called a time-domain residual block, and the time-domain residual block after being transformed and quantized by the transform/quantization unit 230 can be called a frequency residual block or a frequency-domain residual block. The entropy coding unit 280 receives the quantized transformation coefficient output by the transform/quantization unit 230, and can perform entropy coding on the quantized transformation coefficient to output a bitstream. For example, the entropy coding unit 280 can eliminate character redundancy according to a target context model and probability information of a binary bitstream.

At a decoding end, the entropy decoding unit 310 can parse the bitstream to obtain prediction information, a quantization coefficient matrix, etc. of the current block, and the prediction unit 320 performs intra prediction or inter prediction on the current block based on the prediction information to generate a prediction block of the current block. The inverse quantization/transform unit 330 uses the quantization coefficient matrix obtained from the bitstream to perform inverse quantization and inverse transformation on the quantization coefficient matrix to obtain a residual block. The reconstruction unit 340 adds the prediction block and the residual block to obtain a reconstructed block. The reconstructed blocks form a reconstructed picture. The in-loop filtering unit 350 performs in-loop filtering on the reconstructed picture on a picture basis or on a block basis to obtain a decoded picture. Similar operations are also required at the encoding end for obtaining the decoded picture. The decoded picture can also be referred to as a reconstructed picture, and the reconstructed picture can be a reference picture of a subsequent picture for inter prediction.

It should be noted that block partition information as well as mode information or parameter information for prediction, transformation, quantization, entropy coding, and in-loop filtering, etc. determined by the encoding end is carried in the bitstream when necessary. At the decoding end, the bitstream parsed and existing information is analyzed to determine the block partition information as well as the mode information or the parameter information for prediction, transformation, quantization, entropy coding, in-loop filtering, etc. that is the same as such information at the encoding end, so as to ensure the decoded picture obtained at the encoding end is the same as the decoded picture obtained at the decoding end.

The above is the basic process of a video coder under a block-based hybrid coding framework. With development of technology, some modules or steps of the framework or process can be optimized. The disclosure is applicable to the basic process of the video coder under the block-based hybrid coding framework, but is not limited to the framework and process.

In some embodiments, the current block can be a current CU or a current PU, etc. Due to requirements of parallel processing, a picture can be partitioned into slices, etc. Slices in the same picture can be processed in parallel, that is, there is no data dependency between the slices. The term "frame" is a common expression. It can be generally understood that a frame is a picture. In the disclosure, the frame can also be replaced with a picture or a slice, etc.

In the video coding standard VVC currently under development, there is an inter prediction mode called geometric partitioning mode (GPM). In the video coding standard AVS currently under development, there is an inter prediction mode called angular weighted prediction (AWP) mode. Although these two modes have different names and implementation details, they share common principles.

It should be noted that in traditional unidirectional prediction, only one reference block with the same size as the current block is searched for, while in traditional bidirectional prediction, two reference blocks with the same size as the current block are used, where a sample value of each sample in a prediction block is an average of samples at corresponding positions in the two reference blocks, that is, all samples in each reference block account for 50%. Bidirectional weighted prediction allows proportions of the two reference blocks to be different, such as 75% for all samples in a 1st reference block and 25% for all samples in a 2nd reference block, but proportions of all samples in the same reference block are the same, but proportions of all samples in the same reference block are the same. Other optimization methods, such as decoder-side motion vector refinement (DMVR) technology, bi-directional optical flow (BIO), etc., may cause some changes in reference samples or prediction samples, which is however not related to the foregoing principles. BIO can also be abbreviated as BDOF. In GPM or AWP, two reference blocks with the same size as the current block are also used. However, in some sample positions, 100% of sample values at corresponding positions in the 1st reference block are used; in some sample positions, 100% of sample values at corresponding positions in the 2nd reference block are used; and in a boundary area (or referred to as blending area), sample values at corresponding positions in these two reference blocks are used according to a certain proportion. Weights of the boundary area are also transitioned gradually. The allocation of these weights is determined according to a mode in GPM or AWP, and the weight of each sample position is determined according to the mode in GPM or AWP. In some cases, for example, if the size of a block is very small, in some modes in GPM or AWP, it may be impossible to ensure that at some sample positions, 100% of sample values at corresponding positions in the 1st reference block are used; and at some sample positions, 100% of sample values at corresponding positions in the 2nd reference block are used. It can also be considered that in GPM or AWP, two reference blocks with different sizes from the current block are used, that is, a required part of each reference block is taken as a reference block, in other words, a part with non-zero weights is taken as the reference block, while a part with zero weights is removed, which is specific implementation related and is not the focus of discussion of the disclosure.

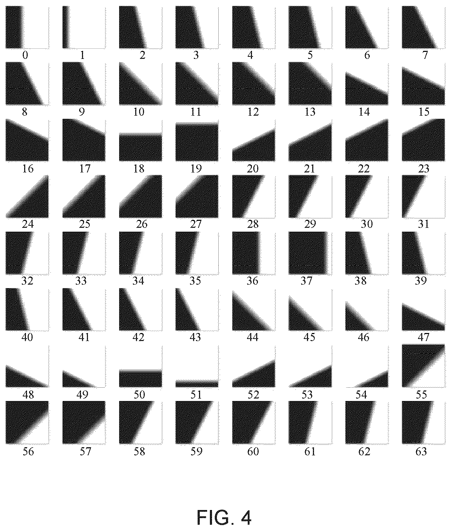

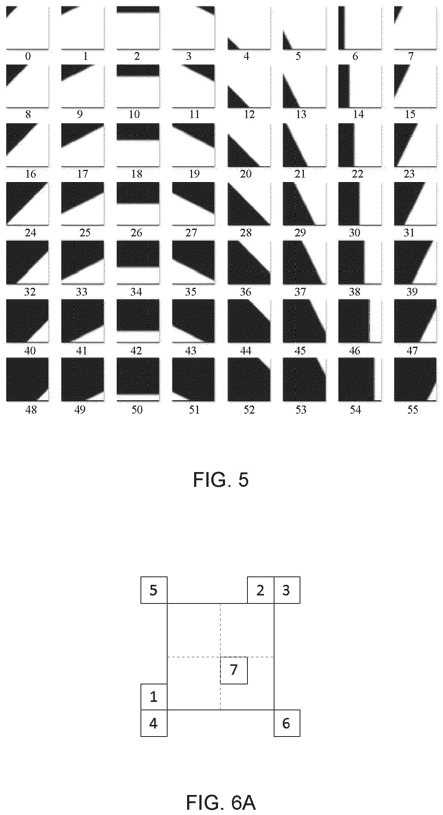

Exemplarily, FIG. 4 is a schematic diagram illustrating weight allocation. FIG. 4 is a schematic diagram illustrating weight allocation for multiple partitioning modes of GPM on a 64x64 current block provided in embodiments of the disclosure, where GPM has 64 partitioning modes. FIG. 5 is a schematic diagram illustrating weight allocation. FIG. 5 is a schematic diagram illustrating weight allocation for multiple partitioning modes of AWP on a 64x64 current block provided in embodiments of the disclosure, where AWP has 56 partitioning modes. In each of FIG. 4 and FIG. 5, for each partitioning mode, a black area represents a weight of 0% for corresponding positions in the 1st reference block, while a white area represents a weight of 100% for corresponding positions in the 1st reference block, a grey area represents a weight greater than 0% and less than 100%, represented by a colour depth, for corresponding positions in the 1st reference block, and a weight for a corresponding position in the 2nd reference block is 100% minus a weight for a corresponding position in the 1st reference block.

GPM and AWP differ in method for weight derivation. For GPM, an angle and an offset are determined according to each mode, and then a weight matrix for each mode is calculated. For AWP, a one-dimensional weight line is firstly defined, and then a method similar to intra angular prediction is used to fill an entire matrix with the one-dimensional weight line.

It should be noted that in earlier coding technologies, only rectangular partitioning was available, no matter whether it is for CU partitioning, PU partitioning, or TU partitioning. However, with GPM or AWP, the effect of non-rectangular partitioning for prediction is achieved without partitioning. In GPM and AWP, a weight mask for two reference blocks is used, namely the weight map as described above. From the mask, weights of the two reference blocks for generating the prediction block are determined. It can be simply understood as that some positions in the prediction block come from the 1st reference block and some positions come from the 2nd reference block, and a blending area is obtained by weighting corresponding positions in the two reference blocks, which allows a smoother transition. In GPM and AWP, the current block are not partitioned into two CUs or PUs according to a partition line. Therefore, after prediction, the current block is processed as a whole during transformation, quantization, inverse transformation, and inverse quantization of residuals.

In GPM, a weight matrix is used to simulate geometric shape partitioning, or more precisely, simulate partitioning of prediction. To implement GPM, in addition to the weight matrix, two prediction values are also needed, each determined by one unidirectional motion information. These two unidirectional motion information come from a motion information candidate list, such as a merge motion information candidate list *(mergeCandList)*. In GPM, two indices are used in a bitstream to determine the two unidirectional motion information from *mergeCandList.*

In inter prediction, motion information is used to represent "motion". Basic motion information includes reference frame (or called reference picture) information and motion vector (MV) information. In common bidirectional prediction, prediction is performed on a current block by using two reference blocks. The two reference blocks can be a forward reference block and a backward reference block. Optionally, the two reference blocks are allowed to be both forward or both backward. Forward means that a moment corresponding to the reference picture is before a current picture, and backward means that the moment corresponding to the reference picture is after the current picture. In other words, forward means that a position of the reference picture in a video is before the current picture, and backward means that the position of the reference picture in the video is after the current picture. In other words, forward means that a picture order count (POC) of the reference picture is less than a POC of the current picture, and backward means that the POC of the reference picture is greater than the POC of the current picture. In order to use bidirectional prediction, it is necessary to find two reference blocks, and accordingly, two groups of reference picture information and motion vector information are needed. Each of the two groups can be understood as one unidirectional motion information, and one bidirectional motion information can be obtained by combining the two groups. During implementation, the unidirectional motion information and the bidirectional motion information may use the same data structure, but the two groups of reference picture information and motion vector information in the bidirectional motion information are both valid, while one of the two groups of reference picture information and motion vector information in the unidirectional motion information is invalid.

In some embodiments, two reference picture lists are supported, and are denoted as RPLO, RPL1, where RPL is an abbreviation for reference picture list. In some embodiments, only RPLO can be applied to a P slice, and both RPLO and RPL1 can be applied to a B slice. For a slice, each reference picture list has several reference pictures, and a coder finds a certain reference picture according to a reference picture index. In some embodiments, the motion information is represented by a reference picture index and a motion vector. For example, for the bidirectional motion information described above, a reference picture index *refIdxL0* corresponding to RPLO, a motion vector *mvL0* corresponding to RPLO, a reference picture index *refIdxL1* corresponding to RPL1, and a motion vector *mvL0* corresponding to RPL1 are used. Here, the reference picture index corresponding to RPLO and the reference picture index corresponding to RPL1 can be understood as the reference picture information described above. In some embodiments, two flag bits are used to indicate whether to use motion information corresponding to RPLO and whether to use motion information corresponding to RPLO respectively, and are denoted as *predFlagL0* and *predFlagL1* respectively, which can also mean that *predFlagL0* and *predFlagL1* indicate whether the unidirectional motion information is "valid". Although such data structure of the motion information is not explicitly indicated, the motion information is indicated by using a reference picture index, a motion vector, and a flag bit indicating validity corresponding to each RPL. In some standard texts, the term "motion vector" is used rather than "motion information", and it can also be considered that the reference picture index and the flag indicating whether to use corresponding motion information are associated with the motion vector. In the disclosure, "motion information" is still used for the convenience of illustration, but it should be understood that "motion vector" can also be used for illustration.

Motion information applied to the current block can be stored, and motion information of previously coded blocks such as neighbouring blocks can be applied to subsequent coding blocks of the current picture based on a positional relationship. This utilizes spatial correlation, so this kind of coded motion information is called spatial motion information. Motion information applied to each block of the current picture can be stored, and motion information of previously coded picture can be applied to subsequent coding pictures based on a reference relationship. This utilizes temporal correlation, so this kind of motion information of coded picture is called temporal motion information. The motion information applied to each block in the current picture is usually stored in the following manner: a fixed-size matrix such as a 4x4 matrix is usually taken as a minimum unit, and each minimum unit stores a set of motion information separately. In this way, when coding each block, a minimum unit(s) corresponding to a position of the block can store motion information of the block. As such, when spatial motion information or temporal motion information is used, motion information corresponding to a position can be directly found according to the position. For example, if traditional unidirectional prediction is applied to a 16x16 block, all 4x4 minimum units corresponding to the block will store motion information of this unidirectional prediction. If GPM or AWP is applied to a block, all minimum units corresponding to the block will store motion information determined according to the mode of GPM or AWP, 1st motion information, 2nd motion information, and a position of each minimum unit. In one manner, if all 4x4 samples corresponding to a minimum unit come from the 1st motion information, the minimum unit stores the 1st motion information. If all 4x4 samples corresponding to a minimum unit come from the 2nd motion information, the minimum unit stores the 2nd motion information. If all 4x4 samples corresponding to a minimum unit come from both the 1st motion information and the 2nd motion information, in AWP, one of the 1st motion information and the 2nd motion information will be chosen and stored; and in GPM, two motion information will be combined as bidirectional motion information for storage if the two motion information correspond to different RPLs, and otherwise, only the 2nd motion information will be stored.

Optionally, the aforementioned *mergeCandList* is constructed based on spatial motion information, temporal motion information, history-based motion information, and some other motion information. Exemplarily, for the *mergeCandList,* positions 1 to 5 in FIG. 6A are used to derive the spatial motion information, and position 6 or 7 in FIG. 6A is used to derive the temporal motion information. For the history-based motion information, motion information of each block is added to a first-in-first-out list when coding the block, and the addition process may require some checks, such as whether the motion information duplicates existing motion information in the list. In this way, reference may be made the motion information in the history-based list when coding the current block.

In some embodiments, the syntax description for GPM is that as illustrated in Table 1.

Table 1

| | |
|---|---|
| regular_merge_flag[x0][y0] | ae(v) |
| if( regular_merge_flag[x0][y0] == 1 ) { | |
| if( sps_mmvd_enabled_flag ) | |
| mmvd_merge_flag[x0][y0] | ae(v) |
| if( mmvd_merge_flag[x0][y0] == 1 ) { | |
| if( MaxNumMergeCand > 1 ) | |
| mmvd_cand_flag[x0][y0] | ae(v) |
| mmvd_distance_idx[x0][y0] | ae(v) |
| mmvd_direction_idx[x0][y0] | ae(v) |
| } else if( MaxNumMergeCand > 1 ) | |
| merge_idx[x0][y0] | ae(v) |
| } else { | |
| if( sps_ciip_enabled_flag && sps_gpm_enabled_flag && sh_slice_type == B && cu_skip_flag[x0][y0] == 0 && cbWidth >= 8 && cbHeight >= 8 && cbWidth < (8*cbHeight) && cbHeight < (8*cbWidth) && cbWidth < 128 && cbHeight < 128 ) | |
| ciip_flag[x0][y0] | ae(v) |
| if( ciip_flag[x0][y0] && MaxNumMergeCand > 1 ) | |
| merge_idx[x0][y0] | ae(v) |
| if( !ciip_flag[x0][y0] ) { | |
| merge_gpm_partition_idx[x0][y0] | ae(v) |
| merge_gpm_idx0[x0][y0] | ae(v) |
| if( MaxNumGpmMergeCand > 2 ) | |
| merge_gpm_idx1 [x0][y0] | ae(v) |
| } | |
| } | |

As illustrated in Table 1, in a merge mode, if *regular_merge_flag* is not equal to 1, either combined inter-intra prediction (CIIP) or GPM can be applied to the current block. If CIIP is not applied to the current block, then GPM will be applied, as indicated by the syntax "if( !ciip_flag[x0][y0] )" in Table 1.

As illustrated in the above Table 1, in GPM, transmission of three information in a bitstream, namely *merge_gpm_partition_idx, merge_gpm_idx0,* and *merge_gpm_idx1,* is required. x0 and y0 are used to determine coordinates (x0, y0) of a top-left luma sample of the current block relative to a top-left luma sample of the picture. *merge_gpm_partition_idx* is used to determine a partitioning shape of GPM, which is a "simulated partitioning" as described above. *merge_gpm_partition_idx* represents a weight matrix derivation mode or an index of the weight matrix derivation mode in the disclosure, or referred to as a weight derivation mode or an index of the weight derivation mode. *merge_gpm_idx0* represents a 1st merge candidate index, and the first merge candidate index is used for determining first motion information, or referred to as a first merge candidate, according to *mergeCandList. merge_gpm_idx* 1 represents a 2nd merge candidate index, and the second merge candidate index is used for determining second motion information, or called a second merge candidate, according to *mergeCandList. merge_gpm_idx1* needs to be decoded only when *MaxNumGpmMergeCand > 2,* i. e. the length of the candidate list is greater than 2; otherwise, *merge_gpm_idx1* can be determined directly.

In some embodiments, a decoding process of GPM includes the following steps.

Information input for the decoding process includes: coordinates (xCb, yCb) of a top-left luma location of the current block relative to a top-left luma location of the picture, a width (*cbWidth*) of a luma component of the current block, a height *(cbHeight)* of a luma component of the current block, luma motion vectors *mvA* and *mvB* in 1/16 fractional-sample accuracy, chroma motion vectors *mvCA* and *mvCB,* reference picture indices *refIdxA* and *refIdxB,* and prediction list flags *predListFlagA* and *predListFlagB.*

Exemplarily, the motion information can be represented by a combination of motion vectors, reference picture indices, and prediction list flags. In VVC, two reference picture lists are supported, each of which can have multiple reference pictures. In unidirectional prediction, only one reference block in one reference picture in one reference picture list is used for reference, while in bidirectional prediction, two reference blocks each in one reference picture in one of the two reference picture lists are used for reference. In GPM in VVC, two unidirectional predictions are used. In *mvA* and *mvB,* *mvCA* and *mvCB, refIdxA* and *refIdxB, predListFlagA* and *predListFlagB, "A"* can be understood as a 1st prediction mode, and "B" can be understood as a 2nd prediction mode. Here, "X" is used to represent *"A"* or "B", so that *predListFlagX* indicates whether a 1st reference picture list or a 2nd reference picture list is applied to X, *refIdxX* indicates a reference picture index in the reference picture list applied to X, *mvX* indicates a luma motion vector applied to X, and *mvCX* indicates a chroma motion vector applied to X. It should be noted that, in VVC, the motion information described in the disclosure can be considered as represented by a combination of motion vectors, reference picture indices, and prediction list flags.

Information output for the decoding process includes: an (*cbWidth*)x(*cbHeight*) array *predSamplesL* of luma prediction samples; an (*cbWidth / SubWidthC*)x(*cbHeight / SubHeightC*) array of chroma prediction samples for the component Cb, if necessary; and an (*cbWidth / SubWidthC*)x(*cbHeight / SubHeightC)* array of chroma prediction samples for the component Cr, if necessary.

Exemplarily, the luma component is taken as an example. The processing of the chroma component is similar to that of the luma component.

Let each of *predSamplesLAL* and *predSamplesLBL* have a size of (*cbWidth*)×(*cbHeight*), which are prediction sample arrays obtained based on two prediction modes. *predSamplesL* is derived as follows. *predSamplesLAL* and *predSamplesLBL* are determined separately according to the luma motion vectors *mvA* and *mvB,* the chroma motion vectors *mvCA* and *mvCB,* the reference picture indices *refIdxA* and *refIdxB,* and the prediction list flags *predListFlagA* and *predListFlagB.* In other words, prediction is performed according to motion information of the two prediction modes, and the detailed process thereof is not described herein. Generally, GPM is a merge mode, so that both of the two prediction modes of GPM can be considered as merge modes.

According to *merge_gpm_partition_idx[xCb][yCb],* a partition angle index variable *angleIdx* and a distance index variable *distanceIdx* of GPM are determined based on Table 2.

Table 2 - Correspondence among *angleIdx, distanceIdx,* and *merge_gpm_partition_idx*

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |
| merge_gpm_partition_idx | 16 | 17 | 18 | 19 | 20 | 21 | 22 | 23 | 24 | 25 | 26 | 27 | 28 | 29 | 30 | 31 |
| angleIdx | 5 | 5 | 8 | 8 | 11 | 11 | 11 | 11 | 12 | 12 | 12 | 12 | 13 | 13 | 13 | 13 |
| distanceIdx | 2 | 3 | 1 | 3 | 0 | 1 | 2 | 3 | 0 | 1 | 2 | 3 | 0 | 1 | 2 | 3 |

(continued)

| merge_gpm_partition_idx | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| merge_gpm_partition_idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |

It should be noted that, GPM can be applied to each of the three components (Y, Cb, Cr). Therefore, in some standard texts, the process of generating a GPM prediction sample array for one component is encapsulated in a sub-process called "weighted sample prediction process for GPM". This sub-process is invoked for all the three components, with different parameters for each component. Here, the luma component is taken as an example. A prediction array for a current luma block, *predSamplesL[xL][yL]* (where xL = 0..cbWidth-1, yL = 0..cbHeight-1), is derived from the weighted sample prediction process for GPM. *nCbW* is set to *cbWidth,* and *nCbH* is set to *cbHeight.* The prediction sample arrays *predSamplesLAL* and *predSamplesLBL* generated by applying the two prediction modes, as well as *angleIdx* and *distanceIdx,* are used as inputs.

In some embodiments, the weighted sample prediction and derivation process for GPM includes the following steps.

Inputs to this process are: a width *nCbW* of the current block, a height *nCbH* of the current block, two (*nCbW*)×(*nCbH*) prediction sample arrays *predSamplesLA* and *predSamplesLB,* a partition angle index variable *angleIdx* of GPM, a distance index variable *distanceIdx* of GPM, and a component index variable *cIdx.* Here, a luma component is taken as an example, so that cIdx = 0, which indicates the luma component.

Output of this process is the (*nCbW*)×(*nCbH*) array *pbSamples* of prediction sample values of GPM.

Exemplarily, variables *nW, nH, shift1, offset1, displacementX, displacementY, partFlip,* and *shiftHor* are derived as follows:

$$nW = ( \text{cIdx} = = 0 ) ? nCbW : nCbW * SubWidthC;$$

$$nH = ( \text{cIdx} = = 0 ) ? nCbH : nCbH * SubHeightC;$$

$$shift1 = Max( 5, 17 - BitDepth ),$$

where BitDepth represents a coding bit depth;

$$offset1 = 1 << ( shift1 - 1 ), \text{ where "<<" represents shift left;}$$

$$displacementX = angleIdx;$$

$$displacementY = ( angleIdx + 8 ) \% 32;$$

$$partFlip = ( angleIdx >= 13 \&\& angleIdx <= 27 ) ? 0 : 1;$$

shiftHor = ( angleIdx % 16 == 8 || (angleIdx % 16 != 0 && nH >= nW)) ? 0 : 1.

Variables *offsetX* and *offsetY* are derived as follows:

If shiftHor = 0:

offsetX = ( ¬nW ) >> 1,

offsetY = ( ( ¬nH ) >> 1 ) + ( angleIdx < 16 ? ( distanceIdx * nH ) >> 3 : − ( ( distanceIdx * nH ) >> 3 ) ).

If shiftHor = 1:

offsetX = ( ( ¬nW ) >> 1 ) + ( angleIdx < 16 ? ( distanceIdx * nW ) >> 3 : − ( ( distanceIdx * nW ) >> 3 ),

offsetY = ( −nH ) >> 1.

Variables xL and *yL* are derived as follows:

$$xL = ( cIdx == 0 ) ? x : x * SubWidthC,$$

$$yL = ( cIdx == 0 ) ? y : y * SubHeightC,$$

Variable *wValue* specifying a weight of a prediction sample at a current location is derived as follows, where *wValue* is a weight of a predicted sample *predSamplesLA[x][y]* at (x, y) in a prediction array for the first prediction mode, and (8 - wValue) is a weight of a predicted sample *predSamplesLB[x][y]* at (x, y) in the prediction array for the first prediction mode.

The distance matrix *disLut* is determined according to Table 3.

Table 3

| idx | 0 | 2 | 3 | 4 | 5 | 6 | 8 | 10 | 11 | 12 | 13 | 14 |
|---|---|---|---|---|---|---|---|---|---|---|---|---|
| disLut[idx] | 8 | 8 | 8 | 4 | 4 | 2 | 0 | -2 | -4 | -4 | -8 | -8 |
| idx | 16 | 18 | 19 | 20 | 21 | 22 | 24 | 26 | 27 | 28 | 29 | 30 |
| disLut[idx] | -8 | -8 | -8 | -4 | -4 | -2 | 0 | 2 | 4 | 4 | 8 | 8 |

weightIdx = (((xL + offsetX ) << 1 ) + 1 ) * disLut[ displacementX ] + (((yL + offsetY) << 1 ) + 1 ) * disLut[ displacementY ],

$$weightIdxL = partFlip ? 32 + weightIdx : 32 – weightIdx,$$

$$wValue = Clip3( 0, 8, ( weightIdxL + 4 ) >> 3 ).$$

The prediction sample values *pbSamples[ x ][ y ]* are derived as follows:

pbSamples[ x ][ y ] = Clip3( 0, (1 << BitDepth ) -1, ( predSamplesLA[ x ][ y ] * wValue + predSamplesLB[ x ][ y ] * ( 8 -wValue ) + offset1 ) >> shift1 ).

It should be noted that, for each position in the current block, a weight is derived and then a GPM prediction value *pbSamples[ x ][ y ] is* calculated. In this case, although the weights *wValue* do not have to be written in matrix form, it can be understood that if each *wValue* for each position is stored in a matrix, then a weight matrix is formed. The principle of calculating the GPM prediction value by separately calculating the weight for each sample and weighting, and the principle of calculating the GPM prediction sample array by calculating all the weights and then uniformly weighting, are the same.

However, the expression of "weight matrix" in various elaborations in the disclosure is for the sake of better understanding, and drawings based on a weight matrix are more intuitive. In fact, elaborations can also be made based the weight of each position. For example, a weight matrix derivation mode may also be referred to as a weight derivation mode.

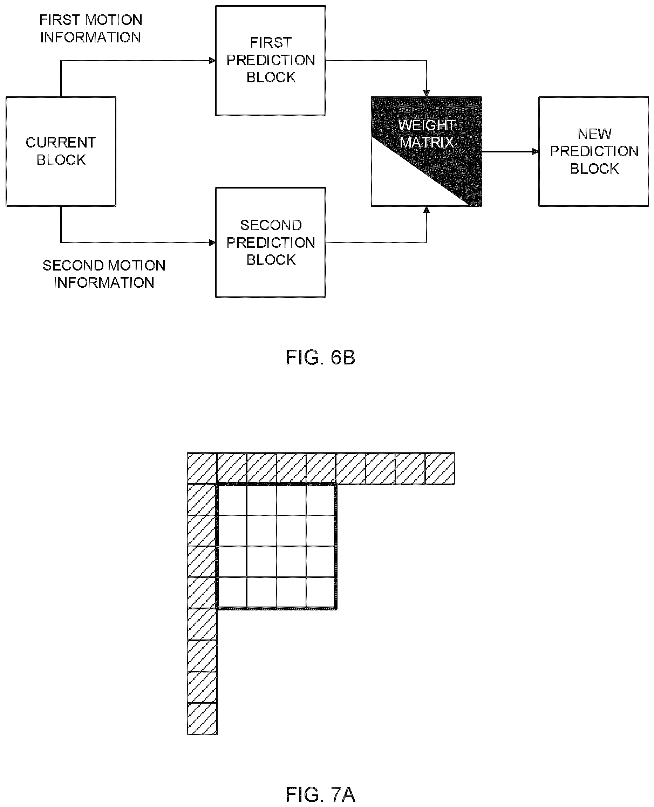

In some embodiments, as illustrated in FIG. 6B, a GPM decoding process can be expressed as follows. A bitstream is parsed to determine whether a GPM technology is applied to the current block. If the GPM technology is applied to the current block, a weight derivation mode (or a partitioning mode or a weight matrix derivation mode), first motion information, and second motion information are determined. A first prediction block is determined according to the first motion information, a second prediction block is determined according to the second motion information, a weight matrix is determined according to the weight matrix derivation mode, and a prediction block of the current block is determined according to the first prediction block, the second prediction block, and the weight matrix.

In an intra prediction method, reconstructed samples around the current block that have been coded are used as reference samples to predict the current block. FIG. 7A is a schematic diagram illustrating intra prediction. As illustrated in FIG. 7A, the current block is $4 \times 4$ in size, and samples on the left column and the above row of the current block are used as reference samples of the current block and are used for intra prediction of the current block. These reference samples may all be available, i. e. they have all been coded. Alternatively, some of the reference samples may not be available. For example, if the current block is on the leftmost of a picture, the reference samples on the left of the current block are not available. For another example, when coding the current block, the samples on the bottom left of the current block have not yet been coded, and in this case, reference samples on the bottom left are also not available. For the case where reference samples are not available, available reference samples, some values, or some methods may be used for filling, or no filling may be performed.

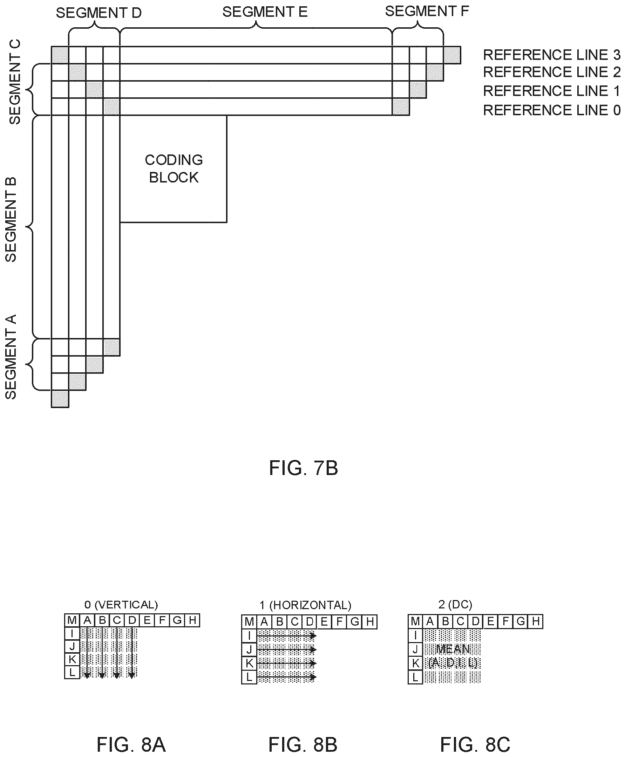

FIG. 7B is a schematic diagram illustrating intra prediction. As illustrated in FIG. 7B, with a multiple reference line (MRL) intra prediction method, more reference samples can be used to improve coding efficiency. For example, four reference rows/columns are used as the reference samples of the current block.

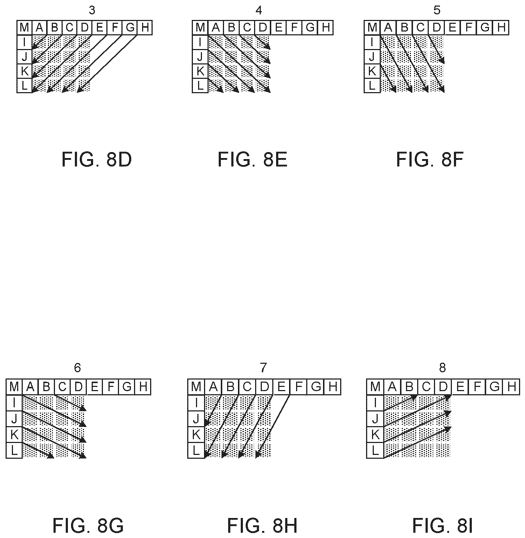

Further, there are multiple prediction modes for intra prediction. FIG. 8A~FIG. 5I each are a schematic diagram illustrating intra prediction. As illustrated in FIG. 8A~FIG. 5I, in H.264, there are nine modes for intra prediction of 4x4 blocks. In mode 0 illustrated in FIG. 8A, samples above the current block are copied to the current block vertically as prediction values. In mode 1 illustrated in FIG. 8B, reference samples on the left of the current block are copied to the current block horizontally as prediction values. In mode 2 (DC) illustrated in FIG. 8C, an average value of eight samples (A~D and I~L) is taken as the prediction value of all samples. In mode 3 to mode 8 illustrated in FIG. 8D~FIG. 5I, reference samples are copied to corresponding positions in the current block according to a certain angle, and since some positions in the current block may not correspond exactly to the reference sample, a weighted average of reference samples or interpolated factional samples of the reference samples may be required.

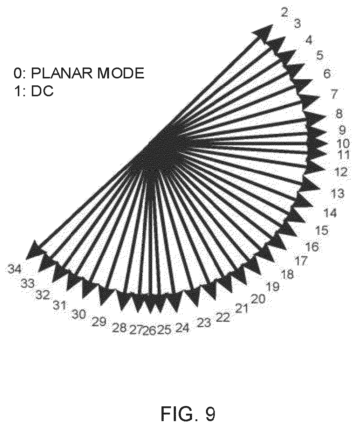

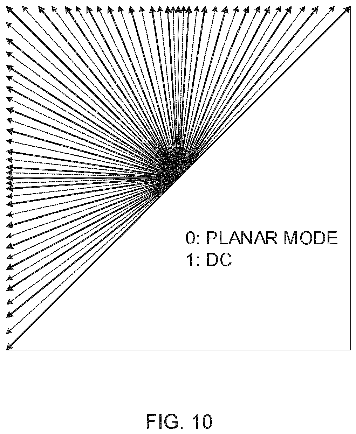

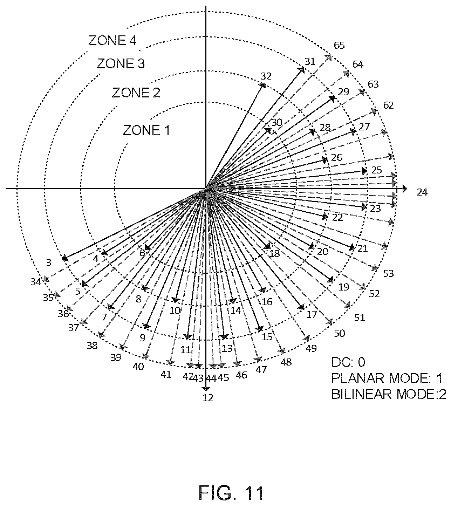

In addition, there are other modes such as the plane mode or the planar mode. With development of technology and increase in block size, there are an increasing number of angular prediction modes. FIG. 9 is a schematic diagram illustrating intra prediction modes. As illustrated in FIG. 9, in HEVC, a total of 35 prediction modes are used, including planar, DC, and 33 angular modes. FIG. 10 is a schematic diagram illustrating intra prediction modes. As illustrated in FIG. 10, in VVC, a total of 67 prediction modes are used, including planar, DC, and 65 angular modes. FIG. 11 is a schematic diagram illustrating intra prediction modes. As illustrated in FIG. 11, in AVS3, a total of 66 prediction modes are used, including DC, plane, bilinear, pulse code modulation (PCM), and 62 angular modes.

Furthermore, there are some techniques to improve the prediction, such as fractional sample interpolation which improves reference samples, filtering of prediction samples, etc. For example, in multiple intra prediction filter (MIPF) in AVS3, prediction values are generated by using different filters for different block sizes. For different positions of samples within the same block, a filter is used to generate prediction values for samples that are closer to the reference samples, while another filter is used to generate prediction values for samples that are away from the reference samples. With aid of technology for filtering prediction samples, such as intra prediction filter (IPF) in AVS3, the prediction values can be filtered based on the reference samples.

In intra prediction, an intra mode coding technology using a most probable mode (MPM) list can be used to improve coding efficiency. The mode list is constructed with intra prediction modes for surrounding coded blocks, intra prediction modes derived from the intra prediction modes for the surrounding coded blocks such as a neighbourhood mode, and some commonly-used or high-probability intra prediction modes such as DC, planar, and bilinear modes. Reference to the intra prediction modes for the surrounding coded blocks utilizes spatial correlation because textures have a certain spatial continuity. The MPM(s) can be used as a prediction for intra prediction modes. That is, it is assumed that the probability of using the MPM for the current block is higher than not using the MPM. Therefore, during binarization, fewer codewords will be assigned to the MPM to reduce overhead and improve coding efficiency.

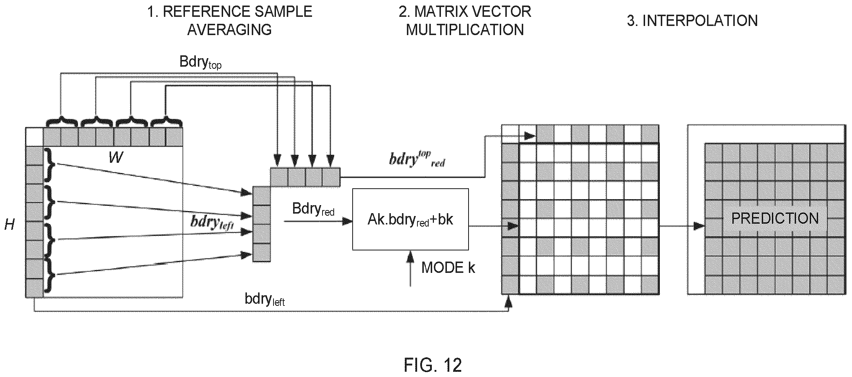

In some embodiments, matrix-based intra prediction (MIP), sometimes also written as matrix weighted intra prediction, can be applied to intra prediction. As illustrated in FIG. 12, in order to predict a block with the width of W and the height of $H$, $H$ reconstructed samples in a left column of the current block and W reconstructed samples in a top row of the current block are needed as inputs for the MIP. A prediction block in the MIP is mainly generated based on three operations:

reference sample averaging, matrix vector multiplication, and interpolation. A core of MIP is matrix vector multiplication which can be regarded as a process of generating the prediction block from input samples (reference samples) by means of matrix vector multiplication. A variety of matrixes are provided in the MIP, different matrixes have different prediction methods, and same input samples will have different results using different matrixes. The process of reference sample averaging and interpolation is a compromise design between performance and complexity. For a larger block, reference sample averaging can be performed to achieve an approximate down-sampling effect, so that the input can be adapted to a smaller matrix, while interpolation achieves an up-sampling effect. In this way, there is no need to provide an MIP matrix for the block of each size, but only matrixes with one or more specific sizes are provided. With the increasing need for compression performance and improvement of hardware capabilities, a more complex MIP can appear in the next generation of standards.

The MIP mode is somewhat similar to the planar mode, but clearly, the MIP mode is more complex and flexible than the planar mode.

In GPM, two inter-prediction blocks are combined by using a weight matrix. In practice, usage of the weight matrix can be extended to combining any two prediction blocks, such as two inter-prediction blocks, two intra-prediction blocks, and one inter-prediction block and one intra-prediction block. A prediction block(s) of intra block copy (IBC) or palette can also be used as one or two of the prediction blocks in screen content coding.

In the disclosure, intra, inter, IBC, and palette are referred to as different prediction manners. For ease of elaboration, they are referred to as prediction modes. The prediction mode means that a coder can generate information of a prediction block of the current block according to the prediction mode. For example, in intra prediction, the prediction mode can be a certain intra prediction mode, such as DC, planar, and various intra angular prediction modes. One or more auxiliary information can also be added, for example, an optimization method for intra reference samples, an optimization method (for example, filtering) after a preliminary prediction block is generated, and the like. For example, in inter prediction, the prediction mode can be a skip mode, a merge mode, a merge mode with motion vector difference (MMVD), or an advanced motion vector prediction (AMVP) mode. The inter prediction mode can be unidirectional prediction, bidirectional prediction, or multi-hypothesis prediction. If unidirectional prediction is applied to the inter prediction mode, one motion information needs to be determined according to the prediction mode, and a prediction block can be determined according to the motion information. If bidirectional prediction is applied to the inter prediction mode, two motion information needs to be determined according to the prediction mode, and the prediction block can be determined according to the two motion information.

In this way, information that needs to be determined for GPM can be expressed as one weight derivation mode and two prediction modes. The weight derivation mode is used to determine a weight matrix or weights, and the two prediction modes are each used determine a prediction block or prediction value. The weight derivation mode is sometimes referred to as a partitioning mode, but since it is simulated partitioning, the disclosure tends to refer to the partitioning mode as a weight derivation mode.

The two prediction modes may come from the same or different prediction modes, where the prediction mode includes but is not limited to intra prediction, inter prediction, IBC, and palette.

Optionally, the two prediction modes may come from the same or different prediction modes, where the prediction mode includes but is not limited to intra prediction, inter prediction, IBC, and palette.

A specific example is as follows. GPM is applied to the current block and this example is applied to an inter-coded block, the intra prediction and the merge mode in the inter prediction are allowed to be used. As illustrated in Table 4, a syntax element *intra_mode_idx* is added, so as to indicate which prediction mode is an intra prediction mode. For example, if *intra_mode_idx* = 0, it indicates that two prediction modes each are an inter prediction mode, that is, *mode0IsInter* = 1 and *mode0IsInter* = 1. If *intra_mode_idx* = 1, it indicates that a 1st prediction mode is an intra prediction mode and a 2nd prediction mode is an inter prediction mode, that is, *mode0IsInter* = 0 and *mode0IsInter* = 1. If *intra_mode_idx* = 2, it indicates that the 1st prediction mode is an inter prediction mode and the 2nd prediction mode is an intra prediction mode, that is, *mode0IsInter* = 1 and *mode0IsInter* = 0. If *intra_mode_idx* = 3, it indicates that the two prediction modes each are an intra prediction mode, that is, *mode0IsInter* = 0, and *mode0IsInter* = 0.

Table 4

| { | |
|---|---|
| merge_gpm_partition_idx[x0][y0] | ae(v) |
| intra_mode_idx[x0][y0] | ae(v) |
| if( mode0IsInter ) | |
| merge_gpm_idx0[x0][y0] | ae(v) |

(continued)

| if( (!mode0IsInter && mode1IsInter) ‖ (MaxNumGpmMerge-Cand > 2 && mode0IsInter && mode1IsInter)) | |
|---|---|
| merge_gpm_idx1 [x0][y0] | ae(v) |
| } | |

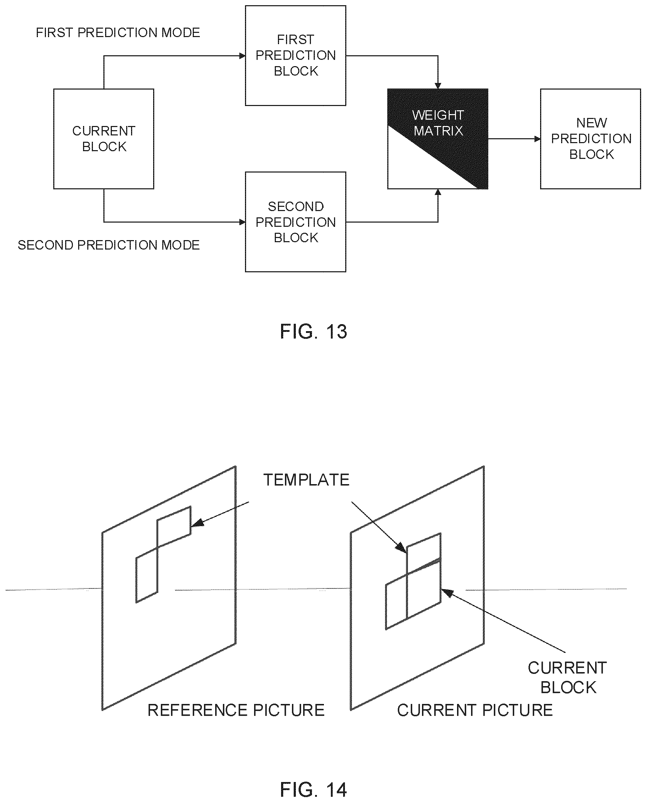

In some embodiments, as illustrated in FIG. 13, a GPM decoding process can be expressed as follows. A bitstream is parsed to determine whether a GPM technology is applied to the current block. If the GPM technology is applied to the current block, a weight derivation mode (or a partitioning mode or a weight matrix derivation mode), a first prediction mode, and a second prediction mode are determined. A first prediction block is determined according to the first prediction mode, a second prediction block is determined according to the second prediction mode, a weight matrix is determined according to the weight matrix derivation mode, and a prediction block of the current block is determined according to the first prediction block, the second prediction block, and the weight matrix.

Template matching is originally used in inter prediction. In template matching, by utilizing correlation between neighbouring samples, some regions neighbouring the current block are taken as a template. Before coding the current block, blocks on the left and the top of the current block have already been coded according to a coding order. However, when implemented by an existing hardware decoder, it may not be ensured that blocks on the left and the top of the current block have already been decoded before decoding the current block, where the current block is an inter block. For example, in HEVC, when generating a prediction block for an inter-coding block, neighbouring reconstructed samples are not required, and therefore, a prediction process for the inter block can be performed in parallel. However, for an intra-coding block, reconstructed samples on the left and on the top are required as reference samples. Theoretically, samples on the left and on the top are available, that is, this can be realized by making corresponding adjustments on hardware design. Samples on the right and on the bottom are unavailable based on a coding order in an existing standard such as VVC.

As illustrated in FIG. 14, rectangular regions on the left and the top of the current block are set as a template, where a height of the left part of the template is usually the same as a height of the current block, and a width of the top part of the template is usually the same as a width of the current block. The template can also have a different height or width from the current block. A best matching position of the template is found in a reference picture, so as to determine motion information or a motion vector of the current block. This process can be generally described as follows. In a certain reference picture, search within a certain range starting from a start position. A search rule can be preset, such as a search range and a search step size. Upon moving to a position each time, a degree of matching between a template corresponding to the position and a template neighbouring the current block is calculated. The degree of matching can be measured according to some distortion costs, such as a sum of absolute difference (SAD) and a sum of absolute transformed difference (SATD). A transform used in the SATD is usually a Hadamard transform or a mean-square error (MSE). A lower value of the SAD, the SATD, or the MSE indicates a higher degree of matching. A cost is calculated based on a prediction block of the template corresponding to the position and a reconstructed block of the template neighbouring the current block. In addition to searching for a position of an integer sample, searching for a position of a fractional sample may also be performed. The motion information of the current block is determined according to a position with the highest degree of matching found through searching. Due to correlation between neighbouring samples, motion information suitable for the template may also be motion information suitable for the current block. Template matching may not be applicable to some blocks, and therefore, whether template matching is applied to the current block can be determined according to some methods, for example, a control switch is used for the current block to indicate whether to use template matching. Such template matching is also called decoder side motion vector derivation (DMVD). Both an encoder and a decoder can perform searching based on a template to derive motion information or find better motion information based on original motion information. In order to ensure consistency between encoding and decoding, the encoder and the decoder perform searching based on the same rule instead of transmitting a specific motion vector or motion vector difference. With template matching, it is possible to improve compression performance, but the decoder still needs to perform searching, which causes increase in decoder complexity.

The above is a method for applying template matching to inter prediction. Template matching can also be applied to intra prediction, for example, a template is used to determine an intra prediction mode. For the current block, a region within a certain range from the top and the left of the current block can be used as a template, such as a left rectangular region and a top rectangular region illustrated in the foregoing figure. When coding the current block, reconstructed samples in the template are available. This process can be generally described as follows. A set of candidate intra prediction modes is determined for the current block, where the candidate intra prediction modes constitute a subset of all available intra prediction modes, or the candidate intra prediction modes can be a universal set of all available intra prediction modes, which can be determined based on the trade-off between performance and complexity. The set of candidate intra prediction modes can be determined according to an MPM or some rules, such as equidistant screening. A cost, such as the SAD, the SATD, and the MSE, of each candidate intra prediction mode for the template is calculated. Prediction is performed on the template according to the mode to obtain a prediction block, and the cost is calculated according to the prediction block and a reconstructed block of the template. A mode with lower cost may match the template better, and due to similarity between neighbouring samples, an intra prediction mode that matches well with the template may also be an intra prediction mode that matches well with the current block. One or more modes with low cost are selected. The foregoing two steps can be repeated. For example, after one or more modes with low cost are selected, a set of candidate intra prediction modes is determined, cost is calculated for the newly determined set of candidate intra prediction modes, and one or more modes with lower cost are selected. This can also be understood as a rough selection and a fine selection. The one intra prediction mode finally chosen is determined as the intra prediction mode for the current block, or several intra prediction modes finally chosen are taken as candidates of the intra prediction mode for the current block. The set of candidate intra prediction modes can also be sorted by means of template matching. For example, an MPM list is sorted, that is, for each mode in the MPM list, a prediction block is obtained for the template according to the mode and a cost thereof is determined, and these modes are sorted in an ascending order of cost. Generally, a mode at the front in the MPM list corresponds to lower overhead in a bitstream, which can also improve compression efficiency.

Template matching can be used to determine two prediction modes of GPM. If template matching is applied to GPM, one control switch can be used for the current block to control whether template matching is applied to the two prediction modes for the current block, or two control switches can be used respectively to control whether template matching is applied to each of the two prediction modes.

Another aspect is how to use template matching. For example, if GPM is applied in the merge mode, for example, in GPM in VVC, *merge_gpm_idxX* is used to determine motion information from *mergeCandList,* where $X = 0$ or 1. For $X^{th}$ motion information, one method is to perform optimization by means of template matching based on the foregoing motion information. That is, the motion information is determined from *mergeCandList* according to *merge_gpm_idxX.* If template matching is applied to the motion information, template matching is used to perform optimization based on the motion information. Another method is to determine the motion information directly by searching based on default motion information, instead of using *merge_gpm_idxX* to determine the motion information from *mergeCandList.*

If an $X^{th}$ prediction mode is an intra prediction mode and template matching is applied to an $X^{th}$ prediction mode for the current block, template matching can be used to determine an intra prediction mode, and an index of the intra prediction mode does not need to be indicated in a bitstream. Alternatively, a candidate set or an MPM list is determined by means of template matching, and an index of the intra prediction mode needs to be indicated in a bitstream.

It can be seen from the foregoing elaborations that, GPM has three elements, namely one weight matrix and two prediction modes. With GPM, it is more conducive to autonomous combination by using the weight matrix. However, on the other hand, in GPM, more information needs to be determined, which results in more overhead in the bitstream. Taking GPM in VVC as an example, GPM in VVC is applied in the merge mode. The weight matrix is determined according to *merge_gpm_partition_idx* in a bitstream, the $1^{st}$ prediction mode is determined according to *merge_gpm_idx0* in the bitstream, and the $2^{nd}$ prediction mode is determined according to *merge_gpm_idx1* in the bitstream. There are multiple possible choices for each of the weight matrix and the two prediction modes. For example, there are 64 possible choices for the weight matrix in WC, and *merge_gpm_idx0* and *merge_gpm_idx1* each allow up to 6 possible choices in WC, but it is specified in VVC that *merge_gpm_idx0* is different from *merge_gpm_idx1,* and accordingly, there are $65 \times 6 \times 5$ possible choices for GPM. If MMVD is applied to optimization of two motion information (prediction modes), there can also be multiple possible choices for each prediction mode, which leads to a huge amount.

If two intra prediction modes are applied together with GPM, 67 common intra prediction modes in VVC can be applied to each of the two intra prediction modes, and the two intra prediction modes are different, then there are $64 \times 67 \times 66$ possible choices. In order to save overhead, there can be a restriction that only a subset of all the common intra prediction modes can be applied to each prediction mode, but there are still a large number of possible choices.

Currently, for one weight derivation mode and two prediction modes in GPM, information of each of them needs to be transmitted in a bitstream according to their respective rules when necessary. For example, the weight derivation mode has one or more syntax elements of its own, the $1^{st}$ prediction mode has one or more syntax elements of its own, and the $2^{nd}$ prediction mode also has one or more syntax elements of its own. There can be a restriction specified in the standard that the $2^{nd}$ prediction mode cannot be the same as the $1^{st}$ prediction mode in some cases, or some optimization methods can be applied to both of the two prediction modes (which can also be understood as applied to the current block), but the three are relatively independent in signalling and parsing of syntax elements, that is, more codewords are needed to indicate the weight derivation mode and the prediction modes, which results in large encoding overhead.

In addition, since there is strong correlation between different components in the same space, in the video coding technology, such correlation can be utilized to improve compression efficiency. In some cases, in the same space, a first component is coded firstly, and then a second component and a third component are coded, so that some information of the first component can be utilized for the second component and the third component. A typical example is cross-component linear model (CCLM) prediction. In the same CU, prediction can be performed on a sample of a chroma component by using a reconstructed sample of a luma component, which is specifically as illustrated in the following formula:

$$\mathrm{pred}_C(i,j) = \alpha \cdot \mathrm{rec}_L'(i,j) + \beta$$

$\mathrm{pred}_C(i,j)$ represents a prediction value of a chroma sample at location (i, j), and $\mathrm{rec}_{L'}(i,j)$ represents a reconstructed value of a down-sampled luma sample at location (i, j). Parameters ($\alpha$ and $\beta$) of CCLM are derived from neighbouring down-sampled luma samples and chroma samples of a current CU.

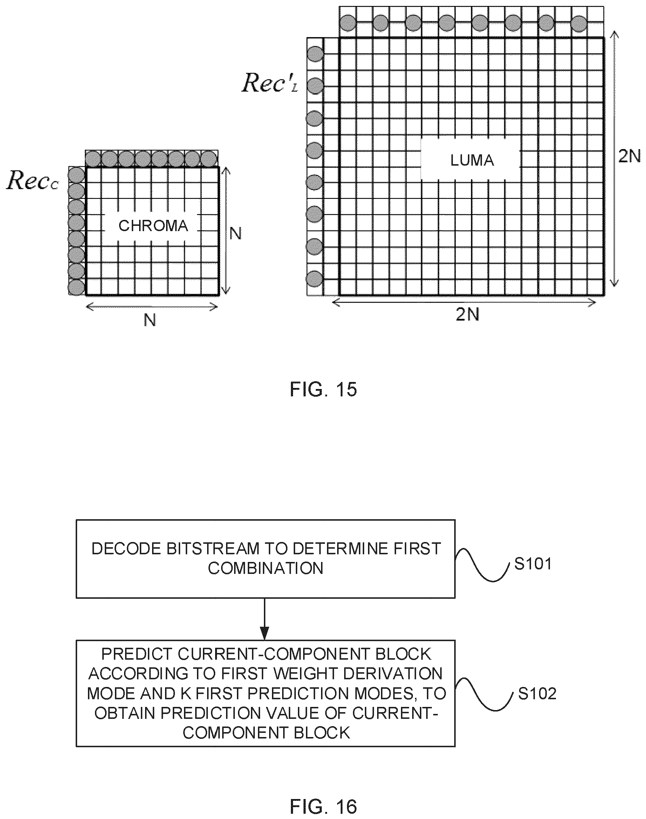

In an example, as illustrated in FIG. 15, a basic principle is to derive a linear model by using neighbouring luma samples and chroma samples of the current CU, and then the linear model is applied to the current CU, to determine a chroma prediction value according to a luma reconstructed value and the linear model.

However, in some cases, since one chroma CU may correspond to multiple luma CUs and prediction modes for different luma CUs may be different, in this case, it is difficult to realize accurate prediction of a chroma block having complex texture if CCLM is adopted.

In order to solve the foregoing technical problem, in embodiments of the disclosure, a first weight derivation mode and K first prediction modes corresponding to a current-component block are taken as a combination, so that the first weight derivation mode and the *K* first prediction modes are indicated in the form of a combination. In this way, there is no need to transmit separately syntax corresponding to the *K* first prediction modes and syntax corresponding to the first weight derivation mode in a bitstream, which can save codewords, thereby improving encoding efficiency. In addition, in embodiments of the disclosure, even if the current-component block corresponds to multiple first-component CUs and prediction modes for the multiple first-component CUs are not completely the same, the first weight derivation mode and the K first prediction modes in a first combination can still be determined accurately, thereby realizing accurate prediction of the current-component block by using the first weight derivation mode and the *K* first prediction modes.

The following introduces a video decoding method provided in embodiments of the disclosure by taking a decoding end as an example with reference to FIG. 16.

FIG. 16 is a schematic flowchart of a video decoding method provided in an embodiment of the disclosure. The embodiment of the disclosure is applied to the video decoders illustrated in FIG. 1 and FIG. 3. As illustrated in FIG. 16, the method according to the embodiment of the disclosure includes the following.

Step S101, a bitstream is decoded to determine a first combination.

The first combination includes a first weight derivation mode and K first prediction modes, where *K* is a positive integer and *K* > 1.

A picture format includes YUV, YCrCb, RGB, and the like. In a YUV format, Y represents a luma component, and U and V each represent a chroma component, where Y is also referred to as a first component, U is referred to as a second component, and V is referred to as a third component. In a YCrCb format, Y represents a luma component, and Cr and Cb each represent a chroma component, where Y is also referred to as the first component, Cr is referred to as the second component, and Cb is referred to as the third component. In some embodiments, in an RGB format, G is referred to as the first component, B is referred to as the second component, and R is referred to as the third component.

In some embodiments, during coding, the first component of a coding tree unit (CTU) can be partitioned into at least one first-component block, the second component of the CTU can be partitioned into at least one second-component block, and the third component of the CTU can be partitioned into at least one third-component block.

According to embodiments of the disclosure, prediction is performed on a current-component block by applying K different prediction modes, where the current-component block includes a second-component block or a third-component block.

It can be seen from the above that, one weight derivation mode and K prediction modes are used together to generate a prediction block, and the prediction block is applied to the current-component block. That is, weights are determined according to the first weight derivation mode, prediction is performed on the current-component block according to the K first prediction modes to obtain K prediction values, and the *K* prediction values are weighted according to the weights to obtain a prediction value of the current-component block. It can be seen therefrom that, the first weight derivation mode and the K first prediction modes in the first combination are applied together to the current-component block and are associated with each other.

In the disclosure, the first weight derivation mode is used to determine the weights used for the current-component block. Specifically, the first weight derivation mode can be a mode for deriving weights. For a block of a given length and width, each weight derivation mode can be used to derive one weight matrix. For blocks of the same size, weight matrices derived from different weight derivation modes can be different.

Exemplarily, in the disclosure, there are 56 weight derivation modes for AWP and 64 weight derivation modes for GPM.

Examples of the *K* different first prediction modes in the first combination include the following.

Example 1, *the K* different first prediction modes are intra prediction modes, for example, the current-component block is an intra-coding block, and screen content coding is not applicable.

Example 2, the *K different* first prediction modes are inter prediction modes, for example, the current-component block is an inter-coding block.

Example 3, the *K* different first prediction modes include at least one intra prediction mode, and at least one inter prediction mode.

Example 4, the *K* different first prediction modes include at least one intra prediction mode and at least one non-intra and non-inter prediction mode, such as an intra block copy (IBC) prediction mode or a palette prediction mode.

Example 5, the *K* different first prediction modes include at least one inter prediction mode and at least one non-intra and non-inter prediction mode, such as an IBC prediction mode or a palette prediction mode.

Example 6, none of the K different first prediction modes is an intra prediction mode or an inter prediction mode. For example, the *K* different first prediction modes include an IBC prediction mode, a palette prediction mode, and the like.

It should be noted that, the types of the *K* different first prediction modes in the first combination are not limited in embodiments of the disclosure.

In some embodiments, before determining the first combination, it is necessary to determine whether *K* different prediction modes are applied to the current-component block for weighted prediction. If it is determined by the decoding end that *K* different prediction modes are applied to the current-component block for weighted prediction, the step S101 is performed to decode the bitstream to determine the first combination. If it is determined by the decoding end that *K* different prediction modes are not applied to the current-component block for weighted prediction, the step S101 is skipped.

In a possible implementation, at the decoding end, whether K different prediction modes are applied to the current-component block for weighted prediction can be determined by determining a prediction-mode parameter of the current-component block.

Optionally, in embodiments of the disclosure, the prediction-mode parameter can indicate whether a GPM mode or an AWP mode can be applied to the current-component block, that is, indicate whether K different prediction modes can be applied for prediction of the current-component block.

It can be understood that, in embodiments of the disclosure, the prediction-mode parameter can be understood as a flag indicating whether the GPM mode or the AWP mode is applied. Specifically, an encoder can use a variable as the prediction-mode parameter, so that the prediction-mode parameter can be set by setting the value of the variable. Exemplarily, in the disclosure, if the GPM mode or the AWP mode is applied to the current-component block, the encoder can set the value of the prediction-mode parameter to indicate that the GPM mode or the AWP mode is applied to the current-component block, and specifically, the encoder can set the value of the variable to 1. Exemplarily, in the disclosure, if the GPM mode or the AWP mode is not applied to the current-component block, the encoder can set the value of the prediction-mode parameter to indicate that the GPM mode or the AWP mode is not applied to the current-component block, and specifically, the encoder can set the value of the variable to 0. Further, in embodiments of the disclosure, after setting the prediction-mode parameter, the encoder can signal the prediction-mode parameter into the bitstream and transmit the bitstream to a decoder, so that the decoder can obtain the prediction-mode parameter after parsing the bitstream.

Based on this, at the decoding end, the bitstream is decoded to obtain the prediction-mode parameter, and then whether the GPM mode or the AWP mode is applied to the current-component block is determined according to the prediction-mode parameter. If the GPM mode or the AWP mode is applied to the current-component block, i. e. *K* different prediction modes are applied for prediction, a weight derivation mode for the current-component block is determined.

In some embodiments, as illustrated in Table 5, in embodiments of the disclosure, a condition regarding whether the GPM mode or the AWP mode is applied to the current-component block can also be set, i. e. if the current-component block is determined to satisfy a preset condition, it is determined that K prediction modes are applied to the current-component block for weighted prediction. Then at the decoding end, the bitstream is decoded to determine the first combination.

Exemplarily, when applying the GPM mode or the AWP mode, restriction can be imposed on the size of the current-component block.

It can be understood that, in the prediction method provided in embodiments of the disclosure, K prediction values need to be generated by applying K different prediction modes, and then are weighted according to weights to obtain the prediction value of the current-component block. To this end, in order to reduce complexity and take into consideration the trade-off between compression performance and complexity, in embodiments of the disclosure, there can be a restriction that the GPM mode or the AWP mode is not applied to a block of a certain size. Therefore, in the disclosure, the decoder can firstly determine a size parameter of the current-component block, and then determine, according to the size parameter, whether the GPM mode or the AWP mode is applied to the current-component block.

In embodiments of the disclosure, the size parameter of the current-component block can include the height and the width of the current-component block, and in this case, the decoder can determine, according to the height and the width of the current-component block, whether the GPM mode or the AWP mode is applied to the current-component block.

Exemplarily, in the disclosure, if the width is greater than a first threshold and the height is greater than a second threshold, it is determined that the GPM mode or the AWP mode can be applied to the current-component block. As can be seen, one possible restriction is that the GPM mode or the AWP mode can be applied only if the width of the block is greater than (or greater than or equal to) the first threshold and the height of the block is greater than (or greater than or equal to) the second threshold. The values of the first threshold and the second threshold can be 4, 8, 16, 32, 128, 256, etc., and the first threshold can be equal to the second threshold.

Exemplarily, in the disclosure, if the width is less than a third threshold and the height is greater than a fourth threshold, it is determined that the GPM mode or the AWP mode can be applied to the current-component block. As can be seen, one possible restriction is that the GPM mode or the AWP mode can be applied only if the width of the block is less than (or less than or equal to) the third threshold and the height of the block is greater than (or greater than or equal to) the fourth threshold. The values of the third threshold and the fourth threshold can be 4, 8, 16, 32, 128, 256, etc., and the third threshold can be equal to the fourth threshold.

Further, in embodiments of the disclosure, the size of the block to which the GPM mode or the AWP mode can be applied can also be restricted by restricting a sample parameter.

Exemplarily, in the disclosure, the decoder can firstly determine a sample parameter of the current-component block, and then determine, according to the sample parameter and a fifth threshold, whether the GPM mode or the AWP mode can be applied to the current-component block. As can be seen, one possible restriction is that the GPM mode or the AWP mode can be applied only if the number of samples in the block is greater than (or greater than or equal to) the fifth threshold, where the value of the fifth threshold can be 4, 8, 16, 32, 128, 256, 1024, etc.

That is, in the disclosure, the GPM mode or the AWP mode can be applied to the current-component block only if the size parameter of the current-component block satisfies the size requirement.

Exemplarily, in the disclosure, a picture-level flag can be used to determine whether the technical solution of the disclosure is applied to a current picture to-be-decoded. For example, it can be configured that the technical solution of the disclosure is applied to an intra frame (such as I frame) but is not applied to an inter frame (such as B frame or P frame). Alternatively, it can be configured that the disclosure is applied to the inter frame but is not applied to the intra frame. Alternatively, it can be configured that the technical solution of the disclosure is applied to some inter frames but is not applied to other inter frames. Since intra prediction can be applied to an inter frame, the technical solution of the disclosure may be applied to an inter frame.

In some embodiments, a flag below a picture level but above a CU level (such as tile, slice, patch, LCU, etc.) can be used to determine whether the disclosure is applied to that region.

The manner for decoding the bitstream to determine the first combination in S101 is not limited in embodiments of the disclosure.

In some embodiments, the first combination is a preset combination. That is, at the decoding end, the bitstream is decoded. If it is determined that the first combination can be used for prediction of the current-component block, the preset combination is determined as the first combination, and prediction is performed on the current-component block by using the first weight derivation mode and the Kfirst prediction modes in the first combination.

In some embodiments, the first combination is determined from multiple preset combinations. For example, the multiple preset combinations include any number of combinations such as 2, 3, 4, 5, 6, 7, 8, 9, etc. It is assumed that there are 8 combinations, where each combination includes one weight derivation mode and K prediction modes, and the 8 combinations have different flags (or indexes). In this way, at the decoding end, the first index can be obtained by decoding the bitstream, where the first index indicates the first combination. Then, a combination corresponding to the first index is queried from the multiple preset combinations, and the combination corresponding to the first index is determined as the first combination.

In some embodiments, a list is determined at both the decoding end and the encoding end, where the list includes multiple candidate combinations, and therefore, the list is also referred to as a candidate combination list, and the first combination corresponding to the first index is determined from the candidate combination list. In this case, the foregoing S101 includes the following steps.

S101-A, the bitstream is decoded to determine a candidate combination list, where the candidate combination list includes at least one candidate combination, and any one of the at least one candidate combination includes one weight derivation mode and K prediction modes.

S101-B, the first combination is determined according to the candidate combination list.

The candidate combination list includes at least one candidate combination, and any one of the at least one candidate combination includes one weight derivation mode and K prediction modes.

Exemplarily, the candidate combination list is illustrated in Table 5.

Table 5

| Index | Candidate combination |
|-------|----------------------|
| 0 | Candidate combination 1 (including one weight derivation mode and $K$ prediction modes) |
| 1 | Candidate combination 2 (including one weight derivation mode and $K$ prediction modes) |
| ...... | ...... |
| $i$-1 | Candidate combination $i$ (including one weight derivation mode and $K$ prediction modes) |
| ...... | ...... |

As illustrated in Table 5, the candidate combination list includes at least one candidate combination, and any two candidate combinations in the at least one candidate combination are not completely the same, that is, any two candidate combinations differ in at least one of the weight derivation mode or the K prediction modes. For example, candidate combination 1 and candidate combination 2 have different weight derivation modes. Alternatively, candidate combination 1 and candidate combination 2 have the same weight derivation mode, but differ in at least one of the K prediction modes. Alternatively, candidate combination 1 and candidate combination 2 have different weight derivation modes, and also differ in at least one of the K prediction modes.

Exemplarily, in the foregoing Table 5, the order of a candidate combination in the candidate combination list is taken as an index of the candidate combination, and optionally, the index of the candidate combination in the candidate combination list can also be indicated in another manner, which is not limited in embodiments of the disclosure.

In embodiments, at the decoding end, the manner for determining the first combination according to the candidate combination list includes, but is not limited to, the following manners.

Manner 1: the candidate combination list includes one candidate combination, and in this case, the candidate combination in the candidate combination list is determined as the first combination.

Manner 2: the candidate combination list includes multiple candidate combinations. In this case, the bitstream is decoded to obtain a first index, where the first index indicates the first combination; and a candidate combination corresponding to the first index in the candidate combination list is determined as the first combination.

In the above manner 2, at the decoding end, the bitstream is decoded to obtain the first index, the candidate combination list as illustrated in the above Table 5 is determined, and the first combination indicated by the first index is queried from the candidate combination list according to the first index.

For example, the first index is index 1, and in the candidate combination list illustrated in Table 5, a candidate combination corresponding to index 1 is candidate combination 2, that is, the first combination indicated by the first index is candidate combination 2. In this way, at the decoding end, a weight derivation mode and $K$ prediction modes in candidate combination 2 are determined as the first weight derivation mode and the $K$ first prediction modes in the first combination, and prediction is performed on the current-component block by using the first weight derivation mode and the $K$ first prediction modes, to obtain the prediction value of the current-component block.

In embodiments of the disclosure, the same candidate combination list can be determined at both the encoding end and the decoding end. For example, at both the encoding end and the decoding end, a list including $N$ candidate combinations is determined, where each candidate combination includes one weight derivation mode and $K$ prediction modes. If $N > 1$, at the encoding end, only one candidate combination finally chosen, for example, the first combination, needs to be signalled into the bitstream. At the decoding end, the first combination finally chosen at the encoding end is parsed. Specifically, at the decoding end, the bitstream is decoded to obtain the first index, and the first combination is determined according to the first index from the candidate combination list determined at the decoding end.

The syntax element for the first index is not limited in embodiments of the disclosure.

In a possible implementation, if the GPM technology is applied for prediction of the current-component block, *gpm_cand_idx* is used to indicate the first index.

Since the first index indicates the first combination, in some embodiments, the first index can also be referred to as a first-combination index or an index of the first combination.

In an example, the syntax after the first index is added to the bitstream is illustrated in Table 6.

Table 6

| | |
|---|---|
| if (deriving the condition for applying GPM to the current-component block) { | |
| gpm_cand_idx[ x0 ][ y0 ] | ae(v) |
| } | |

(continued)

| } | |
|---|---|

*gpm_cand_idx* is the first index.

In embodiments of the disclosure, in order to save codewords and reduce encoding cost, the first weight derivation mode and the *K* first prediction modes corresponding to the current-component block are taken as a combination, namely the first combination, and the first combination is indicated by the first index. Compared with indicating separately the first weight derivation mode and the *K* first prediction modes, in embodiments of the disclosure, fewer codewords are required, thereby reducing encoding cost.

The process of determining the candidate combination list in the foregoing S101-A is described below.

In some embodiments, the candidate combination list is pre-set.

In some embodiments, the candidate combination list is transmitted to the decoding end from the encoding end. For example, at the encoding end, the candidate combination list is transmitted to the decoding end before encoding the current-component block.

In some embodiments, the candidate combination list is uploaded to the cloud from the encoding end, and at the decoding end, the candidate combination list can be read from the cloud.

In some embodiments, the candidate combination list is constructed at the decoding end.

The manner for constructing the candidate combination list at the decoding end is not limited in embodiments of the disclosure. For example, the probabilities of various combinations formed by different weight derivation modes and different prediction modes are analyzed according to information related to the current-component block, and the candidate combination list is constructed according to the probabilities of these combinations.

Optionally, the information related to the current-component block includes mode information of neighbouring blocks of the current-component block, reconstructed samples of a first-component block corresponding to the current-component block, and the like.

In some embodiments, the candidate combination list is constructed at the decoding end through the following steps S101-A1.

S101-A1, the bitstream is decoded to determine a first-component block corresponding to the current-component block.

S101-A2, the candidate combination list is constructed based on the first-component block.

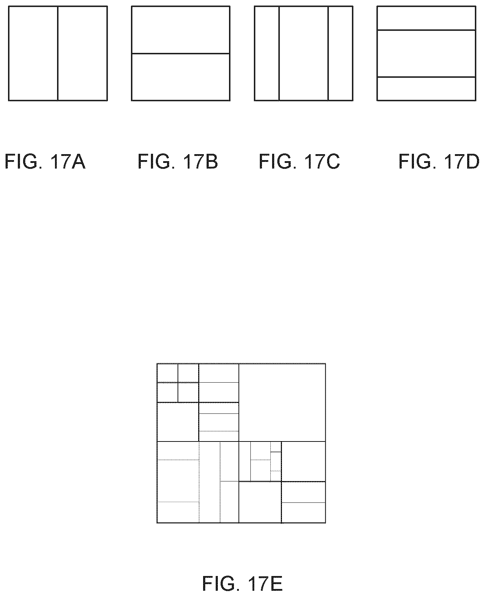

Currently, in video coding, a picture is partitioned into blocks for processing. For example, in VVC, the picture is partitioned into CTUs. The CTU size allowed in VVC is 128 × 128, and the CTU can be further partitioned into CUs which are more flexible. VVC supports binary tree partitioning, ternary tree partitioning, and quadtree partitioning. For example, FIG. 17A to FIG. 17D are schematic diagrams illustrating vertical binary tree partitioning, horizontal binary tree partitioning, vertical ternary tree partitioning, and horizontal ternary tree partitioning respectively.

FIG. 17E is a schematic diagram illustrating CTU partitioning, where a block with thick borders is subject to quadtree partitioning, while a block with thin borders is subject to binary tree partitioning or ternary tree partitioning. It can be seen that, some blocks which have been subject to partitioning can be further partitioned, and some restrictions can be imposed with respect to the trade-off between performance and complexity, which is not limited in embodiments of the disclosure.

Currently, a YUV4:2:0 format is the most commonly supported format in video coding, where Y represents a luma component, and U and V each represent a chroma component. In the YUV4:2:0 format, by utilizing the characteristic that human eyes are more sensitive to luminance than chrominance, a sampling rate of chrominance is reduced relative to luminance, that is, every two luma samples correspond to one sample of U component or V component in both a horizontal direction and a vertical direction, which is beneficial to improving compression efficiency. Since human eyes are more sensitive to luminance than chrominance, the luma component is considered to be more important, and therefore, in a common video coding standard, the luma component is firstly encoded, and then the chroma component is encoded.

For block partitioning, in some embodiments, the luma component is partitioned in the same manner as the chroma component.

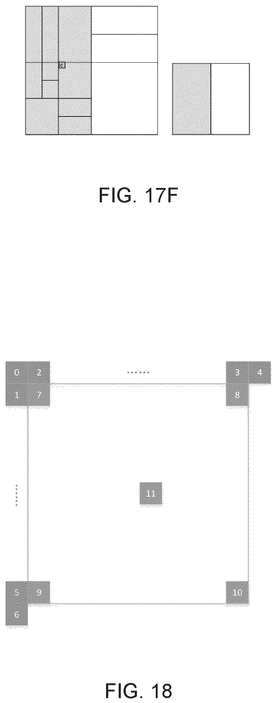

However, since a sampling rate of chrominance is low and quality requirements for chrominance are generally lower than those for luminance, in some embodiments, the block partitioning of the chroma component can also be different from that of the luma component. For example, as illustrated in FIG. 17F, the block partitioning of the luma component on the left is finer than the block partitioning of the chroma component on the right.

It should be noted that, in addition to the YUV4:2:0 format, other formats, such as YUV4:4:4, YUV4:2:1, RGB, etc., are also supported in video coding.

As illustrated in FIG. 17F, it is assumed that the current-component block is a gray component block on the right, the first-component block located in the same space as the gray component block is a gray area on the left in FIG. 17F, and the gray area on the left includes ten first-component CUs.

As can be seen from FIG. 17F, the first-component block located in the same space as the current-component block refers to a first-component block located in the same spatial location and having the same spatial size as the current-component block. As an example, the current-component block is a chroma block and the first-component block is a luma block. Due to different video formats, the chroma block may have a different size than the luma block. For example, for a video of YUV4:4:4 format, the chroma block has the same size as the luma block, and for a video of YUV4:2:0 format, the size of the luma block is four times as large as the size of the chroma block.

Since the chroma block may have a different size than the luma block, the chroma block and the luma block of the same spatial location and the same spatial size may not have the same coordinate. For example, in a video format YUV4:2:0, the chroma block is a block determined by a top-left coordinate of (x0, y0), a width of *width,* and a height of *height,* and accordingly, the luma block in the same space can be a block determined by a top-left coordinate of (x0*2, y0*2), a width of *width*2, and a height of *height*2. For another example, for a video format YUV4:4:4, the chroma block is a block determined by a top-left coordinate of (x0, y0), a width of *width,* and a height of *height,* and accordingly, the luma block in the same space can be a block determined by a top-left coordinate of (x0, y0), a width of *width,* and a height of *height.*

In addition, in some embodiments, since block partitioning is performed separately for the chroma block and the luma block, a luma block corresponding to a chroma coding block may not coincide with a coding block obtained by partitioning the luma component, but may be a luma region corresponding to the chroma coding block in terms of spatial location and spatial size. That is, in embodiments of the disclosure, the first-component block corresponding to the current-component block can be understood as a first-component block having the same spatial coverage as the current-component block.

During decoding, the luma component is usually decoded firstly, and then the chroma component is decoded. Therefore, in embodiments of the disclosure, when decoding the current-component block, the bitstream is firstly decoded to decode the first-component block corresponding to the current-component block, so as to obtain a reconstructed value of the first-component block. Then, the first-component block is used as a template of the current-component block to decode the current-component block.

Since there is a correlation between the first-component block corresponding to the current-component block and the current-component block, in embodiments of the disclosure, the candidate combination list of the current-component block is constructed based on the first-component block.

For example, for each combination, the first-component block is predicted by using the combination to obtain a prediction value of the first-component block corresponding to the combination, and the candidate combination list is constructed according to a prediction value of the first-component block corresponding to each combination. For example, for each combination, a weight derivation mode in the combination is used to derive weights for the first-component block; the first-component block is predicted by applying *K* prediction modes in the combination, so as to obtain *K* prediction values of the first-component block; and the *K* prediction values of the first-component block are weighted according to the derived weights for the first-component block, so as to obtain a prediction value of the first-component block corresponding to the combination. Finally, the candidate combination list is constructed according to a prediction value of the first-component block corresponding to each combination.

It should be noted that, the weights derived according to the weight derivation mode can be understood as deriving weights corresponding to each sample in the first-component block, or can be understood as deriving a weight matrix corresponding to the first-component block. When determining the prediction value of the first-component block based on the weights, for each sample in the first-component block, *K* prediction values corresponding to the sample can be determined, and a prediction value corresponding to the sample is determined according to the K prediction values corresponding to the sample and the weights, where a prediction value corresponding to each sample in the first-component block constitutes the prediction value of the first-component block. Alternatively, determination of the prediction value of the first-component block based on the weights can also be performed on a block basis. For example, prediction values of the first-component block are determined, and the *K* prediction values of the first-component block are weighted according to the weight matrix for the first-component block, so as to obtain the prediction value of the first-component block.

In some embodiments, S101-A2 includes steps S101-A21 to S101-A23.

S101-A21, *R* second combinations are determined, where any one of the *R* second combinations includes one weight derivation mode and *K* prediction modes, and *R* is a positive integer and *R* > 1.

S101-A22, for any one of *R* second combinations, determine a cost corresponding to the second combination when predicting the first-component block by using the second combination.

S101-A23, the candidate combination list is constructed according to a cost corresponding to each of the *R* second combinations.

In embodiments, at the decoding end, when constructing the candidate combination list, *R* second combinations are firstly determined. There is no limitation on the quantity of the *R* second combinations in the disclosure, which can be, for example, 8, 16, 32, and the like. Each of the *R* second combinations includes one weight derivation mode and *K* prediction modes. Then, for each of the *R* second combinations, determine a cost corresponding to the second combination when predicting the first-component block by using the second combination. Finally, the candidate combination list is constructed according to the cost corresponding to each of the *R* second combinations.

Since the first-component block corresponding to the current-component block is a reconstructed region, at the decoding end, a reconstructed value of the first-component block can be obtained. In this way, for each of the *R* second combinations, a prediction distortion cost corresponding to the second combination can be determined according to a prediction value of the first-component block corresponding to the second combination and the reconstructed value of the first-component block. The manner for determining the cost corresponding to the second combination includes, but is not limited to, SAD, SATD, and SSE. Then, the candidate combination list is constructed according to the cost corresponding to each of the *R* second combinations.

In embodiments of the disclosure, for S101-A22, there are at least two manners for determining the cost corresponding to the second combination when predicting the first-component block by using the second combination.

In a first manner, weights for the first-component block are determined according to the weight derivation mode in the second combination; the first-component block is predicted according to *the K* prediction modes in the second combination to obtain *K* prediction values of the first-component block; the *K* prediction values of the first-component block are weighted according to the weights for the first-component block to obtain a prediction value of the first-component block corresponding to the second combination; and the cost corresponding to the second combination is determined according to the prediction value of the first-component block corresponding to the second combination and the reconstructed value of the first-component block.

In a second manner, prediction values of the first-component block corresponding to the *K* prediction modes in the second combination are determined according to the weight derivation mode in the second combination; costs corresponding to the *K* prediction modes in the second combination are determined according to the prediction values of the first-component block corresponding to the *K* prediction modes in the second combination and the reconstructed value of the first-component block; and the cost corresponding to the second combination is determined according to the costs corresponding to the *K* prediction modes in the second combination.

In the second manner above, taking *K*=2 as an example, then the weights for the first-component block can be simplified to have two possible choices, namely 0 and 1. Then for each sample location, a sample value thereof only comes from a prediction block corresponding to a first prediction mode or a prediction block corresponding to a second prediction mode. Hence, for a prediction mode, calculate a cost thereof for the first-component block when taking the prediction mode as the first prediction mode regarding a certain weight derivation mode, that is, calculate only costs for part of samples with a weight of 1 in the first-component block when taking the prediction mode as the first prediction mode regarding the weight derivation mode. In an example, the cost is denoted as *cost[pred_mode_idx][gpm_idx][0],* where *pred_mode_idx* represents an index of the prediction mode, *gpm_idx* represents an index of the weight derivation mode, and 0 represents that the prediction mode is used as the first prediction mode.

Further, calculate a cost for the first-component block when taking the prediction mode as the second prediction mode in the weight derivation mode, that is, calculate only costs for part of samples with a weight of 1 in the first-component block when taking the prediction mode as the second prediction mode regarding the weight derivation mode. In an example, the cost is denoted as *cost[pred_mode_idx][gpm_idx][1],* where *pred_mode_idx* represents an index of the prediction mode, *gpm_idx* represents an index of the weight derivation mode, and 1 represents that the prediction mode is used as the second prediction mode.

In this case, when calculating a cost corresponding to a combination, the above two corresponding costs can be directly added. For example, if a cost corresponding to prediction modes *pred_mode_idx0* and *pred_mode_idx1* regarding a weight derivation mode *gpm_idx* needs to be calculated, where *pred_mode_idx0* is used as the first prediction mode, and *pred_mode_idx1* is used as the second prediction mode, and the cost is denoted as *costTemp,* then *costTemp=cost[pred_mode_idx0][gpm_idx][0]+ cost[pred_mode_idx1][gpm_idx][1]*. If a cost corresponding to prediction modes *pred_mode_idx0* and *pred_mode_idx1* regarding a weight derivation mode *gpm_idx* needs to be calculated, where *pred_mode_idx1* is used as the first prediction mode, and *pred_mode_idx0* is used as the second prediction mode, and the cost is denoted as *costTemp,* then *costTemp=cost[pred_mode_idx1][gpm_idx][0]+ cost[pred_mode_idx0][gpm_idx][1]*.

One advantage of such operation is that instead of first obtaining a prediction block by weighting and then calculating costs, as simplified, costs of two prediction modes are calculated directly and then the costs are added to obtain a cost corresponding to the combination. Since one prediction mode can be combined with multiple other prediction modes, and for the same weight derivation mode, the cost of the prediction mode when used as the first prediction mode and the cost of the prediction mode when used as the second prediction mode are fixed, these costs (that is, *cost[pred_mode_idx][gpm_idx][0]* and *cost[pred_mode_idx][gpm_idx][1]* in the foregoing example) can be reserved and utilized repeatedly, thereby reducing burden of calculation.

According to the foregoing method, the cost corresponding to each of the *R* second combinations can be determined, and then proceed to S101-A23.

The manner for constructing the candidate combination list according to the cost corresponding to each of the *R* second combinations in S101-A23 includes, but is not limited to, the following several examples.

Example 1, the $R$ second combinations are sorted according to the cost corresponding to each of the $R$ second combinations, and the sorted $R$ second combinations are determined as the candidate combination list.

The candidate combination list generated in Example 1 includes $R$ candidate combinations.

Optionally, the $R$ candidate combinations in the candidate combination list are sorted in an ascending order of costs, that is, costs corresponding to the $R$ candidate combinations in the candidate combination list increase sequentially in order of sorting.

The $R$ second combinations can be sorted according to the cost corresponding to each of the $R$ second combinations as follows. The $R$ second combinations are sorted in an ascending order of costs.

Example 2, $N$ second combinations are selected from the $R$ second combinations according to the cost corresponding to the second combination, and a list consisting of the $N$ second combinations is determined as the candidate combination list.

Optionally, the $N$ second combinations are first $N$ second combinations with the minimum cost among the $R$ second combinations. For example, according to the cost corresponding to each of the $R$ second combinations, $N$ second combinations with the minimum cost are selected from the $R$ second combinations to construct the candidate combination list. In this case, the candidate combination list includes $N$ candidate combinations.

Optionally, the $N$ candidate combinations in the candidate combination list are sorted in an ascending order of costs, that is, costs corresponding to the $N$ candidate combinations in the candidate combination list increase sequentially in order of sorting.

The process of determining the $R$ second combinations in S101-A21 is described below.

In some embodiments, the $R$ second combinations are pre-set. In this way, for each of the $R$ second preset combinations, the first-component block is predicted by using the second combination to obtain a prediction value of the first-component block corresponding to the second combination, and then a cost corresponding to the second combination is determined according to the prediction value of the first-component block corresponding to the second combination and the reconstructed value of the first-component block. The $R$ second combinations are sorted according to a cost corresponding to each second combination, and the sorted $R$ second combinations are taken as the candidate combination list, or $N$ second combinations with the minimum cost are selected from the sorted $R$ second combinations, to construct the candidate combination list.

In some embodiments, S101-A21 includes the following steps.

S101-A21-1, $P$ weight derivation modes and $Q$ prediction modes are determined, where $P$ is a positive integer, and $Q$ is a positive integer and $Q \geq K$.

S101-A21-2, the $R$ second combinations are constructed according to the $P$ weight derivation modes and the $Q$ prediction modes, where any one of the $R$ second combinations includes one of the $P$ weight derivation modes and $K$ prediction modes in the $Q$ prediction modes, $P$ is a positive integer, and $Q$ is a positive integer and $Q \geq K$.

In embodiments, at the decoding end, the $P$ weight derivation modes and the $Q$ prediction modes are firstly determined, and then the $R$ second combinations are constructed according to the $P$ weight derivation modes and the $Q$ prediction modes determined.

For example, the second combination includes one weight derivation mode and two prediction modes. It is assumed that the $P$ weight derivation modes are weight derivation mode 1 and weight derivation mode 2, and the $Q$ prediction modes are prediction mode 1, prediction mode 2, and prediction mode 3, then the two weight derivation modes and the three prediction modes can be combined into $2 \times 3 \times 2 = 12$ second combinations.

There is no limitation on the quantities of the $P$ weight derivation modes and the Q prediction modes in embodiments of the disclosure.

In a possible implementation, it is assumed that the current-component block is an intra-coding block, and there are 64 possible weight derivation modes and 67 possible intra prediction modes for GPM, which can be found from the VVC standard, but does not mean that there are only 64 possible types of weights for GPM or does not limit the specific types of the 64 possible types of weights for GPM. It should be noted that, using of 64 types for GPM in VVC is with respect to the trade-off between improving prediction effect and reducing overhead in the bitstream. However, in the disclosure, encoding of the weight derivation mode is not implemented based on a fixed logic, and theoretically, more types of weights are applicable and can be applied more flexibly in the disclosure. Likewise, it does not mean that there are only 67 intra prediction modes for GPM or does not limit the specific types of the 67 intra prediction modes for GPM, and theoretically, all possible intra prediction modes can be applied in GPM. For example, if an intra angular prediction mode is further detailed and there are more intra angular prediction modes introduced, then more intra angular prediction modes can be applied in GPM, for example, an MIP mode in VVC can also be applied in the disclosure. However, considering that there are multiple sub-modes of MIP, MIP is not elaborated in embodiments for ease of understanding. In addition, there are some wide-angle modes, which can also be applied in the disclosure, but will not be elaborated in embodiments.

Assuming that $K=2$, then the foregoing $K$ prediction modes include a 1st prediction mode and a 2nd prediction mode. Assuming that there are 67 available prediction modes (i. e. $Q=67$), then there are 67 possible choices for the 1st

prediction mode, and since the 2nd prediction mode is different from the 1st prediction mode, there are 66 possible choices for the 2nd prediction mode. Assuming that there are 64 weight derivation modes (i. e. $P$=64), then in the disclosure, any two different prediction modes and any one weight derivation mode can be combined to construct one second combination, and accordingly, there are a total of 64*67*66 possible second combinations.

In the implementation, the $P$ weight derivation modes are all possible weight derivation modes, such as the 64 weight derivation modes for GPM. The $Q$ prediction modes are all possible prediction modes, such as the 67 intra prediction modes for GPM. All the possible second combinations are obtained by means of an exhaustive algorithm, for example, 64*67*66 possible second combinations are obtained. Prediction is performed on the first-component block by using each of the 64*67*66 possible second combinations, a distortion cost of each second combination is calculated, and then a candidate combination list corresponding to the current-component block is obtained according to the distortion cost of each second combination.

In some embodiments, in order to reduce the amount of data and accelerate construction of the candidate combination list, not all the prediction modes are tried, and instead, only some of the prediction modes can be selected for trial.

In this case, determining of the $Q$ prediction modes in S101-A21-1 includes, but is not limited to, the following manners.

Manner 1: the $Q$ prediction modes are preset prediction modes.

Manner 2: at least one of a candidate prediction mode list of the current-component block, alternative prediction mode lists corresponding to the $K$ first prediction modes, a prediction mode(s) corresponding to the weight derivation mode, or a preset mode is determined. The $Q$ prediction modes are determined according to at least one of the candidate prediction mode list, the alternative prediction mode lists corresponding to the $K$ first prediction modes, the prediction mode corresponding to the weight derivation mode, or the preset mode.

The candidate prediction mode list includes multiple candidate prediction modes, and an alternative prediction mode list corresponding to any one of the $K$ first prediction modes includes at least one alternative prediction mode.

For example, the $Q$ prediction modes are determined according to the candidate prediction mode list of the current-component block.

For another example, the $Q$ prediction modes are determined according to the alternative prediction mode lists corresponding to the $K$ first prediction modes respectively.

For another example, the $Q$ prediction modes are determined according to the prediction mode corresponding to the weight derivation mode.

For another example, the $Q$ prediction modes are determined according to the preset mode.

For another example, the $Q$ prediction modes are determined according to the candidate prediction mode list of the current-component block and the alternative prediction mode lists corresponding to the $K$ first prediction modes respectively.

For another example, the $Q$ prediction modes are determined according to the candidate prediction mode list of the current-component block and the prediction mode corresponding to the weight derivation mode.

For another example, the $Q$ prediction modes are determined according to the alternative prediction mode lists corresponding to the $K$ first prediction modes and the prediction mode corresponding to the weight derivation mode.

For another example, the $Q$ prediction modes are determined according to the candidate prediction mode list, the alternative prediction mode lists corresponding to the $K$ first prediction modes, and the prediction mode corresponding to the weight derivation mode.

For another example, the $Q$ prediction modes are determined according to the candidate prediction mode list, the alternative prediction mode lists corresponding to the $K$ first prediction modes, the prediction mode corresponding to the weight derivation mode, and the preset mode.

Determining the alternative prediction mode lists corresponding to the $K$ first prediction modes can be understood as follows. An alternative prediction mode list is determined for each of the $K$ first prediction modes. Then, when constructing the second combination, a certain prediction mode in the second combination is selected from the alternative prediction mode list corresponding to the prediction mode. For example, $K$=2, and the $K$ first prediction modes include a 1st prediction mode and a 2nd prediction mode. At the decoding end, alternative prediction mode list 1 is constructed for the 1st prediction mode, and alternative prediction mode list 2 is constructed for the 2nd prediction mode. In this way, when constructing different second combinations, one alternative prediction mode is selected from alternative prediction mode list 1 and used as the 1st prediction mode, and one alternative prediction mode is selected from alternative prediction mode list 2 and used as the 2nd prediction mode. As such, one weight derivation mode, and the 1st prediction mode and the 2nd prediction mode selected constitute one second combination.

In embodiments of the disclosure, there is no limitation on the manner for determining the alternative prediction mode list corresponding to each of the $K$ first prediction modes.

In a possible implementation, for any one of the $K$ first prediction modes, at least one of a candidate prediction mode list corresponding to the prediction mode or the prediction mode corresponding to the weight derivation mode is determined, and an alternative prediction mode list corresponding to the prediction mode is determined according to at least one of the candidate prediction mode list or the prediction mode corresponding to the weight derivation mode.

In embodiments of the disclosure, the process of determining the candidate prediction mode list corresponding to one of the *K* first prediction modes is similar to the process of determining the candidate prediction mode list corresponding to the current-component block, and reference can be made to the following elaborations.

In some embodiments, the candidate prediction mode list includes one or more inter prediction modes, for example, includes at least one of skip, merge, a common inter prediction mode, unidirectional prediction, bidirectional prediction, multi-hypothesis prediction, or the like.

In some embodiments, the candidate prediction mode list includes one or more intra prediction modes, for example, includes at least one of a DC mode, a PLANAR mode, an angular mode, or the like. Optionally, the candidate prediction mode list includes at least one intra prediction mode in a most probable mode (MPM) list.

In some embodiments, the foregoing candidate prediction mode list can further include modes such as IBC and palette.

There is no limitation on the types and the quantity of prediction modes in the candidate prediction mode list in the disclosure.

In some embodiments, the candidate prediction mode list is determined in at least one of the following manners.

Manner 1: the candidate prediction mode list includes a preset mode(s).

Manner 2: the candidate prediction mode list includes a mode(s) in an MPM list.

In some embodiments, a first candidate intra prediction mode list can be an MPM list of the current-component block, for example, in VVC, an MPM list with a length of 6 can be obtained for the current-component block. In addition, in some subsequent evolved technologies, there is a scheme of secondary MPM, and an MPM list with a length of 22 can be derived, that is, the length of a first MPM list and the length of a second MPM list are 22 in total. In other words, in embodiments of the disclosure, the MPM can be used for selection of the intra prediction mode.

In some embodiments, if a first candidate prediction mode list determined above does not include the preset mode, the preset mode is added to the candidate prediction mode list.

In an example, the preset mode is several preset prediction modes. Optionally, the preset mode includes at least one of a DC mode, a horizontal mode, or a vertical mode.

In another example, a picture type corresponding to the current-component block is determined, and the preset mode is determined according to the picture type corresponding to the current-component block.

Currently, a common picture type includes an I picture, a B picture, and a P picture, and a common slice type include an I slice, a B slice, and a P slice. Taking the slice type as an example (the same also applies to the picture type), an I slice only has an intra-coded block(s), while a B slice or a P slice can have both an intra-coded block(s) and an inter-coded block(s). That is, in an I slice, there is only an intra-coded block(s) neighbouring the current-component block, while in a B slice or a P slice, there can be an intra-coded block or an inter-coded block neighbouring the current-component block. Therefore, for some intra methods for GPM in the disclosure, more relevant information, such as an intra prediction mode for a neighboring block, can be obtained from an I slice than from a B slice or a P slice, and thus different rules can be set for different picture types.

For example, when constructing the candidate prediction mode list, if the picture type corresponding to the current-component block is a B type or a P type, more preset modes are introduced, for example, some other angular modes such as a top-right direction (mode 2 in We), a bottom-left direction (mode 66 in VVC), and a top-left direction (mode 34 in VVC) are introduced besides the DC mode, the horizontal mode, and the vertical mode. Alternatively, limitation can be imposed on the number of candidate prediction mode lists for blocks of different picture types.

The picture type corresponding to the current-component block can be determined as follows. The picture type corresponding to the current-component block is determined according to a picture type of a current picture that the current-component block belongs to or a picture type of a current slice that the current-component block belongs to. For example, the picture type of the current picture that the current-component block belongs to or the picture type of the current slice that the current-component block belongs to is determined as the picture type corresponding to the current-component block.

Optionally, the preset mode can be added in some cases. In an example, the preset mode is added if the number of prediction modes in the candidate prediction mode list is less than (or less than or equal to) a threshold, where the threshold can be 3, 4, 5, 6, or the like.

Manner 3: the candidate prediction mode list includes a set of candidate prediction modes determined according to some rules such as equidistant filtering.

Manner 4: the candidate prediction mode list is determined according to a prediction mode applied to at least one neighbouring block of the current-component block.

For example, prediction modes applied to one or more neighbouring blocks of the current-component block are added to the candidate prediction mode list, so as to obtain the candidate prediction mode list of the current-component block. Alternatively, a candidate prediction mode list corresponding to a $k^{th}$ prediction mode in the *K* prediction modes is obtained, where the $k^{th}$ prediction mode is any one prediction mode in the $K$ prediction modes.

For another example, a prediction mode corresponding to the $k^{th}$ prediction mode in the prediction modes applied to one or more neighbouring blocks of the current-component block is added to the candidate prediction mode list corresponding to the $k^{th}$ prediction mode. For example, it is assumed that $K=2$, and the $k^{th}$ prediction mode is a 1st prediction mode. It is assumed that two prediction modes are applied to each of two neighbouring blocks of the current-component block for weighted prediction, where two prediction modes applied to a 1st neighbouring block are prediction mode 1 and prediction mode 3, and two prediction modes applied to a 2nd neighbouring block are prediction mode 4 and prediction mode 5. In this way, prediction mode 1 and prediction mode 4 can be added to a candidate prediction mode list corresponding to the 1st prediction mode.

Manner 5: the picture type corresponding to the current-component block is determined, and the candidate prediction mode list is determined according to the picture type corresponding to the current-component block. For example, if the picture type corresponding to the current-component block is a B type or a P type, at least one of the DC, the horizontal mode, the vertical mode, or some angular modes can be added to the first candidate prediction mode list. For another example, if the picture type corresponding to the current-component block is an I type, at least one of the DC, the horizontal mode, or the vertical mode can be added to the candidate prediction mode list.

Manner 6: at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been decoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In some embodiments, in manner 6, at least one of the first-component block, the second-component block, or the third-component block which has been decoded and neighbours the current-component block includes at least one of a first-component block, a second-component block, or a third-component block corresponding to a decoded region at the top and/or the left of the current-component block. For example, as illustrated in FIG. 18, prediction modes applied to blocks 0 to 5 are selected as the third prediction mode, and/or a prediction mode applied to at least one block represented by an ellipsis between block 2 and block 3 is selected as the third prediction mode, and/or a prediction mode applied to at least one block represented by an ellipsis between block 1 and block 5 is selected as the third prediction mode. In an example, in embodiments, the first-component block can be a luma CU, and the second-component block and/or the third-component block can be a chroma CU. In this case, a prediction mode applied to a decoded luma CU and/or decoded chroma CU neighbouring the current-component block is determined as the third prediction mode.

In some embodiments, in the foregoing manner 6, the internal preset region of the current-component block can be any region inside the current-component block. The first-component block corresponding to the internal region of the current-component block can be understood as a first-component block located in the same space as the internal region of the current-component block. Optionally, the first-component block can be a luma CU. For example, according to a coordinate of a top-left vertex of the internal region of the current-component block, a luma CU corresponding to the coordinate is obtained through mapping, and then a prediction mode applied to the luma CU is determined as the fourth prediction mode.

In some embodiments, in the foregoing manner 6, the manner for determining the fifth prediction mode related to the first-component block corresponding to the current-component block at least includes the following several examples.

Example 1, since the first-component block corresponding to the current-component block has been decoded, a prediction mode applied to the first-component block is determined as the fifth prediction mode. In an example, the first-component block may include multiple first-component CUs, and prediction modes applied to the multiple first-component CUs may be the same or different. In embodiments of the disclosure, a prediction mode applied to at least one of the multiple first-component CUs in the first-component block can be determined as the fifth prediction mode.

Example 2, the fifth prediction mode is determined according to a texture of the first-component block corresponding to the current-component block. Exemplarily, a texture direction of the first-component block is determined, and the fifth prediction mode is determined according to the texture direction.

There is no limitation on the manner for determining the texture direction of the first-component block corresponding to the current-component block in embodiments of the disclosure.

In a possible implementation, texture directions of some samples in the first-component block corresponding to the current-component block are determined, and the texture direction of the first-component block is determined according to the texture directions of these samples. In some embodiments, for ease of illustration, a sample whose texture direction needs to be determined in the first-component block is called a texture sample. These texture samples can be default samples. For example, at both the encoding end and the decoding end, some samples in the first-component block are used as texture samples by default, and texture directions of the texture samples are calculated. In some embodiments, the texture sample is selected in a preset manner. For example, at the decoding end, multiple texture samples are selected from the first-component block in a preset manner for texture sample selection.

For each of the multiple texture samples, a gradient of the texture sample is determined, for example, a horizontal gradient and a vertical gradient of the texture sample are determined, and then a texture direction of the texture sample is determined according to the horizontal gradient and the vertical gradient of the texture sample.

Then, the texture direction of the first-component block is determined according to the texture direction of each texture sample.

Exemplarily, one or more of texture directions corresponding to the multiple texture samples are determined as the texture direction of the first-component block.

For example, any one or more of texture directions corresponding to the multiple texture samples are determined as the texture direction of the first-component block.

For another example, the most frequently appeared one or more of the texture directions corresponding to the multiple texture samples are determined as the texture direction of the first-component block.

After the texture direction of the first-component block corresponding to the current-component block is determined, the fifth prediction mode is determined according to the texture direction.

In an example, a prediction mode having a prediction direction parallel to the texture direction is determined as the fifth prediction mode.

In an example, a prediction mode having a prediction direction perpendicular to the texture direction is determined as the fifth prediction mode.

In an example, a prediction mode having a prediction direction parallel to the texture direction and a prediction mode having a prediction direction perpendicular to the texture direction are determined as the fifth prediction mode.

It should be noted that, the prediction mode having a prediction direction parallel to the texture direction includes a prediction mode having a prediction direction parallel to the texture direction and/or a prediction mode having a prediction direction approximately parallel to the texture direction. The prediction mode having a prediction direction perpendicular to the texture direction includes a prediction mode having a prediction direction perpendicular to the texture direction and/or a prediction mode having a prediction direction approximately perpendicular to the texture direction.

It should be noted that, as the manner for determining the candidate prediction mode list, the foregoing manner 1 to manner 6 can be used separately or can be combined arbitrarily.

In some embodiments, the candidate prediction mode list includes at least one of a candidate intra prediction mode list or a candidate inter prediction mode list. The candidate intra prediction mode list includes at least one candidate intra prediction mode, and the candidate inter prediction mode list includes at least one candidate inter prediction mode.

After the candidate prediction mode list of the current-component block is obtained in the foregoing manner, $Q$ prediction modes are determined according to the candidate prediction mode list, for example, all or some of candidate prediction modes in the candidate prediction mode list are determined as all or some of the $Q$ prediction modes.

The following will elaborate a process of determining the prediction mode corresponding to the weight derivation mode.

In embodiments of the disclosure, the prediction mode corresponding to the weight derivation mode is a generic term, which can be, for example, a prediction mode(s) corresponding to one preset weight derivation mode, or a prediction mode(s) corresponding to several preset weight derivation modes. In some embodiments, the prediction mode corresponding to the weight derivation mode can also be understood as a prediction mode list corresponding to the weight derivation mode, where the prediction mode list includes at least one prediction mode.

In some embodiments, the prediction mode corresponding to the weight derivation mode includes a prediction mode corresponding to at least one of the $P$ weight derivation modes. In this case, the prediction mode corresponding to the weight derivation mode is determined as follows. For a $p^{th}$ weight derivation mode in the $P$ weight derivation modes, a prediction mode corresponding to the $p^{th}$ weight derivation mode is determined; and the prediction mode corresponding to the weight derivation mode is determined according to the prediction mode corresponding to least one of the $P$ weight derivation modes, where $p$ is a positive integer.

In embodiments of the disclosure, the process of determining a prediction mode corresponding to each of the $P$ weight derivation modes is substantially the same. For ease of illustration, the $p^{th}$ weight derivation mode in the $P$ weight derivation modes is taken as an example for illustration below.

The prediction mode corresponding to the $p^{th}$ weight derivation mode can be determined in the following two manners.

Manner 1: if at least one of the prediction modes corresponding to the $p^{th}$ weight derivation mode is an intra prediction mode, an angle index is determined according to the $p^{th}$ weight derivation mode, and an intra prediction mode corresponding to the angle index is determined as at least one of the prediction modes corresponding to the $p^{th}$ weight derivation mode.

The angle index indicates an angle index of a boundary line of weights.

In some embodiments, the angle index is represented by the field *angleIdx.*

The foregoing Table 2 illustrates a correspondence between *merge_gpm_partition_idx* and *angleIdx.* With reference to Table 2, the angle index can be derived according to the $p^{th}$ weight derivation mode.

In the disclosure, there is a correspondence between angle indexes and intra prediction modes, that is, different angle indexes correspond to different intra prediction modes.

Exemplarily, the correspondence between angle indexes and intra prediction modes is illustrated in Table 7.

Table 7

| angleIdx | Intra prediction mode |
|---|---|
| 0 | 50 |
| 2 | 42 |
| 3 | 38 |
| 4 | 34 |
| 5 | 30 |
| ... | ... |

In the foregoing manner 1, taking $K=2$ as an example, if a 1st prediction mode or a 2nd prediction mode is an intra prediction mode, the angle index is determined according to the $p^{th}$ weight derivation mode, for example, the angle index corresponding to the $p^{th}$ weight derivation mode is derived according to Table 2. Then, the intra prediction mode corresponding to the angle index is determined according to the foregoing Table 7, for example, the angle index is 2, and the intra prediction mode corresponding to the angle index is 42, and accordingly, intra prediction mode 42 is determined as the 1st prediction mode or the 2nd prediction mode.

Manner 2: if at least one of the prediction modes corresponding to the $p^{th}$ weight derivation mode is an intra prediction mode, an intra prediction mode(s) corresponding to the $p^{th}$ weight derivation mode is determined; and at least one of the intra prediction modes corresponding to the $p^{th}$ weight derivation mode is determined as at least one of the prediction modes corresponding to the $p^{th}$ weight derivation mode.

The intra prediction mode corresponding to the $p^{th}$ weight derivation mode includes at least one of an intra prediction mode having a prediction direction parallel to the boundary line of weights, an intra prediction mode having a prediction direction perpendicular to the boundary line, or a planar mode.

It should be noted that, the intra prediction mode having a prediction direction parallel to the boundary line of weights includes one or more intra prediction modes having a prediction direction parallel or approximately parallel to the boundary line of weights. The intra prediction mode having a prediction direction perpendicular to the boundary line of weights include one or more intra prediction modes having a prediction direction perpendicular or approximately perpendicular to the boundary line of weights.

In the foregoing manner 2, taking $K=2$ as an example, if a 1st prediction mode and/or a 2nd prediction mode is an intra prediction mode, the 1st prediction mode and/or the 2nd prediction mode is determined from the intra prediction mode(s) corresponding to the weight derivation mode. For example, the 1st prediction mode and/or the 2nd prediction mode can be an intra prediction mode that is collinear or nearly collinear with a weight partition line (also referred to as a boundary line). Alternatively, the 1st prediction mode and/or the 2nd prediction mode can be an intra prediction mode having a prediction direction perpendicular or approximately perpendicular to the boundary line of weights. For example, the boundary line of weights is in a horizontal direction, for example, a mode with a GPM index 18, 19, 50, or 51 in FIG. 4, and the 1st prediction mode and/or the 2nd prediction mode is mode 18 in a horizontal direction or mode 50 in a vertical direction.

At the decoding end, the prediction mode corresponding to at least one of the P weight derivation modes is determined through the foregoing steps, and then the prediction mode corresponding to the weight derivation mode is determined according to the prediction mode corresponding to at least one of the P weight derivation modes. For example, all or some of the prediction modes corresponding to at least one of the P weight derivation modes is used as the prediction mode corresponding to the weight derivation mode.

Further, there may be repeated prediction modes in prediction modes corresponding to the P weight derivation modes, and in this case, the repeated prediction modes are removed, and the remaining different prediction modes are determined as the prediction mode corresponding to the weight derivation mode.

In embodiments of the disclosure, in order to reduce the number of the R second combinations, selection is performed on the prediction modes, and specifically, Q prediction modes are determined according to the foregoing method.

In some embodiments, in order to reduce complexity at the decoding end, the number of the $Q$ prediction modes is restricted, for example, $Q$ is less than or equal to a first preset threshold. In the disclosure, the value of the first preset threshold is not limited, and can be determined according to actual needs, for example, the first preset threshold is 6, that is, 6 prediction modes are selected to construct the $R$ second combinations, so as to control the number of second combinations.

In some embodiments, the value of $Q$ depends on the size and/or shape of the current-component block, where the shape of the current-component block can be understood as depending on the length-to-width ratio of the current-component block.

During prediction, for a small block, prediction results of similar prediction modes differ slightly, while for a large block, prediction results of similar prediction modes differ significantly. Therefore, in embodiments of the disclosure, different values of $Q$ are set for blocks of different sizes, i. e. a large value of $Q$ is set for a large block, while a small value of $Q$ is set for a small block.

In this case, when determining the value of $Q$ corresponding to the current-component block, the value of $Q$ is set according to the size of the current-component block. For example, if the size of the current-component block is greater than a first value, then $Q$ is greater than or equal to a second preset threshold. For another example, if the size of the current-component block is smaller than or equal to the first value, then $Q$ is less than a third preset threshold. The specific values of the first value, the second preset threshold, and the third preset threshold are not limited in embodiments of the disclosure, where the third preset threshold is less than the second preset threshold.

The process of determining the $P$ weight derivation modes in S101-A21-1 is described below.

In embodiments of the disclosure, there are at least the following manners for determining the $P$ weight derivation modes.

Manner 1: the $P$ weight derivation modes are selected from $M$ preset weight derivation modes, where $M$ is a positive integer and $M \geq P$.

There is no limitation on the $M$ preset weight derivation modes in embodiments of the disclosure.

In some embodiments, there are 64 weight derivation modes for GPM and 56 weight derivation modes for AWP. In embodiments, the $M$ preset weight derivation modes include at least one of the 64 weight derivation modes for GPM, or include at least one of the 56 weight derivation modes for AWP.

In some embodiments, the $M$ weight derivation modes in embodiments of the disclosure can support more *angleIdx* or support *angleIdx* different from those in VVC. For another example, the $M$ weight derivation modes in embodiments of the disclosure can support more *distanceIdx* or support *distanceIdx* different from those in VVC.

In some embodiments, the $M$ preset weight derivation modes can be derived according to a preset weight derivation mode.

For example, in embodiments of the disclosure, the $M$ weight derivation modes are determined according to a weight derivation mode corresponding to AWP. Optionally, in embodiments of the disclosure, the $M$ weight derivation modes can also be derived in other manners.

In some embodiments, if $M = P$, the $M$ weight derivation modes are determined as the $P$ weight derivation modes.

In some embodiments, if $M > P$, in order to further reduce the number of the $R$ second combinations, selection is performed on the $M$ preset weight derivation modes, and then the $P$ weight derivation modes can be selected from the $M$ preset weight derivation modes to construct the $R$ second combinations.

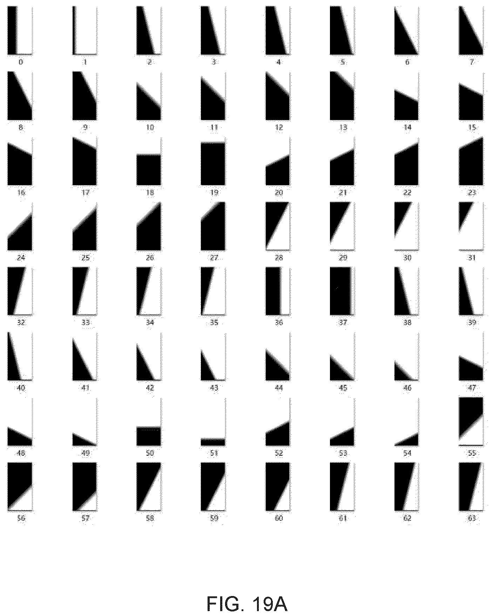

In some embodiments, a weight derivation mode corresponding to a preset partition angle and/or a preset offset is removed from the $M$ weight derivation modes to obtain the $P$ weight derivation modes. The same partition angle in the weight derivation mode may correspond to multiple offsets. As illustrated in FIG. 19A, weight derivation modes 10, 11, 12, and 13 have the same partition angle, but have different offsets. Therefore, weight derivation modes corresponding to some preset offsets can be removed, and/or weight derivation modes corresponding to some preset partition angles can be removed. As such, it is possible to reduce the total number of possible second combinations, and on the other hand, to make various possible second combinations differ more significantly.

In some embodiments, selection conditions corresponding to different blocks can be different. In this way, when determining the $P$ weight derivation modes corresponding to the current-component block, a selection condition corresponding to the current-component block is firstly determined, and then $P$ weight derivation modes are selected from the $M$ weight derivation modes according to the selection condition corresponding to the current-component block.

In some embodiments, the selection condition corresponding to the current-component block includes a selection condition corresponding to the size of the current-component block and/or a selection condition corresponding to the shape of the current-component block. During prediction, for a small block, prediction results of similar weight derivation modes differ slightly, while for a large block, prediction results of similar weight derivation modes differ significantly. Therefore, in embodiments of the disclosure, different values of $P$ are set for blocks of different sizes, i. e. a large value of $P$ is set for a large block, while a small value of $P$ is set for a small block.

In some embodiments, the selection condition is implemented by an array. The array includes $M$ elements, and the *M* elements are in one-to-one correspondence with the *M* weight derivation modes. An element corresponding to each weight derivation mode indicates whether the weight derivation mode is applicable, and whether the weight derivation mode is applicable can be understood as whether the weight derivation mode can be used as one of the *P* weight derivation modes for subsequent trial of the second combination.

The array can be a one-dimensional array or a two-dimensional array.

Exemplarily, taking GPM as an example, the number of the *M* weight derivation modes is 64, an array including 64 elements is set, and a value of each element indicates whether a corresponding weight derivation mode is applicable. Taking a one-dimensional array as an example, a specific example is as follows, in which an array of *g_sgpm_splitDir* is set:

g_sgpm_splitDir[64] = {

1,1,1,0,1,0,1,0,

1,0,1,0,1,0,1,0,

1,0,1,1,1,0,1,0,

1,0,1,0,1,0,1,0,

0,0,0,0,1,1,0,1,

0,0,1,0,0,1,0,0,

1,0,1,1,0,1,0,0,

1,0,0,1,0,0,1,0

};

If the value of *g_sgpm_splitDir[x]* is 1, it indicates that a weight derivation mode whose index is *x* is applicable; and if the value of *g_sgpm_splitDir[x]* is 0, it indicates that the weight derivation mode whose index is x is not applicable.

In some embodiments, if the selection condition corresponding to the current-component block includes the selection condition corresponding to the size of the current-component block and the selection condition corresponding to the shape of the current-component block, and for the same weight derivation mode, if the selection condition corresponding to the size of the current-component block and the selection condition corresponding to the shape of the current-component block both indicate that the weight derivation mode is applicable, the weight derivation mode is determined as one of the *P* weight derivation modes. If at least one of the selection condition corresponding to the size of the current-component block or the selection condition corresponding to the shape of the current-component block indicates that the weight derivation mode is not applicable, it is determined that the weight derivation mode does not belong to the *P* weight derivation modes.

In some embodiments, selection conditions corresponding to different block sizes and selection conditions corresponding to different block shapes can be implemented separately by multiple arrays.

In some embodiments, selection conditions corresponding to different block sizes and selection conditions corresponding to different block shapes can be implemented by two-dimensional arrays, that is, one two-dimensional array includes both the selection condition corresponding to the block size and the selection condition corresponding to the block shape.

Exemplarily, for a block with a size of A and a shape of B, a selection condition corresponding to the block is illustrated as follows, and the selection condition is represented by a two-dimensional array:

g_sgpm_splitDir[64] = {

(1,1),(1,1),(1,1),(1,0),(1,0),(0,0),(1,0),(1,1),

(1,1),(0,0),(1,1),(1,0),(1,0),(0,0),(1,0),(1,1),

(0,1),(0,0),(1,1),(0,0),(1,0),(0,0),(1,0),(0,0),

(1,1),(0,0),(0,1),(1,0),(1,0),(1,0),(1,0),(0,0),

(0,0),(0,0),(1,1),(0,0),(1,1),(1,1),(1,0),(0,1),

(0,0),(0,0),(1,1),(0,0),(1,0),(0,0),(1,0),(0,0),

(1,0),(0,0),(1,1),(1,0),(1,0),(1,0),(0,0),(0,0),

(1,1),(0,0),(1,1),(0,0),(0,0),(1,0),(1,1),(0,0)

};

If both values of *g_sgpm_splitDir[x]* are 1, it indicates that a weight derivation mode whose index is *x* is applicable; and if one of the values of *g_sgpm_splitDir[x]* is 0, it indicates that the weight derivation mode whose index is *x* is not applicable. For example, *g_sgpm_splitDir[4]*=(1,0) indicates that weight derivation mode 4 is applicable to a block with a size of A, but is not applicable to a block with a shape of B. Therefore, if the size of a block is A and the shape of the block is B, the weight derivation mode is not applicable.

It should be noted that, in the foregoing elaborations, the 64 weight derivation modes for GPM are taken as an example, but the weight derivation mode in embodiments of the disclosure includes, but is not limited to, the 64 weight derivation modes for GPM and the 56 weight derivation modes for AMP.

At the decoding end, after determining the $Q$ prediction modes and the $P$ weight derivation modes according to the foregoing steps, $R$ different second combinations are constructed according to the $Q$ prediction modes and the $P$ weight derivation modes. Then, the candidate combination list is determined according to the $R$ second combinations, and then the first weight derivation mode and the $K$ first prediction modes are determined from the candidate combination list.

In some embodiments, in order to further accelerate construction of the candidate combination list, at the decoding end, selection is performed on the foregoing determined $Q$ prediction modes and $P$ weight derivation modes. In this case, for S101-A21-2, the $R$ second combinations are constructed according to the determined $P$ weight derivation modes and $Q$ prediction modes according to the following steps S101-A21-21 to S101-A21-23.

S101-A21-21, $S$ weight derivation modes are selected from the $P$ weight derivation modes, where $S$ is a positive integer and $S \leq P$.

Specifically, a weight derivation mode with low probability of occurrence is removed from the $P$ determined weight derivation modes, so as to obtain the $S$ selected weight derivation modes.

For the above S101-A21-21, the manner for selecting the $S$ weight derivation modes from the $P$ weight derivation modes includes, but is not limited to, the following manners.

Manner 1, for an $i^{th}$ weight derivation mode in the $P$ weight derivation modes, weights of $K$ second prediction modes for the first-component block are determined according to the $i^{th}$ weight derivation mode, where the $K$ second prediction modes are any $K$ prediction modes in the $Q$ prediction modes, and $i$ is a positive integer and $1 \leq i \leq P$. If a weight of any one of the $K$ prediction modes for the first-component block is less than a first preset value, the $i^{th}$ weight derivation mode is removed from the $P$ weight derivation modes, so as to obtain the $S$ weight derivation modes.

In the above manner 1, for a weight derivation mode, if weights for the first-component block derived according to the weight derivation mode make a certain prediction mode have little contribution to prediction of the first-component block or have no contribution to prediction of the first-component block, the weight derivation mode will not be used. For example, in weight derivation mode 52 in FIG. 4 (square block), a weight of a $2^{nd}$ prediction mode for the first-component block is low. For another example, in weight derivation mode 54, a weight of the $2^{nd}$ prediction mode to the first-component block is zero, that is, it can be considered that in weight derivation mode 54, the $2^{nd}$ prediction mode has no contribution to prediction of the first-component block, and the prediction value of the first-component block is determined completely according to a $1^{st}$ prediction mode. In this case, the $2^{nd}$ prediction mode has no contribution, and such weight derivation mode needs to be removed from the $P$ weight derivation modes.

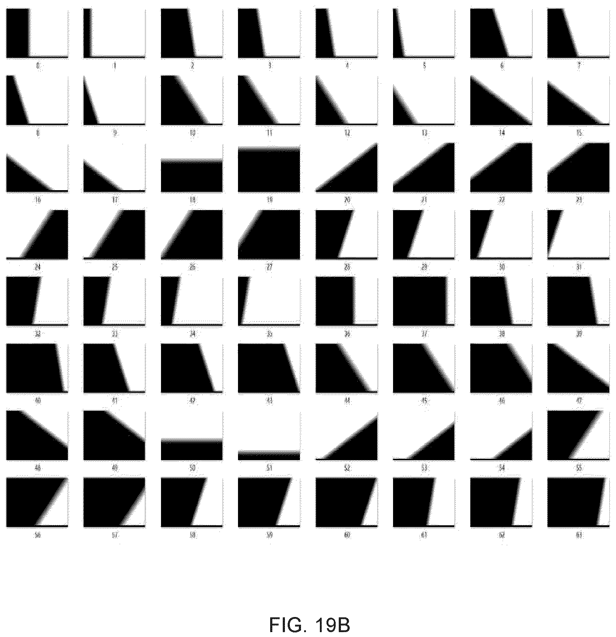

It should be noted that, the same weight derivation mode for blocks of different shapes may lead to different contributions of the two prediction modes. The current-component block may be square-shaped or rectangular-shaped, the length may be greater than the width or the width may be greater than the length, and in addition, the ratio may be 1:2 or 1:4. FIG. 19A illustrates weight derivation modes for GPM in a 32x64 block, and FIG. 19B illustrates weight derivation modes for GPM in a 64x32 block. As can be seen, an intersection between a boundary line of the same weight derivation mode and a block boundary is different for different shapes of the block, because the block shape has changed while the angle of the boundary line remains unchanged despite change of the block shape. As illustrated in FIG. 19A, for a weight derivation mode whose index is 52, in a 32x64 block, when a boundary line of the weight derivation mode whose index is 52 extends to a region of the first-component block corresponding to the current-component block, the boundary line intersects with the region of the first-component block such that a weight of the 2nd prediction mode to the first-component block is not less than a preset value, which indicates that the 2nd prediction mode has a contribution to prediction of the first-component block. However, as illustrated in FIG. 19B, also for the weight derivation mode whose index is 52, in a 64x32 block, when the boundary line of the weight derivation mode whose index is 52 extends to the region of the first-component block corresponding to the current-component block, the boundary line does not intersect with the region of the first-component block such that the weight of the 2nd prediction mode to the first-component block is 0, which indicates that the 2nd prediction mode has no contribution to prediction of the first-component block.

In the foregoing manner 1, a weight derivation mode which makes a weight of any one of the K prediction modes for the first-component block be less than the first preset value is removed from the P weight derivation modes, so as to obtain the S weight derivation modes.

The specific value of the first preset value is not limited in embodiments of the disclosure, which can be, for example, a small value greater than or equal to 0.

Manner 2: for an $i$th weight derivation mode in the P weight derivation modes, a cost when predicting the first-component block by using the $i$th weight derivation mode is determined, where $i$ is a positive integer and $1 \leq i \leq P;$ and the S weight derivation modes are selected from the P weight derivation modes according to the cost corresponding to the $i$th weight derivation mode.

In the above manner 2, a cost corresponding to each of the P weight derivation modes is calculated, so as to select the S weight derivation modes from the P weight derivation modes.

In embodiments of the disclosure, one weight derivation mode and K prediction modes are used as one combination to calculate a cost. In this way, for the convenience of calculation, costs of the P weight derivation modes are calculated based on the given K prediction modes, that is, each of the P weight derivation modes is combined with the given K prediction modes to obtain P combinations, and a cost corresponding to each of the P combinations is calculated, so as to obtain the costs of the P weight derivation modes.

For example, assuming that the given K prediction modes are prediction mode 1 and prediction mode 2, for the $i$th weight derivation mode in the P weight derivation modes, the $i$th weight derivation mode, prediction mode 1, and prediction mode 2 constitute a combination, and the combination is marked as combination $i$. The first-component block corresponding to the current-component block is predicted by using combination $i$, so as to obtain a prediction value of the first-component block corresponding to combination $i$. A prediction distortion cost corresponding to combination $i$ is determined according to the prediction value of the first-component block corresponding to combination $i$ and the reconstructed value of the first-component block, and the prediction distortion cost corresponding to combination $i$ is determined as a cost corresponding to the $i$th weight derivation mode. In this way, a cost corresponding to any one of the P weight derivation modes can be determined.

After the cost corresponding to the $i$th weight derivation mode in the P weight derivation modes is determined according to the foregoing method, S weight derivation modes are selected from the P weight derivation modes according to the cost corresponding to the $i$th weight derivation mode.

For the above manner 2, at the decoding end, the S weight derivation modes can be selected from the P weight derivation modes according to the cost corresponding to the $i$th weight derivation mode in the following manners.

In a first manner, if the cost corresponding to the $i$th weight derivation mode is less than a second preset value, a weight derivation mode(s) similar to the $i$th weight derivation mode is selected from the P weight derivation modes; and the S weight derivation modes are determined according to the $i$th weight derivation mode and the weight derivation mode similar to the $i$th weight derivation mode. The weight derivation mode similar to the $i$th weight derivation mode can be understood as a weight derivation mode whose prediction result is similar to that of the $i$th weight derivation mode. For example, the weight derivation mode similar to the $i$th weight derivation mode includes a weight derivation mode whose partition angle is similar to that of the $i$th weight derivation mode, and/or a weight derivation mode whose offset similar to that of the $i$th weight derivation mode, where an offset of a weight derivation mode can also be understood as an intercept of a boundary line of the weight derivation mode on the boundary of the current-component block.

Exemplarily, similarity in partition angle can mean that the partition angles are the same but the offsets are different, such as weight derivation mode 11 and weight derivation mode 13 in FIG. 4; or can mean that the partition angles are the same and the offsets are similar, such as weight derivation mode 11 and weight derivation mode 12 in FIG. 4; or can mean that the partition angles are similar but the offsets are different, such as weight derivation mode 9 and weight derivation mode 11 in FIG. 4; or can mean that the partition angles are similar and the offsets are similar, such as weight derivation mode 9 and weight derivation mode 12 in FIG. 4.

Exemplarily, similarity in offset can mean that the offsets are similar and the partition angles are the same, such as weight derivation mode 29 and weight derivation mode 30 in FIG. 4; or can mean that the offsets are the same or similar and the partition angles are similar, such as weight derivation mode 2 and weight derivation mode 38 in FIG. 4.

In some embodiments, the weight derivation mode similar to the $i^{th}$ weight derivation mode can be understood as a weight derivation mode whose index is close to the index of the $i^{th}$ weight derivation mode.

In the first manner, if the cost corresponding to the $i^{th}$ weight derivation mode is less than the second preset value, it indicates that an optimal prediction effect may be achieved if prediction is performed on the current-component block by using the $i^{th}$ weight derivation mode. In this case, the $i^{th}$ weight derivation mode is selected from the $P$ weight derivation modes to construct the $R$ second combinations. In addition, since the weight derivation mode similar to the $i^{th}$ weight derivation mode has characteristics similar to those of the $i^{th}$ weight derivation mode, the weight derivation mode similar to the $i^{th}$ weight derivation mode is selected from the $P$ weight derivation modes to construct the $R$ second combinations. Then, another weight derivation mode is selected from the remaining weight derivation modes in the $P$ weight derivation modes and is taken as a new $i^{th}$ weight derivation mode, and the foregoing steps are repeated, so as to obtain the $S$ weight derivation modes.

The specific value of the second preset value is not limited in embodiments of the disclosure, and is specifically determined according to actual needs.

In some embodiments, at the decoding end, the $S$ weight derivation modes can also be selected from the $P$ weight derivation modes in a second manner described below.

In the second manner, if the cost corresponding to the $i^{th}$ weight derivation mode is greater than a third preset value, the $i^{th}$ weight derivation mode and the weight derivation mode similar to the $i^{th}$ weight derivation mode are removed from the $P$ weight derivation modes, so as to obtain at least one weight derivation mode after removal; and the $S$ weight derivation modes are determined according to the at least one weight derivation mode after removal.

In the second manner above, if the cost corresponding to the $i^{th}$ weight derivation mode is greater than the third preset value, it indicates that an optimal prediction effect may not be achieved if prediction is performed on the current-component block by using the $i^{th}$ weight derivation mode. In this case, the $i^{th}$ weight derivation mode is removed from the $P$ weight derivation modes. In addition, since the weight derivation mode similar to the $i^{th}$ weight derivation mode has characteristics similar to those of the $i^{th}$ weight derivation mode, the weight derivation mode similar to the $i^{th}$ weight derivation mode is also removed from the $P$ weight derivation modes, so as to obtain a set of weight derivation modes after removal. Then, another weight derivation mode is selected from the set of weight derivation mode after removal and is taken as a new $i^{th}$ weight derivation mode, and the foregoing steps are repeated. In this way, weight derivation modes in a set of weight derivation mode finally obtained are determined as the $S$ weight derivation modes.

The specific value of the third preset value is not limited in embodiments of the disclosure, and is specifically determined according to actual needs. The third preset value is greater than the second preset value described above.

At the decoding end, after the $S$ weight derivation modes are selected from the $P$ weight derivation modes according to the foregoing steps, the following step S101-A21-22 is performed.

S101-A21-22, $T$ prediction modes are selected from the $Q$ prediction modes, where $T$ is a positive integer and $T \leq Q$.

In embodiments of the disclosure, there is no limitation on the manner for selecting $T$ prediction modes from the $Q$ prediction modes.

In some embodiments, $T$ preset prediction modes are selected from the $Q$ prediction modes.

In some embodiments, for an $i^{th}$ prediction mode in the $Q$ prediction modes, at the decoding end, determine a cost when predicting the first-component block by using the $i^{th}$ prediction mode, where $i$ is a positive integer and $1 \leq i \leq Q$; and $T$ prediction modes are selected from the $Q$ prediction modes according to the cost corresponding to the $i^{th}$ prediction mode.

In embodiments of the disclosure, one weight derivation mode and $K$ prediction modes are used as one combination to calculate a cost. In this way, for the convenience of calculation, costs of the $Q$ prediction modes are calculated based on the given weight derivation mode and other given $K$-1 prediction modes, i. e. each of the $Q$ prediction modes is combined with the given weight derivation mode and the given $K$-1 prediction modes, so as to obtain $Q$ combinations; and a cost corresponding to each of the $Q$ combinations is calculated, so as to obtain costs of the $Q$ prediction modes.

For example, assuming that the given $K$-1 prediction modes are prediction mode 1 and the given weight derivation mode is weight derivation mode 1, for the $i^{th}$ prediction mode in the $Q$ prediction modes, weight derivation mode 1, the $i^{th}$ prediction mode, and prediction mode 1 constitute a combination, and the combination is marked as combination $i$. The first-component block is predicted by using combination $i$, to obtain a prediction value of the first-component block corresponding to combination $i$. A prediction distortion cost corresponding to combination $i$ is determined according to the prediction value of the first-component block corresponding to combination $i$ and the reconstructed value of the first-component block, and the prediction distortion cost corresponding to combination $i$ is determined as a cost corresponding to the $i^{th}$ prediction mode. In this way, a cost corresponding to any one of the $Q$ prediction modes can be determined.

After the cost corresponding to the $i^{th}$ prediction mode in the $Q$ prediction modes is determined according to the foregoing method, the $T$ prediction modes are selected from the $Q$ prediction modes according to the cost corresponding to the $i^{th}$ prediction mode.

At the decoding end, the $T$ prediction modes can be selected from the $Q$ prediction modes according to the cost corresponding to the $i^{th}$ prediction mode in the following manners.

In a first manner, if a cost corresponding to the $i^{th}$ prediction mode is less than a fourth preset value, a prediction mode(s) similar to the $i^{th}$ prediction mode is selected from the $Q$ prediction modes; and the $T$ prediction modes are determined according to the $i^{th}$ prediction mode and the prediction mode similar to the $i^{th}$ prediction mode. The prediction mode similar to the $i^{th}$ prediction mode can be understood as a prediction mode whose prediction result is similar (or close) to the prediction result of the $i^{th}$ prediction mode, for example, a prediction mode whose prediction direction (or angle) is close to the prediction direction (or angle) of the $i^{th}$ prediction mode, or a prediction mode whose index is close to the index of the $i^{th}$ prediction mode, such as a prediction mode whose index is larger than the index of the $i^{th}$ prediction mode by 1, 2, or the like, or a prediction mode whose index is smaller than the index of the $i^{th}$ prediction mode by 1, 2, or the like.

In the first manner above, if the cost corresponding to the $i^{th}$ prediction mode is less than the fourth preset value, it indicates that an optimal prediction effect may be achieved if prediction is performed on the current-component block by applying the $i^{th}$ prediction mode. In this case, the $i^{th}$ prediction mode is selected from the $Q$ prediction modes to construct the $R$ second combinations. In addition, since the prediction mode similar to the $i^{th}$ prediction mode has characteristics similar to those of the $i^{th}$ prediction mode, the prediction mode similar to the $i^{th}$ prediction mode is selected from the $Q$ prediction mode modes to construct the $R$ second combinations. Then, another prediction mode is selected from the remaining prediction modes in the $Q$ prediction modes and is taken as a new $i^{th}$ prediction mode, and the foregoing steps are repeated, so as to obtain the $T$ prediction modes.

The specific value of the fourth preset value is not limited in embodiments of the disclosure, and is specifically determined according to actual needs.

In a second manner, if the cost corresponding to the $i^{th}$ prediction mode is greater than a fifth preset value, the $i^{th}$ prediction mode and the prediction mode similar to the $i^{th}$ prediction mode are removed from the $Q$ prediction modes to obtain at least one prediction mode after removal; and the $T$ prediction modes are determined according to the at least one prediction mode after removal.

In the second manner above, if the cost corresponding to the $i^{th}$ prediction mode is greater than the fifth preset value, it indicates that an optimal prediction effect may not be achieved if prediction is performed on the current-component block by applying the $i^{th}$ prediction mode. In this case, the $i^{th}$ prediction mode is removed from the $Q$ prediction modes. In addition, since prediction mode similar to the $i^{th}$ prediction mode has characteristics similar to those of the $i^{th}$ prediction mode, the prediction mode similar to the $i^{th}$ prediction mode is also removed from the $Q$ prediction modes, so as to obtain a set of prediction modes after removal. Then, another prediction mode is selected from the set of prediction modes after removal and is taken as a new $i^{th}$ prediction mode, and the foregoing steps are repeated. In this way, prediction modes in a set of prediction modes finally obtained are determined as the $T$ prediction modes.

The specific value of the fifth preset value is not limited in embodiments of the disclosure, and is specifically determined according to actual needs. The fifth preset value is greater than the fourth preset value described above.

After the $S$ weight derivation modes are selected from the $P$ weight derivation modes and the $T$ prediction modes are selected from the $Q$ prediction modes according to the foregoing steps, the following S101-A21-23 is performed.

S101-A21-23, the $R$ second combinations are constructed according to the $S$ weight derivation modes and the $T$ prediction modes.

Specifically, one weight derivation mode is selected from the $S$ weight derivation modes, and $K$ prediction modes are selected from *the* $T$ prediction modes. The one weight derivation mode and the $K$ prediction modes constitute one second combination. By repeating this step, the $R$ second combinations can be obtained.

It can be seen from the above that each second combination includes one weight derivation mode and $K$ prediction modes. In this way, when selecting a prediction mode, limitation can be imposed on possible choices for one element in a combination when the other $K$ elements in the combination are fixed. For example, if $K=2$, the possible choices for one element, which is used in combination with the other two elements, can be limited.

An implementation of the foregoing S101-A21-2 will be described below, in which selection is performed for one prediction mode when the weight derivation mode and the other one prediction mode are fixed.

In some embodiments, the above S101-A21-2 includes the following. For the $i^{th}$ weight derivation mode in the $P$ weight derivation modes, determine a cost when predicting the first-component block by using the $i^{th}$ weight derivation mode and a $j^{th}$ prediction mode in the $Q$ prediction modes. If a cost corresponding to a combination of the $i^{th}$ weight derivation mode and the $j^{th}$ prediction mode is greater than a sixth preset value, the $j^{th}$ prediction mode and a prediction mode similar to the $j^{th}$ prediction mode are removed from the $Q$ prediction modes, to obtain at least one prediction mode after removal. The $R$ second combinations are constructed according to the $i^{th}$ weight derivation mode and the at least one prediction mode after removal.

In embodiments, when the weight derivation mode and one prediction mode are fixed, selection is performed for the other one prediction mode. For example, in a certain weight derivation mode, if a small cost cannot be obtained when using a certain intra prediction mode as a first prediction mode, then skip trying to use an intra prediction mode similar to such intra prediction mode as the first prediction mode regarding the weight derivation mode.

Specifically, for the $i^{th}$ weight derivation mode in the $P$ weight derivation modes, assuming that $K=2$, then the combination includes the $i^{th}$ weight derivation mode, a $1^{st}$ prediction mode, and a $2^{nd}$ prediction mode. Assuming that the $2^{nd}$ prediction mode is set to be prediction mode 1, then prediction mode 1 can be a prediction mode in the $Q$ prediction modes, or can be another prediction mode other than the $Q$ prediction modes. Then possible choices for the $1^{st}$ prediction mode are determined from the $Q$ prediction modes. Specifically, the $j^{th}$ prediction mode in the $Q$ prediction modes is taken as the $1^{st}$ prediction mode. In this case, determine a prediction value of the first-component block when predicting the first-component block by using combination $j$ consisting of the $i^{th}$ weight derivation mode, the $j^{th}$ prediction mode, and prediction mode 1, and a cost corresponding to combination $j$ is determined according to the prediction value and is taken as a cost corresponding to the $j^{th}$ prediction mode. Then, determine whether the cost corresponding to the $j^{th}$ prediction mode is greater than the sixth preset value. If the cost corresponding to the $j^{th}$ prediction mode is greater than the sixth preset value, it indicates that the first-component block cannot be accurately predicted by using a combination consisting of the $j^{th}$ prediction mode, the $i^{th}$ weight derivation mode, and prediction mode 1. In this case, the $j^{th}$ prediction mode is removed from the $Q$ prediction modes. Since a prediction mode similar to the $j^{th}$ prediction mode has characteristics similar to those of the $j^{th}$ prediction mode, the prediction mode similar to the $j^{th}$ prediction mode is also removed from the $Q$ prediction modes, to obtain a set of prediction modes after removal. Another prediction mode is selected from the set of prediction modes after removal and is taken as a new $j^{th}$ prediction mode, and the foregoing steps are repeated, so as to obtain a final set of prediction modes after removal corresponding to the $i^{th}$ weight derivation mode.

According to the foregoing steps, a final set of prediction modes after removal corresponding to each of the $P$ weight derivation modes can be determined. In this way, the R second combinations are constructed according to the $P$ weight derivation modes and the final set of prediction modes after removal corresponding to each of the $P$ weight derivation modes.

It should be noted that, the foregoing embodiments provide a manner for selecting a prediction mode in the form of combination. Optionally, for any one of the weight derivation mode and the prediction mode, selection can be performed in the form of combination, so as to construct the $R$ second combinations.

At the decoding end, after the $R$ second combinations are determined according to the foregoing method, for any one of the $R$ second combinations, prediction is performed on the first-component block by using a weight derivation mode and $K$ prediction modes in the second combination, so as to obtain a prediction value of the first-component block corresponding to the second combination.

The following will describe a process of predicting the first-component block by using any one of the second combinations to obtain a prediction value of the first-component block.

Firstly, weights for the first-component block are determined according to a weight derivation mode in the second combination, where the weights for the first-component block can be understood as weights of prediction values corresponding to the first-component block. That is, the weights for the first-component block are determined according to the weight derivation mode in the second combination. $K$ prediction values of the first-component block are determined according to $K$ prediction modes in the second combination; and the $K$ prediction values of the first-component block are weighted according to the weights for the first-component block, so as to obtain the prediction value of the first-component block.

In some embodiments, the weights for the first-component block are determined according to the weight derivation mode as follows.

Step 1, an angle index and a distance index are determined according to the weight derivation mode.

Step 2, the weights for the first-component block are determined according to the angle index, the distance index, and the size of the first-component block.

In the disclosure, the weights for the first-component block can be derived in the same manner as deriving weights of prediction values. For example, the angle index and the distance index are firstly determined according to the weight derivation mode, where the angle index can be understood as an angle index of a boundary line of weights derived from the weight derivation mode. Exemplarily, the angle index and the distance index corresponding to the weight derivation mode can be determined according to Table 2 above. For example, if the weight derivation mode is 27, a corresponding angle index is 12 and a corresponding distance index is 3. Then, the weights for the first-component block are determined according to the angle index, the distance index, and the size of the first-component block.

In the foregoing step 2, the manner for determining the weights for the first-component block according to the angle index, the distance index, and the size of the first-component block includes, but is not limited to, the following manners.

Manner I: the weights for the first-component block are determined directly according to the angle index, the distance index, and the size of the first-component block. In this case, the above step 2 includes the following step 21 to step 23.

Step 21, a first parameter of a sample in the first-component block is determined according to the angle index, the distance index, and the size of the first-component block.

Step 22, weights for the sample in the first-component block are determined according to the first parameter of the sample in the first-component block.

Step 23, the weights for the first-component block are determined according to the weights for the sample in the first-component block.

In this implementation, the weights for the sample in the first-component block are determined according to the angle index, the distance index, and the size of the first-component block, and then a weight matrix formed by the weights for each sample in the first-component block is determined as the weights for the first-component block.

The first parameter in the disclosure is used to determine weights. In some embodiments, the first parameter is also referred to as a weight index.

In a possible implementation, an offset and the first parameter can be determined in the following manner.

Inputs to the process of deriving the weights for the first-component block are: the width $nCbW$ of the first-component block, the height $nCbH$ of the first-component block, a "partition" angle index variable $angleId$ of GPM, a distance index variable $distanceIdx$ of GPM, and a component index variable $cIdx$. Here, the weights for the first-component block are determined, and therefore $cIdx = 0$, which indicates the luma component.

Variables $nW, nH, shift1, offset1, displacementX, displacementY, partFlip,$ and $shiftHor$ are derived as follows:

$$nW = (\ cIdx\ ==\ 0\ )\ ?\ nCbW : nCbW * SubWidthC$$

$$nH = (\ cIdx\ ==\ 0\ )\ ?\ nCbH : nCbH * SubHeightC$$

$$shift1 = Max(\ 5,\ 17 - BitDepth\ )$$

, where $BitDepth$ represents a coding bit depth;

$$offset1 = 1\ <<\ (\ shift1 - 1\ )$$

$$displacementX = angleIdx$$

$$displacementY = (\ angleIdx + 8\ )\ \% \ 32$$

$$partFlip = (\ angleIdx\ >=\ 13\ \&\&\ angleIdx\ <=\ 27\ )\ ?\ 0 : 1$$

$$shiftHor = (\ angleIdx\ \% \ 16\ ==\ 8\ ||\ (\ angleIdx\ \% \ 16 \ != 0\ \&\&\ nH >= nW\ ))?\ 0 : 1$$

Offsets $offsetX$ and $offsetY$ are derived as follows:

if shiftHor = 0:

offsetX = ( −nW ) >> 1

offsetY = ( ( −nH ) >> 1 ) + ( angleIdx < 16 ? ( distanceIdx * nH ) >> 3 : − ( ( distanceIdx * nH ) >> 3 ) )

otherwise (i. e. shiftHor = 1):

offsetX = ( ( −nW ) >> 1 ) + ( angleIdx < 16 ? ( distanceIdx * nW ) >> 3 : − ( ( distanceIdx * nW ) >> 3 )

offsetY = ( −nH ) >> 1

The weight matrix *wTemplateValue[x][y]* (where x = -nTmW..nCbW - 1, y = - nTmH..nCbH -1, except for the case where $x \geq 0$ and $y \geq 0$) for the first-component block is derived as follows (it should be noted that in this example, the coordinate of a top-left corner of the first-component block is (0, 0)):

variables *xL* and *yL* are derived as follows:

$$xL = ( \text{cIdx} = = 0 ) ? x : x * \text{SubWidthC}$$

$$yL = ( \text{cIdx} = = 0 ) ? y : y * \text{SubHeightC}$$

*disLut* is determined according to Table 3 above;
the first parameter *weightIdx* is derived as follows:

$$\text{weightIdx} = ( ( ( xL + \text{offsetX} ) << 1 ) + 1 ) * \text{disLut}[ \text{displacementX} ] +$$

$$( ( ( yL + \text{offsetY} ) << 1 ) + 1 ) * \text{disLut}[ \text{displacementY} ]$$

After the first parameter *weightIdx* is determined according to the foregoing method, the weights for the sample (x, y) in the first-component block are determined according to *weightIdx.*
In the disclosure, the manner for determining the weights for the sample in the first-component block according to the first parameter of the sample in the first-component block in step 22 includes, but is not limited to, the following manners.
Manner 1: a second parameter of the sample in the first-component block is determined according to the first parameter of the sample in the first-component block; and the weights for the sample in the first-component block are determined according to the second parameter of the sample in the first-component block.
The second parameter is also used for determining weights. In some embodiments, the second parameter is also referred to as a weight index for the first component, and the first component can be a luma component.
For example, the weights for the sample in the first-component block are determined according to the following formula:

$$\text{weightIdxL} = \text{partFlip} ? 32 + \text{weightIdx} : 32 - \text{weightIdx}$$

$$\text{wTemplateValue[x][y]} = \text{Clip3}( 0, 8, ( \text{weightIdxL} + 4 ) >> 3 )$$

*wTemplateValue[x][y]* is the weights for the sample (x, y) in the first-component block. *weightIdxL* is the second parameter of the sample (x, y) in the first-component block, and is also referred to as a weight index for the first component (for example, a luma component). *wTemplateValue[x][y]* is the weights for the sample (x, y) in the first-component block. *partFlip* is an intermediate variable and is determined according to the angle index *angleIdx,* for example, partFlip = ( angleIdx >= 13 && angleIdx <= 27 ) ? 0 : 1 as described above, that is, partFlip = 1 or 0. If partFlip = 0, weightIdxL = 32 -

weightldx; and if partFlip = 1, weightldxL = 32 + weightldx. It should be noted that, 32 herein is merely an example, and the disclosure is not limited thereto.

Manner 2: the weights for the sample in the first-component block are determined according to the first parameter of the sample in the first-component block, a first threshold, and a second threshold.

In order to reduce complexity of calculating the weights for the first-component block, in manner 2, the weights for the sample in the first-component block are limited to the first threshold or the second threshold, that is, the weights for the sample in the first-component block are either the first threshold or the second threshold, thereby reducing complexity of calculating the weights for the first-component block.

The values of the first threshold and the second threshold are not limited in the disclosure.

Optionally, the first threshold is 1.

Optionally, the second threshold is 0.

In an example, the weights for the sample in the first-component block can be determined according to the following formula:

$$\text{wTemplateValue}[x][y] = (\text{partFlip ? weightIdx: } -\text{weightIdx}) > 0 ? 1 : 0$$

*wTemplateValue[x][y]* is the weights for the sample (x, y) in the first-component block. In the foregoing "1 : 0", 1 is the first threshold, and 0 is the second threshold.

In the foregoing manner I, weights for each sample in the first-component block are determined according to the weight derivation mode, and a weight matrix formed by the weights for each sample in the first-component block is used as the weights for the first-component block.

After the weights for the first-component block corresponding to the weight derivation mode in the second combination are determined according to the foregoing method, prediction is performed on the first-component block by applying the $K$ prediction modes in the second combination, to obtain $K$ prediction values; and the $K$ prediction values are weighted according to the weights for the first-component block to obtain the prediction value of the first-component block.

The prediction value of the first-component block can be understood as a matrix formed by prediction values of samples in the first-component block.

In some embodiments, the prediction value above is also referred to as a prediction sample.

Then, the cost of the second combination is determined according to the prediction value of the first-component block and the reconstructed value of the first-component block.

The manner for determining the cost of the second combination includes, but is not limited to, the following manners.

Manner 1: the cost of the second combination is determined based on a matrix. Specifically, a loss is determined according to the prediction value of the first-component block and the reconstructed value of the first-component block, and the loss is marked as a first loss. Since the prediction value of the first-component block and the reconstructed value of the first-component block are implemented in the form of matrices, the first loss obtained is also in the form of a matrix. For example, the absolute value of the difference between the prediction value of the first-component and the reconstructed value of the first-component block is determined as the first loss, and the first loss is determined as the cost of the second combination.

Manner 2: the cost of the second combination is calculated on a sample basis.

Specifically, for an $i^{th}$ sample in the first-component block, a prediction value of each of the $K$ prediction modes in the second combination for the $i^{th}$ sample is determined, weights for the first-component block corresponding to the $i^{th}$ sample in the weights for the first-component block are determined, and a prediction value of the $i^{th}$ sample is determined according to the weights for the first-component block corresponding to the $i^{th}$ sample and the $K$ prediction values of the $i^{th}$ sample. Then the cost of the second combination for the $i^{th}$ sample is determined according to the prediction value of the $i^{th}$ sample and a reconstructed value of the $j^{th}$ sample. According to the above method, a prediction distortion cost of the second combination for each sample in the first-component block can be determined, and finally, the sum of the prediction distortion cost of the second combination for each sample in the first-component block is determined as the cost of the second combination.

According to the foregoing method, a cost of each of the $R$ second combinations can be determined.

Then, a candidate combination list is constructed according to the cost of each of the $R$ second combinations.

For example, the $R$ second combinations are sorted in an ascending order according to the cost of the second combination, and the $R$ second combinations sorted are determined as the candidate combination list.

For another example, according to the cost of the second combination, $N$ second combinations with the minimum cost are selected from the $R$ second combinations to construct the candidate combination list.

Optionally, $N$ = 8, 16, 32, or the like.

According to the foregoing method, the candidate combination list is determined, and candidate combinations in the candidate combination list are sorted in an ascending order of costs. Exemplarily, the candidate combination list is illustrated in the foregoing Table 6.

In this way, at the decoding end, a candidate combination corresponding to a first index is queried from the candidate combination list illustrated in Table 6 according to the first index, and the candidate combination corresponding to the first index is determined as the first combination, that is, a weight derivation mode in the candidate combination is determined as the first weight derivation mode, and $K$ prediction modes in the candidate combination are determined as the $K$ first prediction modes.

In the foregoing embodiments, the manner for constructing the candidate combination list is elaborated by taking the first combination including the first weight derivation mode and the $K$ first prediction modes as an example.

In embodiments of the disclosure, in case 1, the first combination includes the first weight derivation mode and the $K$ first prediction modes, where the first weight derivation mode does not include a blending parameter. In case 2, the first combination includes the first weight derivation mode, the $K$ first prediction modes, and a second blending parameter. In case 3, the first combination includes the first weight derivation mode and the $K$ first prediction modes, where the first weight derivation mode includes a blending parameter, and the blending parameter is used together with the $K$ first prediction modes to determine the prediction value of the current-component block.

For case 1, if the first combination includes the first weight derivation mode and the $K$ first prediction modes, but the first weight derivation mode does not include a blending parameter, then the candidate combination list corresponding to the current-component block is constructed in the manner described in the foregoing embodiments.

Case 2: the first combination includes the first weight derivation mode, the $K$ first prediction modes, and the second blending parameter.

As illustrated in FIG. 4 and FIG. 5, there is a blending area near the weight partition line, that is, a gray area in FIG. 4 and FIG. 5. The blending area corresponds to a blending parameter, that is, the blending parameter is used to represent a blending area in a weight map. In some cases, weights can be affected by the blending parameter. Therefore, in embodiments of the disclosure, the prediction value of the current-component block is determined according to the second blending parameter, the first weight derivation mode, and the $K$ first prediction modes. In this case, the first combination in embodiments of the disclosure includes the first weight derivation mode, the $K$ first prediction modes, and the second blending parameter.

In the foregoing case 2, for S101, the first combination is determined in the following steps.

S101-C, the bitstream is decoded to determine a candidate combination list, where the candidate combination list includes at least one candidate combination, and any one of the at least one candidate combination includes one weight derivation mode, $K$ prediction modes, and one blending parameter.

S101-D, the first combination is determined according to the candidate combination list.

Exemplarily, the candidate combination list is illustrated in Table 8.

Table 8

| Index | Candidate combination |
|---|---|
| 0 | Candidate combination 1 (including one weight derivation mode, $K$ prediction modes, and one blending parameter) |
| 1 | Candidate combination 2 (including one weight derivation mode, $K$ prediction modes, and one blending parameter) |
| ...... | ...... |
| $i$-1 | Candidate combination $i$ (including one weight derivation mode, $K$ prediction modes, and one blending parameter) |
| ...... | ...... |

As illustrated in Table 8, the candidate combination list includes at least one candidate combination, and any two candidate combinations in the at least one candidate combination are not completely the same, that is, any two candidate combinations differ in at least one of the weight derivation mode, $K$ prediction modes, or the blending parameter.

Exemplarily, in the foregoing Table 8, the order of a candidate combination in a candidate combination list is taken as an index of the candidate combination, and optionally, the index of the candidate combination in the candidate combination list can also be indicated in another manner, which is not limited in embodiments of the disclosure.

In embodiments, at the decoding end, the manner for determining the first combination according to the candidate combination list includes, but is not limited to, the following manners.

Manner 1: the candidate combination list includes one candidate combination, and in this case, the candidate combination in the candidate combination list is determined as the first combination.

Manner 2: the candidate combination list includes multiple candidate combinations. In this case, the bitstream is decoded to obtain a first index, where the first index indicates the first combination; and a candidate combination corresponding to the first index in the candidate combination list is determined as the first combination.

In the above manner 2, at the decoding end, the bitstream is decoded to obtain the first index, the candidate combination list as illustrated in the above Table 8 is determined, and the first combination indicated by the first index is queried from the candidate combination list according to the first index.

For example, the first index is index 1, and in the candidate combination list illustrated in Table 8, a candidate combination corresponding to index 1 is candidate combination 2, that is, the first combination indicated by the first index is candidate combination 2. In this way, at the decoding end, a weight derivation mode, $K$ prediction modes, and a blending parameter in candidate combination 2 are determined as the first weight derivation mode, the $K$ first prediction modes, and the second blending parameter in the first combination; and the current-component block is predicted by using the first weight derivation mode, the second blending parameter, and the $K$ first prediction modes, to obtain the prediction value of the current-component block.

In the above manner 2, the same candidate combination list can be determined at both the encoding end and the decoding end. For example, at both the encoding end and the decoding end, a list including $L$ candidate combinations is determined, where each candidate combination includes one weight derivation mode, $K$ prediction modes, and one blending parameter. However, at the encoding end, only one candidate combination finally chosen, for example, the first combination, needs to be signalled into the bitstream. At the decoding end, the first combination finally chosen at the encoding end is parsed. Specifically, at the decoding end, the bitstream is decoded to obtain the first index, and the first combination is determined according to the first index from the candidate combination list determined at the decoding end.

The process of determining the candidate combination list in the foregoing S101-C is described below.

In some embodiments, the candidate combination list already exists. At the decoding end, after the first index is obtained by decoding the bitstream, the candidate combination list can be obtained or read according to the first index, and then a candidate combination corresponding to the first index is queried from the candidate combination list according to the first index.

In some embodiments, the candidate combination list is transmitted to the decoding end from the encoding end. For example, at the encoding end, the candidate combination list is transmitted to the decoding end before encoding the current-component block.

In some embodiments, the candidate combination list is uploaded to the cloud from the encoding end, and at the decoding end, the candidate combination list is read from the cloud.

In some embodiments, the candidate combination list is constructed at the decoding end.

The manner for constructing the candidate combination list at the decoding end is not limited in embodiments of the disclosure. For example, the probabilities of various combinations formed by different weight derivation modes, different prediction modes, and different blending parameters are analyzed according to information related to the current-component block, and the candidate combination list is constructed according to the probabilities of these combinations.

Optionally, the information related to the current-component block includes mode information of neighbouring blocks of the current-component block, reconstructed samples of the first-component block corresponding to the current-component block, and the like.

In some embodiments, the candidate combination list is constructed at the decoding end through the following steps S101-C1 and S101-C2.

S101-C1, the bitstream is decoded to determine the first-component block corresponding to the current-component block.

S101-C2, the candidate combination list is constructed based on the first-component block.

For the implementation of S101-C1, reference can be made to the elaborations of S101-A1, which will not be described again herein.

Since there is a correlation between the first-component block corresponding to the current-component block and the current-component block, in embodiments of the disclosure, the candidate combination list of the current-component block is constructed based on the first-component block.

For example, for each combination, the first-component block is predicted by using the combination, to obtain a prediction value of the first-component block corresponding to the combination; and the candidate combination list is constructed according to a prediction value of the first-component block corresponding to each combination. For example, for each combination, a weight derivation mode in the combination is used to derive weights for the first-component block; the first-component block is predicted by applying $K$ prediction modes in the combination, so as to obtain $K$ prediction values of the first-component block; and the $K$ prediction values of the first-component block are weighted according to the derived weights for the first-component block, so as to obtain a prediction value of the first-component block corresponding to the combination. Finally, the candidate combination list is constructed according to the prediction value of the first-component block corresponding to each combination.

It should be noted that, the weights derived according to the weight derivation mode can be understood as deriving weights corresponding to each sample in the first-component block, or can be understood as deriving a weight matrix corresponding to the first-component block. Adjusting the weights for the first-component block by using the blending parameter can be understood as adjusting weights corresponding to each sample in the first-component block or adjusting a weight matrix corresponding to the first-component block. When determining the prediction value of the first-component block based on the adjusted weights for the first-component block, for each sample in the first-component block, $K$ prediction values corresponding to the sample can be determined, and a prediction value corresponding to the sample is determined according to the $K$ prediction values corresponding to the sample and the adjusted weights corresponding to the sample, where a prediction value corresponding to each sample in the first-component block constitutes the prediction value of the first-component block. Alternatively, determination of the prediction value of the first-component block based on the adjusted weights can also be performed on a block basis. For example, prediction values of the first-component block are determined, and the $K$ prediction values of the first-component block are weighted according to the adjusted weight matrix for the first-component block, so as to obtain the prediction value of the first-component block.

In some embodiments, S101-C2 includes the following steps S101-C21 to S101-C23.

S101-C21, $R$ second combinations are determined, where any one of the $R$ second combinations includes one weight derivation mode, $K$ prediction modes, and one blending parameter; weight derivation modes, $K$ prediction modes, and blending parameters in any two of the $R$ second combinations are not completely the same; and $R$ is a positive integer and $R > 1$.

S101-C22, for any one of $R$ second combinations, determine a cost corresponding to the second combination when predicting the first-component block by using a weight derivation mode, $K$ prediction modes, and a blending parameter in the second combination.

S101-C23, the candidate combination list is constructed according to a cost corresponding to each of the $R$ second combinations.

In embodiments, at the decoding end, when constructing the candidate combination list, $R$ second combinations are firstly determined. There is no limitation on the quantity of the $R$ second combinations in the disclosure, which can be, for example, 8, 16, 32, and the like. Each of the $R$ second combinations includes one weight derivation mode, $K$ prediction modes, and one blending parameter. Weight derivation modes, $K$ prediction modes, and blending parameters in any two of the $R$ second combinations are not completely the same. Then, for each of the $R$ second combinations, determine a cost corresponding to the second combination when predicting the first-component block by using a weight derivation mode, $K$ prediction modes, and a blending parameter in the second combination. Finally, the candidate combination list is constructed according to the cost corresponding to each of the $R$ second combinations.

In some embodiments, for S101-C22, there are at least the following manners for determining the cost corresponding to the second combination when predicting the first-component block by using the weight derivation mode, the $K$ prediction modes, and the blending parameter in the second combination.

Manner 1, S101-C22 includes the following S101-C22-11 to S101-C22-14.

S101-C22-11, weights for the first-component block are determined according to the weight derivation mode and the blending parameter in the second combination.

S101-C22-12, the first-component block is predicted according to the $K$ prediction modes in the second combination, to obtain $K$ prediction values of the first-component block.

S101-C22-13, the $K$ prediction values of the first-component block are weighted according to the weights for the first-component block, to obtain a prediction value of the first-component block corresponding to the second combination.

S101-C22-14, the cost corresponding to the second combination is determined according to the prediction value of the first-component block corresponding to the second combination and the reconstructed value of the first-component block.

In embodiments of the disclosure, the process of determining the cost corresponding to each of the $R$ second combinations is the same. For ease of illustration, one of the $R$ second combinations is taken as an example for illustration herein.

In embodiments of the disclosure, the second combination includes one weight derivation mode, one blending parameter, and $K$ prediction modes. When predicting the first-component block by using the second combination, the weights for the first-component block are determined according to the weight derivation mode and the blending parameter in the second combination; the first-component block is predicted according to the $K$ prediction modes in the second combination, to obtain $K$ prediction values of the first-component block; and the $K$ prediction values of the first-component block are weighted according to the weights for the first-component block, to obtain the prediction value of the first-component block corresponding to the second combination. Then, the cost corresponding to the second combination is determined according to the prediction value of the first-component block corresponding to the second combination and the reconstructed value of the first-component block.

In embodiments of the disclosure, a blending parameter is used for adjusting weights derived by using a weight derivation mode. Therefore, in embodiments of the disclosure, in the foregoing S101-C22-11, there are at least the following implementations for determining the weights for the first-component block according to the weight derivation mode and the blending parameter in the second combination.

Example 1, when deriving the weights for the first-component block by using the first weight derivation mode, multiple intermediate variables need to be determined. One or some of the multiple intermediate variables can be adjusted by using the blending parameter, and then the weights for the first-component block can be derived by using the adjusted variables. For example, the blending parameter is used to adjust one or more of variables such as *displacementX, displacementY, partFlip, shiftHor, offsetX, offsetY, xL,* and *yL,* so as to obtain the weights for the first-component block.

Example 2, a third weight corresponding to the first-component block is determined according to the weight derivation mode in the second combination and the first-component block. The third weight is adjusted by using the blending parameter in the second combination to obtain an adjusted third weight. The weights for the first-component block are determined according to the adjusted third weight.

For example, according to the weight derivation mode in the second combination and the first-component block, the third weight corresponding to the first-component block is determined to be *weightIdx.* Then, *weightIdx* is adjusted by using the blending parameter, to obtain adjusted *weightIdx.* The weights *wVemplateValue* for the first-component block are determined according to the adjusted *weightIdx.*

In an example, *weightIdx* can be adjusted by using the blending parameter according to the following formula, to obtain the adjusted *weightIdx:*

$$weightIdx = weightIdx * blendingCoeff$$

*blendingCoeff* is the blending parameter in the second combination.

For another example, according to the weight derivation mode in the second combination and the first-component block, the third weight corresponding to the first-component block is determined to be *wVemplateValue.* Then *wVemplateValue* is adjusted by using the blending parameter, to obtain adjusted *wVemplateValue.* The adjusted *wVemplateValue* is determined as the weights for the first-component block.

In an example, *wVemplateValue* can be adjusted by using the blending parameter according to the following formula, to obtain the adjusted *wVemplateValue:*

$$wVemplateValue = wVemplateValue * blendingCoeff$$

According to the foregoing method, weights for the first-component block corresponding to each of the *R* second combinations can be determined. Then, for each second combination, the first-component block is predicted by using *K* prediction modes in the second combination, to obtain *K* prediction values of the first-component block; the *K* prediction values of the first-component block corresponding to the second combination are weighted according to the weights for the first-component block corresponding to the second combination, to obtain the prediction value of the first-component block corresponding to the second combination; and a cost corresponding to the second combination is determined according to the prediction value of the first-component block corresponding to the second combination and the reconstructed value of the first-component block. The manner for determining the cost corresponding to the second combination includes, but is not limited to, SAD, SATD, and SSE. According to the above method, a cost corresponding to each of the *R* second combinations can be determined. Then, the candidate combination list is constructed according to the cost corresponding to each of the *R* second combinations.

Manner 2, S101-C22 includes the following S101-C22-11 to S101-C22-14.

S101-C22-21, prediction values of the first-component block corresponding to *K* prediction modes in the second combination are determined according to a weight derivation mode and a blending parameter in the second combination.

S101-C22-22, costs corresponding to the *K* prediction modes in the second combination are determined according to the prediction values of the first-component block corresponding to the *K* prediction modes in the second combination and the reconstructed value of the first-component block.

S101-C22-23, the cost corresponding to the second combination is determined according to the costs corresponding to the *K* prediction modes in the second combination. For example, the sum of the costs corresponding to the *K* prediction modes in the second combination is determined as the cost corresponding to the second combination.

For example, it is assumed that *K*=2, and then two prediction modes in the second combination are denoted as prediction mode 1 and prediction mode 2. Firstly, a weight and a prediction value of the first-component block corresponding to prediction mode 1 are determined according to the weight derivation mode and the blending parameter in the second combination, and the prediction value corresponding to prediction mode 1 is processed by using the weight for the first-component block corresponding to prediction mode 1. For example, for each sample in the first-component block corresponding to prediction mode 1, a prediction value of the sample in the first-component block corresponding to prediction mode 1 is multiplied by a weight for the first-component block corresponding to the sample, to obtain a prediction value of the sample. In this way, the prediction value of the first-component block corresponding to prediction mode 1 can be determined. Then a cost corresponding to prediction mode 1 is determined according to the prediction value of the first-component block corresponding to prediction mode 1 and the reconstructed value of the first-component block. The manner for determining the cost corresponding to prediction mode 1 includes, but is not limited to, SAD, SATD, and SSE. Likewise, a cost corresponding to prediction mode 2 can be determined. As such, the cost corresponding to the second combination is determined according to the cost corresponding to prediction mode 1 and the cost corresponding to prediction mode 2, for example, the cost corresponding to the second combination is determined by adding the cost corresponding to prediction mode 1 and the cost corresponding to prediction mode 2.

For the manner for constructing the candidate combination list according to the cost corresponding to each of the $R$ second combinations in the foregoing S101-C23, reference can be made to the illustration of the foregoing S101-A23, which is not described again herein.

The process of determining the $R$ second combinations in S101-C21 is described below.

In some embodiments, the $R$ second combinations are pre-set.

In some embodiments, S101-C21 includes the following steps.

S101-C21-1, $F$ weight derivation modes, $J$ prediction modes, and $W$ blending parameters are determined, where F and $W$ are positive integers, and $J$ is a positive integer and $J \geq K$.

S101-C21-2, the $R$ second combinations are constructed according to the $F$ weight derivation modes, the $J$ prediction modes, and the $W$ blending parameters, where any one of the $R$ second combinations includes one of the $F$ weight derivation modes, $K$ prediction modes in the $J$ prediction modes, and one of the $W$ blending parameters.

In embodiments, at the decoding end, the $F$ weight derivation modes, the $J$ prediction modes, and the $W$ blending parameters are firstly determined, and then the $R$ second combinations are constructed according to the $F$ weight derivation modes, $J$ prediction modes, and $W$ blending parameters determined.

There is no limitation on the quantities of the $F$ weight derivation modes, the $J$ prediction modes, and the $W$ blending parameters in embodiments of the disclosure.

Assuming that $K = 2$, then the foregoing $K$ prediction modes include a 1st prediction mode and a 2nd prediction mode. Assuming that there are $J$ prediction modes available, then there are $J$ possible choices for the 1st prediction mode, and since the 2nd prediction mode is different from the 1st prediction mode, there are ($J$-1) possible choices for the 2nd prediction mode. Assuming that there are $F$ weight derivation modes and there are $W$ blending coefficients, then in the disclosure, any two different prediction modes, any one weight derivation mode, and any one blending coefficient can be combined to construct one second combination, and accordingly, there are a total of $F*J*(J-1)*W$ possible second combinations.

In this implementation, the $F$ weight derivation modes are all possible weight derivation modes, the $J$ prediction modes are all possible prediction modes, and the $W$ blending parameters are all possible blending parameters. All the possible second combinations are obtained by means of an exhaustive algorithm. Prediction is performed on the first-component block corresponding to the current-component block by using each of the possible second combinations, a distortion cost of each second combination is calculated, and then a candidate combination list corresponding to the current-component block is obtained according to the distortion cost of each second combination.

In some embodiments, in order to reduce the amount of data and accelerate construction of the candidate combination list, not all the prediction modes are tried, and instead, only some of the prediction modes can be selected for trial.

In this case, the implementation of determining the $J$ prediction modes in the foregoing S101-C21-1 includes, but is not limited to, the following manners.

Manner 1: the $J$ prediction modes are preset prediction modes.

Manner 2: at least one of a candidate prediction mode list of the current-component block, alternative prediction mode lists corresponding to the $K$ first prediction modes, a prediction mode(s) corresponding to the weight derivation mode, or a preset mode is determined. The $J$ prediction modes are determined according to at least one of the candidate prediction mode list, the alternative prediction mode lists corresponding to the $K$ first prediction modes, the prediction mode corresponding to the weight derivation mode, or the preset mode.

The manner for determining the candidate prediction mode list of the current-component block includes at least the following several examples.

Example 1, the candidate prediction mode list is determined according to a prediction mode applied to at least one neighbouring block of the current-component block.

Example 2, if the candidate prediction mode list does not include the preset mode, a preset mode corresponding to the current-component block is determined, and the preset mode is added to the candidate prediction mode list.

In an example, the preset mode is several preset prediction modes.

In another example, a picture type corresponding to the current-component block is determined, and the preset mode is determined according to the picture type corresponding to the current-component block.

For example, if the picture type corresponding to the current-component block is a B type or a P type, the preset mode includes at least one of DC, a horizontal mode, a vertical mode, or an angular mode.

Example 3, the picture type corresponding to the current-component block is determined, and the candidate prediction mode list is determined according to the picture type corresponding to the current-component block. For example, if the picture type corresponding to the current-component block is a B type or a P type, at least one of the DC, the horizontal mode, the vertical mode, or some other angular modes can be added to a second candidate prediction mode list. For another example, if the picture type corresponding to the current-component block is an I type, at least one of the DC, the horizontal mode, or the vertical mode can be added to the candidate prediction mode list.

Example 4, at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been decoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In embodiments of the disclosure, for the implementation of determining the $J$ prediction modes, reference can be made to the elaborations of determining the $Q$ prediction modes in the foregoing S101-A21-1, which is not described herein again. In some embodiments, $J = Q$.

The process of determining the $F$ weight derivation modes in S101-C21-1 is described below.

In embodiments of the disclosure, there are at least the following manners for determining the $F$ weight derivation modes.

In some embodiments, the $F$ weight derivation modes are preset weight derivation modes.

In some embodiments, the $F$ weight derivation modes are selected from $Z$ preset weight derivation modes, where $Z$ is a positive integer and $Z \geq F$.

There is no limitation on the $Z$ preset weight derivation modes in embodiments of the disclosure.

In some embodiments, if $Z = F$, the $Z$ weight derivation modes are determined as the $F$ weight derivation modes.

In some embodiments, if $Z > F$, in order to further reduce the number of the $R$ second combinations, selection is performed on the $Z$ preset weight derivation modes, and then the $F$ weight derivation modes can be selected from the $Z$ preset weight derivation modes to construct the $R$ second combinations.

The process of determining the $F$ weight derivation modes in the foregoing S101-C21-1 is substantially the same as the process of determining the $P$ weight derivation modes in the foregoing S101-A21-1. Reference is made to the elaborations of determining the $P$ weight derivation modes, which is not described again herein.

The process of determining the $W$ blending coefficients in S101-C21-1 is described below.

In some embodiments, the $W$ blending parameters are preset blending parameters, for example, 1/4, 1/2, 1, 2, 4, and the like.

In some embodiments, the $W$ blending parameters are determined according to the size of the current-component block. For example, if the size of the current-component block is less than a certain preset value, the $W$ blending parameters fall within value range 1 of the blending parameter. For another example, if the size of the current-component block is less than a certain preset value, the $W$ blending parameters fall within value range 2 of the blending parameter. Value range 1 of the blending parameter may or may not overlap with value range 2 of the blending parameter.

In some embodiments, the $W$ blending parameters are determined from multiple preset blending parameters.

In an example, the $W$ blending parameters are determined from the multiple preset blending parameters according to picture information of the current-component block.

The specific content of the picture information of the current-component block is not limited in embodiments of the disclosure, which can be, for example, ambiguity, definition, and acutance.

In some embodiments, if the picture information of the current-component block includes the definition of a picture edge, then there are two examples for determining the $W$ blending parameters from the multiple preset blending parameters according to the picture information of the current-component block.

Example 1, if the definition of the picture edge of the current-component block is less than a preset value, at least one first-type blending parameter in the multiple preset blending parameters is determined as the $W$ blending parameters.

The first-type blending parameter can be understood as a blending parameter capable of forming a wide blending area, for example, 1/4, 1/2, or the like.

Example 2, if the definition of the picture edge of the current-component block is greater than or equal to the preset value, at least one second-type blending parameter in the multiple preset blending parameters is determined as the $W$ blending parameters, where the second-type blending parameter is greater than the first-type blending parameter.

The second-type blending parameter can be understood as a blending parameter capable of forming a narrow blending area, such as 2 or 4.

In embodiments of the disclosure, there can be at least two manners for determining the picture information of the current-component block.

Manner 1: the picture information of the current-component block is obtained by decoding the bitstream. For example, at the encoding end, the picture information of the current-component block is encoded into the bitstream. In this way, at the decoding end, the picture information of the current-component block is obtained by decoding the bitstream.

Manner 2: picture information of the first-component block is determined, and the picture information of the current-component block is determined according to the picture information of the first-component block. Since the first-component block has been decoded, the picture information of the first-component block is available. For example, the picture information of the first-component block is obtained by analyzing the reconstructed value of the first-component block. Then, the picture information of the current-component block is obtained according to the picture information of the first-component block. For example, the picture information of the first-component block is determined as the picture information of the current-component block, or the picture information of the first-component block is processed to obtain the picture information of the current-component block.

At the decoding end, after the $J$ prediction modes, the $F$ weight derivation modes, and the $W$ blending parameters are determined according to the foregoing steps, $R$ different second combinations are constructed according to the $J$ prediction modes, the $F$ weight derivation modes, and the $W$ blending parameters. Then, the candidate combination list is determined according to the $R$ second combinations, and then the first weight derivation mode, the $K$ first prediction modes, and the second blending parameter are determined from the candidate combination list.

In some embodiments, in order to further accelerate construction of the candidate combination list, at the decoding end, selection is performed on the foregoing determined $J$ prediction modes, $F$ weight derivation modes, and $W$ blending parameters. In this case, for S101-C21-2, the $R$ second combinations are constructed according to the determined $F$ weight derivation modes, $J$ prediction modes, and $W$ blending parameters according to the following steps S101-C21-21 to S101-C21-24.

S101-C21-21, $E$ weight derivation modes are selected from the $F$ weight derivation modes, where $E$ is a positive integer and $E \leq F$.

Specifically, a weight derivation mode with low probability of occurrence is removed from the $F$ determined weight derivation modes, so as to obtain the $E$ selected weight derivation modes.

For S101-C21-21, the manner for selecting the $E$ weight derivation modes from the F weight derivation modes includes, but is not limited to, the following manners.

Manner 1, for an $i^{\text{th}}$ weight derivation mode of the $F$ weight derivation modes, weights of $K$ second prediction modes for the first-component block are determined according to the $i^{\text{th}}$ weight derivation mode and a fourth blending parameter, where the fourth blending parameter is any one of the $W$ blending parameters, the $K$ second prediction modes is any $K$ prediction modes in the $J$ prediction modes, and $i$ is a positive integer $1 \leq i \leq F$. If a weight of any one of the $K$ prediction modes for the first-component block is less than a first preset value, the $i^{\text{th}}$ weight derivation mode is removed from the $F$ weight derivation modes, so as to obtain the $E$ weight derivation modes.

In the above manner 1, the manner for determining the weights of the $K$ second prediction modes for the first-component block according to the $i^{\text{th}}$ weight derivation mode and the fourth blending parameter at least includes the manners described in the following examples.

Example 1, when deriving weights for the first-component block by using the $i^{\text{th}}$ weight derivation mode, multiple intermediate variables need to be determined. One or some of the multiple intermediate variables can be adjusted by using the fourth blending parameter, so that the weights for the first-component block are derived by using the variables adjusted.

Example 2, a fourth weight corresponding to the first-component block is determined according to the $i^{\text{th}}$ weight derivation mode and the first-component block. The fourth weight is adjusted by using the fourth blending parameter to obtain an adjusted fourth weight. The weights of the $K$ second prediction modes for the first-component block are determined according to the adjusted fourth weight.

For example, according to the $i^{\text{th}}$ weight derivation mode and the first-component block, the fourth weight corresponding to the first-component block is determined to be *weightIdx*. Then, *weightIdx* is adjusted by using the fourth blending parameter, to obtain adjusted *weightIdx*. The weights *wVemplateValue* for the first-component block are determined according to the adjusted *weightIdx*.

In an example, *weightIdx* can be adjusted by using the fourth blending parameter according to the following formula, to obtain the adjusted *weightIdx*:

$$weightIdx = weightIdx * blendingCoeff3$$

weightIdx= weightIdx* blendingCoeff3

*blendingCoeff3* is the fourth blending parameter.

For another example, according to the $i^{\text{th}}$ weight derivation mode and the first-component block, the fourth weight corresponding to the first-component block is determined to be *wVemplateValue*. Then *wVemplateValue* is adjusted by using the fourth blending parameter, to obtain adjusted *wVemplateValue*. The adjusted *wVemplateValue* is determined as the weights for the first-component block.

In an example, *wVemplateValue* can be adjusted by using the fourth blending parameter according to the following formula, to obtain the adjusted *wVemplateValue*:

$$wVemplateValue = wVemplateValue * blendingCoeff3$$

According to the foregoing method, the weights of the *K* second prediction modes for the first-component block in the $i^{th}$ weight derivation mode are derived.

Manner 2: for an $i^{th}$ weight derivation mode in the *F* weight derivation modes, a cost when predicting the first-component block by using the $i^{th}$ weight derivation mode is determined, where *i* is a positive integer and $1 \leq i \leq F$; and the *E* weight derivation modes are selected from the *F* weight derivation modes according to the cost corresponding to the $i^{th}$ weight derivation mode.

In some embodiments, when determining the cost corresponding to the $i^{th}$ weight derivation mode, the influence of the blending parameter on the weights is not taken into consideration.

In some embodiments, when determining the cost corresponding to the $i^{th}$ weight derivation mode, the influence of the blending parameter on the weights is taken into consideration, that is, the weights for the first-component block are determined according to the $i^{th}$ weight derivation mode and the blending parameter. Then, the prediction value of the first-component block is determined according to the weights for the first-component block and *K* prediction values of the first-component block, and the cost corresponding to the $i^{th}$ weight derivation mode is determined according to the prediction value of the first-component block and the reconstructed value of the first-component block. For the process of determining the weights for the first-component block according to the $i^{th}$ weight derivation mode and the blending parameter, reference can be made to the elaborations in the foregoing embodiments, which is not described again herein.

In some embodiments, the *E* weight derivation modes can also be selected from the *F* weight derivation modes in the same manner as selecting *S* weight derivation modes from the *P* weight derivation modes in S101-A11-21. For details thereof, reference can be made to the elaborations of the foregoing embodiments, which is not described again herein.

At the decoding end, after selecting *E* weight derivation modes from the *F* weight derivation modes through the foregoing steps, proceed to the following step S101-C21-22.

S101-C21-22, V prediction modes are selected from *J* prediction modes, where *V* is a positive integer and $V \leq J$.

In embodiments of the disclosure, the manner for selecting *V* prediction modes from the *J* prediction modes is not limited.

In some embodiments, *V* preset prediction modes are selected from the *J* prediction modes.

In some embodiments, for an $i^{th}$ prediction mode in the *J* prediction modes, at the decoding end, determine a cost when predicting the first-component block by applying the $i^{th}$ prediction mode, where *i* is a positive integer and $1 \leq i \leq J$; and *V* prediction modes are selected from the *J* prediction modes according to the cost corresponding to the $i^{th}$ prediction mode.

In embodiments of the disclosure, one weight derivation mode, *K* prediction modes, and the blending parameter are used as one combination to calculate a cost. In this way, for the convenience of calculation, costs of *J* weight derivation modes are calculated based on the given weight derivation mode, other given *K*-1 prediction modes, and the given blending parameter, i. e. each of the *J* prediction modes is combined with the given weight derivation mode, the given *K*-1 prediction modes, and the given blending parameter, so as to obtain *J* combinations; and a cost corresponding to each of the *J* combinations is calculated, so as to obtain costs of the *J* prediction modes.

After the cost corresponding to the $i^{th}$ prediction mode in the *J* prediction modes is determined according to the foregoing method, *the V* prediction modes are selected from the *J* prediction modes according to the cost corresponding to the $i^{th}$ prediction mode.

At the decoding end, the *V* prediction modes can be selected from the *J* prediction modes according to the cost corresponding to the $i^{th}$ prediction mode in the following manners.

In a first manner, if a cost corresponding to the $i^{th}$ prediction mode is less than a fourth preset value, a prediction mode(s) similar to the $i^{th}$ prediction mode is selected from the *J* prediction modes; and the *V* prediction modes are determined according to the $i^{th}$ prediction mode and the prediction mode similar to the $i^{th}$ prediction mode. The prediction mode similar to the $i^{th}$ prediction mode can be understood as a prediction mode whose prediction result is similar (or close) to the prediction result of the $i^{th}$ prediction mode, for example, a prediction mode whose prediction direction (or angle) is close to the prediction direction (or angle) of the $i^{th}$ prediction mode, or a prediction mode whose index is close to the index of the $i^{th}$ prediction mode, such as a prediction mode whose index is larger than the index of the $i^{th}$ prediction mode by 1, 2, or the like, or a prediction mode whose index is smaller than the index of the $i^{th}$ prediction mode by 1, 2, or the like.

In a second manner, if the cost corresponding to the $i^{th}$ prediction mode is greater than a fifth preset value, the $i^{th}$

prediction mode and the prediction mode similar to the $i^{th}$ prediction mode are removed from the $J$ prediction modes to obtain at least one prediction mode after removal; and the $V$ prediction modes are determined according to the at least one prediction mode after removal.

After the $E$ weight derivation modes are selected from the $F$ weight derivation modes and the $V$ prediction modes are selected from the $J$ prediction modes according to the foregoing steps, the following S101-C21-23 is performed.

S101-C21-23, $O$ blending parameters are selected from the $W$ blending parameters, where $O$ is a positive integer and $O \le W$.

In some embodiments, if $O = W$, the $W$ blending parameters are determined as the $O$ blending parameters.

In some embodiments, if $W > O$, selection is performed on the $W$ blending parameter to obtain $O$ blending parameters.

The following manners can be applied to perform selection on the $W$ blending parameters to obtain the $O$ blending parameters.

Example 1, a cost of each of the $W$ blending parameters is determined, and the first $O$ blending parameters with the minimum cost among the $W$ blending parameters are selected.

For example, for an $i^{th}$ blending parameter in the $W$ blending parameters, the $i^{th}$ blending parameter is combined with weight derivation mode 1, prediction mode 1, and prediction mode 2 to constitute one combination, and the first-component block is predicted by using the combination, so as to obtain a prediction value of the first-component block. Exemplarily, weights are determined according to weight derivation mode 1, and the weights are adjusted by using the $i^{th}$ blending parameter to obtain adjusted weights. The first-component block is predicted by applying prediction mode 1 and prediction mode 2, so as to obtain two prediction values of the first-component block; and the two prediction values are weighted by using the adjusted weights, so as to obtain a prediction value of the first-component block corresponding to the $i^{th}$ blending parameter. Then, a cost corresponding to the $i^{th}$ blending parameter is determined according to the reconstructed value of the first-component block and the prediction value of the first-component block corresponding to the $i^{th}$ blending parameter. According to the above method, a cost corresponding to a combination consisting of one of the $W$ blending parameters together with weight derivation mode 1, prediction mode 1, and prediction mode 2 can be determined, and then $O$ blending parameters are selected from the $W$ blending parameters according to the cost, for example, $O$ blending parameters with the minimum cost among the $W$ blending parameters are selected.

Example 2, if the $W$ blending parameters are not determined according to picture information of the current-component block, in embodiments of the disclosure, the picture information of the current-component block can be determined, and $O$ blending parameters are determined from the $W$ blending parameters according to the picture information of the current-component block.

The specific content of the picture information of the current-component block is not limited in embodiments of the disclosure, which can be, for example, ambiguity, definition, and acutance.

In some embodiments, if the picture information of the current-component block includes the definition of a picture edge, then there are two examples for determining the $O$ blending parameters from the $W$ blending parameters according to the picture information of the current-component block.

In an example, if the definition of the picture edge of the current-component block is less than a preset value, at least one first-type blending parameter in the $W$ blending parameters is determined as the $O$ blending parameters.

In another example, if the definition of the picture edge of the current-component block is greater than or equal to the preset value, at least one second-type blending parameter in the $W$ blending parameters is determined as the $O$ blending parameters.

In some embodiments, the $O$ blending parameters are selected from the $W$ blending parameters according to the size of the current-component block.

In a possible implementation, according to the size of the current-component block, a blending parameter(s) greater than or equal to a third value among the $W$ blending parameters is taken as the $O$ blending parameters.

For example, if the size of the current-component block is less than a second preset threshold, a blending parameter(s) whose value is the third value among the $W$ blending parameters is used as one of the $O$ blending parameters.

For another example, if the size of the current-component block is greater than or equal to the second preset threshold, a blending parameter(s) less than or equal to a fourth value among the $W$ blending parameters is used as the $O$ blending parameters, where the fourth value is less than the third value.

The specific values of the second preset threshold, the third value, and the fourth value are not limited in embodiments of the disclosure.

Optionally, the third value is 1, and the fourth value is 1/2.

Optionally, if the size of the current-component block is represented by the number of samples in the current-component block, the second preset threshold is 256.

In another possible implementation, according to the size of the current-component block, the $O$ blending parameters are determined to be at least one blending parameter falling within a certain value range among the $W$ blending parameters.

For example, if the size of the current-component block is less than the second preset threshold, the *O* blending parameters are determined to be one or more blending parameters falling within a value range of the fourth blending parameter among the *W* blending parameters.

For another example, if the size of the current-component block is greater than or equal to the second preset threshold, the *O* blending parameters are determined to be one or more blending parameters falling within a value range of a third blending parameter among the *W* blending parameters, where a minimum value of the value range of the third blending parameter is less than a minimum value of the value range of the fourth blending parameter.

The specific values of the value range of the fourth blending parameter and the value range of the third blending parameter are not limited in embodiments of the disclosure. Optionally, the value range of the fourth blending parameter overlaps with the value range of the third blending parameter. Optionally, the value range of the fourth blending parameter does not overlap with the value range of the third blending parameter.

After the *E* weight derivation modes are selected from the *F* weight derivation modes, the *V* prediction modes are selected from the *J* prediction modes, and the *O* blending parameters are selected from the *W* blending parameters, the following step S101-C21-24 is performed.

S101-C21-24, the *R* second combinations are constructed according to the *E* weight derivation modes, the *V* prediction modes, and the *O* blending parameters.

Specifically, one weight derivation mode is selected from the *E* weight derivation modes, *K* prediction modes are selected from the *V* prediction modes, and one blending parameter is selected from the *O* blending parameters. The one weight derivation mode, the *K* prediction modes, and the one blending parameter constitute one second combination. By repeating this step, the *R* second combinations can be obtained.

It can be seen from the above that each second combination includes one weight derivation mode, *K* prediction modes, and one blending parameter, that is, each second combination includes *K*+2 elements. In this way, when selecting one element, limitation can be imposed on possible choices for the element in a combination when other elements in the combination are fixed.

An implementation of the foregoing S101-C21-2 will be described below, for example, selection is performed for one prediction mode while the weight derivation mode, the blending parameter, and the other one prediction mode are fixed.

In some embodiments, the above S101-C21-2 includes the following. For an $f^{th}$ weight derivation mode in the *F* weight derivation modes and an $o^{th}$ blending parameter in the *O* blending parameters, determine a cost when predicting the first-component block by using the $f^{th}$ weight derivation mode, the $o^{th}$ blending parameter, and a $j^{th}$ prediction mode in the J prediction modes, wherein *f* is a positive integer and $f \leq F$, *o* is a positive integer and $o \leq O$, and *j* is a positive integer and $j \leq J$. If a cost corresponding to a combination of the $f^{th}$ weight derivation mode, the $o^{th}$ blending parameter, and the $j^{th}$ prediction mode is greater than a sixth preset value, the $j^{th}$ prediction mode and a prediction mode similar to the $j^{th}$ prediction mode are removed from the *J* predictions mode, to obtain at least one prediction mode after removal. The *R* second combinations are constructed according to the $f^{th}$ weight derivation mode, the $o^{th}$ blending parameter, and at least one prediction mode after removal.

In embodiments, when the weight derivation mode, the blending parameter, and one prediction mode are fixed, selection is performed for the other one prediction mode. For example, in a certain weight derivation mode and a certain blending parameter, if a small cost cannot be obtained when using a certain intra prediction mode as a first prediction mode, then skip trying to use an intra prediction mode similar to such intra prediction mode as the first prediction mode regarding the weight derivation mode and the blending parameter.

Specifically, assuming that *K*=2, for the $f^{th}$ weight derivation mode in the *F* weight derivation modes and the $o^{th}$ blending parameter in the *O* blending parameters, assuming that a $2^{nd}$ prediction mode is set to be prediction mode 1, then prediction mode 1 can be a prediction mode in the *J* prediction modes, or can be another prediction mode other than the *J* prediction modes. Then possible choices for a $1^{st}$ prediction mode are determined from the *J* prediction modes. Specifically, the $j^{th}$ prediction mode in the *J* prediction modes is taken as the $1^{st}$ prediction mode. In this case, determine a prediction value of the first-component block when predicting the first-component block by using combination *j* consisting of the $f^{th}$ weight derivation mode, the $o^{th}$ blending parameter, the $j^{th}$ prediction mode, and prediction mode 1, and a cost corresponding to combination *j* is determined according to the prediction value and is taken as a cost corresponding to the $j^{th}$ prediction mode. Then, determine whether the cost corresponding to the $j^{th}$ prediction mode is greater than the sixth preset value. If the cost corresponding to the $j^{th}$ prediction mode is greater than the sixth preset value, it indicates that the first-component block cannot be accurately predicted by using a combination formed by the $j^{th}$ prediction mode, the $f^{th}$ weight derivation mode, the $o^{th}$ blending parameter, and prediction mode 1 is used. In this case, the $j^{th}$ prediction mode is removed from the *J* prediction modes. Since a prediction mode similar to the $j^{th}$ prediction mode has characteristics similar to those of the $j^{th}$ prediction mode, the prediction mode similar to the $j^{th}$ prediction mode is also removed from the *J* prediction modes, to obtain a set of prediction modes after removal. Another prediction mode is selected from the set of prediction modes after removal and is taken as a new $j^{th}$ prediction mode, and the foregoing steps are repeated, so as to obtain a final set of prediction modes after removal corresponding to the $f^{th}$ weight derivation mode and the $o^{th}$ blending parameter.

According to the foregoing steps, a final set of prediction modes after removal corresponding to each of the $F$ weight derivation modes and the blending parameter can be determined. In this way, the $R$ second combinations are constructed according to the $F$ weight derivation modes and the final set of prediction modes after removal corresponding to each of the $F$ weight derivation modes.

It should be noted that, the foregoing embodiments provide a manner for selecting a prediction mode in the form of combination. Optionally, for any one of the weight derivation mode and the blending parameter, selection can be performed in the form of combination, so as to construct the $R$ second combinations.

At the decoding end, after the $R$ second combinations are determined according to the foregoing method, for any one of the $R$ second combinations, prediction is performed on the first-component block by using a weight derivation mode, $K$ prediction modes, and a blending parameter in the second combination, so as to obtain a prediction value of the first-component block corresponding to the second combination.

The following will describe an implementation of predicting the first-component block corresponding to the current-component block by using any one of the second combinations to obtain a prediction value of the first-component block in an embodiment of the disclosure.

In embodiments of the disclosure, with regard to any one of the second combinations, the first-component block is predicted according to a weight derivation mode, a blending parameter, and $K$ prediction modes in the second combination, so as to obtain a prediction value of the first-component block corresponding to the second combination.

In embodiments of the disclosure, there is no limitation on the implementation of predicting the first-component block according to the weight derivation mode, the blending parameter, and *the K* prediction modes in second combination to obtain the prediction value of the first-component block corresponding to the second combination. For example, a prediction value of the first-component block is determined firstly according to the weight derivation mode and the $K$ prediction modes in the second combination, and then the prediction value of the first-component block corresponding to the second combination is obtained according to the blending parameter and the determined prediction value of the first-component block.

In some embodiments, weights for the first-component block can be determined according to the weight derivation mode and the blending parameter in the second combination; then, $K$ prediction values of the first-component block are determined according to the $K$ prediction modes in the second combination; and the prediction value of the first-component block corresponding to the second combination is determined according to the weights for the first-component block and the $K$ prediction values of the first-component block.

In some embodiments, the weights for the first-component block are determined according to the weight derivation mode as follows.

Step 1, an angle index and a distance index are determined according to the weight derivation mode.

Step 2, the weights for the first-component block are determined according to the angle index, the distance index, the blending parameter, and the size of the first-component block.

In the disclosure, the weights for the first-component block can be derived in the same manner as deriving weights of prediction values. For example, the angle index and the distance index are firstly determined according to the weight derivation mode, where the angle index can be understood as an angle index of a boundary line of weights derived from the weight derivation mode. Exemplarily, the angle index and the distance index corresponding to the weight derivation mode can be determined according to Table 2 above. For example, if the weight derivation mode is 27, a corresponding angle index is 12 and a corresponding distance index is 3. Then, the weights for the first-component block are determined according to the angle index, the distance index, and the size of the first-component block.

In the foregoing step 2, the manner for determining the weights for the first-component block according to the angle index, the distance index, and the size of the first-component block includes, but is not limited to, the following manners.

Manner I: the weights for the first-component block are determined according to the angle index, the distance index, the blending parameter, and the size of the first-component block. In this case, the above step 2 includes the following step 21 to step 23.

Step 21, a first parameter of a sample in the first-component block is determined according to the angle index, the distance index, and the size of the first-component block.

Step 22, weights for the sample in the first-component block are determined according to the first parameter of the sample in the first-component block and the blending parameter.

Step 23, the weights for the first-component block are determined according to the weights for the sample in the first-component block.

In this implementation, the weights for the sample in the first-component block are determined according to the angle index, the distance index, the size of the first-component block, and the size of the current-component block, and then a weight matrix formed by the weights for each sample in the first-component block is determined as the weights for the first-component block.

The first parameter in the disclosure is used for determining weights.

In some embodiments, the first parameter is also referred to as a weight index.

In some embodiments, the first parameter can be understood as the third weights corresponding to the first-component block and the fourth weight corresponding to the first-component block in the foregoing embodiments.

In a possible implementation, an offset and the first parameter can be determined in the following manner.

Inputs to the process of deriving the weights for the first-component block are: the width $nCbW$ of the first-component block, the height $nCbH$ of the first-component block, a "partition" angle index variable $angleId$ of GPM, a distance index variable $distanceIdx$ of GPM, and a component index variable $cIdx$. Here, the first-component block is taken as an example, and therefore $cIdx = 0$, which indicates the luma component.

Variables $nW, nH, shift1, offset1, displacementX, displacementY, partFlip,$ and $shiftHor$ are derived as follows:

$$nW = ( cIdx = = 0 ) ? nCbW : nCbW * EubWidthC$$

$$nH = ( cIdx = = 0 ) ? nCbH : nCbH * EubHeightC$$

$$shift1 = Max( 5, 17 - BitDepth ),$$

where $BitDepth$ represents a coding bit depth;

$$offset1 = 1 << ( shift1 - 1 )$$

$$displacementX = angleIdx$$

$$displacementY = ( angleIdx + 8 ) \% 32$$

$$partFlip = ( angleIdx >= 13 \&\& angleIdx <= 27 ) ? 0 : 1$$

$$shiftHor = ( angleIdx \% 16 = = 8 \,||\, ( angleIdx \% 16 != 0 \&\& nH >= nW ) ) ? 0 : 1$$

Offsets $offsetX$ and $offsetY$ are derived as follows:

if shiftHor = 0:

$$offsetX = ( -nW ) >> 1$$

$$offsetY = ( ( -nH ) >> 1 ) + ( angleIdx < 16 ? ( distanceIdx * nH ) >> 3 : - ( ( distanceIdx * nH ) >> 3 ) )$$

otherwise (i. e. shiftHor = 1):

$$offsetX = ( ( -nW ) >> 1 ) + ( angleIdx < 16 ? ( distanceIdx * nW ) >> 3 : - ( ( distanceIdx * nW ) >> 3 )$$

$$offsetY = ( -nH ) >> 1$$

The weight matrix $wVemplateValue[x][y]$ (where $x = -nVmW..nCbW - 1$, $y = - nVmH..nCbH - 1$, except for the case where $x \geq 0$ and $y \geq 0$) for the first-component block is derived as follows (it should be noted that in this example, the coordinate of a top-left corner of the first-component block is (0, 0)):

variables $xL$ and $yL$ are derived as follows:

$$xL = ( \, cIdx \; = = \; 0 \, ) \; ? \; x : x * EubWidthC$$

$$yL = ( \, cIdx \; = = \; 0 \, ) \; ? \; y : y * EubHeightC$$

$disLut$ is determined according to Table 3 above;

the first parameter $weightIdx$ is derived as follows:

$$weightIdx = ( \, ( \, ( \, xL + offsetX \, ) \; << \; 1 \, ) + 1 \, ) * disLut[ \, displacementX \, ] +$$

$$( \, ( \, ( \, yL + offsetY \, ) \; << \; 1 \, ) + 1 \, ) * disLut[ \, displacementY \, ]$$

In some embodiments, after the first parameter $weightIdx$ is determined according to the foregoing method, the first parameter is adjusted by using the blending parameter to obtain an adjusted first parameter.

In an example, the first parameter is adjusted according to the following formula:

$$weightIdx = weightIdx * blendingCoeff$$

$blendingCoeff$ is the blending parameter.

Then, the manner for determining the weights for the sample in the first-component block according to the adjusted first parameter includes, but is not limited to, the following manners.

Manner 1: a second parameter of the sample in the first-component block is determined according to the adjusted first parameter of the sample in the first-component block; and the weights for the sample in the first-component block are determined according to the second parameter of the sample in the first-component block.

The second parameter is also used for determining weights. In some embodiments, the second parameter is also referred to as a weight index for the first component, and the first component can be a luma component, a chroma component, or the like.

For example, the weights for the sample in the first-component block are determined according to the following formula:

$$weightIdxL = partFlip \; ? \; 32 + weightIdx : 32 - weightIdx$$

$$wVemplateValue[x][y] = Clip3( \, 0, 8, ( \, weightIdxL + 4 \, ) \; >> \; 3 \, )$$

$wVemplateValue[x][y]$ is the weights for the sample (x, y) in the first-component block. $weightIdxL$ is the second parameter of the sample (x, y) in the first-component block, and is also referred to as a weight index for the first component (for example, a luma component). $wVemplateValue[x][y]$ is the weights for the sample (x, y) in the first-component block. $partFlip$ is an intermediate variable and is determined according to the angle index $angleIdx$, for example, partFlip = ( angleIdx >= 13 && angleIdx <= 27 ) ? 0 : 1 as described above, that is, partFlip = 1 or 0. If partFlip = 0, weightIdxL = 32 + weightIdx; and if partFlip = 1, weightIdxL = 32 + weightIdx. It should be noted that, 32 herein is merely an example, and the disclosure is not limited thereto.

Manner 2: the weights for the sample in the first-component block are determined according to the adjusted first parameter of the sample in the first-component block, a first threshold, and a second threshold.

In order to reduce complexity of calculating the weights for the first-component block, in manner 2, the weights for the sample in the first-component block are limited to the first threshold or the second threshold, that is, the weights for the sample in the first-component block are either the first threshold or the second threshold, thereby reducing complexity of calculating the weights for the first-component block.

The values of the first threshold and the second threshold are not limited in the disclosure.

Optionally, the first threshold is 1.

Optionally, the second threshold is 0.

In an example, the weights for the sample in the first-component block can be determined according to the following formula:

$$wVemplateValue[x][y] = (partFlip\ ?\ weightIdx:\ -weightIdx) > 0\ ?\ 1 : 0$$

*wVemplateValue[x][y]* is the weights for the sample (x, y) in the first-component block. In the foregoing "1 : 0", 1 is the first threshold, and 0 is the second threshold.

In the foregoing manner I, weights for each sample in the first-component block are determined according to the weight derivation mode, and a weight matrix formed by the weights for each sample in the first-component block is used as the weights for the first-component block.

After the weights for the first-component block corresponding to the weight derivation mode in the second combination are determined according to the foregoing method, the first-component block is predicted by applying the *K* prediction modes in the second combination, to obtain *K* prediction values; and the *K* prediction values are weighted according to the weights for the first-component block to obtain the prediction value of the first-component block.

Then, the cost of the second combination is determined according to the prediction value of the first-component block and the reconstructed value of the first-component block.

According to the foregoing method, a cost of each of the *R* second combinations can be determined, and then a candidate combination list illustrated in Table 8 is constructed according to the cost of each of the *R* second combinations.

In this way, at the decoding end, a candidate combination corresponding to a first index is queried from the candidate combination list illustrated in Table 8 according to the first index, and the candidate combination corresponding to the first index is determined as the first combination, that is, a weight derivation mode in the candidate combination is determined as the first weight derivation mode, *K* prediction modes in the candidate combination are determined as the *K* first prediction modes, and a blending parameter in the candidate combination is determined as the second blending parameter.

In the foregoing case 2, the implementation of S101 is described by taking the first combination including the first weight derivation mode, the *K* first prediction modes, and the second blending parameter as an example.

Case 3: the first combination includes the first weight derivation mode and the *K* first prediction modes, where the first weight derivation mode includes a third blending parameter, and the third blending parameter is used for determining a weight.

In the above case 3, the first weight derivation mode can be understood as a dataset, where the dataset includes multiple parameters, for example, includes the third blending parameter, and the multiple parameters are used together for determining the weight.

In such case 3, for S101, the first combination is determined according to the following steps.

S101-E, the bitstream is decoded to determine a candidate combination list, where the candidate combination list includes at least one candidate combination, and any one of the at least one candidate combination includes one weight derivation mode and *K* prediction modes, and the weight derivation mode includes one blending parameter.

S101-F, the first combination is determined according to the candidate combination list.

Exemplarily, the candidate combination list is illustrated in Table 9.

Table 9

| Index | Candidate combination |
|---|---|
| 0 | Candidate combination 1 (including one weight derivation mode and *K* prediction |
| | modes, where the weight derivation mode includes one blending parameter) |
| 1 | Candidate combination 2 (including one weight derivation mode and *K* prediction modes, where the weight derivation mode includes one blending parameter) |
| ...... | ...... |
| *i* - 1 | Candidate combination *i* (including one weight derivation mode and *K* prediction modes, where the weight derivation mode includes one blending parameter) |
| ...... | ...... |

As illustrated in Table 9, the candidate combination list includes at least one candidate combination, and any two candidate combinations in the at least one candidate combination are not completely the same, that is, any two candidate combinations differ in at least one of the weight derivation mode or *K* prediction modes.

Exemplarily, in the foregoing table 9, the order of a candidate combination in a candidate combination list is taken as an index of the candidate combination, and optionally, the index of the candidate combination in the candidate combination list can also be indicated in another manner, which is not limited in embodiments of the disclosure.

In embodiments, at the decoding end, the manner for determining the first combination according to the candidate combination list includes, but is not limited to, the following manners.

Manner 1: the candidate combination list includes one candidate combination, and in this case, the candidate combination in the candidate combination list is determined as the first combination.

Manner 2: the candidate combination list includes multiple candidate combinations. In this case, the bitstream is decoded to obtain a first index, where the first index indicates the first combination; and a candidate combination corresponding to the first index in the candidate combination list is determined as the first combination.

In the above manner 2, at the decoding end, the bitstream is decoded to obtain the first index, the candidate combination list as illustrated in the above Table 9 is determined, and the first combination indicated by the first index is queried from the candidate combination list according to the first index.

For example, the first index is index 1, and in the candidate combination list illustrated in Table 9, a candidate combination corresponding to index 1 is candidate combination 2, that is, the first combination indicated by the first index is candidate combination 2. In this way, at the decoding end, a weight derivation mode and $K$ prediction modes in candidate combination 2 are determined as the first weight derivation mode and the $K$ first prediction modes in the first combination; and the current-component block is predicted by using the third blending parameter in the first weight derivation mode and the $K$ first prediction modes, so as to obtain the prediction value of the current-component block.

The process of determining the candidate combination list in the foregoing S101-E is described below.

In some embodiments, the candidate combination list already exists. At the decoding end, after the first index is obtained by decoding the bitstream, the candidate combination list can be obtained or read according to the first index, and then a candidate combination corresponding to the first index is queried from the candidate combination list according to the first index.

In some embodiments, the candidate combination list is transmitted to the decoding end from the encoding end. For example, at the encoding end, the candidate combination list is transmitted to the decoding end before encoding the current-component block.

In some embodiments, the candidate combination list is uploaded to the cloud from the encoding end, and at the decoding end, the candidate combination list is read from the cloud.

In some embodiments, the candidate combination list is constructed at the decoding end.

The manner for constructing the candidate combination list at the decoding end is not limited in embodiments of the disclosure. For example, the probabilities of various combinations formed by different prediction modes and different blending parameters are analyzed according to information related to the current-component block, and the candidate combination list is constructed according to the probabilities of these combinations.

Optionally, the information related to the current-component block includes mode information of neighbouring blocks of the current-component block, reconstructed samples of the first-component block corresponding to the current-component block, and the like.

In some embodiments, the candidate combination list is constructed at the decoding end through the following steps S101-E1 and S101-E2.

S101-E1, the bitstream is decoded to determine the first-component block corresponding to the current-component block.

S101-E2, the candidate combination list is constructed based on the first-component block.

For the implementation of S101-E1, reference can be made to the elaborations of S101-A1, which will not be described again herein.

Since there is a correlation between the first-component block corresponding to the current-component block and the current-component block, in embodiments of the disclosure, the candidate combination list of the current-component block is constructed based on the first-component block.

For example, for each combination, prediction is performed on the first-component block by using the combination, to obtain a prediction value of the first-component block corresponding to the combination; and the candidate combination list is constructed according to a prediction value of the first-component block corresponding to each combination. For example, for each combination, a weight derivation mode in the combination is used to derive weights for the first-component block; the first-component block is predicted by applying $K$ prediction modes in the combination, so as to obtain $K$ prediction values of the first-component block; and the $K$ prediction values of the first-component block are weighted according to the derived weights for the first-component block, so as to obtain a prediction value of the first-component block corresponding to the combination. Finally, the candidate combination list is constructed according to the prediction value of the first-component block corresponding to each combination.

It should be noted that, the weights derived according to the weight derivation mode can be understood as deriving weights corresponding to each sample in the first-component block, or can be understood as deriving a weight matrix corresponding to the first-component block. Adjusting the weights for the first-component block by using the blending parameter can be understood as adjusting weights corresponding to each sample in the first-component block or adjusting a weight matrix corresponding to the first-component block. When determining the prediction value of the first-component block based on the adjusted weights for the first-component block, for each sample in the first-component block, $K$ prediction values corresponding to the sample can be determined, and a prediction value corresponding to the sample is determined according to the $K$ prediction values corresponding to the sample and the adjusted weights corresponding to the sample, where a prediction value corresponding to each sample in the first-component block constitutes the prediction value of the first-component block. Alternatively, determination of the prediction value of the first-component block based on the adjusted weights can also be performed on a block basis. For example, prediction values of the first-component block are determined, and the $K$ prediction values of the first-component block are weighted according to the adjusted weight matrix for the first-component block, so as to obtain the prediction value of the first-component block.

In some embodiments, S101-E2 includes the following steps S101-E21 to S101-E23.

S101-E21, $R$ second combinations are determined, where any one of the $R$ second combinations includes one weight derivation mode and $K$ prediction modes; the weight derivation mode includes a blending parameter; weight derivation modes and $K$ prediction modes in any two of the $R$ second combinations are not completely the same; and $R$ is a positive integer and $R > 1$.

S101-E22, for any one of the $R$ second combinations, determine a cost corresponding to the second combination when predicting the first-component block by using a weight derivation mode and $K$ prediction modes in the second combination.

S101-E23, the candidate combination list is constructed according to a cost corresponding to each of the $R$ second combinations.

In embodiments, at the decoding end, when constructing the candidate combination list, $R$ second combinations are firstly determined. There is no limitation on the quantity of the $R$ second combinations in the disclosure, which can be, for example, 8, 16, 32, and the like. Each of the $R$ second combinations includes one weight derivation mode and $K$ prediction modes, and the weight derivation mode includes one blending parameter. Weight derivation modes and $K$ prediction modes in any two of the $R$ second combinations are not completely the same. Then, for each of the $R$ second combinations, determine a cost corresponding to the second combination when predicting the first-component block by using a weight derivation mode and $K$ prediction modes in the second combination. Finally, the candidate combination list is constructed according to the cost corresponding to each of the R second combinations.

In some embodiments, for S101-E22, there are at least the following manners for determining the cost corresponding to the second combination when predicting the first-component block by using the weight derivation mode and the K prediction modes in the second combination.

Manner 1, S101-E22 includes the following S101-E22-11 to S101-E22-14.

S101-E22-11, weights for the first-component block are determined according to the weight derivation mode in the second combination.

S101-E22-12, the first-component block is predicted according to the $K$ prediction modes in the second combination, to obtain $K$ prediction values of the first-component block.

S101-E22-13, the $K$ prediction values of the first-component block are weighted according to the weights for the first-component block, to obtain a prediction value of the first-component block corresponding to the second combination.

S101-E22-14, the cost corresponding to the second combination is determined according to the prediction value of the first-component block corresponding to the second combination and the reconstructed value of the first-component block.

In embodiments of the disclosure, the process of determining the cost corresponding to each of the $R$ second combinations is the same. For ease of illustration, one of the $R$ second combinations is taken as an example for illustration herein.

In embodiments of the disclosure, the second combination includes one weight derivation mode and $K$ prediction modes. When predicting the first-component block by using the second combination, exemplarily, at the decoding end, the weights for the first-component block can be determined according to the weight derivation mode in the second combination; the first-component block is predicted according to *the K* prediction modes in the second combination, to obtain $K$ prediction values of the first-component block; and the $K$ prediction values of the first-component block are weighted according to the weights for the first-component block, to obtain the prediction value of the first-component block corresponding to the second combination. Then, the cost corresponding to the second combination is determined according to the prediction value of the first-component block corresponding to the second combination and the reconstructed value of the first-component block.

In embodiments of the disclosure, there is no limitation on the manner for determining the weights for the first-component block according to the weight derivation mode in the second combination in S101-E22-11. For example, the weight derivation mode in the second combination includes a blending parameter, and therefore, the weights for the first-component block can be determined according to the blending parameter.

Manner 2, S101-E22 includes the following S101-E22-11 to S101-E22-14.

S101-E22-21, determine prediction values of the first-component block corresponding to the $K$ prediction modes in the second combination according to the weight derivation mode in the second combination.

S101-E22-22, determine costs corresponding to the $K$ prediction modes in the second combination according to the prediction values of the first-component block corresponding to the *K* prediction modes in the second combination and the reconstructed value of the first-component block.

S101-E22-23, determine the cost corresponding to the second combination according to the costs corresponding to the *K* prediction modes in the second combination. For example, the sum of the costs corresponding to the *K* prediction modes in the second combination is determined as the cost corresponding to the second combination.

For example, assuming that *K*=2, then two prediction modes in the second combination are denoted as prediction mode 1 and prediction mode 2. Firstly, a weight and a prediction value of the first-component block corresponding to prediction mode 1 are determined according to the weight derivation mode in the second combination, and the prediction value corresponding to prediction mode 1 is processed by using the weight for the first-component block corresponding to prediction mode 1. For example, for each sample in the first-component block corresponding to prediction mode 1, a prediction value of the sample in the first-component block corresponding to prediction mode 1 is multiplied by a weight for the first-component block corresponding to the sample, to obtain a prediction value of the sample. In this way, the prediction value of the first-component block corresponding to prediction mode 1 can be determined. Then a cost corresponding to prediction mode 1 is determined according to the prediction value of the first-component block corresponding to prediction mode 1 and the reconstructed value of the first-component block. The manner for determining the cost corresponding to prediction mode 1 includes, but is not limited to, SAD, SATD, and SSE. Likewise, a cost corresponding to prediction mode 2 can be determined. As such, the cost corresponding to the second combination is determined according to the cost corresponding to prediction mode 1 and the cost corresponding to prediction mode 2, for example, the cost corresponding to the second combination is determined by adding the cost corresponding to prediction mode 1 and the cost corresponding to prediction mode 2.

For the manner for constructing the candidate combination list according to the cost corresponding to each of the *R* second combinations in the foregoing S101-E23, reference can be made to the illustration of the foregoing S101-A23, which is not described again herein.

The process of determining the *R* second combinations in S101-E21 is described below.

In some embodiments, the *R* second combinations are pre-set.

In some embodiments, S101-E21 includes the following steps.

S101-E21-1, *C* weight derivation modes and *D* prediction modes are determined, wherein *C* is a positive integer, and *D* is a positive integer and $D \geq K$.

S101-E21-2, the *R* second combinations are constructed according to the *C* weight derivation modes and the *D* prediction modes, where any one of the *R* second combinations includes one of the *C* weight derivation modes and *K* prediction modes in the *D* prediction modes.

In embodiments, at the decoding end, the *C* weight derivation modes and the *D* prediction modes are firstly determined, and then the *R* second combinations are constructed according to the *C* weight derivation modes and *D* prediction modes determined.

There is no limitation on the quantities of the *C* weight derivation modes and the D prediction modes in embodiments of the disclosure.

Assuming that *K* = 2, then the foregoing *K* prediction modes include a 1st prediction mode and a 2nd prediction mode. Assuming that there are *D* prediction modes available, then there *are D* possible choices for the 1st prediction mode, and since the 2nd prediction mode is different from the 1st prediction mode, there are (D-1) possible choices for the 2nd prediction mode. Assuming that there are *C* weight derivation modes, then in the disclosure, any two different prediction modes, any one weight derivation mode, and any one blending coefficient can be combined to construct one second combination, and accordingly, there are a total of $C*D*(D-1)$ possible second combinations.

In this implementation, the C weight derivation modes are all possible weight derivation modes, where the weight derivation mode include a blending parameter, that is, the *C* weight derivation modes include all possible blending parameters; and *the D* prediction modes are all possible prediction modes. All the possible second combinations are obtained by means of an exhaustive algorithm. Prediction is performed on the first-component block by using each of the possible second combinations, a distortion cost of each second combination is calculated, and then a candidate combination list corresponding to the current-component block is obtained according to the distortion cost of each second combination.

In some embodiments, in order to reduce the amount of data and accelerate construction of the candidate combination list, not all the prediction modes are tried, and instead, only some of the prediction modes can be selected for trial.

In this case, the implementation of determining the *D* prediction modes in S101-E21-1 includes, but is not limited to, the following manners.

Manner 1: the *D* prediction modes are preset prediction modes.

Manner 2: at least one of a candidate prediction mode list of the current-component block, alternative prediction mode lists corresponding to the *K* first prediction modes, a prediction mode(s) corresponding to the weight derivation mode, or a preset mode is determined. The *D* prediction modes are determined according to at least one of the candidate prediction mode list, the alternative prediction mode lists corresponding to the K first prediction modes, the prediction mode corresponding to the weight derivation mode, or the preset mode.

The manner for determining a third candidate prediction mode list of the current-component block includes at least the following several examples.

Example 1, the third candidate prediction mode list is determined according to a prediction mode applied to at least one neighbouring block of the current-component block.

Example 2, if the third candidate prediction mode list does not include the preset mode, a preset mode corresponding to the current-component block is determined, and the preset mode is added to the third candidate prediction mode list.

In an example, the preset mode is several preset prediction modes.

In another example, a picture type corresponding to the current-component block is determined, and the preset mode is determined according to the picture type corresponding to the current-component block.

For example, if the picture type corresponding to the current-component block is a B type or a P type, the preset mode includes at least one of DC, a horizontal mode, a vertical mode, or an angular mode.

Example 3, the picture type corresponding to the current-component block is determined, and the third candidate prediction mode list is determined according to the picture type corresponding to the current-component block. For example, if the picture type corresponding to the current-component block is a B type or a P type, at least one of the DC, the horizontal mode, the vertical mode, or some other angular modes can be added to the third candidate prediction mode list. For another example, if the picture type corresponding to the current-component block is an I type, at least one of the DC, the horizontal mode, or the vertical mode can be added to the third candidate prediction mode list.

Example 4, at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been decoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In embodiments of the disclosure, for the implementation of determining the D prediction modes, reference can be made to the elaborations of determining the Q prediction modes in the foregoing S101-A21-1, which is not described herein again. In some embodiments, D = Q.

The process of determining the C weight derivation modes in S101-E21-1 is described below.

In some embodiments, the C weight derivation modes are pre-set.

In some embodiments, the C weight derivation modes are selected from multiple preset weight derivation modes, for example, selection is performed according to information such as the size of the current-component block and/or the picture type corresponding to the current-component block, so as to obtain the C weight derivation modes. Optionally, C weight derivation modes with the minimum cost can be selected from the multiple preset weight derivation modes according to costs.

In some embodiments, X blending parameters are determined, and C weight derivation modes are determined based on the X blending parameters. The magnitude relationship between X and C is not limited in embodiments of the disclosure.

In embodiments of the disclosure, since each of the C weight derivation modes includes one blending parameter, the C weight derivation modes can be determined according to the X blending parameters. For example, if the weight derivation mode includes other parameters besides the blending parameter, blending parameters in at least two of the C weight derivation modes may be the same or different. Then the C weight derivation modes can be determined according to the X blending parameters. For example, determine a cost corresponding to each of the multiple different weight derivation modes formed by the X blending parameters when using the multiple different weight derivation modes, and thus C weight derivation modes with the minimum cost are selected.

The manner for determining the X blending parameters is not limited in embodiments of the disclosure.

In some embodiments, the X blending parameters are preset blending parameters, for example, 1/4, 1/2, 1, 2, 4, and the like.

In some embodiments, the X blending parameters are determined according to the size of the current-component block.

For example, if the size of the current-component block is less than a third preset threshold, a blending parameter(s) greater than or equal to a fifth value among the at least one preset blending parameter is used as the X blending parameters.

For another example, if the size of the current-component block is greater than or equal to the third preset threshold, a blending parameter(s) less than or equal to a sixth value among the at least one blending parameter is used as the $X$ blending parameters, where the sixth value is less than the fifth value.

For another example, if the size of the current-component block is greater than or equal to a third preset threshold, a blending parameter(s) less than or equal to the sixth value among the at least one blending parameter is used as the $X$ blending parameters, where the sixth value is less than the fifth value.

For another example, if the size of the current-component block is less than the third preset threshold, the $X$ blending parameters are determined to be one or more of the at least one preset blending parameter which fall within a value range of a fifth blending parameter.

For another example, if the size of the current-component block is greater than or equal to the third preset threshold, the $X$ blending parameter are determined to be one or more of the at least one blending parameter which fall within a value range of a sixth blending parameter, where the minimum value of the value range of the sixth blending parameter is less than the minimum value of the value range of the fifth blending parameter.

In embodiments of the disclosure, there is no limitation on the specific values of the third preset threshold, the fifth value, the sixth value, the value range of the fifth blending parameter, and the value range of the sixth blending parameter.

Optionally, if the size of the current-component block is represented by the number of samples in the current-component block, the foregoing third preset threshold is 256.

Optionally, the fifth value is 1.

Optionally, the sixth value is 1/2.

In some embodiments, picture information of the current-component block is determined; and the $X$ blending parameters are determined according to the picture information of the current-component block.

Example 1, if the definition of the picture edge of the current-component block is less than a preset value, at least one third-type blending parameter in $Y$ preset blending parameters is determined as the $X$ blending parameters, where $Y$ is a positive integer and $Y > X$.

The third-type blending parameter can be understood as a blending parameter capable of forming a wide blending area, for example, 1/4, 1/2, or the like.

Example 2, if the definition of the picture edge of the current-component block is greater than or equal to the preset value, at least one fourth-type blending parameter in the Y blending parameters is determined as the $X$ blending parameters, where the fourth-type blending parameter is greater than the third-type blending parameter.

The fourth-type blending parameter can be understood as a blending parameter capable of forming a narrow blending area, such as 2 or 4.

At the decoding end, after the $D$ prediction modes, the $C$ weight derivation modes, and the $W$ blending parameters are determined according to the foregoing steps, $R$ different second combinations are constructed according to the $D$ prediction modes and the $C$ weight derivation modes. Then, a candidate combination list is determined according to the $R$ second combinations, and then the first weight derivation mode and the $K$ first prediction modes are determined from the candidate combination list.

In some embodiments, in order to further accelerate construction of the candidate combination list, at the decoding end, selection is performed on the foregoing determined $D$ prediction modes and $C$ weight derivation modes. In this case, for S101-E21-2, the $R$ second combinations are constructed according to the determined $C$ weight derivation modes and $D$ prediction modes according to the following steps S101-E21-21 to S101-E21-24.

S101-E21-21, $C1$ weight derivation modes are selected from the $C$ weight derivation modes, where C1 is a positive integer and $C1 \leq C$.

For the implementation of the foregoing S101-E21-21, reference can be made to the illustration of the foregoing S101-A11-21, which is not described again herein.

At the decoding end, after the $C1$ weight derivation modes are selected from the $C$ weight derivation modes according to the foregoing steps, the following step S101-E21-22 is performed.

S101-E21-22, $D1$ prediction modes are selected from the $D$ prediction modes, where D1 is a positive integer and $D1 \leq D$.

For the implementation of the foregoing S101-E21-22, reference can be made to the illustration of the foregoing S101-A11-22, which is not described again herein.

After the $C1$ weight derivation modes are selected from the $C$ weight derivation modes and the $D1$ prediction modes are selected from the $D$ prediction modes according to the foregoing steps, S101-E21-23 is performed.

S101-C21-23, the R second combinations are constructed according to the $C1$ weight derivation modes and the $D1$ prediction modes.

For the implementation of the foregoing S101-E21-23, reference can be made to the illustration of the foregoing S101-A11-23, which is not described again herein.

The following will describe an implementation of predicting the first-component block corresponding to the current-component block by using any one of the second combinations to obtain a prediction value of the first-component block in an embodiment of the disclosure.

Firstly, weights for the first-component block are determined by using a weight derivation mode in the second combination.

In some embodiments, the weights for the first-component block are determined based on the weight derivation mode as follows.

Step 3, an angle index, a distance index, and a blending parameter are determined according to the weight derivation mode.

Step 4, the weights for the first-component block are determined according to the angle index, the distance index, the blending parameter, and the size of the first-component block.

In the disclosure, the weights for the first-component block can be derived in the same manner as deriving weights of prediction values. For example, parameters such as the angle index, the distance index, and the blending parameter are firstly determined according to the weight derivation mode.

In the foregoing step 2, the manner for determining the weights for the first-component block according to the angle index, the distance index, the blending parameter, and the size of the first-component block includes, but is not limited to, the following manners.

Manner I: the weights for the first-component block are determined according to the angle index, the distance index, the blending parameter, and the size of the first-component block. In this case, step 4 includes steps 41 to 43 below.

Step 41, a first parameter of a sample in the first-component block is determined according to the angle index, the distance index, and the size of the first-component block.

Step 42, weights for the sample in the first-component block are determined according to the first parameter of the sample in the first-component block and the blending parameter.

Step 43, the weights for the first-component block are determined according to the weights for the sample in the first-component block.

In this implementation, the weights for the sample in the first-component block are determined according to the angle index, the distance index, the size of the first-component block, and the blending parameter, and then a weight matrix formed by the weights for each sample in the first-component block is determined as the weights for the first-component block.

The first parameter in the disclosure is used for determining weights.

In some embodiments, the first parameter is also referred to as a weight index.

In a possible implementation, an offset and the first parameter can be determined in the following manner.

Inputs to the process of deriving the weights for the first-component block are: the width *nCbW* of the first-component block, the height *nCbH* of the first-component block, a "partition" angle index variable *angleId* of GPM, a distance index variable *distanceIdx* of GPM, and a component index variable *cldx*. Here, the first-component block is taken as an example, and therefore *cldx* = 0, which indicates the luma component.

Variables *nW, nH, shift1, offset1, displacementX, displacementY, partFlip,* and *shiftHor* are derived as follows:

$$nW = ( cldx == 0 ) ? nCbW : nCbW * EubWidthC$$

$$nH = ( cldx == 0 ) ? nCbH : nCbH * EubHeightC$$

$$shift1 = Max( 5, 17 - BitDepth )$$

, where *BitDepth* represents a coding bit depth;

$$offset1 = 1 << ( shift1 - 1 )$$

$$displacementX = angleIdx$$

$$displacementY = ( angleIdx + 8 ) \% 32$$

$$partFlip = ( angleIdx >= 13 \&\& angleIdx <= 27 ) ? 0 : 1$$

$$shiftHor = ( angleIdx \% 16 == 8 || ( angleIdx \% 16 != 0 \&\& nH >= nW) ) ? 0 : 1$$

Offsets *offsetX* and *offsetY* are derived as follows:

$$\text{if shiftHor} = 0:$$

$$\text{offsetX} = (\,\neg nW\,) \gg 1$$

$$\text{offsetY} = ((\,\neg nH\,) \gg 1) + (\text{angleIdx} < 16 \,?\, (\text{distanceIdx} * nH) \gg 3 : -((\text{distanceIdx} * nH) \gg 3))$$

$$\text{otherwise (i. e. shiftHor} = 1):$$

$$\text{offsetX} = ((\,\neg nW\,) \gg 1) + (\text{angleIdx} < 16 \,?\, (\text{distanceIdx} * nW) \gg 3 : -((\text{distanceIdx} * nW) \gg 3))$$

$$\text{offsetY} = (-nH) \gg 1$$

The weight matrix *wVemplateValue[x][y]* (where x = -nVmW..nCbW - 1, y = - nVmH..nCbH - 1, except for the case where x ≥ 0 and y ≥ 0) for the first-component block is derived as follows (it should be noted that in this example, the coordinate of a top-left corner of the first-component block is (0, 0)):

variables *x*L and *y*L are derived as follows:

$$xL = (\,cIdx\,=\,=\,0\,) \,?\, x : x * \text{EubWidthC}$$

$$yL = (\,cIdx\,=\,=\,0\,) \,?\, y : y * \text{EubHeightC}$$

*disLut* is determined according to Table 3 above;

the first parameter *weightIdx* is derived as follows:

$$\text{weightIdx} = (((\,xL + \text{offsetX}\,) \ll 1) + 1) * \text{disLut[ displacementX ]} +$$

$$(((\,yL + \text{offsetY}\,) \ll 1) + 1) * \text{disLut[ displacementY ]}$$

In some embodiments, after the first parameter *weightIdx* is determined according to the foregoing method, the first parameter is adjusted by using the blending parameter to obtain an adjusted first parameter.
In an example, the first parameter is adjusted according to the following formula:

$$\text{weightIdx} = \text{weightIdx} * \text{blendingCoeff}$$

*blendingCoeff* is the blending parameter.
Then, the manner for determining the weights for the sample in the first-component block according to the adjusted first parameter includes, but is not limited to, the following manners.
Manner 1: a second parameter of the sample in the first-component block is determined according to the adjusted first parameter of the sample in the first-component block; and the weights for the sample in the first-component block are determined according to the second parameter of the sample in the first-component block.
The second parameter is also used for determining weights. In some embodiments, the second parameter is also referred to as a weight index for the first component, and the first component can be a luma component, a chroma component, or the like.
For example, the weights for the sample in the first-component block are determined according to the following formula:

$$\text{weightIdxL} = \text{partFlip} \ ? \ 32 + \text{weightIdx} : 32 - \text{weightIdx}$$

$$\text{wVemplateValue}[x][y] = \text{Clip3}( \ 0, \ 8, \ ( \ \text{weightIdxL} + 4 \ ) \ >> \ 3 \ )$$

*wVemplateValue[x][y]* is the weights for the sample (x, y) in the first-component block. *weightIdxL* is the second parameter of the sample (x, y) in the first-component block and is also referred to as a weight index for the first component (for example, a luma component). *wVemplateValue[x][y]* is the weights for the sample (x, y) in the first-component block. *partFlip* is an intermediate variable and is determined according to the angle index *angleIdx,* for example, partFlip = ( angleIdx >= 13 && angleIdx <= 27 ) ? 0 : 1 as described above, that is, partFlip = 1 or 0. If partFlip = 0, weightIdxL = 32 - weightIdx; and if partFlip = 1, weightIdxL = 32 + weightIdx. It should be noted that, 32 herein is merely an example, and the disclosure is not limited thereto.

Manner 2: the weights for the sample in the first-component block are determined according to the adjusted first parameter of the sample in the first-component block, a first threshold, and a second threshold.

In order to reduce complexity of calculating the weights for the first-component block, in manner 2, the weights for the sample in the first-component block are limited to the first threshold or the second threshold, that is, the weights for the sample in the first-component block are either the first threshold or the second threshold, thereby reducing complexity of calculating the weights for the first-component block.

The values of the first threshold and the second threshold are not limited in the disclosure.

Optionally, the first threshold is 1.

Optionally, the second threshold is 0.

In an example, the weights for the sample in the first-component block can be determined according to the following formula:

$$\text{wVemplateValue}[x][y] = (\text{partFlip} \ ? \ \text{weightIdx}: - \ \text{weightIdx}) > 0 \ ? \ 1 : 0$$

*wVemplateValue[x][y]* is the weights for the sample (x, y) in the first-component block. In the foregoing "1 : 0", 1 is the first threshold, and 0 is the second threshold.

In the foregoing manner I, weights for each sample in the first-component block are determined according to the weight derivation mode, and a weight matrix formed by the weights for each sample in the first-component block is used as the weights for the first-component block.

After the weights for the first-component block corresponding to the weight derivation mode in the second combination are determined according to the foregoing method, a cost corresponding to each of the *K* prediction modes in the second combination is determined, and then the cost corresponding to the second combination is determined.

According to the foregoing method, a cost of each of the *R* second combinations can be determined, and then a candidate combination list illustrated in Table 9 is constructed according to the cost of each of the *R* second combinations.

In this way, at the decoding end, a candidate combination corresponding to a first index is queried from the candidate combination list illustrated in Table 9 according to the first index, and the candidate combination corresponding to the first index is determined as the first combination, that is, a weight derivation mode in the candidate combination is determined as the first weight derivation mode, and *K* prediction modes in the candidate combination are determined as the *K* first prediction modes.

At the decoding end, after the first combination is determined according to case 1, case 2, and case 3, the following step S102 is performed.

S102, the current-component block is predicted according to the first weight derivation mode and the *K* first prediction modes, to obtain the prediction value of the current-component block.

It can be seen from S102 that, in embodiments of the disclosure, the first combination differs in contents. For example, in case 1, the first combination includes the first weight derivation mode and the *K* first prediction modes, but does not include a blending parameter. In case 2, the first combination includes the first weight derivation mode, the *K* first prediction modes, and the second blending parameter. In case 3, the first combination includes the first weight derivation mode and the *K* first prediction modes, where the first weight derivation mode includes the third blending parameter. In embodiments of the disclosure, the method for determining the prediction value of the current-component block varies with contents in the first combination.

Case 1: if the first combination includes the first weight derivation mode and the *K* first prediction modes, but does not include a blending parameter, the calculation process in S102 includes the following two sub-cases.

Case 11: weights of prediction values of the current-component block are determined according to the first weight derivation mode. The current-component block is predicted according to the *K* first prediction modes to obtain *K* prediction values of the current-component block. The *K* prediction values of the current-component block are weighted by using the weights of the prediction values of the current-component block to obtain the prediction value of the current-component block. For the process of deriving the weights of the prediction values of the current-component block according to the first weight derivation mode, reference can be made to the process of deriving the weights of the prediction values of the current block in the foregoing embodiments, which is not described again herein.

In the above case 11, the influence of a blending parameter on the weights is not taken into consideration when determining the weights of the prediction values of the current-component block.

In some embodiments, if the first combination includes the first weight derivation mode and the *K* first prediction modes, but does not include a blending parameter, the method further includes the following case 22.

Case 22, although the first combination includes a blending parameter, the influence of the blending parameter is taken into consideration when determining the prediction value of the current-component block. In this case, S102 includes steps S102-A1 and S102-A2 below.

S102-A1, a first blending parameter is determined.

S102-A2, the current-component block is predicted according to the first blending parameter, the first weight derivation mode, and the *K* first prediction modes, to obtain the prediction value of the current-component block.

The implementation of S102-A2 is not limited in embodiments of the disclosure. For example, prediction is performed on the current-component block according to the first weight derivation mode and the *K* first prediction modes to obtain a prediction value, and then the prediction value of the current-component block is determined according to the first blending parameter and the prediction value.

In some embodiments, S102-A2 includes the following steps.

S102-A21, weights of prediction values are determined according to the first blending parameter and the first weight derivation mode.

S102-A22, prediction is performed on the current-component block according to the *K* first prediction modes, to obtain *K* prediction values.

S102-A23, the *K* prediction values are weighted according to the weights of the prediction values, to obtain the prediction value of the current-component block.

There is no limitation on the execution order between S102-A22 and S102-A21, that is, S102-A22 can be executed before S102-A21, or can be executed after S102-A21, or can be executed in parallel with S102-A21.

In the above case 1, if the first combination includes the first weight derivation mode and the *K* first prediction modes but does not include a blending parameter, at the decoding end, the first blending parameter is determined, and the weights of the prediction values are determined according to the first blending parameter and the first weight derivation mode. Then, the current-component block is predicted according to the *K* first prediction modes, so as to obtain the *K* prediction values of the current-component block. Then, the *K* prediction values of the current-component block are weighted by using the weights of the prediction values, so as to obtain the prediction value of the current-component block.

In embodiments of the disclosure, there are at least the following manners for determining the first blending parameter.

Manner 1: the bitstream is decoded to obtain a second index, where the second index indicates the first blending parameter, and the first blending parameter is determined according to the second index. Specifically, at the encoding end, after the first blending parameter is determined, the second index corresponding to the first blending parameter is signalled into the bitstream. Then, at the decoding end, the bitstream is decoded to obtain the second index, and then the first blending parameter is determined according to the second index.

In an example, the syntax corresponding to manner 1 is illustrated in Table 10.

Table 10

| if (deriving the condition for applying GPM to the current-component block) { | |
| --- | --- |
| gpm_cand_idx[ x0 ][ y0 ] | ae(v) |
| gpm_blending_idx[ x0 ][ y0 ] | ae(v) |
| } | |

In Table 10, *gpm_cand_idx* represents the first index, and *gpm_blending_idx* represents the second index.

In some embodiments, different blending indexes have slight influence on the prediction result of the first-component block. However, if a simplified method is adopted, that is, the weights for the first-component block are only 0 and 1, the blending index cannot have an influence on the prediction of the first-component block, that is, cannot have an influence on the candidate combination list, and in this case, the blending index may not be included the combination.

The manner for determining the first blending parameter according to the second index is not limited in embodiments of the disclosure.

In some embodiments, at the decoding end, a candidate blending parameter list is determined, where the candidate blending parameter list includes multiple candidate blending parameters; and a candidate blending parameter corresponding to the second index in the candidate blending parameter list is determined as the first blending parameter.

The manner for determining the candidate blending parameter list is not limited in embodiments of the disclosure.

In an example, the candidate blending parameters in the candidate blending parameter list are pre-set.

In another example, at the decoding end, according to feature information of the current-component block, at least one blending parameter is selected from multiple preset blending parameters to construct the candidate blending parameter list. For example, according to the picture information of the current-component block, a blending parameter(s) complying with the picture information of the current-component block is selected from the multiple preset blending parameters, so as to construct the candidate blending parameter list.

For example, assuming that the picture information includes the definition of a picture edge, if the definition of the picture edge of the current-component block is less than a preset value, at least one first-type blending parameter, for example, 1/4, 1/2, or the like, among the multiple preset blending parameters is selected to construct the candidate blending parameter list. If the definition of the picture edge of the current-component block is greater than or equal to the preset value, at least one second-type blending parameter, such as 2 and 4, among the multiple preset blending parameters is selected to construct the candidate blending parameter list.

Exemplarily, the candidate blending parameter list in embodiments of the disclosure is illustrated in Table 11.

Table 11

| Index | Candidate blending parameter |
|-------|------------------------------|
| 0 | Candidate blending parameter 0 |
| 1 | Candidate blending parameter 1 |
| ...... | ...... |
| $i$ | Candidate blending parameter $i$ |
| ...... | ...... |

As illustrated in Table 11, the candidate blending parameter list includes multiple candidate blending parameters, and each candidate blending parameter corresponds to one index.

Exemplarily, in the foregoing Table 11, the order of a candidate blending parameter in the candidate blending parameter list is taken as an index of the candidate blending parameter, and optionally, the index of the candidate blending parameter in the candidate blending parameter list can also be indicated in another manner, which is not limited in embodiments of the disclosure.

Based on Table 11, at the decoding end, the candidate blending parameter corresponding to the second index in Table 11 is determined as the first blending parameter according to the second index.

At the decoding end, instead of decoding the bitstream to obtain the second index and then determining the first blending parameter according to the second index in the foregoing manner 1, the first blending parameter can also be determined in the following manner 2.

In some embodiments, at the decoding end, the first blending parameter can also be determined in the following manner 2.

Manner 2: the first blending parameter is determined according to steps S102-A11 and S102-A12 below.

S102-A11, $G$ alternative blending parameters are determined, where $G$ is a positive integer.

S102-A12, the first blending parameter is determined from the $G$ alternative blending parameters.

In the above manner 2, the first blending parameter is determined by the decoding end, which can prevent the encoding end from encoding the second index into the bitstream, thereby saving codewords. Specifically, at the decoding end, $G$ alternative blending parameters are firstly determined, and then one alternative blending parameter is determined from the $G$ alternative blending parameters as the first blending parameter.

The manner for determining the $G$ alternative blending parameters at the decoding end is not limited in embodiments of the disclosure.

In a possible implementation, the $G$ alternative blending parameters are pre-set, that is, it is agreed between the decoding end and the encoding end that several preset blending parameters are determined as the $G$ alternative blending parameters.

In another possible implementation, the $G$ alternative blending parameters can be indicated by the encoding end, for example, at the encoding end, $G$ blending parameters in the multiple preset blending parameters are indicated as the $G$ alternative blending parameters.

In another possible implementation, there is a certain correlation between the block size and the blending parameter, and therefore, the correlation between the block size and the blending parameter can be utilized to improve compression efficiency. A possible correlation is that a narrow blending area is suitable for a small block, while a wide blending area is suitable for a large block. Based on this, in embodiments of the disclosure, the *G* alternative blending parameters can also be determined according to the size of the current-component block. For example, if the size of the current-component block is greater than a preset value, a small blending parameter(s) can be determined as the *G* alternative blending parameters. For another example, if the size of the current-component block is less than or equal to the preset value, a large blending parameter(s) can be determined as the *G* alternative blending parameters.

Exemplarily, the block size can be represented by the length, the width, or the number of samples in the block.

In another possible implementation, picture information of the current-component block is determined; and the *G* alternative blending parameters are determined from the multiple preset alternative blending parameters according to the picture information of the current-component block.

Exemplarily, if the picture information includes the definition of a picture edge, there are the following two manners for determining the *G* alternative blending parameters from the multiple preset alternative blending parameters according to the picture information of the current-component block.

In a first manner, if the definition of the picture edge of the current-component block is less than a preset value, at least one first alternative blending parameter, for example, 1/4, 1/2, among the multiple preset alternative blending parameters is determined as the G alternative blending parameters.

In a second manner, if the definition of the picture edge of the current-component block is greater than or equal to the preset value, at least one second alternative blending parameter, such as 2 and 4, among the multiple preset alternative blending parameters is determined as the *G* alternative blending parameters, where the second alternative blending parameter is greater than the first alternative blending parameter.

At the decoding end, after the *G* alternative blending parameters are determined, the first blending parameter is determined from the *G* alternative blending parameters.

The manner for determining the first blending parameter from the *G* alternative blending parameters is not limited in embodiment of the disclosure.

In some embodiments, any one of the *G* alternative blending parameters is determined as the first blending parameter.

In some embodiments, the first blending parameter is determined from the *G* alternative blending parameters according to the following steps S102-A121 and S102-A122.

S102-A121, for a $g^{th}$ alternative blending parameter in the *G* alternative blending parameters, a cost corresponding to the $g^{th}$ alternative blending parameter is determined, where *g* is a positive integer and $1 \leq g \leq G$.

S102-A122, the first blending parameter is determined from the *G* alternative blending parameters according to costs corresponding to the *G* alternative blending parameters.

In embodiments, a cost corresponding to each of the *G* alternative blending parameters is determined, and then the first blending parameter is determined from the *G* alternative blending parameters according to the cost.

In embodiments of the disclosure, the manner for determining the cost corresponding to each of the *G* alternative blending parameters is the same. For ease of illustration, the $g^{th}$ alternative blending parameter is taken as an example for illustration.

The manner for determining the cost corresponding to the $g^{th}$ alternative blending parameter is not limited in embodiments of the disclosure.

In a possible implementation, the $g^{th}$ alternative blending parameter is combined with one preset weight derivation mode and *K* preset prediction modes into one combination, and a cost when predicting the first-component block by using the combination is determined. For example, weights for the first-component block are determined according to the preset weight derivation mode and the $g^{th}$ alternative blending parameter, *K* prediction values of the first-component block are determined according to the *K* preset prediction modes, and the *K* prediction values of the first-component block are weighted according to the weights for the first-component block, to obtain a prediction value of the first-component block. Then a cost corresponding to the combination is determined according to the prediction value of the first-component block and the reconstructed value of the first-component block, and the cost corresponding to the combination is determined as the cost corresponding to the $g^{th}$ alternative blending parameter.

In another possible implementation, one first weight derivation mode, the $g^{th}$ alternative blending parameter, and the *K* first prediction modes are used as one combination, and a cost when predicting the first-component block by using the combination is determined. Exemplarily, S102-A121 includes the following steps.

S102-A1211, weights for the first-component block corresponding to the current-component block are determined according to the first weight derivation mode and the $g^{th}$ alternative blending parameter.

S102-A1212, the first-component block is predicted according to the *K* first prediction modes, to obtain *K* prediction values of the first-component block.

S102-A1213, the *K* prediction values of the first-component block are weighted according to the weights for the first-component block, to obtain a prediction value of the first-component block.

S102-A1214, the cost corresponding to the $g^{th}$ alternative blending parameter is determined according to the prediction value of the first-component block.

For the process of determining the weights for the first-component block corresponding to the current-component block according to the first weight derivation mode and the $g^{th}$ alternative blending parameter in S102-A1211, reference can be made to the elaborations of the foregoing embodiments.

For example, a first weight corresponding to the first-component block is determined according to the first weight derivation mode and the first-component block; the first weight is adjusted by using the $g^{th}$ alternative blending parameter, so as to obtain an adjusted first weight; the weights for the first-component block are determined according to the adjusted first weight.

According to the foregoing method, the cost corresponding to each of the G alternative blending parameters can be determined, and then the first blending parameter is determined from the G alternative blending parameters according to the cost.

For example, an alternative blending parameter with the minimum cost among the G alternative blending parameters is determined as the first blending parameter.

In some embodiments, the first blending parameter can also be determined in the following manner 3.

Manner 3: the first blending parameter is determined according to the size of the current-component block.

It can be seen from the above that, there is a certain correlation between the blending parameter and the block size, and therefore, in embodiments of the disclosure, the first blending parameter can also be determined according to the size of the current-component block.

In a possible implementation, a fixed blending parameter is determined as the first blending parameter according to the size of the current-component block.

For example, if the size of the current-component block is less than a first preset threshold, the first blending parameter is determined to be a first value.

For another example, if the size of the current-component block is greater than or equal to the first preset threshold, the first blending parameter is determined to be a second value, where the second value is less than the first value.

The specific values of the first value, the second value, and the first preset threshold are not limited in embodiments of the disclosure.

Exemplarily, the first value is 1, and the second value is 1/2.

Exemplarily, if the size of the current-component block is represented by the number of samples (or pixels) in the current-component block, the first preset threshold can be 256.

In another possible implementation, a value range of the first blending parameter is determined according to the size of the current-component block, and then the first blending parameter is determined to be a value within the value range.

For example, if the size of the current-component block is less than a first preset threshold, it is determined that the first blending parameter falls within the value range of the first blending parameter. For example, the first blending parameter is any one blending parameter, such as a minimum blending parameter, a maximum blending parameter, or an intermediate blending parameter, within the value range of the first blending parameter. For another example, the first blending parameter is a blending parameter with the minimum cost within the value range of the first blending parameter. For the method for determining a cost of a blending parameter, reference can be made to the illustration in other embodiments of the disclosure, which is not described again herein.

For another example, if the size of the current-component block is greater than or equal to the first preset threshold, it is determined that the first blending parameter falls within a value range of a second blending parameter. For example, the first blending parameter is any one blending parameter, such as a minimum blending parameter, a maximum blending parameter, or an intermediate blending parameter, within the value range of the second blending parameter. For another example, the first blending parameter is a blending parameter with the minimum cost within the value range of the second blending parameter. The minimum value in the value range of the second blending parameter is less than the minimum value in the value range of the first blending parameter, and the value range of the first blending parameter may or may not overlap with the value range of the second blending parameter, which is not limited in embodiments of the disclosure.

In the above case 1, after the first blending parameter is determined according to the foregoing steps, the foregoing step S102-A21 is performed to determine the weights of the prediction values according to the first blending parameter and the first weight derivation mode.

In embodiments of the disclosure, the manner for determining the weights of the prediction values according to the first blending parameter and the first weight derivation mode at least includes the manners described in following examples.

Example 1, when deriving the weights of the prediction values by using the first weight derivation mode, multiple intermediate variables need to be determined, and one or some of the multiple intermediate variables can be adjusted by using the first blending parameter. Then the weights of the prediction values are derived by using the adjusted variables.

Example 2, a second weight corresponding to the current-component block is determined according to the first weight derivation mode and the current-component block. The second weight is adjusted by using the first blending parameter to obtain an adjusted second weight. The weights of the prediction values are determined according to the adjusted second weight.

For example, according to the first weight derivation mode and the current-component block, the second weight corresponding to the current-component block is determined to be *weightIdx*. Then, *weightIdx* is adjusted by using the first blending parameter, to obtain adjusted *weightIdx*. The weights *wVemplateValue* of the prediction values are determined according to the adjusted *weightIdx*.

In an example, *weightIdx* can be adjusted by using the first blending parameter according to the following formula, to obtain the adjusted *weightIdx:*

$$weightIdx = weightIdx * blendingCoeff1$$

*blendingCoeff1* is the first blending parameter.

For another example, according to the first weight derivation mode and the current-component block, the second weight corresponding to the current-component block is determined to be *wVemplateValue*. Then, *wVemplateValue* is adjusted by using the first blending parameter, to obtain adjusted *wVemplateValue*. The adjusted *wVemplateValue* is determined as the weights of the prediction values.

In an example, *wVemplateValue* can be adjusted by using the first blending parameter according to the following formula, to obtain the adjusted *wVemplateValue:*

$$wVemplateValue= wVemplateValue* blendingCoeff1$$

According to the foregoing method, at the decoding end, the weights of the prediction values can be determined according to the first blending parameter and the first weight derivation mode.

Then, prediction is performed on the current-component block according to the $K$ first prediction modes, so as to obtain $K$ prediction values; and the $K$ prediction values are weighted according to the weights of the prediction values, so as to obtain the prediction value of the current-component block.

The above has introduced the process of determining the prediction value of the current-component block corresponding to case 1 in which the first combination includes the first weight derivation mode and the $K$ first prediction modes but does not include a blending parameter.

The following will introduce the process of determining the prediction value of the current-component block corresponding to case 2.

In case 2, if the first combination includes the first weight derivation mode, the K first prediction modes, and the second blending parameter, the foregoing step S102 includes the following. The current-component block is predicted according to the second blending parameter, the first weight derivation mode, and the $K$ first prediction modes, to obtain the prediction value of the current-component block.

In embodiments of the disclosure, there is no limitation on the manner for predicting the current-component block according to the second blending parameter, the first weight derivation mode, and the $K$ first prediction modes to obtain the prediction value of the current-component block. For example, prediction is performed on the current-component block according to the first weight derivation mode and the $K$ first prediction modes, to obtain a prediction value, and then the prediction value of the current-component block is determined according to the second blending parameter and the prediction value.

In some embodiments, the prediction value of the current-component block can be determined through the following steps S102-B1 to S102-B4.

S102-B1, weights of prediction values are determined according to the first weight derivation mode and the second blending parameter.

S102-B2, $K$ prediction values are determined according to the $K$ first prediction modes.

S102-B3, prediction is performed on the current-component block according to the $K$ first prediction modes, to obtain $K$ prediction values.

S102-B4, the $K$ prediction values are weighted according to weights of the $K$ prediction values, to obtain the prediction value of the current-component block.

There is no limitation on the execution order between S102-B1 and S102-B2, that is, S102-B1 can be performed before S102-B2, or can be performed after S102-B2, or can be performed in parallel with S102-B2.

In the above case 2, if the first combination includes the first weight derivation mode, the Kfirst prediction modes, and the second blending parameter, at the decoding end, the weights of the prediction values are determined according to the second blending parameter and the first weight derivation mode. The current-component block is predicted according to the $K$ first prediction modes, so as to obtain $K$ prediction values of the current-component block. Then, the $K$ prediction values of the current-component block are weighted by using the weights of the prediction values, so as to obtain the prediction value of the current-component block.

In embodiments of the disclosure, the manner for determining the weights of the prediction values according to the second blending parameter and the first weight derivation mode includes at least the manners described in the examples below.

Example 1, when deriving the weights of the prediction values by using the first weight derivation mode, multiple intermediate variables need to be determined, and one or some of the multiple intermediate variables can be adjusted by using the second blending parameter. Then the weights of the prediction values are derived by using the adjusted variables.

Example 2, a fourth weight corresponding to the current-component block is determined according to the first weight derivation mode and the current-component block. The fourth weight is adjusted by using the second blending parameter to obtain an adjusted fourth weight. The weights of the prediction values are determined according to the adjusted fourth weight.

For example, according to the first weight derivation mode and the current-component block, the fourth weight corresponding to the current-component block is determined to be *weightIdx*. Then, *weightIdx* is adjusted by using the second blending parameter, to obtain adjusted *weightIdx*. The weights *wVemplateValue* of the prediction values are determined according to the adjusted *weightIdx*.

In an example, *weightIdx* can be adjusted by using the second blending parameter according to the following formula, to obtain the adjusted *weightIdx*:

$$weightIdx = weightIdx * blendingCoeff2$$

*blendingCoeff2* is the second blending parameter.

For another example, according to the first weight derivation mode and the current-component block, the fourth weight corresponding to the current-component block is determined to be *wVemplateValue*. Then, *wVemplateValue* is adjusted by using the second blending parameter, to obtain adjusted *wVemplateValue*. The adjusted *wVemplateValue* is determined as the weights of the prediction values.

In an example, *wVemplateValue* can be adjusted by using the second blending parameter according to the following formula, to obtain the adjusted *wVemplateValue*:

$$wVemplateValue = wVemplateValue * blendingCoeff2$$

According to the foregoing method, at the decoding end, the weights of the prediction values can be determined according to the second blending parameter and the first weight derivation mode.

Then, prediction is performed on the current-component block according to the $K$ first prediction modes, so as to obtain $K$ prediction values; and the $K$ prediction values are weighted according to the weights of the prediction values, so as to obtain the prediction value of the current-component block.

In some embodiments, the above prediction operation is performed on a sample basis, and accordingly, the weights of the prediction values are weights corresponding to a sample. In this case, when predicting the current-component block, a certain sample (i. e. sample *A*) in the current-component block is predicted by applying each of the $K$ first prediction modes, so as to obtain $K$ prediction values of the $K$ first prediction modes for sample *A,* and weights of prediction values of sample *A* are determined according to the first weight derivation mode and a blending parameter. Then, the $K$ prediction values are weighted by using the weights of the prediction values of sample *A,* to obtain a prediction value of sample *A.* The foregoing steps are performed on each sample in the current-component block, and thus a prediction value of each sample in the current-component block can be obtained, where the prediction value of each sample in the current-component block constitutes the prediction value of the current-component block. Taking $K=2$ as an example, sample *A* in the current-component block is predicted by applying a 1st prediction mode, so as to obtain a first prediction value of sample *A*; and sample *A* is predicted by applying a 2nd prediction mode, so as to obtain a second prediction value of sample *A*. The first prediction value and the second prediction value are weighted according to the weights of the prediction values corresponding to sample *A,* so as to obtain the prediction value of sample *A.*

In an example, taking $K=2$ as an example, if a 1st prediction mode and a 2nd prediction mode are both intra prediction modes, prediction is performed by applying a first intra prediction mode, to obtain a first prediction value; and prediction is performed by applying a second intra prediction mode, to obtain a second prediction value. The first prediction value and the second prediction value are weighted according to the weights of the prediction values to obtain the prediction value of the current-component block. For example, sample A is predicted by applying the first intra prediction mode, to obtain a first prediction value of sample *A;* and sample *A* is predicted by applying the second intra prediction mode, to obtain a second prediction value of sample *A*. The first prediction value and the second prediction value are weighted according to weights of prediction values corresponding to sample *A,* to obtain the prediction value of sample *A.*

The above has introduced the process of determining the prediction value of the current-component block corresponding to case 2 in which the first combination includes the first weight derivation mode, the *K* first prediction modes, and one blending parameter.

The following describes the process of determining the prediction value of the current-component block corresponding to case 3.

In case 3, if the first combination includes the first weight derivation mode and the *K* first prediction modes, and the first weight derivation mode includes the third blending parameter, the foregoing S102 includes the following. The current-component block is predicted according to the third blending parameter and the K first prediction modes, to obtain the prediction value of the current-component block.

In embodiments of the disclosure, there is no limitation on the implementation of predicting the current-component block by using the third blending parameter and the *K* first prediction modes to obtain the prediction value of the current-component block. For example, if the first weight derivation mode further includes other parameters, prediction is performed on the current-component block according to other parameters in the first weight derivation mode and the *K* first prediction modes, to obtain a prediction value; and then the prediction value of the current-component block is determined according to the third blending parameter and the prediction value.

In some embodiments, the prediction value of the current-component block can be determined through the following steps S102-C1 to S102-C4.

S102-C1, weights of prediction values are determined according to the first weight derivation mode.

S102-C2, *K* prediction values are determined according to the *K* first prediction modes.

S102-C3, prediction is performed on the current-component block according to the *K* first prediction modes, to obtain *K* prediction values.

S102-C4, the *K* prediction values are weighted according to weights of the K prediction values, to obtain the prediction value of the current-component block.

There is no limitation on the execution order between S102-C1 and S102-C2, that is, S102-C1 can be performed before S102-C2, or can be performed after S102-C2, or can be performed in parallel with S102-C2.

In the above case 3, if the first combination includes the first weight derivation mode and the *K* first prediction modes, at the decoding end, the weights of the prediction values are determined according to the first weight derivation mode. The current-component block is predicted according to the *K* first prediction modes, so as to obtain *K* prediction values of the current-component block. Then, the *K* prediction values of the current-component block are weighted by using the weights of the prediction values, so as to obtain the prediction value of the current-component block.

In embodiments of the disclosure, there is no limitation on the manner for determining the weights of the prediction values according to the first weight derivation mode. For example, an angle index, a distance index, and the third blending parameter are determined according to the first weight derivation mode, and the weights of the prediction values are determined according to the angle index, the distance index, the third blending parameter, and the size of a current-component block.

Then, prediction is performed on the current-component block according to the *K* first prediction modes, so as to obtain *K* prediction values; and the *K* prediction values are weighted according to the weights of the prediction values, so as to obtain the prediction value of the current-component block.

In embodiments of the disclosure, the prediction value of the current-component block can be determined according to any one of the foregoing case 1, case 2, and case 3.

In some embodiments, if a *j*th prediction mode in the *K* first prediction modes is an inter prediction mode, for the foregoing step S102, the prediction value of the current-component block is determined according to the *K* first prediction modes and the first weight derivation mode as follows.

S102-D1, motion information is determined according to the *j*th prediction mode.

S102-D2, a *j*th prediction value is determined according to the motion information.

S102-D3, (*K*-1) prediction values are determined according to prediction modes other than the *j*th prediction mode in the *K* first prediction modes.

S102-D4, weights of the *K* prediction values are determined according to the first weight derivation mode.

S102-D5, the prediction value of the current-component block is determined according to the *j*th prediction value, the (*K*-1) prediction values, and the weights of the prediction values.

For example, *K* = 2, if a 1st prediction mode is an intra prediction mode and a 2nd prediction mode is an inter prediction mode, prediction is performed by applying the intra prediction mode, to obtain a first prediction value; prediction is performed by applying the inter prediction mode, to obtain a second prediction value; and the first prediction value and the second prediction value are weighted according to weights of prediction values to obtain the prediction value of the current-component block. In this example, each sample in the current-component block is predicted by applying the intra prediction mode, so as to obtain a prediction value of each sample in the current-component block, and the prediction value of each sample in the current-component block constitutes a first prediction value of the current-component block. Motion information is determined according to the inter prediction mode, a best matching block of the current-component block is determined according to the motion information, and the best matching block is determined as a second prediction value of the current-component block. With regard to weights of prediction values of each sample in the current-component block, the first prediction value of the current-component block and the second prediction value of the current-component block are weighted on a sample basis, so as to obtain the prediction value of the current-component block. For example, for sample $A$ in the current block, a first prediction value corresponding to sample $A$ in the first prediction value of the current-component block and a second prediction value corresponding to sample A in the second prediction value of the current-component block are weighted according to weights of prediction values of sample A, so as to obtain a prediction value of sample A.

In some embodiments, if $K > 2$, weights of prediction values corresponding to two prediction modes in the $K$ first prediction modes can be determined according to the first weight derivation mode, and a weight(s) of a prediction value(s) corresponding to other prediction mode(s) in the $K$ first prediction modes can be a preset value(s). For example, $K = 3$, a first weight of a prediction value corresponding to the 1st prediction mode and a first weight of a prediction value corresponding to the 2nd prediction mode are derived according to the weight derivation mode, and a weight of a prediction value corresponding to a 3rd prediction mode is a preset value. In some embodiments, if a total prediction-value weight (that is, total weight of prediction values) corresponding to the $K$ first prediction modes is constant, for example, is 8, a weight of a prediction value corresponding to each of the $K$ first prediction modes can be determined according to a preset weight proportion. Assuming that the weight of the prediction value corresponding to the 3rd prediction mode accounts for 1/4 of the total prediction-value weight, it can be determined that the weight of the prediction value of the 3rd prediction mode is 2, and the remaining 3/4 of the total prediction-value weight is allocated to the 1st prediction mode and the 2nd prediction mode. Exemplarily, if the weight of the prediction value corresponding to the 1st prediction mode derived according to the first weight derivation mode is 3, it is determined that the weight of the prediction value corresponding to the 1st prediction mode is (3/4)*3, and the weight of the prediction value corresponding to the 2nd prediction mode is (3/4)*5.

According to the foregoing method, the prediction value of the current-component block is determined. In addition, the bitstream is decoded to obtain a quantization coefficient of the current-component block; inverse quantization and inverse transform are performed on the quantization coefficient of the current-component block to obtain a residual value of the current-component block; and the prediction value of the current-component block and the residual value of the current-component block are added to obtain a reconstructed value of the current-component block.

It can be seen from the above that, the candidate combinations in the candidate combination list in embodiments of the disclosure are sorted in an ascending order of costs, where a candidate combination with lower cost is more likely to be selected. Based on this, in order to further reduce encoding cost, some preceding candidate combinations in the candidate combination list are encoded with short codewords, while some succeeding candidate combinations in the candidate combination list are encoded with long codewords, so that overall encoding efficiency is improved.

In some embodiments, the first index is encoded into the bitstream by means of variable-length coding, such as Golomb coding.

In some embodiments, if the number of candidate combinations in the candidate combination list is less than a fourth preset threshold, the first index is encoded into the bitstream by means of fixed-length coding. That is, in embodiments of the disclosure, if the number of candidate combinations in the candidate combination list is small, all the candidate combinations are encoded by using a preset bit length, and the value of the fourth preset threshold is not limited in embodiments of the disclosure, for example, the fourth preset threshold = 16.

In some embodiments, the second index is encoded into the bitstream by means of variable-length coding, such as Golomb coding.

In some embodiments, if the number of candidate blending parameters in the candidate blending parameter list is less than a preset threshold, the second index is encoded into the bitstream by means of fixed-length coding. That is, in embodiments of the disclosure, if the number of candidate blending parameters in the candidate blending parameter list is small, all the candidate blending parameters are encoded by using a preset bit length.

In some embodiments, a high-level syntax can be used to control enablement of the combination-based encoding technical solution provided in embodiments of the disclosure. For example, at least one flag can be used to indicate whether the combination-based encoding technical solution provided in embodiments of the disclosure is enabled for the current-component block, that is, whether the first combination is enabled for decoding.

In a possible implementation, at least one set flag can be a flag(s) of different levels, which indicates whether the combination-based encoding technical solution provided in embodiments of the disclosure is enabled for a corresponding level.

Optionally, the at least one flag includes at least one of: a sequence-level flag, a picture-level flag, a slice-level flag, a unit-level flag, or a block-level flag.

For example, the at least one flag includes a sequence-level flag, and the sequence-level flag indicates whether the combination-based encoding technical solution provided in embodiments of the disclosure is enabled for a current sequence.

Exemplarily, a syntax element *sps_cgpm_enabled_flag* is added to a parameter set (sequence parameter set), where cgpm can be regarded as an abbreviation of "combined geometric partitioning mode". If the value of *sps_cgpm_enabled_flag* is 1, it indicates that the technical solution of the disclosure is enabled for the current sequence; and if the value of *sps_cgpm_enabled_flag* is 0, it indicates that the technical solution of the disclosure is disabled for the current sequence.

If the technical solution provided in embodiments of the disclosure is applied to an inter mode, since *sps_gpm_enbled_flag* for the inter mode already exists, the technical solution can also be controlled by *sps_gpm_enbled_flag.* Since the solution can also be applied to an intra mode, and *sps_cgpm_enabled_flag* or *sps_gpm_enabled_flag* can also be applied to the intra mode together with the inter mode. Alternatively, different flags can be applied to the intra mode and the inter mode respectively for the sake of better flexibility. For example, *sps_sgpm_enabled_flag* is set, where sgpm can be regarded as an abbreviation of "spatial geometric partitioning mode". *sps_sgpm_enabled_flag* controls whether the solution is enabled for the intra mode, while *sps_cgpm_enabled_flag* or *sps_gpm_enabled_flag* controls whether the solution is enabled for the inter mode.

For another example, the at least one flag includes a picture-level flag, where the picture-level flag indicates whether the technical solution of the disclosure is enabled for a current picture.

Optionally, if the at least one flag includes a picture-level flag, the picture-level flag can be located in a picture header.

For another example, the at least one flag includes a slice-level flag, where the slice-level flag indicates whether the technical solution of the disclosure is enabled for a current slice.

Optionally, if the at least one flag includes a slice-level flag, the slice-level flag can be located in a slice header.

For another example, the at least one flag includes a unit-level flag, where the unit-level flag indicates whether the technical solution of the disclosure is enabled for a current CTU.

For another example, the at least one flag includes a block-level (CU-level) flag, where the block level flag indicates whether the technical solution of the disclosure is enabled for the current-component block.

Taking intra as an example, it is assumed that the block-level flag is *cu_cgpm_flag*. If the value of *cu_cgpm_flag* is 1, it indicates that the technical solution of the disclosure is enabled for the current-component block. If the value of *cu_cgpm_flag* is 0, it indicates that the technical solution of the disclosure is disabled for the current-component block. Currently, GPM in VVC is applied to an inter merge mode. The block-level flag is obtained through derivation, and can also be directly represented by a CU-level flag in the future, which is not limited herein.

In this way, at the decoding end, the bitstream is decoded to obtain the at least one flag, and whether the technical solution of the disclosure is enabled for the current-component block is determined according to the at least one flag. If it is determined, according to the at least one flag, that the technical solution of the disclosure is disabled for the current-component block, the method of embodiments of the disclosure is skipped. If it is determined, according to the at least one flag, that the technical solution of the disclosure is enabled for the current-component block, the method of embodiments of the disclosure is performed, that is, the bitstream is decoded to obtain the first index.

In some embodiments, if the at least one flag includes a block-level flag, at the decoding end, if it is determined that the size of the current-component block satisfies a preset condition, the bitstream is decoded to determine the block-level flag. In embodiments of the disclosure, no limitation is imposed on the preset condition above.

In some embodiments, if it is determined that a first technology is not applied for decoding of the current-component block, the bitstream is decoded to obtain the first index. That is, in embodiments of the disclosure, considering the trade-off between performance and complexity, the combination-based encoding technology provided in embodiments of the disclosure can be set not to be applied together with the first technology in the same block, where the first technology can be MRL, intra sub-partitions (ISP), etc. That is, if it is determined, by parsing the bitstream, that the combination-based encoding technology provided in the disclosure is applied to the current-component block, a flag of MRL (for example, *intra_luma_ref_idx* in VVC) and/or a flag of ISP (for example, *intra_subpartitions_mode_flag* in VVC) does not need to be parsed, and the value thereof is 0 by default. Alternatively, if the flag of MRL (for example, *intra_luma_ref_idx* in VVC) and/or the flag of ISP (for example, *intra_subpartitions_mode_flag* in VVC) is 1, the at least one flag in embodiments of the disclosure does not need to be parsed, for example, skip parsing the block-level flag *cu_cgpm_enabled_flag,* and the block-level flag is 0 by default.

In the video decoding method provided in embodiments of the disclosure, the bitstream is decoded to determine the first combination, where the first combination includes the first weight derivation mode and the *K* first prediction modes, and *K* is a positive integer and *K* > 1; and the current-component block is predicted according to the first weight derivation mode and the *K* first prediction modes, to obtain the prediction value of the current-component block. That is, in the disclosure, the first weight derivation mode and the *K* first prediction modes are taken as a combination, so that the first weight derivation mode and the *K* first prediction modes are indicated in the form of combination. In this way, there is no need to transmit separately syntax corresponding to the *K* first prediction modes and syntax corresponding to the first weight derivation mode in the bitstream, which can save codewords, thereby improving encoding efficiency. In addition, in embodiments of the disclosure, even if the current-component block corresponds to multiple first-component CUs and prediction modes for the multiple first-component CUs are not completely the same, the first weight derivation mode and the K first prediction modes in the first combination can still be determined accurately, thereby realizing accurate prediction of the current-component block by using the first weight derivation mode and the K first prediction modes. In some embodiments, weights of prediction values are adjusted by using the first blending parameter or the second blending parameter in embodiments of the disclosure, and prediction is performed by using the adjusted weights of the prediction values, thereby improving accuracy of prediction.

In the foregoing elaborations, the decoding end is taken as an example to introduce the prediction method in the disclosure, and the following will take an encoding end as an example for illustration.

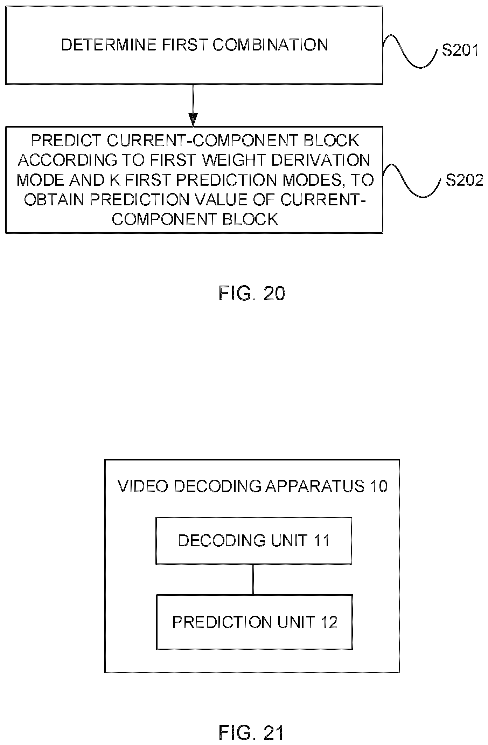

FIG. 20 is a schematic flowchart of a prediction method provided in an embodiment of the disclosure. The embodiment of the disclosure is applied to the video encoder illustrated in FIG. 1 and FIG. 2. As illustrated in FIG. 20, the method according to the embodiment of the disclosure includes the following.

S201, a first combination is determined.

The first combination includes a first weight derivation mode and K first prediction modes.

Based on the above illustration, one weight derivation mode and K prediction modes can be applied together to the current-component block as a combination. In order to save codewords and reduce encoding costs, in embodiments of the disclosure, the weight derivation mode and the K prediction modes corresponding to the current-component block are taken as a combination, that is, the first combination, and the first combination is indicated by a first index. Compared with indicating separately the weight derivation mode and the K prediction modes, in embodiments of the disclosure, fewer codewords are required, thereby reducing encoding cost.

Specifically, at an encoding end, the first combination corresponding to the current-component block is determined, where the first combination includes one weight derivation mode and K prediction modes. For ease of illustration, the weight derivation mode in the first combination is marked as the first weight derivation mode, and the K prediction modes in the first combination are determined as K first prediction modes. At the encoding end, prediction is performed on the current-component block by using the first weight derivation mode and the K first prediction modes, so as to obtain a prediction value of the current-component block. For example, weights are derived by using the first weight derivation mode; prediction is performed on the current-component block by using the K prediction modes, so as to obtain K prediction values; and the K prediction values are weighted according to the weights derived, so as to obtain the prediction value of the current-component block.

In some embodiments, at the encoding end, before determining the first combination, it is necessary to determine whether K different prediction modes are applied to the current-component block for weighted prediction. If it is determined at the encoding end that K different prediction modes are applied to the current-component block for weighted prediction, the step S201 is performed, that is, the first combination is determined. If it is determined at the encoding end that K different prediction modes are not applied to the current-component block for weighted prediction, the step S201 is skipped.

In a possible implementation, at the encoding end, whether K different prediction modes are applied to the current-component block for weighted prediction can be determined by determining a prediction-mode parameter of the current-component block.

Optionally, in embodiments of the disclosure, the prediction-mode parameter can indicate whether a GPM mode or an AWP mode can be applied to the current-component block, that is, indicate whether K different prediction modes can be applied for prediction of the current-component block.

It can be understood that, in embodiments of the disclosure, the prediction-mode parameter can be understood as a flag indicating whether the GPM mode or the AWP mode is applied. Specifically, an encoder can use a variable as the prediction-mode parameter, so that the prediction-mode parameter can be set by setting the value of the variable. Exemplarily, in the disclosure, if the GPM mode or the AWP mode is applied to the current-component block, the encoder can set the value of the prediction-mode parameter to indicate that the GPM mode or the AWP mode is applied to the current-component block, and specifically, the encoder can set the value of the variable to 1. Exemplarily, in the disclosure, if the GPM mode or the AWP mode is not applied to the current-component block, the encoder can set the value of the prediction-mode parameter to indicate that the GPM mode or the AWP mode is not applied to the current-component block, and specifically, the encoder can set the value of the variable to 0. Further, in embodiments of the disclosure, after setting the prediction-mode parameter, the encoder can signal the prediction-mode parameter into a bitstream and transmit the bitstream to a decoder, so that the decoder can obtain the prediction-mode parameter after parsing the bitstream.

In some embodiments, as illustrated in Table 5, in embodiments of the disclosure, a condition regarding whether the GPM mode or the AWP mode is applied to the current-component block can also be set, i. e. if the current-component block is determined to satisfy a preset condition, it is determined that K prediction modes are applied to the current-component block for weighted prediction, and then the first combination is determined.

Exemplarily, when applying the GPM mode or the AWP mode, restriction can be imposed on the size of the current-component block.

It can be understood that, in the prediction method provided in embodiments of the disclosure, K prediction values

73

need to be generated by applying $K$ different prediction modes, and then are weighted according to weights to obtain the prediction value of the current-component block. To this end, in order to reduce complexity and take into consideration the trade-off between compression performance and complexity, in embodiments of the disclosure, there can be a restriction that the GPM mode or the AWP mode is not applied to a block of a certain size. Therefore, in the disclosure, at the encoding end, a size parameter of the current-component block can be firstly determined, and then whether the GPM mode or the AWP mode is applied to the current-component block can be determined according to the size parameter.

In embodiments of the disclosure, the size parameter of the current-component block can include the height and the width of the current-component block, and therefore, the encoder can determine, according to the height and the width of the current-component block, whether the GPM mode or the AWP mode is applied to the current-component block.

Exemplarily, in the disclosure, if the width is greater than a first threshold and the height is greater than a second threshold, it is determined that the GPM mode or the AWP mode can be applied to the current-component block. As can be seen, one possible restriction is that the GPM mode or the AWP mode can be applied only if the width of the block is greater than (or greater than or equal to) the first threshold and the height of the block is greater than (or greater than or equal to) the second threshold. The values of the first threshold and the second threshold can be 4, 8, 16, 32, 128, 256, etc., and the first threshold can be equal to the second threshold.

Exemplarily, in the disclosure, if the width is less than a third threshold and the height is greater than a fourth threshold, it is determined that the GPM mode or the AWP mode can be applied to the current-component block. As can be seen, one possible restriction is that the GPM mode or the AWP mode can be applied only if the width of the block is less than (or less than or equal to) the third threshold and the height of the block is greater than (or greater than or equal to) the fourth threshold. The values of the third threshold and the fourth threshold can be 4, 8, 16, 32, 128, 256, etc., and the third threshold can be equal to the fourth threshold.

Further, in embodiments of the disclosure, the size of the block to which the GPM mode or the AWP mode can be applied can also be restricted by restricting a sample parameter.

Exemplarily, in the disclosure, the encoder can firstly determine a sample parameter of the current-component block, and then determine, according to the sample parameter and a fifth threshold, whether the GPM mode or the AWP mode can be applied to the current-component block. As can be seen, one possible restriction is that the GPM mode or the AWP mode can be applied only if the number of samples in the block is greater than (or greater than or equal to) the fifth threshold, where the value of the fifth threshold can be 4, 8, 16, 32, 128, 256, 1024, etc.

That is, in the disclosure, the GPM mode or the AWP mode can be applied to the current-component block only if the size parameter of the current-component block satisfies the size requirement.

Exemplarily, in the disclosure, a picture-level flag can be used to determine whether the technical solution of the disclosure is applied to a current picture to-be-encoded. For example, it can be configured that the technical solution of the disclosure is applied to an intra frame (such as I frame) but is not applied to an inter frame (such as B frame or P frame). Alternatively, it can be configured that the technical solution of the disclosure is applied to the inter frame but is not applied to the intra frame. Alternatively, it can be configured that the technical solution of the disclosure is applied to some inter frames but is not applied to other inter frames. Since intra prediction can be applied to an inter frame, the technical solution of the disclosure may be applied to an inter frame.

In some embodiments, a flag below a picture level but above a CU level (such as tile, slice, patch, LCU, etc.) can be used to determine whether the technical solutions of the disclosure are applied to that region.

In embodiments of the disclosure, the first combination includes the first weight derivation mode and the $K$ first prediction modes.

The first weight derivation mode is used to determine the weights used for the current-component block. Specifically, the first weight derivation mode can be a mode for deriving weights. For a block of a given length and width, each weight derivation mode can be used to derive one weight matrix. For blocks of the same size, weight matrices derived from different weight derivation modes can be different.

Exemplarily, in the disclosure, there are 56 weight derivation modes for AWP and 64 weight derivation modes for GPM.

Examples of the $K$ different first prediction modes in the first combination include the following.

Example 1, the $K$ different first prediction modes are intra prediction modes, for example, the current-component block is an intra-coding block, and screen content coding is not applicable.

Example 2, the $K$ different first prediction modes are inter prediction modes, for example, the current-component block is an inter-coding block.

Example 3, the $K$ different first prediction modes include at least one intra prediction mode, and at least one inter prediction mode.

Example 4, the $K$ different first prediction modes include at least one intra prediction mode and at least one non-intra and non-inter prediction mode, such as an IBC prediction mode or a palette prediction mode.

Example 5, the $K$ different first prediction modes include at least one inter prediction mode and at least one non-intra and non-inter prediction mode, such as an IBC prediction mode or a palette prediction mode.

Example 6, none of the *K* different first prediction modes is an intra prediction mode or an inter prediction mode. For example, the *K* different first prediction modes include an IBC prediction mode, a palette prediction mode, and the like.

It should be noted that, the types of the *K* different first prediction modes in the first combination are not limited in embodiments of the disclosure.

In embodiments of the disclosure, in one case, the first combination includes the first weight derivation mode and the *K* first prediction modes. In another case, the first combination includes the first weight derivation mode, the *K* first prediction modes, and a second blending parameter, where the second blending parameter is used for adjusting weights determined according to the first weight derivation mode to obtain adjusted weights. In this way, *K* prediction values can be determined by applying the *K* first prediction modes, and the K prediction values are weighted by using the adjusted weights, so as to obtain the prediction value of the current-component block.

The following describes the process of determining the first combination with regard to different contents in the first combination.

Case 1: if the first combination includes the first weight derivation mode and the K first prediction modes, the manner for determining the first combination at the encoding end includes, but is not limited to, the following.

Manner 1: the first combination is a preset combination.

Manner 2: a list is determined at the encoding end, where the list includes multiple candidate combinations, and therefore, the list is also referred to as a candidate combination list, and the first combination is determined from the candidate combination list. In this case, S201 includes the following steps.

S201-A, a candidate combination list is determined.

S201-B, the first combination is determined from the candidate combination list.

The candidate combination list includes at least one candidate combination, and any one of the at least one candidate combination includes one weight derivation mode and K prediction modes.

Exemplarily, the candidate combination list is illustrated in the foregoing Table 5.

As illustrated in Table 5, the candidate combination list includes at least one candidate combination, and any two candidate combinations in the at least one candidate combination are not completely the same, that is, any two candidate combinations differ in at least one of the weight derivation mode or the *K* prediction modes. For example, candidate combination 1 and candidate combination 2 have different weight derivation modes. Alternatively, candidate combination 1 and candidate combination 2 have the same weight derivation mode, but differ in at least one of the *K* prediction modes. Alternatively, candidate combination 1 and candidate combination 2 have different weight derivation modes, and also differ in at least one of the *K* prediction modes.

Exemplarily, in the foregoing Table 5, the order of a candidate combination in the candidate combination list is taken as an index of the candidate combination, and optionally, the index of the candidate combination in the candidate combination list can also be indicated in another manner, which is not limited in embodiments of the disclosure.

In the above manner 2, at the encoding end, one candidate combination in the candidate combination list is determined as the first combination.

For example, at the encoding end, a 1st candidate combination in the candidate combination list is determined as the first combination.

In the above manner 2, the same candidate combination list can be determined at both the encoding end and a decoding end. For example, at both the encoding end and the decoding end, a list including *N* candidate combinations is determined, where each candidate combination includes one weight derivation mode and *K* prediction modes. However, at the encoding end, only one candidate combination finally chosen, for example, the first combination, needs to be signalled into a bitstream. At the decoding end, the first combination finally chosen at the encoding end is parsed. Specifically, at the decoding end, the bitstream is decoded to obtain the first index, and the first combination is determined according to the first index from the candidate combination list determined at the decoding end.

In embodiments of the disclosure, there is no limitation on the manner for determining the candidate combination list at the encoding end.

In some embodiments, the candidate combination list already exists. At the encoding end, if it is determined that *K* prediction modes can be applied to the current-component block for weighted prediction, the candidate combination list is obtained.

In some embodiments, the candidate combination list is constructed at the encoding end. In this case, in some embodiments, the constructed candidate combination list can be transmitted to the decoding end from the encoding end. In some embodiments, the constructed candidate combination list is uploaded to the cloud from the encoding end, and at the decoding end, the candidate combination list is read from the cloud.

The following describes the process of constructing the candidate combination list at the encoding end.

In embodiments of the disclosure, there is no limitation on the manner for constructing the candidate combination list at the encoding end.

In some embodiments, at the encoding end, the candidate combination list is constructed through the following steps S201-A1.

S201-A1, a first-component block corresponding to the current-component block is determined.

S201-A2, the candidate combination list is constructed based on the first-component block.

As illustrated in FIG. 17F, it is assumed that the current-component block is a gray component block on the right, the first-component block located in the same space as the gray component block is a gray area on the left in FIG. 17F, and the gray area on the left includes ten first-component CUs.

As can be seen from FIG. 17F, the first-component block located in the same space as the current-component block refers to a first-component block located in the same spatial location and having the same spatial size as the current-component block. As an example, the current-component block is a chroma block and the first-component block is a luma block. Due to different video formats, the chroma block may have a different size than the luma block. For example, for a video of YUV4:4:4 format, the chroma block has the same size as the luma block, and for a video of YUV4:2:0 format, the size of the luma block is four times as large as the size of the chroma block.

Since the chroma block may have a different size than the luma block, the chroma block and the luma block of the same spatial location and the same spatial size may not have the same coordinate. For example, in a video format YUV4:2:0, the chroma block is a block determined by a top-left coordinate of (x0, y0), a width of *width,* and a height of *height,* and accordingly, the luma block in the same space can be a block determined by a top-left coordinate of (x0*2, y0*2), a width of *width*2,* and a height of *height*2. For another example, for a video format YUV4:4:4, the chroma block is a block determined by a top-left coordinate of (x0, y0), a width of *width,* and a height of *height,* and accordingly, the luma block in the same space can be a block determined by a top-left coordinate of (x0, y0), a width of *width,* and a height of *height.*

In addition, in some embodiments, since block partitioning is performed separately for the chroma block and the luma block, a luma block corresponding to a chroma coding block may not coincide with a coding block obtained by partitioning the luma component, but may be a luma region corresponding to the chroma coding block in terms of spatial location and spatial size. That is, in embodiments of the disclosure, the first-component block corresponding to the current-component block can be understood as a first-component block having the same spatial coverage as the current-component block.

During encoding, the luma component is usually encoded firstly, and then the chroma component is encoded. Therefore, in embodiments of the disclosure, when encoding the current-component block, a bitstream is firstly encoded to encode the first-component block corresponding to the current-component block, so as to obtain a reconstructed value of the first-component block. Then, the first-component block is used as a template of the current-component block to encode the current-component block.

Since there is a correlation between the first-component block corresponding to the current-component block and the current-component block, in embodiments of the disclosure, the candidate combination list of the current-component block is constructed based on the first-component block.

For example, for each combination, the first-component block is predicted by using the combination to obtain a prediction value of the first-component block corresponding to the combination, and the candidate combination list is constructed according to a prediction value of the first-component block corresponding to each combination. For example, for each combination, a weight derivation mode in the combination is used to derive weights for the first-component block; the first-component block is predicted by applying *K* prediction modes in the combination, so as to obtain *K* prediction values of the first-component block; and the *K* prediction values of the first-component block are weighted according to the derived weights for the first-component block, so as to obtain a prediction value of the first-component block corresponding to the combination. Finally, the candidate combination list is constructed according to a prediction value of the first-component block corresponding to each combination.

It should be noted that, the weights derived according to the weight derivation mode can be understood as deriving weights corresponding to each sample in the first-component block, or can be understood as deriving a weight matrix corresponding to the first-component block. When determining the prediction value of the first-component block based on the weights, for each sample in the first-component block, *K* prediction values corresponding to the sample can be determined, and a prediction value corresponding to the sample is determined according to the *K* prediction values corresponding to the sample and the weights, where a prediction value corresponding to each sample in the first-component block constitutes the prediction value of the first-component block. Alternatively, determination of the prediction value of the first-component block based on the weights can also be performed on a block basis. For example, prediction values of the first-component block are determined, and the *K* prediction values of the first-component block are weighted according to the weight matrix for the first-component block, so as to obtain the prediction value of the first-component block.

In some embodiments, S201-A2 includes steps of S201-A21 to S201-A23.

S201-A21, *R* second combinations are determined, where any one of the *R* second combinations includes one weight derivation mode and *K* prediction modes, and *R* is a positive integer and *R* > 1.

S201-A22, for any one of *R* second combinations, determine a cost corresponding to the second combination when predicting the first-component block by using the second combination.

S201-A23, the candidate combination list is constructed according to a cost corresponding to each of the *R* second combinations.

In embodiments, at the encoding end, when constructing the candidate combination list, $R$ second combinations are firstly determined. There is no limitation on the quantity of the $R$ second combinations in the disclosure, which can be, for example, 8, 16, 32, and the like. Each of the $R$ second combinations includes one weight derivation mode and $K$ prediction modes, and weight derivation modes and $K$ prediction modes in any two of the $R$ second combinations are not completely the same. Then, for each of the $R$ second combinations, the first-component block corresponding to the current-component block is predicted by using a weight derivation mode and $K$ prediction modes in the second combination, so as to obtain a prediction value of the first-component block corresponding to the second combination. Finally, the candidate combination list is constructed according to a prediction value the first-component block corresponding to each of the $R$ second combinations.

The manner for constructing the candidate combination list according to the prediction value of the first-component block corresponding to each of the $R$ second combinations in S201-A23 includes, but is not limited to, the following manners.

Manner 1: the candidate combination list is constructed according to the prediction value of the first-component block corresponding to each of the $R$ second combinations.

For example, the $R$ second combinations are sorted according to the prediction value of the first-component block corresponding to each of the $R$ second combinations, and the sorted $R$ second combinations are determined as the candidate combination list. In this case, the candidate combination list includes $R$ candidate combinations.

For another example, the $R$ second combinations are sorted according to the prediction value of the first-component block corresponding to each of the $R$ second combinations, and $N$ second combinations are selected from the sorted $R$ second combinations, to construct a candidate combination list. In this case, the candidate combination list includes $N$ candidate combinations.

Manner 2: the foregoing S201-A23 include the following steps.

S201-A23-1, a cost corresponding to the second combination is determined according to the prediction value of the first-component block corresponding to the second combination and the reconstructed value of the first-component block.

S201-A23-2, the candidate combination list is constructed according to a cost corresponding to each of the $R$ second combinations.

In embodiments, at the encoding end, when constructing the candidate combination list, $R$ second combinations are firstly determined. There is no limitation on the quantity of the $R$ second combinations in the disclosure, which can be, for example, 8, 16, 32, and the like. Each of the $R$ second combinations includes one weight derivation mode and $K$ prediction modes. Then, for each of the $R$ second combinations, determine a cost corresponding to the second combination when predicting the first-component block by using the second combination. Finally, the candidate combination list is constructed according to the cost corresponding to each of the $R$ second combinations.

Since the first-component block corresponding to the current-component block is a reconstructed region, at the encoding end, the reconstructed value of the first-component block can be obtained. In this way, for each of the $R$ second combinations, a prediction distortion cost corresponding to the second combination can be determined according to a prediction value of the first-component block corresponding to the second combination and the reconstructed value of the first-component block. The manner for determining the cost corresponding to the second combination includes, but is not limited to, SAD, SATD, and SSE. Then, the candidate combination list is constructed according to the cost corresponding to each of the $R$ second combinations.

In embodiments of the disclosure, for S201-A22, there are at least two manners for determining the cost corresponding to the second combination when predicting the first-component block by using the second combination.

In a first manner, weights for the first-component block are determined according to the weight derivation mode in the second combination; the first-component block is predicted according to the $K$ prediction modes in the second combination to obtain $K$ prediction values of the first-component block; the $K$ prediction values of the first-component block are weighted according to the weights for the first-component block to obtain a prediction value of the first-component block corresponding to the second combination; and the cost corresponding to the second combination is determined according to the prediction value of the first-component block corresponding to the second combination and the reconstructed value of the first-component block.

In a second manner, prediction values of the first-component block corresponding to the $K$ prediction modes in the second combination are determined according to the weight derivation mode in the second combination; costs corresponding to the $K$ prediction modes in the second combination are determined according to the prediction values of the first-component block corresponding to the $K$ prediction modes in the second combination and the reconstructed value of the first-component block; and the cost corresponding to the second combination is determined according to the costs corresponding to the $K$ prediction modes in the second combination.

According to the foregoing method, the cost corresponding to each of the $R$ second combinations can be determined, and then proceed to S201-A23-2.

The manner for constructing the candidate combination list according to the cost corresponding to each of the *R* second combinations in S201-A23-2 includes, but is not limited to, the following several examples.

Example 1, the *R* second combinations are sorted according to the cost corresponding to each of the *R* second combinations, and the sorted *R* second combinations are determined as the candidate combination list.

The candidate combination list generated in Example 1 includes *R* candidate combinations.

Optionally, the *R* candidate combinations in the candidate combination list are sorted in an ascending order of costs, that is, costs corresponding to the *R* candidate combinations in the candidate combination list increase sequentially in order of sorting.

The *R* second combinations can be sorted according to the cost corresponding to each of the *R* second combinations as follows. The *R* second combinations are sorted in an ascending order of costs.

Example 2, *N* second combinations are selected from the *R* second combinations according to the cost corresponding to the second combination, and a list consisting of the *N* second combinations is determined as the candidate combination list.

Optionally, the *N* second combinations are first *N* second combinations with the minimum cost among the *R* second combinations. For example, according to the cost corresponding to each of the *R* second combinations, *N* second combinations with the minimum cost are selected from the *R* second combinations to construct the candidate combination list. In this case, the candidate combination list includes *N* candidate combinations.

Optionally, the *N* candidate combinations in the candidate combination list are sorted in an ascending order of costs, that is, costs corresponding to the *N* candidate combinations in the candidate combination list increase sequentially in order of sorting.

The process of determining the *R* second combinations in S201-A21 is described below.

In some embodiments, the *R* second combinations are pre-set. In this way, for each of the *R* second preset combinations, the first-component block is predicted by using the second combination to obtain a prediction value of the first-component block corresponding to the second combination, and then a cost corresponding to the second combination is determined according to the prediction value of the first-component block corresponding to the second combination and the reconstructed value of the first-component block. The *R* second combinations are sorted according to a cost corresponding to each second combination, and the sorted *R* second combinations are taken as the candidate combination list, or *N* second combinations with the minimum cost are selected from the sorted *R* second combinations, to construct the candidate combination list.

In some embodiments, S201-A21 includes the following steps.

S201-A21-1, *P* weight derivation modes and *Q* prediction modes are determined, where P is a positive integer, and *Q* is a positive integer and $Q \geq K$.

S201-A21-2, the *R* second combinations are constructed according to the *P* weight derivation modes and the *Q* prediction modes, where any one of the *R* second combinations includes one of the *P* weight derivation modes and *K* prediction modes in the *Q* prediction modes, *P* is a positive integer, and *Q* is a positive integer and $Q \geq K$.

In embodiments, at the encoding end, the *P* weight derivation modes and the *Q* prediction modes are firstly determined, and then the *R* second combinations are constructed according to the *P* weight derivation modes and the *Q* prediction modes determined.

There is no limitation on the quantities of the *P* weight derivation modes and the Q prediction modes in embodiments of the disclosure.

In a possible implementation, it is assumed that the current-component block is an intra-coding block, and there are 64 possible weight derivation modes and 67 possible intra prediction modes for GPM, which can be found from the VVC standard, but does not mean that there are only 64 possible types of weights for GPM or does not limit the specific types of the 64 possible types of weights for GPM. It should be noted that, using of 64 types for GPM in VVC is with respect to the trade-off between improving prediction effect and reducing overhead in a bitstream. However, in the disclosure, encoding of the weight derivation mode is not implemented based on a fixed logic, and theoretically, more types of weights are applicable and can be applied more flexibly in the disclosure. Likewise, it does not mean that there are only 67 intra prediction modes for GPM or does not limit the specific types of the 67 intra prediction modes for GPM, and theoretically, all possible intra prediction modes can be applied in GPM. For example, if an intra angular prediction mode is further detailed and there are more intra angular prediction modes introduced, then more intra angular prediction modes can be applied in GPM, for example, an MIP mode in VVC can also be applied in the disclosure. However, considering that there are multiple sub-modes of MIP, MIP is not elaborated in embodiments for ease of understanding. In addition, there are some wide-angle modes, which can also be applied in the disclosure, but will not be elaborated in embodiments.

In some embodiments, in order to reduce the amount of data and accelerate construction of the candidate combination list, not all the prediction modes are tried, and instead, only some of the prediction modes can be selected for trial.

In this case, determining of the Q prediction modes in S201-A21-1 includes, but is not limited to, the following manners.

Manner 1: the $Q$ prediction modes are preset prediction modes.

Manner 2: at least one of a candidate prediction mode list of the current-component block, alternative prediction mode lists corresponding to the $K$ first prediction modes, a prediction mode(s) corresponding to the weight derivation mode, or a preset mode is determined. The $Q$ prediction modes are determined according to at least one of the candidate prediction mode list, the alternative prediction mode lists corresponding to the $K$ first prediction modes, the prediction mode corresponding to the weight derivation mode, or the preset mode.

The candidate prediction mode list includes multiple candidate prediction modes, and an alternative prediction mode list corresponding to any one of the $K$ first prediction modes includes at least one alternative prediction mode.

Determining the alternative prediction mode lists corresponding to the $K$ first prediction modes can be understood as follows. An alternative prediction mode list is determined for each of the $K$ first prediction modes. Then, when constructing the second combination, a certain prediction mode in the second combination is selected from the alternative prediction mode list corresponding to the prediction mode. For example, $K$=2, and the $K$ first prediction modes include a 1st prediction mode and a 2nd prediction mode. At the encoding end, alternative prediction mode list 1 is constructed for the 1st prediction mode, and alternative prediction mode list 2 is constructed for the 2nd prediction mode. In this way, when constructing different second combinations, one alternative prediction mode is selected from alternative prediction mode list 1 and used as the 1st prediction mode, and one alternative prediction mode is selected from alternative prediction mode list 2 and used as the 2nd prediction mode. As such, one weight derivation mode, and the 1st prediction mode and the 2nd prediction mode selected constitute one second combination.

In embodiments of the disclosure, there is no limitation on the manner for determining the alternative prediction mode list corresponding to each of the $K$ first prediction modes.

In a possible implementation, for any one of the $K$ first prediction modes, at least one of a candidate prediction mode list corresponding to the prediction mode or the prediction mode corresponding to the weight derivation mode is determined, and an alternative prediction mode list corresponding to the prediction mode is determined according to at least one of the candidate prediction mode list or the prediction mode corresponding to the weight derivation mode.

In embodiments of the disclosure, the process of determining the candidate prediction mode list corresponding to one of the $K$ first prediction modes is similar to the process of determining the candidate prediction mode list corresponding to the current-component block, and reference can be made to the following elaborations.

In some embodiments, the candidate prediction mode list includes one or more inter prediction modes, for example, includes at least one of skip, merge, a common inter prediction mode, unidirectional prediction, bidirectional prediction, multi-hypothesis prediction, or the like.

In some embodiments, the candidate prediction mode list includes one or more intra prediction modes, for example, includes at least one of a DC mode, a PLANAR mode, an angular mode, or the like. Optionally, the candidate prediction mode list includes at least one intra prediction mode in an MPM list.

In some embodiments, the foregoing candidate prediction mode list can further include modes such as IBC and palette.

There is no limitation on the types and the quantity of prediction modes in the candidate prediction mode list in the disclosure.

In some embodiments, the candidate prediction mode list is determined in at least one of the following manners.

Manner 1: the candidate prediction mode list includes a preset mode(s).

Manner 2: the candidate prediction mode list includes a mode(s) in an MPM list.

Manner 3: the candidate prediction mode list includes a set of candidate prediction modes determined according to some rules such as equidistant filtering.

Manner 4: the candidate prediction mode list is determined according to a prediction mode applied to at least one neighbouring block of the current-component block.

Manner 5: a picture type corresponding to the current-component block is determined, and the candidate prediction mode list is determined according to the picture type corresponding to the current-component block. For example, if the picture type corresponding to the current-component block is a B type or a P type, at least one of the DC, the horizontal mode, the vertical mode, or some angular modes can be added to a first candidate prediction mode list. For another example, if the picture type corresponding to the current-component block is an I type, at least one of the DC, the horizontal mode, or the vertical mode can be added to the candidate prediction mode list.

Manner 6: at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been encoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In some embodiments, in manner 6, at least one of the first-component block, the second-component block, or the third-component block which has been encoded and neighbours the current-component block includes at least one of a first-component block, a second-component block, or a third-component block corresponding to an encoded region at the top and/or the left of the current-component block. For example, as illustrated in FIG. 18, prediction modes applied to blocks 0 to 5 are selected as the third prediction mode, and/or a prediction mode applied to at least one block represented by an ellipsis between block 2 and block 3 is selected as the third prediction mode, and/or a prediction mode applied to at least one block represented by an ellipsis between block 1 and block 5 is selected as the third prediction mode. In an example, in embodiments, the first-component block can be a luma CU, and the second-component block and/or the third-component block can be a chroma CU. In this case, a prediction mode applied to an encoded luma CU and/or encoded chroma CU neighbouring the current-component block is determined as the third prediction mode.

In some embodiments, in the foregoing manner 6, the internal preset region of the current-component block can be any region inside the current-component block. The first-component block corresponding to the internal region of the current-component block can be understood as a first-component block located in the same space as the internal region of the current-component block. Optionally, the first-component block can be a luma CU. For example, according to a coordinate of a top-left vertex of the internal region of the current-component block, a luma CU corresponding to the coordinate is obtained through mapping, and then a prediction mode applied to the luma CU is determined as the fourth prediction mode.

In some embodiments, in the foregoing manner 6, the manner for determining the fifth prediction mode related to the first-component block corresponding to the current-component block at least includes the following several examples.

Example 1, since the first-component block corresponding to the current-component block has been encoded, a prediction mode applied to the first-component block is determined as the fifth prediction mode. In an example, the first-component block may include multiple first-component CUs, and prediction modes applied to the multiple first-component CUs may be the same or different. In embodiments of the disclosure, a prediction mode applied to at least one of the multiple first-component CUs in the first-component block can be determined as the fifth prediction mode.

Example 2, the fifth prediction mode is determined according to a texture of the first-component block corresponding to the current-component block. Exemplarily, a texture direction of the first-component block is determined, and the fifth prediction mode is determined according to the texture direction.

There is no limitation on the manner for determining the texture direction of the first-component block corresponding to the current-component block in embodiments of the disclosure.

In a possible implementation, texture directions of some samples in the first-component block corresponding to the current-component block are determined, and the texture direction of the first-component block is determined according to the texture directions of these samples. In some embodiments, for ease of illustration, a sample whose texture direction needs to be determined in the first-component block is called a texture sample. These texture samples can be default samples. For example, at both the encoding end and the decoding end, some samples in the first-component block are used as texture samples by default, and texture directions of the texture samples are calculated. In some embodiments, the texture sample is selected in a preset manner. For example, at the encoding end, multiple texture samples are selected from the first-component block in a preset manner for texture sample selection.

For each of the multiple texture samples, a gradient of the texture sample is determined, for example, a horizontal gradient and a vertical gradient of the texture sample are determined, and then a texture direction of the texture sample is determined according to the horizontal gradient and the vertical gradient of the texture sample.

Then, the texture direction of the first-component block is determined according to the texture direction of each texture sample.

Exemplarily, one or more of texture directions corresponding to the multiple texture samples are determined as the texture direction of the first-component block.

For example, any one or more of texture directions corresponding to the multiple texture samples are determined as the texture direction of the first-component block.

For another example, the most frequently appeared one or more of the texture directions corresponding to the multiple texture samples are determined as the texture direction of the first-component block.

After the texture direction of the first-component block corresponding to the current-component block is determined, the fifth prediction mode is determined according to the texture direction.

In an example, a prediction mode having a prediction direction parallel to the texture direction is determined as the fifth prediction mode.

In an example, a prediction mode having a prediction direction perpendicular to the texture direction is determined as the fifth prediction mode.

In an example, a prediction mode having a prediction direction parallel to the texture direction and a prediction mode having a prediction direction perpendicular to the texture direction are determined as the fifth prediction mode.

It should be noted that, the prediction mode having a prediction direction parallel to the texture direction includes a prediction mode having a prediction direction parallel to the texture direction and/or a prediction mode having a prediction direction approximately parallel to the texture direction. The prediction mode having a prediction direction perpendicular to the texture direction includes a prediction mode having a prediction direction perpendicular to the texture direction and/or a prediction mode having a prediction direction approximately perpendicular to the texture direction.

It should be noted that, as the manner for determining the candidate prediction mode list, the foregoing manner 1 to manner 6 can be used separately or can be combined arbitrarily.

In some embodiments, the candidate prediction mode list includes at least one of a candidate intra prediction mode list or a candidate inter prediction mode list. The candidate intra prediction mode list includes at least one candidate intra prediction mode, and the candidate inter prediction mode list includes at least one candidate inter prediction mode.

After the candidate prediction mode list of the current-component block is obtained in the foregoing manner, Q prediction modes are determined according to the candidate prediction mode list, for example, all or some of candidate prediction modes in the candidate prediction mode list are determined as all or some of the Q prediction modes.

The following will elaborate a process of determining the prediction mode corresponding to the weight derivation mode.

In embodiments of the disclosure, the prediction mode corresponding to the weight derivation mode is a generic term, which can be, for example, a prediction mode(s) corresponding to one preset weight derivation mode, or a prediction mode(s) corresponding to several preset weight derivation modes. In some embodiments, the prediction mode corresponding to the weight derivation mode can also be understood as a prediction mode list corresponding to the weight derivation mode, where the prediction mode list includes at least one prediction mode.

In some embodiments, the prediction mode corresponding to the weight derivation mode includes a prediction mode corresponding to at least one of the $P$ weight derivation modes. In this case, the prediction mode corresponding to the weight derivation mode is determined as follows. For a $p^{th}$ weight derivation mode in the $P$ weight derivation modes, a prediction mode corresponding to the $p^{th}$ weight derivation mode is determined; and the prediction mode corresponding to the weight derivation mode is determined according to the prediction mode corresponding to least one of the $P$ weight derivation modes, where $p$ is a positive integer.

In embodiments of the disclosure, the process of determining a prediction mode corresponding to each of the $P$ weight derivation modes is substantially the same. For ease of illustration, the $p^{th}$ weight derivation mode in the $P$ weight derivation modes is taken as an example for illustration below.

The prediction mode corresponding to the $p^{th}$ weight derivation mode can be determined in the following two manners.

Manner 1: if at least one of the prediction modes corresponding to the $p^{th}$ weight derivation mode is an intra prediction mode, an angle index is determined according to the $p^{th}$ weight derivation mode, and an intra prediction mode corresponding to the angle index is determined as at least one of the prediction modes corresponding to the $p^{th}$ weight derivation mode.

The angle index indicates an angle index of a boundary line of weights.

In some embodiments, the angle index is represented by the field *angleIdx.*

The foregoing Table 2 illustrates a correspondence between *merge_gpm_partition_idx* and *angleIdx.* With reference to Table 2, the angle index can be derived according to the $p^{th}$ weight derivation mode.

In the disclosure, there is a correspondence between angle indexes and intra prediction modes, that is, different angle indexes correspond to different intra prediction modes.

Exemplarily, the correspondence between angle indexes and intra prediction modes is illustrated in Table 7.

In the foregoing manner 1, taking $K$=2 as an example, if a 1st prediction mode or a 2nd prediction mode is an intra prediction mode, the angle index is determined according to the $p^{th}$ weight derivation mode, for example, the angle index corresponding to the $p^{th}$ weight derivation mode is derived according to Table 2. Then, the intra prediction mode corresponding to the angle index is determined according to the foregoing Table 7, for example, the angle index is 2, and the intra prediction mode corresponding to the angle index is 42, and accordingly, intra prediction mode 42 is determined as the 1st prediction mode or the 2nd prediction mode.

Manner 2: if at least one of the prediction modes corresponding to the $p^{th}$ weight derivation mode is an intra prediction mode, an intra prediction mode(s) corresponding to the $p^{th}$ weight derivation mode is determined; and at least one of the intra prediction modes corresponding to the $p^{th}$ weight derivation mode is determined as at least one of the prediction modes corresponding to the $p^{th}$ weight derivation mode.

The intra prediction mode corresponding to the $p^{th}$ weight derivation mode includes at least one of an intra prediction mode having a prediction direction parallel to the boundary line of weights, an intra prediction mode having a prediction direction perpendicular to the boundary line, or a planar mode.

It should be noted that, the intra prediction mode having a prediction direction parallel to the boundary line of weights includes one or more intra prediction modes having a prediction direction parallel or approximately parallel to the boundary line of weights. The intra prediction mode having a prediction direction perpendicular to the boundary line of weights include one or more intra prediction modes having a prediction direction perpendicular or approximately perpendicular to the boundary line of weights.

In the foregoing manner 2, taking $K$=2 as an example, if a 1st prediction mode and/or a 2nd prediction mode is an intra prediction mode, the 1st prediction mode and/or the 2nd prediction mode is determined from the intra prediction mode(s) corresponding to the weight derivation mode. For example, the 1st prediction mode and/or the 2nd prediction mode can be an intra prediction mode that is collinear or nearly collinear with a weight partition line (also referred to as a boundary line). Alternatively, the 1st prediction mode and/or the 2nd prediction mode can be an intra prediction mode having a prediction direction perpendicular or approximately perpendicular to the boundary line of weights. For example, the boundary line of weights is in a horizontal direction, for example, a mode with a GPM index 18, 19, 50, or 51 in FIG. 4, and the 1st prediction mode and/or the 2nd prediction mode is mode 18 in a horizontal direction or mode 50 in a vertical direction.

At the encoding end, the prediction mode corresponding to at least one of the $P$ weight derivation modes is determined through the foregoing steps, and then the prediction mode corresponding to the weight derivation mode is determined according to the prediction mode corresponding to at least one of the $P$ weight derivation modes. For example, all or some of the prediction modes corresponding to at least one of the $P$ weight derivation modes is used as the prediction mode corresponding to the weight derivation mode.

Further, there may be repeated prediction modes in prediction modes corresponding to the $P$ weight derivation modes, and in this case, the repeated prediction modes are removed, and the remaining different prediction modes are determined as the prediction mode corresponding to the weight derivation mode.

In embodiments of the disclosure, in order to reduce the number of the $R$ second combinations, selection is performed on the prediction modes, and specifically, $Q$ prediction modes are determined according to the foregoing method.

In some embodiments, in order to reduce complexity at the encoding end, the number of the $Q$ prediction modes is restricted, for example, $Q$ is less than or equal to a first preset threshold. In the disclosure, the value of the first preset threshold is not limited, and can be determined according to actual needs, for example, the first preset threshold is 6, that is, 6 prediction modes are selected to construct the $R$ second combinations, so as to control the number of second combinations.

In some embodiments, the value of $Q$ depends on the size and/or shape of the current-component block, where the shape of the current-component block can be understood as depending on the length-to-width ratio of the current-component block.

During prediction, for a small block, prediction results of similar prediction modes differ slightly, while for a large block, prediction results of similar prediction modes differ significantly. Therefore, in embodiments of the disclosure, different values of $Q$ are set for blocks of different sizes, i. e. a large value of $Q$ is set for a large block, while a small value of $Q$ is set for a small block.

In this case, when determining the value of $Q$ corresponding to the current-component block, the value of $Q$ is set according to the size of the current-component block. For example, if the size of the current-component block is greater than a first value, then $Q$ is greater than or equal to a second preset threshold. For another example, if the size of the current-component block is smaller than or equal to the first value, then $Q$ is less than a third preset threshold. The specific values of the first value, the second preset threshold, and the third preset threshold are not limited in embodiments of the disclosure, where the third preset threshold is less than the second preset threshold.

The process of determining the $P$ weight derivation modes in S201-A21-1 is described below.

In some embodiments, the $P$ weight derivation modes are 64 weight derivation modes for GPM or 56 weight derivation modes for AWP.

In some embodiments, the $P$ weight derivation modes are selected from $M$ preset weight derivation modes, where $M$ is a positive integer and $M \geq P$.

The foregoing $M$ preset weight derivation modes can be 64 weight derivation modes for GPM, or can be 56 weight derivation modes for AWP, or can be some of the 64 weight derivation modes for GPM, or can be some of the 56 weight derivation modes for AWP.

In embodiments, in order to further reduce the number of the $R$ second combinations, selection is performed on the $M$ preset weight derivation modes, and then the $P$ weight derivation modes can be selected from the $M$ preset weight derivation modes to construct the $R$ second combinations.

In some embodiments, a weight derivation mode corresponding to a preset partition angle and/or a preset offset is removed from the $M$ weight derivation modes to obtain the $P$ weight derivation modes. The same partition angle in the weight derivation mode may correspond to multiple offsets. As illustrated in FIG. 19A, weight derivation modes 10, 11, 12, and 13 have the same partition angle, but have different offsets. Therefore, weight derivation modes corresponding to some preset offsets can be removed, and/or weight derivation modes corresponding to some preset partition angles can be removed. As such, it is possible to reduce the total number of possible second combinations, and on the other hand, to make various possible second combinations differ more significantly.

In some embodiments, selection conditions corresponding to different blocks can be different. In this way, when determining the $P$ weight derivation modes corresponding to the current-component block, a selection condition corresponding to the current-component block is firstly determined, and then $P$ weight derivation modes are selected from the $M$ weight derivation modes according to the selection condition corresponding to the current-component block.

In some embodiments, the selection condition corresponding to the current-component block includes a selection condition corresponding to the size of the current-component block and/or a selection condition corresponding to the shape of the current-component block. During prediction, for a small block, prediction results of similar weight derivation modes differ slightly, while for a large block, prediction results of similar weight derivation modes differ significantly. Therefore, in embodiments of the disclosure, different values of $P$ are set for blocks of different sizes, i. e. a large value of $P$ is set for a large block, while a small value of $P$ is set for a small block.

In some embodiments, the selection condition is implemented by an array. The array includes $M$ elements, and the $M$ elements are in one-to-one correspondence with the $M$ weight derivation modes. An element corresponding to each weight derivation mode indicates whether the weight derivation mode is applicable, and whether the weight derivation mode is applicable can be understood as whether the weight derivation mode can be used as one of the $P$ weight derivation modes for subsequent trial of the second combination.

The array can be a one-dimensional array or a two-dimensional array.

In some embodiments, if the selection condition corresponding to the current-component block includes the selection condition corresponding to the size of the current-component block and the selection condition corresponding to the shape of the current-component block, and for the same weight derivation mode, if the selection condition corresponding to the size of the current-component block and the selection condition corresponding to the shape of the current-component block both indicate that the weight derivation mode is applicable, the weight derivation mode is determined as one of the $P$ weight derivation modes. If at least one of the selection condition corresponding to the size of the current-component block or the selection condition corresponding to the shape of the current-component block indicates that the weight derivation mode is not applicable, it is determined that the weight derivation mode does not belong to the $P$ weight derivation modes.

In some embodiments, selection conditions corresponding to different block sizes and selection conditions corresponding to different block shapes can be implemented separately by multiple arrays.

In some embodiments, selection conditions corresponding to different block sizes and selection conditions corresponding to different block shapes can be implemented by two-dimensional arrays, that is, one two-dimensional array includes both the selection condition corresponding to the block size and the selection condition corresponding to the block shape.

At the encoding end, after determining the $Q$ prediction modes and the $P$ weight derivation modes according to the foregoing steps, $R$ different second combinations are constructed according to the $Q$ prediction modes and the $P$ weight derivation modes.

In some embodiments, in order to further accelerate construction of the candidate combination list, at the encoding end, selection is performed on the foregoing determined $Q$ prediction modes and $P$ weight derivation modes. In this case, for S201-A21-2, the $R$ second combinations are constructed according to the determined $P$ weight derivation modes and $Q$ prediction modes according to the following steps S201-A21-21 to S201-A21-23.

S201-A21-21, $S$ weight derivation modes are selected from the $P$ weight derivation modes, where $S$ is a positive integer and $S \leq P$.

Specifically, a weight derivation mode with low probability of occurrence is removed from the $P$ determined weight derivation modes, so as to obtain the $S$ selected weight derivation modes.

For the above S201-A21-21, the manner for selecting the $S$ weight derivation modes from the $P$ weight derivation modes includes, but is not limited to, the following manners.

Manner 1, for an $i$th weight derivation mode in the $P$ weight derivation modes, weights of $K$ second prediction modes for the first-component block are determined according to the $i$th weight derivation mode, where the $K$ second prediction modes are any $K$ prediction modes in the Q prediction modes, and $i$ is a positive integer and $1 \leq i \leq P$. If a weight of any one of the $K$ prediction modes for the first-component block is less than a first preset value, the $i$th weight derivation mode is removed from the $P$ weight derivation modes, so as to obtain the S weight derivation modes.

In the above manner 1, for a weight derivation mode, if weights for the first-component block derived according to the weight derivation mode make a certain prediction mode have little contribution to prediction of the first-component block or have no contribution to prediction of the first-component block, the weight derivation mode will not be used. For example, in weight derivation mode 52 in FIG. 4 (square block), a weight of a $2^{nd}$ prediction mode to the first-component block is low. For another example, in weight derivation mode 54, a weight of the $2^{nd}$ prediction mode to the first-component block is zero, that is, it can be considered that in weight derivation mode 54, the $2^{nd}$ prediction mode has no contribution to prediction of the first-component block, and the prediction value of the first-component block is determined completely according to a $1^{st}$ prediction mode. In this case, the $2^{nd}$ prediction mode has no contribution, and such weight derivation mode needs to be removed from the P weight derivation modes.

In the foregoing manner 1, a weight derivation mode which makes a weight of any one of the $K$ prediction modes for the first-component block be less than the first preset value is removed from the $P$ weight derivation modes, so as to obtain the S weight derivation modes.

The specific value of the first preset value is not limited in embodiments of the disclosure, which can be, for example, a small value greater than or equal to 0.

Manner 2: for an $i^{th}$ weight derivation mode in the $P$ weight derivation modes, a cost when predicting the first-component block by using the $j^{th}$ weight derivation mode is determined, where $i$ is a positive integer and $1 \leq i \leq P$; and the $S$ weight derivation modes are selected from the $P$ weight derivation modes according to the cost corresponding to the $i^{th}$ weight derivation mode.

In the above manner 2, a cost corresponding to each of the $P$ weight derivation modes is calculated, so as to select the $S$ weight derivation modes from the $P$ weight derivation modes.

In embodiments of the disclosure, one weight derivation mode and $K$ prediction modes are used as one combination to calculate a cost. In this way, for the convenience of calculation, costs of the $P$ weight derivation modes are calculated based on the given $K$ prediction modes, that is, each of the $P$ weight derivation modes is combined with the given $K$ prediction modes to obtain $P$ combinations, and a cost corresponding to each of the $P$ combinations is calculated, so as to obtain the costs of the $P$ weight derivation modes.

After the cost corresponding to the $i^{th}$ weight derivation mode in the $P$ weight derivation modes is determined according to the foregoing method, $S$ weight derivation modes are selected from the $P$ weight derivation modes according to the cost corresponding to the $i^{th}$ weight derivation mode.

For the above manner 2, at the encoding end, the $S$ weight derivation modes can be selected from the $P$ weight derivation modes according to the cost corresponding to the $i^{th}$ weight derivation mode in the following manners.

In a first manner, if the cost corresponding to the $i^{th}$ weight derivation mode is less than a second preset value, a weight derivation mode(s) similar to the $i^{th}$ weight derivation mode is selected from the $P$ weight derivation modes; and the $S$ weight derivation modes are determined according to the $i^{th}$ weight derivation mode and the weight derivation mode similar to the $i^{th}$ weight derivation mode. The weight derivation mode similar to the $i^{th}$ weight derivation mode can be understood as a weight derivation mode whose prediction result is similar to that of the $i^{th}$ weight derivation mode.

The specific value of the second preset value is not limited in embodiments of the disclosure, and is specifically determined according to actual needs.

In some embodiments, at the encoding end, the $S$ weight derivation modes can also be selected from the $P$ weight derivation modes in a second manner described below.

In the second manner, if the cost corresponding to the $i^{th}$ weight derivation mode is greater than a third preset value, the $i^{th}$ weight derivation mode and the weight derivation mode similar to the $i^{th}$ weight derivation mode are removed from the $P$ weight derivation modes, so as to obtain at least one weight derivation mode after removal; and the $S$ weight derivation modes are determined according to the at least one weight derivation mode after removal.

The specific value of the third preset value is not limited in embodiments of the disclosure, and is specifically determined according to actual needs. The third preset value is greater than the second preset value described above.

At the coding end, after the $S$ weight derivation modes are selected from the $P$ weight derivation modes according to the foregoing steps, the following step S201-A21-22 is performed.

S201-A21-22, $T$ prediction modes are selected from the $Q$ prediction modes, where $T$ is a positive integer and $T \leq Q$.

In embodiments of the disclosure, there is no limitation on the manner for selecting $T$ prediction modes from the $Q$ prediction modes.

In some embodiments, $T$ preset prediction modes are selected from the $Q$ prediction modes.

In some embodiments, for an $i^{th}$ prediction mode in the $Q$ prediction modes, at the encoding end, determine a cost when predicting the first-component block by using the $i^{th}$ prediction mode, where $i$ is a positive integer and $1 \leq i \leq Q$; and $T$ prediction modes are selected from the $Q$ prediction modes according to the cost corresponding to the $i^{th}$ prediction mode.

In embodiments of the disclosure, one weight derivation mode and $K$ prediction modes are used as one combination to calculate a cost. In this way, for the convenience of calculation, costs of the $Q$ prediction modes are calculated based on the given weight derivation mode and other given $K$-1 prediction modes, i. e. each of the $Q$ prediction modes is combined with the given weight derivation mode and the given $K$-1 prediction modes, so as to obtain $Q$ combinations; and a cost corresponding to each of the $Q$ combinations is calculated, so as to obtain costs of the Q prediction modes.

For example, assuming that the given $K$-1 prediction modes are prediction mode 1 and the given weight derivation mode is weight derivation mode 1, for the $i^{th}$ prediction mode in the $Q$ prediction modes, weight derivation mode 1, the $i^{th}$ prediction mode, and prediction mode 1 constitute a combination, and the combination is marked as combination $i$. The first-component block is predicted by using combination $i$, to obtain a prediction value of the first-component block corresponding to combination $i$. A prediction distortion cost corresponding to combination $i$ is determined according to the prediction value of the first-component block corresponding to combination $i$ and the reconstructed value of the first-component block, and the prediction distortion cost corresponding to combination $i$ is determined as a cost corresponding to the $i$th prediction mode. In this way, a cost corresponding to any one of the $Q$ prediction modes can be determined.

After the cost corresponding to the $i$th prediction mode in the Q prediction modes is determined according to the foregoing method, the T prediction modes are selected from the Q prediction modes according to the cost corresponding to the $i$th prediction mode.

At the encoding end, the $T$ prediction modes can be selected from the $Q$ prediction modes according to the cost corresponding to the $i$th prediction mode in the following manners.

In a first manner, if a cost corresponding to the $i$th prediction mode is less than a fourth preset value, a prediction mode(s) similar to the $i$th prediction mode is selected from the $Q$ prediction modes; and the $T$ prediction modes are determined according to the $i$th prediction mode and the prediction mode similar to the $i$th prediction mode. The prediction mode similar to the $i$th prediction mode can be understood as a prediction mode whose prediction result is similar (or close) to the prediction result of the $i$th prediction mode, for example, a prediction mode whose prediction direction (or angle) is close to the prediction direction (or angle) of the $i$th prediction mode, or a prediction mode whose index is close to the index of the $i$th prediction mode, such as a prediction mode whose index is larger than the index of the $i$th prediction mode by 1, 2, or the like, or a prediction mode whose index is smaller than the index of the $i$th prediction mode by 1, 2, or the like.

The specific value of the fourth preset value is not limited in embodiments of the disclosure, and is specifically determined according to actual needs.

In a second manner, if the cost corresponding to the $i$th prediction mode is greater than a fifth preset value, the $i$th prediction mode and the prediction mode similar to the $i$th prediction mode are removed from the $Q$ prediction modes to obtain at least one prediction mode after removal; and the $T$ prediction modes are determined according to the at least one prediction mode after removal.

The specific value of the fifth preset value is not limited in embodiments of the disclosure, and is specifically determined according to actual needs. The fifth preset value is greater than the fourth preset value described above.

After the $S$ weight derivation modes are selected from the $P$ weight derivation modes and the $T$ prediction modes are selected from the $Q$ prediction modes according to the foregoing steps, the following S201-A21-23 is performed.

S201-A21-23, the $R$ second combinations are constructed according to the $S$ weight derivation modes and the $T$ prediction modes.

Specifically, one weight derivation mode is selected from the $S$ weight derivation modes, and $K$ prediction modes are selected from the $T$ prediction modes. The one weight derivation mode and the $K$ prediction modes constitute one second combination. By repeating this step, the $R$ second combinations can be obtained.

In some embodiments, the above S201-A21-2 includes the following. For the $i$th weight derivation mode in the $P$ weight derivation modes, determine a cost when predicting the first-component block by using the $i$th weight derivation mode and a $j$th prediction mode in the $Q$ prediction modes. If a cost corresponding to a combination of the $i$th weight derivation mode and the $j$th prediction mode is greater than a sixth preset value, the $j$th prediction mode and a prediction mode similar to the $j$th prediction mode are removed from the $Q$ prediction modes, to obtain at least one prediction mode after removal. The $R$ second combinations are constructed according to the $i$th weight derivation mode and the at least one prediction mode after removal.

In embodiments, when the weight derivation mode and one prediction mode are fixed, selection is performed for the other one prediction mode. For example, in a certain weight derivation mode, if a small cost cannot be obtained when using a certain intra prediction mode as a first prediction mode, then skip trying to use an intra prediction mode similar to such intra prediction mode as the first prediction mode regarding the weight derivation mode.

According to the foregoing steps, a final set of prediction modes after removal corresponding to each of the $P$ weight derivation modes can be determined. In this way, the $R$ second combinations are constructed according to the $P$ weight derivation modes and the final set of prediction modes after removal corresponding to each of the $P$ weight derivation modes.

It should be noted that, the foregoing embodiments provide a manner for selecting a prediction mode in the form of combination. Optionally, for any one of the weight derivation mode and the prediction mode, selection can be performed in the form of combination, so as to construct the $R$ second combinations.

At the encoding end, after the $R$ second combinations are determined according to the foregoing method, for any one of the $R$ second combinations, prediction is performed on the first-component block by using a weight derivation mode and $K$ prediction modes in the second combination, so as to obtain a prediction value of the first-component block corresponding to the second combination.

Then, the cost of the second combination is determined according to the prediction value of the first-component block and the reconstructed value of the first-component block.

According to the foregoing method, a cost of each of the $R$ second combinations can be determined, and then a candidate combination list illustrated in Table 6 is constructed according to the cost of each of the $R$ second combinations.

In this way, at the encoding end, the first combination is queried from the candidate combination list illustrated in Table 6.

In the foregoing embodiments, the manner for constructing the candidate combination list is elaborated by taking the first combination including the first weight derivation mode and the $K$ first prediction modes as an example.

In embodiments of the disclosure, in case 1, the first combination includes the first weight derivation mode and the $K$ first prediction modes, where the first weight derivation mode does not include a blending parameter. In case 2, the first combination includes the first weight derivation mode, the $K$ first prediction modes, and a second blending parameter. In case 3, the first combination includes the first weight derivation mode and the $K$ first prediction modes, where the first weight derivation mode includes a blending parameter, and the blending parameter is used together with the $K$ first prediction modes to determine the prediction value of the current-component block.

For case 1, if the first combination includes the first weight derivation mode and the $K$ first prediction modes, but the first weight derivation mode does not include a blending parameter, then the candidate combination list corresponding to the current-component block is constructed in the manner described in the foregoing embodiments.

Case 2: the first combination includes the first weight derivation mode, the $K$ first prediction modes, and the second blending parameter.

In the foregoing case 2, for S201, the first combination is determined in the following steps.

S201-C, a candidate combination list is determined, where the candidate combination list includes at least one candidate combination, and any one of the at least one candidate combination includes one weight derivation mode, $K$ prediction modes, and one blending parameter.

S201-D, the first combination is determined according to the candidate combination list.

Exemplarily, the candidate combination list is illustrated in Table 8.

There is no limitation on the manner for determining the candidate combination list in embodiments of the disclosure.

In some embodiments, the candidate combination list already exists, and the candidate combination list is obtained or read at the encoding end.

In some embodiments, the candidate combination list is constructed at the encoding end.

The manner for constructing the candidate combination list at the encoding end is not limited in embodiments of the disclosure.

In some embodiments, the candidate combination list is constructed at the encoding end through the following steps S201-C1 and S201-C2.

S201-C1, the first-component block corresponding to the current-component block is determined.

S201-C2, the candidate combination list is constructed based on the first-component block.

For the implementation of S201-C1, reference can be made to the elaborations of S201-A1, which will not be described again herein.

In some embodiments, S201-C2 includes the following steps S201-C21 to S201-C23.

S201-C21, $R$ second combinations are determined, where any one of the $R$ second combinations includes one weight derivation mode, $K$ prediction modes, and one blending parameter; weight derivation modes, $K$ prediction modes, and blending parameters in any two of the $R$ second combinations are not completely the same; and $R$ is a positive integer and $R > 1$.

S201-C22, for any one of $R$ second combinations, determine a cost corresponding to the second combination when predicting the first-component block by using a weight derivation mode, $K$ prediction modes, and a blending parameter in the second combination.

S201-C23, the candidate combination list is constructed according to a cost corresponding to each of the $R$ second combinations.

In embodiments, at the encoding end, when constructing the candidate combination list, $R$ second combinations are firstly determined. There is no limitation on the quantity of the $R$ second combinations in the disclosure, which can be, for example, 8, 16, 32, and the like. Each of the $R$ second combinations includes one weight derivation mode, $K$ prediction modes, and one blending parameter. Weight derivation modes, $K$ prediction modes, and blending parameters in any two of the $R$ second combinations are not completely the same. Then, for each of the $R$ second combinations, determine a cost corresponding to the second combination when predicting the first-component block by using a weight derivation mode, $K$ prediction modes, and a blending parameter in the second combination. Finally, the candidate combination list is constructed according to the cost corresponding to each of the $R$ second combinations.

In some embodiments, for S201-C22, there are at least the following manners for determining the cost corresponding to the second combination when predicting the first-component block by using the weight derivation mode, the $K$ prediction modes, and the blending parameter in the second combination.

Manner 1, S201-C22 includes the following S201-C22-11 to S201-C22-14.

S201-C22-11, weights for the first-component block are determined according to the weight derivation mode and the blending parameter in the second combination.

S201-C22-12, the first-component block is predicted according to the $K$ prediction modes in the second combination, to obtain $K$ prediction values of the first-component block.

S201-C22-13, the $K$ prediction values of the first-component block are weighted according to the weights for the first-component block, to obtain a prediction value of the first-component block corresponding to the second combination.

S201-C22-14, the cost corresponding to the second combination is determined according to the prediction value of the first-component block corresponding to the second combination and the reconstructed value of the first-component block.

In embodiments of the disclosure, the process of determining the cost corresponding to each of the $R$ second combinations is the same. For ease of illustration, one of the $R$ second combinations is taken as an example for illustration herein.

In embodiments of the disclosure, the second combination includes one weight derivation mode, one blending parameter, and $K$ prediction modes. When predicting the first-component block by using the second combination, the weights for the first-component block are determined according to the weight derivation mode and the blending parameter in the second combination; the first-component block is predicted according to the $K$ prediction modes in the second combination, to obtain $K$ prediction values of the first-component block; and *the K* prediction values of the first-component block are weighted according to the weights for the first-component block, to obtain the prediction value of the first-component block corresponding to the second combination. Then, the cost corresponding to the second combination is determined according to the prediction value of the first-component block corresponding to the second combination and the reconstructed value of the first-component block.

In embodiments of the disclosure, a blending parameter is used for adjusting weights derived by using a weight derivation mode. Therefore, in embodiments of the disclosure, in the foregoing S201-C22-11, there are at least the following implementations for determining the weights for the first-component block according to the weight derivation mode and the blending parameter in the second combination.

Example 1, when deriving the weights for the first-component block by using the first weight derivation mode, multiple intermediate variables need to be determined. One or some of the multiple intermediate variables can be adjusted by using the blending parameter, and then the weights for the first-component block can be derived by using the adjusted variables.

Example 2, a third weight corresponding to the first-component block is determined according to the weight derivation mode in the second combination and the first-component block. The third weight is adjusted by using the blending parameter in the second combination to obtain an adjusted third weight. The weights for the first-component block are determined according to the adjusted third weight.

According to the foregoing method, weights for the first-component block corresponding to each of the $R$ second combinations can be determined. Then, for each second combination, the first-component block is predicted by using $K$ prediction modes in the second combination, to obtain $K$ prediction values of the first-component block; the $K$ prediction values of the first-component block corresponding to the second combination are weighted according to the weights for the first-component block corresponding to the second combination, to obtain the prediction value of the first-component block corresponding to the second combination; and a cost corresponding to the second combination is determined according to the prediction value of the first-component block corresponding to the second combination and the reconstructed value of the first-component block. The manner for determining the cost corresponding to the second combination includes, but is not limited to, SAD, SATD, and SSE. According to the above method, a prediction value of the first-component block corresponding to each of the $R$ second combinations can be determined. Then, the candidate combination list is constructed according to the prediction value of the first-component block corresponding to each of the $R$ second combinations.

Manner 2, S201-C22 includes the following S201-C22-21 to S201-C22-23.

S201-C22-21, prediction values of the first-component block corresponding to K prediction modes in the second combination are determined according to a weight derivation mode and a blending parameter in the second combination.

S201-C22-22, costs corresponding to the K prediction modes in the second combination are determined according to the prediction values of the first-component block corresponding to the $K$ prediction modes in the second combination and the reconstructed value of the first-component block.

S201-C22-23, the cost corresponding to the second combination is determined according to the costs corresponding to the $K$ prediction modes in the second combination. For example, the sum of the costs corresponding to the $K$ prediction modes in the second combination is determined as the cost corresponding to the second combination.

The manner for constructing the candidate combination list according to the cost corresponding to each of the $R$ second combinations in S201-C23 includes, but is not limited to, the following manners.

Example 1: the $R$ second combinations are sorted according to the cost corresponding to each of the $R$ second combinations, and the sorted R second combinations are determined as the candidate combination list.

Example 2: according to the cost corresponding to the second combination, $L$ second combinations are selected from the $R$ second combinations, and a list consisting of the L second combinations is determined as the candidate combination list.

The process of determining the $R$ second combinations in S201-C21 is described below.

In some embodiments, the *R* second combinations are pre-set.

In some embodiments, S201-C21 includes the following steps.

S201-C21-1, *F* weight derivation modes, *J* prediction modes, and W blending parameters are determined, where *F* and *W* are positive integers, and J is a positive integer and $J \geq K$.

S201-C21-2, the *R* second combinations are constructed according to the *F* weight derivation modes, the *J* prediction modes, and the *W* blending parameters, where any one of the *R* second combinations includes one of the *F* weight derivation modes, *K* prediction modes in the *J* prediction modes, and one of the *W* blending parameters.

In embodiments, at the encoding end, the *F* weight derivation modes, the *J* prediction modes, and the W blending parameters are firstly determined, and then the *R* second combinations are constructed according to the *F* weight derivation modes, *J* prediction modes, and W blending parameters determined.

In some embodiments, in order to reduce the amount of data and accelerate construction of the candidate combination list, not all the prediction modes are tried, and instead, only some of the prediction modes can be selected for trial.

In this case, the implementation of determining the *J* prediction modes in the foregoing S201-C21-1 includes, but is not limited to, the following manners.

Manner 1: the *J* prediction modes are preset prediction modes.

Manner 2: at least one of a candidate prediction mode list of the current-component block, alternative prediction mode lists corresponding to the *K* first prediction modes, a prediction mode(s) corresponding to the weight derivation mode, or a preset mode is determined. The *J* prediction modes are determined according to at least one of the candidate prediction mode list, the alternative prediction mode lists corresponding to the *K* first prediction modes, the prediction mode corresponding to the weight derivation mode, or the preset mode.

The manners for determining a second candidate prediction mode list of the current-component block includes at least the following several examples.

Example 1, the second candidate prediction mode list is determined according to a prediction mode applied to at least one neighbouring block of the current-component block.

Example 2, if the second candidate prediction mode list does not include the preset mode, a preset mode corresponding to the current-component block is determined, and the preset mode is added to the second candidate prediction mode list.

In an example, the preset mode is several preset prediction modes.

In another example, a picture type corresponding to the current-component block is determined, and the preset mode is determined according to the picture type corresponding to the current-component block.

For example, if the picture type corresponding to the current-component block is a B type or a P type, the preset mode includes at least one of DC, a horizontal mode, a vertical mode, or an angular mode.

Example 3, the picture type corresponding to the current-component block is determined, and the second candidate prediction mode list is determined according to the picture type corresponding to the current-component block. For example, if the picture type corresponding to the current-component block is a B type or a P type, at least one of the DC, the horizontal mode, the vertical mode, or some other angular modes can be added to the second candidate prediction mode list. For another example, if the picture type corresponding to the current-component block is an I type, at least one of the DC, the horizontal mode, or the vertical mode can be added to the second candidate prediction mode list.

Example 4, at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been encoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In embodiments of the disclosure, for the implementation of determining the *J* prediction modes, reference can be made to the elaborations of determining the *Q* prediction modes in the foregoing S201-A21-1, which is not described herein again. In some embodiments, $J = Q$.

The process of determining the *F* weight derivation modes in S201-C21-1 is described below.

In embodiments of the disclosure, there are at least the following manners for determining the *F* weight derivation modes.

In some embodiments, the *F* weight derivation modes are preset weight derivation modes.

In some embodiments, the *F* weight derivation modes are selected from *Z* preset weight derivation modes, where *Z* is a positive integer and $Z \geq F$.

There is no limitation on the $Z$ preset weight derivation modes in embodiments of the disclosure.

In some embodiments, if $Z = F$, the $Z$ weight derivation modes are determined as the F weight derivation modes.

In some embodiments, if $Z > F$, in order to further reduce the number of the $R$ second combinations, selection is performed on the $Z$ preset weight derivation modes, and then the $F$ weight derivation modes can be selected from the $Z$ preset weight derivation modes to construct the $R$ second combinations.

The process of determining the $F$ weight derivation modes in the foregoing S201-C21-1 is substantially the same as the process of determining the $P$ weight derivation modes in the foregoing S201-A21-1. Reference is made to the elaborations of determining the $P$ weight derivation modes, which is not described again herein.

The process of determining the $W$ blending coefficients in S201-C21-1 is described below.

In some embodiments, the $W$ blending parameters are preset blending parameters, for example, 1/4, 1/2, 1, 2, 4, and the like.

In some embodiments, the $W$ blending parameters are determined according to the size of the current-component block.

In some embodiments, the $W$ blending parameters are determined from multiple preset blending parameters.

In an example, the $W$ blending parameters are determined from the multiple preset blending parameters according to picture information of the current-component block.

The specific content of the picture information of the current-component block is not limited in embodiments of the disclosure, which can be, for example, ambiguity, definition, and acutance.

In some embodiments, if the picture information of the current-component block includes the definition of a picture edge, then there are two examples for determining the $W$ blending parameters from the multiple preset blending parameters according to the picture information of the current-component block.

Example 1, if the definition of the picture edge of the current-component block is less than a preset value, at least one first-type blending parameter in the multiple preset blending parameters is determined as the $W$ blending parameters.

The first-type blending parameter can be understood as a blending parameter capable of forming a wide blending area, for example, 1/4, 1/2, or the like.

Example 2, if the definition of the picture edge of the current-component block is greater than or equal to the preset value, at least one second-type blending parameter in the multiple preset blending parameters is determined as the $W$ blending parameters, where the second-type blending parameter is greater than the first-type blending parameter.

The second-type blending parameter can be understood as a blending parameter capable of forming a narrow blending area, such as 2 or 4.

In embodiments of the disclosure, there can be at least two manners for determining the picture information of the current-component block.

Manner 1: the picture information of the current-component block is analyzed to obtain the picture information of the current-component block.

Manner 2: picture information of the first-component block is determined, and the picture information of the current-component block is determined according to the picture information of the first-component block.

After the $J$ prediction modes, the $F$ weight derivation modes, and the $W$ blending parameters are determined according to the foregoing steps, $R$ different second combinations are constructed according to the $J$ prediction modes, the $F$ weight derivation modes, and the $W$ blending parameters. Then, the candidate combination list is determined according to the $R$ second combinations, and then the first weight derivation mode, the K first prediction modes, and the second blending parameter are determined from the candidate combination list.

In some embodiments, in order to further accelerate construction of the candidate combination list, at the decoding end, selection is performed on the foregoing determined $J$ prediction modes, $F$ weight derivation modes, and $W$ blending parameters. In this case, for S201-C21-2, the $R$ second combinations are constructed according to the determined $F$ weight derivation modes, $J$ prediction modes, and W blending parameters according to the following steps S201-C21-21 to S201-C21-24.

S201-C21-21, $E$ weight derivation modes are selected from the $F$ weight derivation modes, where $E$ is a positive integer and $E \leq F$.

Specifically, a weight derivation mode with low probability of occurrence is removed from the $F$ determined weight derivation modes, so as to obtain the $E$ selected weight derivation modes.

For S201-C21-21, the manner for selecting the $E$ weight derivation modes from the F weight derivation modes includes, but is not limited to, the following manners.

Manner 1, for an $i$th weight derivation mode of the $F$ weight derivation modes, weights of $K$ second prediction modes for the first-component block are determined according to the $i$th weight derivation mode and a fourth blending parameter, where the fourth blending parameter is any one of the $W$ blending parameters, the K second prediction modes is any $K$ prediction modes in the $J$ prediction modes, and $i$ is a positive integer $1 \leq i \leq F$. If a weight of any one of the $K$ prediction modes for the first-component block is less than a first preset value, the $i$th weight derivation mode is removed from the $F$ weight derivation modes, so as to obtain the $E$ weight derivation modes.

In the above manner 1, the manner for determining the weights of the $K$ second prediction modes for the first-component block according to the $i^{th}$ weight derivation mode and the fourth blending parameter at least includes the manners described in the following examples.

Example 1, when deriving weights for the first-component block by using the $i^{th}$ weight derivation mode, multiple intermediate variables need to be determined. One or some of the multiple intermediate variables can be adjusted by using the fourth blending parameter, so that the weights for the first-component block are derived by using the variables adjusted.

Example 2, a fourth weight corresponding to the first-component block is determined according to the $i^{th}$ weight derivation mode and the first-component block. The fourth weight is adjusted by using the fourth blending parameter to obtain an adjusted fourth weight. The weights of the $K$ second prediction modes for the first-component block are determined according to the adjusted fourth weight.

According to the foregoing method, the weights of the $K$ second prediction modes for the first-component block in the $i^{th}$ weight derivation mode are derived.

Manner 2: for an $i^{th}$ weight derivation mode in the $F$ weight derivation modes, a cost when predicting the first-component block by using the $i^{th}$ weight derivation mode is determined, where $i$ is a positive integer and $1 \leq i \leq F$; and the $E$ weight derivation modes are selected from the $F$ weight derivation modes according to the cost corresponding to the $i^{th}$ weight derivation mode.

In some embodiments, when determining the cost corresponding to the $i^{th}$ weight derivation mode, the influence of the blending parameter on the weights is not taken into consideration.

In some embodiments, when determining the cost corresponding to the $i^{th}$ weight derivation mode, the influence of the blending parameter on the weights is taken into consideration, that is, the weights for the first-component block are determined according to the $i^{th}$ weight derivation mode and the blending parameter. Then, the prediction value of the first-component block is determined according to the weights for the first-component block and $K$ prediction values of the first-component block, and the cost corresponding to the $i^{th}$ weight derivation mode is determined according to the prediction value of the first-component block and the reconstructed value of the first-component block. For the process of determining the weights for the first-component block according to the $i^{th}$ weight derivation mode and the blending parameter, reference can be made to the elaborations in the foregoing embodiments, which is not described again herein.

After selecting $E$ weight derivation modes from the F weight derivation modes through the foregoing steps, proceed to the following step S201-C21-22.

S201-C21-22, V prediction modes are selected from $J$ prediction modes, where $V$ is a positive integer and $V \leq J$.

In embodiments of the disclosure, the manner for selecting $V$ prediction modes from the $J$ prediction modes is not limited.

In some embodiments, $V$ preset prediction modes are selected from the $J$ prediction modes.

In some embodiments, for an $i^{th}$ prediction mode in the $J$ prediction modes, at the encoding end, determine a cost when predicting the first-component block by applying the $i^{th}$ prediction mode, where $i$ is a positive integer and $1 \leq i \leq J$; and $V$ prediction modes are selected from the $J$ prediction modes according to the cost corresponding to the $i^{th}$ prediction mode.

In embodiments of the disclosure, one weight derivation mode, $K$ prediction modes, and the blending parameter are used as one combination to calculate a cost. In this way, for the convenience of calculation, costs of $J$ prediction modes are calculated based on the given weight derivation mode, other given $K$-1 prediction modes, and the given blending parameter, i. e. each of the $J$ prediction modes is combined with the given weight derivation mode, the given $K$-1 prediction modes, and the given blending parameter, so as to obtain $J$ combinations; and a cost corresponding to each of the $J$ combinations is calculated, so as to obtain costs of the $J$ prediction modes.

After the cost corresponding to the $i^{th}$ prediction mode in the $J$ prediction modes is determined according to the foregoing method, the $V$ prediction modes are selected from the $J$ prediction modes according to the cost corresponding to the $i^{th}$ prediction mode.

The $V$ prediction modes can be selected from the $J$ prediction modes according to the cost corresponding to the $i^{th}$ prediction mode in the following manners.

In a first manner, if a cost corresponding to the $i^{th}$ prediction mode is less than a fourth preset value, a prediction mode(s) similar to the $i^{th}$ prediction mode is selected from the J prediction modes; and the V prediction modes are determined according to the $i^{th}$ prediction mode and the prediction mode similar to the $i^{th}$ prediction mode.

In a second manner, if the cost corresponding to the $i^{th}$ prediction mode is greater than a fifth preset value, the $i^{th}$ prediction mode and the prediction mode similar to the $i^{th}$ prediction mode are removed from the $J$ prediction modes to obtain at least one prediction mode after removal; and the $V$ prediction modes are determined according to the at least one prediction mode after removal.

After the $E$ weight derivation modes are selected from the $F$ weight derivation modes and the $V$ prediction modes are selected from the $J$ prediction modes according to the foregoing steps, the following S201-C21-23 is performed.

S201-C21-23, $O$ blending parameters are selected from the $W$ blending parameters, where $O$ is a positive integer and $O \leq W$.

In some embodiments, if $O = W,$ the $W$ blending parameters are determined as the $O$ blending parameters.

In some embodiments, if $W > O,$ selection is performed on the $W$ blending parameter to obtain $O$ blending parameters.

There are at least the following manners for performing selection on the $W$ blending parameters to obtain the $O$ blending parameters.

Example 1, a cost of each of the $W$ blending parameters is determined, and the first $O$ blending parameters with the minimum cost among the $W$ blending parameters are selected.

Example 2, if the $W$ blending parameters are not determined according to picture information of the current-component block, in embodiments of the disclosure, the picture information of the current-component block can be determined, and $O$ blending parameters are determined from the $W$ blending parameters according to the picture information of the current-component block.

In some embodiments, if the picture information of the current-component block includes the definition of a picture edge, then there are two examples for determining the $O$ blending parameters from the $W$ blending parameters according to the picture information of the current-component block.

In an example, if the definition of the picture edge of the current-component block is less than a preset value, at least one first-type blending parameter in the $W$ blending parameters is determined as the $O$ blending parameters.

In another example, if the definition of the picture edge of the current-component block is greater than or equal to the preset value, at least one second-type blending parameter in the $W$ blending parameters is determined as the $O$ blending parameters.

In some embodiments, the $O$ blending parameters are selected from the $W$ blending parameters according to the size of the current-component block.

In a possible implementation, according to the size of the current-component block, a blending parameter(s) greater than or equal to a third value among the $W$ blending parameters is taken as the $O$ blending parameters.

For example, if the size of the current-component block is less than a second preset threshold, a blending parameter(s) whose value is the third value among the $W$ blending parameters is used as one of the $O$ blending parameters.

For another example, if the size of the current-component block is greater than or equal to the second preset threshold, a blending parameter(s) less than or equal to a fourth value among the $W$ blending parameters is used as the $O$ blending parameters, where the fourth value is less than the third value.

In another possible implementation, according to the size of the current-component block, the $O$ blending parameters are determined to be at least one blending parameter falling within a certain value range among the $W$ blending parameters.

For example, if the size of the current-component block is less than the second preset threshold, the $O$ blending parameters are determined to be one or more blending parameters falling within a value range of the fourth blending parameter among the $W$ blending parameters.

For another example, if the size of the current-component block is greater than or equal to the second preset threshold, the $O$ blending parameters are determined to be one or more blending parameters falling within a value range of a third blending parameter among the $W$ blending parameters, where a minimum value of the value range of the third blending parameter is less than a minimum value of the value range of the fourth blending parameter.

After the $E$ weight derivation modes are selected from the $F$ weight derivation modes, the $V$ prediction modes are selected from the $J$ prediction modes, and the $O$ blending parameters are selected from the $W$ blending parameters, the following step S201-C21-24 is performed.

S201-C21-24, the $R$ second combinations are constructed according to the $E$ weight derivation modes, the $V$ prediction modes, and the $O$ blending parameters.

Specifically, one weight derivation mode is selected from the $E$ weight derivation modes, $K$ prediction modes are selected from the V prediction modes, and one blending parameter is selected from the $O$ blending parameters. The one weight derivation mode, the $K$ prediction modes, and the one blending parameter constitute one second combination. By repeating this step, the $R$ second combinations can be obtained.

It can be seen from the above that each second combination includes one weight derivation mode, $K$ prediction modes, and one blending parameter, that is, each second combination includes $K+2$ elements. In this way, when selecting one element, limitation can be imposed on possible choices for the element in a combination when other elements in the combination are fixed.

An implementation of the foregoing S201-C21-2 will be described below, for example, selection is performed for one prediction mode while the weight derivation mode, the blending parameter, and the other one prediction mode are fixed.

In some embodiments, the above S101-C21-2 includes the following. For an $i^{th}$ weight derivation mode in the F weight derivation modes and an $o^{th}$ blending parameter in the $O$ blending parameters, determine a cost when predicting the first-component block by using the $i^{th}$ weight derivation mode, the $o^{th}$ blending parameter, and a $j^{th}$ prediction mode in the $J$ prediction modes, wherein $f$ is a positive integer and $f \leq F$, o is a positive integer and $o \leq O$, and $j$ is a positive integer and $j \leq J$. If a cost corresponding to a combination of the $f$th weight derivation mode, the $o$th blending parameter, and the $j$th prediction mode is greater than a sixth preset value, the $j$th prediction mode and a prediction mode similar to the $j$th prediction mode are removed from the $J$ predictions mode, to obtain at least one prediction mode after removal. The $R$ second combinations are constructed according to the $f$th weight derivation mode, the $o$th blending parameter, and at least one prediction mode after removal.

In embodiments, when the weight derivation mode, the blending parameter, and one prediction mode are fixed, selection is performed for the other one prediction mode. For example, in a certain weight derivation mode and a certain blending parameter, if a small cost cannot be obtained when using a certain intra prediction mode as a first prediction mode, then skip trying to use an intra prediction mode similar to such intra prediction mode as the first prediction mode regarding the weight derivation mode and the blending parameter.

According to the foregoing steps, a final set of prediction modes after removal corresponding to each of the $F$ weight derivation modes and the blending parameter can be determined. In this way, the $R$ second combinations are constructed according to the $F$ weight derivation modes and the final set of prediction modes after removal corresponding to each of the F weight derivation modes.

It should be noted that, the foregoing embodiments provide a manner for selecting a prediction mode in the form of combination. Optionally, for any one of the weight derivation mode and the blending parameter, selection can be performed in the form of combination, so as to construct the $R$ second combinations.

After the $R$ second combinations are determined according to the foregoing method, for any one of the $R$ second combinations, prediction is performed on the first-component block by using a weight derivation mode, $K$ prediction modes, and a blending parameter in the second combination, so as to obtain a prediction value of the first-component block corresponding to the second combination.

Then, the cost of the second combination is determined according to the prediction value of the first-component block and the reconstructed value of the first-component block, and a candidate combination list is constructed according to the cost of each of the $R$ second combinations.

In this way, at the encoding end, the first combination is determined from the constructed candidate combination list.

For example, one candidate combination in the candidate combination list is determined as the first combination.

For another example, a candidate combination with the minimum cost in the candidate combination list is determined as the first combination.

After the first combination is determined according to the foregoing method, S202 is performed.

In the foregoing case 2, the implementation of S201 is described by taking the first combination including the first weight derivation mode, the $K$ first prediction modes, and the second blending parameter as an example.

Case 3: the first combination includes the first weight derivation mode and the $K$ first prediction modes, where the first weight derivation mode includes a third blending parameter, and the third blending parameter is used for determining a weight.

In the above case 3, the first weight derivation mode can be understood as a dataset, where the dataset includes multiple parameters, for example, includes the third blending parameter, and the multiple parameters are used together for determining the weight.

In such case 3, for S201, the first combination is determined according to the following steps.

S201-E, a candidate combination list is determined, where the candidate combination list includes at least one candidate combination, and any one of the at least one candidate combination includes one weight derivation mode and $K$ prediction modes, and the weight derivation mode includes one blending parameter.

S201-F, the first combination is determined according to the candidate combination list.

Exemplarily, the candidate combination list is illustrated in Table 9.

In embodiments of the disclosure, there is no limitation on the manner for determining the candidate combination list at the encoding end.

In some embodiments, the candidate combination list already exists.

In some embodiments, the candidate combination list is constructed at the encoding end.

In embodiments of the disclosure, there is no limitation on the manner for constructing the candidate combination list at the encoding end.

In some embodiments, the candidate combination list is constructed at the encoding end through the following steps S201-E1 and S201-E2.

S201-E1, the first-component block corresponding to the current-component block is determined.

S201-E2, the candidate combination list is constructed based on the first-component block.

For the implementation of S201-E1, reference can be made to the elaborations of S201-A1, which will not be described again herein.

In some embodiments, S201-E2 includes the following steps S201-E21 to S201-E23.

S201-E21, *R* second combinations are determined, where any one of the *R* second combinations includes one weight derivation mode and K prediction modes; weight derivation modes and *K* prediction modes in any two of the *R* second combinations are not completely the same; and *R* is a positive integer and *R* > 1.

S201-E22, for any one of the *R* second combinations, determine a cost corresponding to the second combination when predicting the first-component block by using a weight derivation mode and *K* prediction modes in the second combination.

S201-E23, the candidate combination list is constructed according to a cost corresponding to each of the *R* second combinations.

In embodiments, at the encoding end, when constructing the candidate combination list, *R* second combinations are firstly determined. There is no limitation on the quantity of the *R* second combinations in the disclosure, which can be, for example, 8, 16, 32, and the like. Each of the *R* second combinations includes one weight derivation mode and *K* prediction modes, and the weight derivation mode includes one blending parameter. Weight derivation modes and *K* prediction modes in any two of the *R* second combinations are not completely the same. Then, for each of the *R* second combinations, determine a cost corresponding to the second combination when predicting the first-component block corresponding to the current-component block by using a weight derivation mode and *K* prediction modes in the second combination. Finally, the candidate combination list is constructed according to the cost corresponding to each of the *R* second combinations.

In some embodiments, for S201-E22, there are at least the following manners for determining the cost corresponding to the second combination when predicting the first-component block by using the weight derivation mode and the *K* prediction modes in the second combination.

Manner 1, S201-E22 includes the following S201-E22-11 to S201-E22-14.

S201-E22-11, weights for the first-component block are determined according to the weight derivation mode in the second combination.

S201-E22-12, the first-component block is predicted according to the *K* prediction modes in the second combination, to obtain *K* prediction values of the first-component block.

S201-E22-13, the *K* prediction values of the first-component block are weighted according to the weights for the first-component block, to obtain a prediction value of the first-component block corresponding to the second combination.

S201-E22-14, the cost corresponding to the second combination is determined according to the prediction value of the first-component block corresponding to the second combination and the reconstructed value of the first-component block.

In embodiments of the disclosure, the process of determining the cost corresponding to each of the R second combinations is the same. For ease of illustration, one of the R second combinations is taken as an example for illustration herein.

In embodiments of the disclosure, the second combination includes one weight derivation mode and *K* prediction modes. When predicting the first-component block by using the second combination, exemplarily, at the encoding end, the weights for the first-component block can be determined according to the weight derivation mode in the second combination; the first-component block is predicted according to the *K* prediction modes in the second combination, to obtain *K* prediction values of the first-component block; and the *K* prediction values of the first-component block are weighted according to the weights for the first-component block, to obtain the prediction value of the first-component block corresponding to the second combination. Then, the cost corresponding to the second combination is determined according to the prediction value of the first-component block corresponding to the second combination and the reconstructed value of the first-component block.

In embodiments of the disclosure, there is no limitation on the manner for determining the weights for the first-component block according to the weight derivation mode in the second combination in S201-E22-11. For example, the weight derivation mode in the second combination includes a blending parameter, and therefore, the weights for the first-component block can be determined according to the blending parameter.

Manner 2, S201-E22 includes the following S201-E22-21 to S201-E22-23.

S201-E22-21, determine prediction values of the first-component block corresponding to the *K* prediction modes in the second combination according to the weight derivation mode in the second combination.

S201-E22-22, determine costs corresponding to the *K* prediction modes in the second combination according to the prediction values of the first-component block corresponding to the *K* prediction modes in the second combination and the reconstructed value of the first-component block.

S201-E22-23, determine the cost corresponding to the second combination according to the costs corresponding to the *K* prediction modes in the second combination. For example, the sum of the costs corresponding to the *K* prediction modes in the second combination is determined as the cost corresponding to the second combination.

The manner for constructing the candidate combination list according to the cost corresponding to each of the *R* second combinations in S201-E23 include, but are not limited to, the following manners.

Example 1: the R second combinations are sorted according to the cost corresponding to each of the *R* second combinations, and the sorted *R* second combinations are determined as the candidate combination list.

The candidate combination list generated in this Example 1 includes R candidate combinations.

Optionally, the *R* candidate combinations in the candidate combination list are sorted in an ascending order according to the cost, that is, costs corresponding to the *R* candidate combinations in the candidate combination list increase sequentially in order of sorting.

The *R* second combinations can be sorted according to the cost corresponding to each of the R second combinations as follows. The *R* second combinations are sorted in ascending order of costs.

Example 2, according to the cost corresponding to the second combination, *B* second combinations are selected from the *R* second combinations, and a list consisting of the B second combinations is determined as the candidate combination list.

Optionally, the *B* second combinations are the first B second combinations with the minimum cost among the *R* second combinations.

Optionally, the *B* candidate combinations in the candidate combination list are sorted in an ascending order according to the cost, that is, costs corresponding to the *B* candidate combinations in the candidate combination list increase sequentially in order of sorting.

The process of determining the *R* second combinations in S201-E21 is described below.

In some embodiments, the *R* second combinations are pre-set. In this case, for each of the *R* preset second combinations, the first-component block corresponding to the current-component block is predicted by using the second combinations, to obtain a prediction value of the first-component block corresponding to the second combination; then a cost corresponding to the second combination is determined according to the prediction value of the first-component block corresponding to the second combination and the reconstructed value of the first-component block; the *R* second combinations are sorted according to the cost corresponding to each second combination; and the sorted *R* second combinations are taken as the candidate combination list, or *B* second combinations with the minimum cost are selected from the sorted *R* second combinations, to construct the candidate combination list.

In some embodiments, S201-E21 includes the following steps.

S101-E21-1, *C* weight derivation modes and *D* prediction modes are determined, wherein *C* is a positive integer, and *D* is a positive integer and $D \geq K$.

S101-E21-2, the *R* second combinations are constructed according to the *C* weight derivation modes and the *D* prediction modes, where any one of the *R* second combinations includes one of the *C* weight derivation modes and *K* prediction modes in the *D* prediction modes.

In embodiments, at the encoding end, the *C* weight derivation modes and the *D* prediction modes are firstly determined, and then the *R* second combinations are constructed according to the *C* weight derivation modes and *D* prediction modes determined.

There is no limitation on the quantities of the *C* weight derivation modes and the *D* prediction modes in embodiments of the disclosure.

In this case, the implementation of determining the *D* prediction modes in S201-E21-1 includes, but is not limited to, the following manners.

Manner 1: the *D* prediction modes are preset prediction modes.

Manner 2: at least one of a candidate prediction mode list of the current-component block, alternative prediction mode lists corresponding to the *K* first prediction modes, a prediction mode(s) corresponding to the weight derivation mode, or a preset mode is determined. The *D* prediction modes are determined according to at least one of the candidate prediction mode list, the alternative prediction mode lists corresponding to the *K* first prediction modes, the prediction mode corresponding to the weight derivation mode, or the preset mode.

The manner for determining a third candidate prediction mode list of the current-component block includes at least the following several examples.

Example 1, the third candidate prediction mode list is determined according to a prediction mode applied to at least one neighbouring block of the current-component block.

Example 2, if the third candidate prediction mode list does not include the preset mode, a preset mode corresponding to the current-component block is determined, and the preset mode is added to the third candidate prediction mode list.

In an example, the preset mode is several preset prediction modes.

In another example, a picture type corresponding to the current-component block is determined, and the preset mode is determined according to the picture type corresponding to the current-component block.

For example, if the picture type corresponding to the current-component block is a B type or a P type, the preset mode includes at least one of DC, a horizontal mode, a vertical mode, or an angular mode.

Example 3, the picture type corresponding to the current-component block is determined, and the third candidate prediction mode list is determined according to the picture type corresponding to the current-component block. For example, if the picture type corresponding to the current-component block is a B type or a P type, at least one of the DC, the horizontal mode, the vertical mode, or some other angular modes can be added to the third candidate prediction mode list. For another example, if the picture type corresponding to the current-component block is an I type, at least one of the DC, the horizontal mode, or the vertical mode can be added to the third candidate prediction mode list.

Example 4, at least one of a second prediction mode, a third prediction mode, a fourth prediction mode, or a fifth prediction mode is determined. The second prediction mode is applied to at least one of a first-component block, a second-component block, or a third-component block (for example, a chroma block and/or a luma block) which is at a preset location. The third prediction mode is applied to at least one a first-component block, a second-component block, or a third-component block (for example, a luma block and/or a chroma block) which has been encoded and neighbours the current-component block. The fourth prediction mode is applied to a first-component block (for example, a luma block) corresponding to an internal preset region of the current-component block. The fifth prediction mode is related to the first-component block corresponding to the current-component block. Then the candidate prediction mode list of the current-component block is determined according to at least one of the second prediction mode, the third prediction mode, the fourth prediction mode, or the fifth prediction mode.

In embodiments of the disclosure, for the implementation of determining the $D$ prediction modes, reference can be made to the elaborations of determining the $Q$ prediction modes in the foregoing S101-A21-1, which is not described herein again. In some embodiments, $D = Q$.

The process of determining the $C$ weight derivation modes in S201-E21-1 is described below.

In some embodiments, the $C$ weight derivation modes are pre-set.

In some embodiments, the $C$ weight derivation modes are selected from multiple preset weight derivation modes, for example, selection is performed according to information such as the size of the current-component block and/or the picture type corresponding to the current-component block, so as to obtain the $C$ weight derivation modes. Optionally, $C$ weight derivation modes with the minimum cost can be selected from the multiple preset weight derivation modes according to costs.

In some embodiments, $X$ blending parameters are determined, and $C$ weight derivation modes are determined based on the $X$ blending parameters. The magnitude relationship between $X$ and C is not limited in embodiments of the disclosure.

In embodiments of the disclosure, since each of the $C$ weight derivation modes includes one blending parameter, the $C$ weight derivation modes can be determined according to the $X$ blending parameters. For example, if the weight derivation mode includes other parameters besides the blending parameter, blending parameters in at least two of the $C$ weight derivation modes may be the same or different. Then the $C$ weight derivation modes can be determined according to the X blending parameters. For example, determine a cost corresponding to each of the multiple different weight derivation modes formed by the $X$ blending parameters when using the multiple different weight derivation modes, and thus $C$ weight derivation modes with the minimum cost are selected.

The manner for determining the $X$ blending parameters is not limited in embodiments of the disclosure.

In some embodiments, the $X$ blending parameters are preset blending parameters, for example, 1/4, 1/2, 1, 2, 4, and the like.

In some embodiments, the $X$ blending parameters are determined according to the size of the current-component block.

For example, if the size of the current-component block is less than a third preset threshold, a blending parameter(s) greater than or equal to a fifth value among the at least one preset blending parameter is used as the $X$ blending parameters.

For another example, if the size of the current-component block is greater than or equal to the third preset threshold, a blending parameter(s) less than or equal to a sixth value among the at least one blending parameter is used as the $X$ blending parameters, where the sixth value is less than the fifth value.

For another example, if the size of the current-component block is greater than or equal to the third preset threshold, a blending parameter(s) less than or equal to a sixth value among the at least one blending parameter is used as the $X$ blending parameters, where the sixth value is less than the fifth value.

For another example, if the size of the current-component block is less than the third preset threshold, the $X$ blending parameters are determined to be one or more of the at least one preset blending parameter which fall within a value range of a fifth blending parameter.

For another example, if the size of the current-component block is greater than or equal to the third preset threshold, the $X$ blending parameter are determined to be one or more of the at least one blending parameter which fall within a value range of a sixth blending parameter, where the minimum value of the value range of the sixth blending parameter is less than the minimum value of the value range of the fifth blending parameter.

In some embodiments, picture information of the current-component block is determined; and the $X$ blending parameters are determined according to the picture information of the current-component block.

Example 1, if the definition of the picture edge of the current-component block is less than a preset value, at least one third-type blending parameter in $Y$ preset blending parameters is determined as the $X$ blending parameters, where $Y$ is a positive integer and $Y > X$.

The third-type blending parameter can be understood as a blending parameter capable of forming a wide blending area, for example, 1/4, 1/2, or the like.

Example 2, if the definition of the picture edge of the current-component block is greater than or equal to the preset value, at least one fourth-type blending parameter in the $Y$ blending parameters is determined as the $X$ blending parameters, where the fourth-type blending parameter is greater than the third-type blending parameter.

The fourth-type blending parameter can be understood as a blending parameter capable of forming a narrow blending area, such as 2 or 4.

At the encoding end, after the $D$ prediction modes, the $C$ weight derivation modes, and the $W$ blending parameters are determined according to the foregoing steps, $R$ different second combinations are constructed according to the $D$ prediction modes and the $C$ weight derivation modes. Then, a candidate combination list is determined according to the $R$ second combinations, and then the first weight derivation mode and the $K$ first prediction modes are determined from the candidate combination list.

In some embodiments, in order to further accelerate construction of the candidate combination list, at the encoding end, selection is performed on the foregoing determined $D$ prediction modes and $C$ weight derivation modes. In this case, for S201-E21-2, the $R$ second combinations are constructed according to the determined $C$ weight derivation modes and $D$ prediction modes according to the following steps S201-E21-21 to S201-E21-23.

S201-E21-21, $C1$ weight derivation modes are selected from the $C$ weight derivation modes, where $C1$ is a positive integer and $C1 \leq C$.

For the implementation of the foregoing S201-E21-21, reference can be made to the illustration of the foregoing S101-A11-21, which is not described again herein.

At the encoding end, after the $C1$ weight derivation modes are selected from the $C$ weight derivation modes according to the foregoing steps, the following step S201-E21-22 is performed.

S201-E21-22, D1 prediction modes are selected from the $D$ prediction modes, where $D1$ is a positive integer and $D1 \leq D$.

For the implementation of the foregoing S201-E21-22, reference can be made to the illustration of the foregoing S101-A11-22, which is not described again herein.

After the $C1$ weight derivation modes are selected from the $C$ weight derivation modes and the $D1$ prediction modes are selected from the $D$ prediction modes according to the foregoing steps, S201-E21-23 is performed.

S201-E21-23, the $R$ second combinations are constructed according to the $C1$ weight derivation modes and the $D1$ prediction modes.

For the implementation of the foregoing S201-E21-23, reference can be made to the illustration of the foregoing S101-A11-23, which is not described again herein.

After the $R$ second combinations are determined according to the foregoing method, a cost of each of the $R$ second combinations can be determined.

Then, the candidate combination list is constructed according to the cost of each of the $R$ second combinations.

For example, the $R$ second combinations are sorted in an ascending order according to the cost of the second combination, and the sorted $R$ second combinations are determined as the candidate combination list.

For another example, according to the cost of the second combination, $B$ second combinations with the minimum cost are selected from the $R$ second combinations to construct the candidate combination list.

According to the described method, the candidate combination list is determined, and candidate combinations in the candidate combination list are sorted in an ascending order according to costs. Exemplarily, the candidate combination list is illustrated in the above Table 9.

In this way, at the encoding end, the first combination is determined from the constructed candidate combination list.

For example, any candidate combination in the candidate combination list is determined as the first combination.

For another example, a candidate combination with the minimum cost in the candidate combination list is determined as the first combination.

After the first combination is determined according to the foregoing method, the following S202 is performed.

In embodiments of the disclosure, at the encoding end, after the first combination is determined according to case 1, case 2, and case 3, the following step S202 is performed.

S202, the current-component block is predicted according to the first weight derivation mode and the $K$ first prediction modes, to obtain the prediction value of the current-component block.

It can be seen from S201 that, in embodiments of the disclosure, the first combination differs in contents. For example, in case 1, the first combination includes the first weight derivation mode and the $K$ first prediction modes, but does not include a blending parameter. In case 2, the first combination includes the first weight derivation mode, the $K$ first prediction modes, and the second blending parameter. In embodiments of the disclosure, with regard to different contents in the first combination, methods for determining the prediction value of the current-component block are different accordingly. In case 3, the first combination includes the first weight derivation mode and the $K$ first prediction modes, where the first weight derivation mode includes the third blending parameter. In embodiments of the disclosure, the method for determining the prediction value of the current-component block varies with contents in the first combination.

Case 1: if the first combination includes the first weight derivation mode and the $K$ first prediction modes, but does not include a blending parameter, the calculation process in S202 includes the following two sub-cases.

Case 11: weights of prediction values of the current-component block are determined according to the first weight derivation mode. The current-component block is predicted according to the $K$ first prediction modes to obtain $K$ prediction values of the current-component block. The $K$ prediction values of the current-component block are weighted by using the weights of the prediction values of the current-component block to obtain the prediction value of the current-component block. For the process of deriving the weights of the prediction values of the current-component block according to the first weight derivation mode, reference can be made to the process of deriving the weights of the prediction values of the current block in the foregoing embodiments, which is not described again herein.

In the above case 11, the influence of a blending parameter on the weights is not taken into consideration when determining the weights of the prediction values of the current-component block.

In some embodiments, if the first combination includes the first weight derivation mode and the $K$ first prediction modes, but does not include a blending parameter, the method further includes the following case 22.

Case 22, although the first combination does not include a blending parameter, the influence of the blending parameter is taken into consideration when determining the prediction value of the current-component block. In this case, step S202 includes the following steps S202-A1 and S202-A2.

S202-A1, a first blending parameter is determined.

S202-A2, the current-component block is predicted according to the first blending parameter, the first weight derivation mode, and the $K$ first prediction modes, to obtain the prediction value of the current-component block.

The implementation of S202-A2 is not limited in embodiments of the disclosure. For example, prediction is performed on the current-component block according to the first weight derivation mode and the $K$ first prediction modes to obtain a prediction value, and then the prediction value of the current-component block is determined according to the first blending parameter and the prediction value.

In some embodiments, S202-A2 includes the following steps.

S202-A21, weights of prediction values are determined according to the first blending parameter and the first weight derivation mode.

S202-A22, prediction is performed on the current-component block according to the $K$ first prediction modes, to obtain $K$ prediction values.

S202-A23, the $K$ prediction values are weighted according to the weights of the prediction values, to obtain the prediction value of the current-component block.

There is no limitation on the execution order between S202-A22 and S202-A21, that is, S202-A22 can be executed before S202-A21, or can be executed after S202-A21, or can be executed in parallel with S202-A21.

In the above case 1, if the first combination includes the first weight derivation mode and the $K$ first prediction modes but does not include a blending parameter, the first blending parameter is determined, and the weights of the prediction values are determined according to the first blending parameter and the first weight derivation mode. Then, the current-component block is predicted according to the $K$ first prediction modes, so as to obtain the $K$ prediction values of the current-component block. Then, the K prediction values of the current-component block are weighted by using the weights of the prediction values, so as to obtain the prediction value of the current-component block.

In some embodiments, one blending parameter in multiple preset blending parameters is determined as the first blending parameter.

In some embodiments, a candidate blending parameter list is determined, where the candidate blending parameter list includes multiple candidate blending parameters, and one candidate blending parameter in the candidate blending parameter list is determined as the first blending parameter.

In some embodiments, for a candidate blending parameter in the candidate blending parameter list, a cost corresponding to the candidate blending parameter is determined. According to a cost corresponding to each candidate blending parameter in the candidate blending parameter list, a candidate blending parameter is selected from the candidate blending parameter list and taken as the first blending parameter.

In some embodiments, the cost corresponding to the candidate blending parameter is determined as follows. Weights for the first-component block are determined according to the candidate blending parameter and the first weight derivation mode. The first-component block is predicted according to the $K$ first prediction modes, so as to obtain $K$ prediction values of the first-component block. The $K$ prediction values of the first-component block are weighted according to the weights for the first-component block, so as to obtain a prediction value of the first-component block. The cost corresponding to the candidate blending parameter is determined according to the prediction value of the first-component block and the reconstructed value of the first-component block.

In some embodiments, the weights for the first-component block are determined according to the candidate blending parameter and the first weight derivation mode as follows. A weight for the first-component block is determined according to the first weight derivation mode. The weight for the first-component block is adjusted by using the candidate blending parameter, so as to obtain the weights for the first-component block.

In some embodiments, a candidate blending parameter is selected from the candidate blending parameter list and taken as the first blending parameter according to the cost corresponding to each candidate blending parameter in the candidate blending parameter list as follows. A candidate blending parameter with the minimum cost in the candidate blending parameter list is determined as the first blending parameter.

In some embodiments, after the first blending parameter is determined according to the above method, a second index is signalled into a bitstream, where the second index indicates the first blending parameter, so that the first blending parameter can be determined quickly at the decoding end.

In some embodiments, at the encoding end, the first blending parameter can also be determined in the following manner 2.

Manner 2: the first blending parameter is determined according to steps S202-A11 and S202-A12 below.

S202-A11, $G$ alternative blending parameters are determined, where $G$ is a positive integer.

S202-A12, the first blending parameter is determined from the $G$ alternative blending parameters.

The manner for determining the $G$ alternative blending parameters at the encoding end is not limited in embodiments of the disclosure.

In a possible implementation, the $G$ alternative blending parameters are pre-set, that is, it is agreed between the decoding end and the encoding end that several preset blending parameters are determined as the $G$ alternative blending parameters.

In another possible implementation, the $G$ alternative blending parameters are determined according to the size of the current-component block.

Exemplarily, the block size can be represented by the length, the width, or the number of samples in the block.

In another possible implementation, picture information of the current-component block is determined; and the $G$ alternative blending parameters are determined from the multiple preset alternative blending parameters according to the picture information of the current-component block.

Exemplarily, if the picture information includes the definition of a picture edge, there are the following two manners for determining the $G$ alternative blending parameters from the multiple preset alternative blending parameters according to the picture information of the current-component block.

In a first manner, if the definition of the picture edge of the current-component block is less than a preset value, at least one first alternative blending parameter, for example, 1/4, 1/2, among the multiple preset alternative blending parameters is determined as the $G$ alternative blending parameters.

In a second manner, if the definition of the picture edge of the current-component block is greater than or equal to the preset value, at least one second alternative blending parameter, such as 2 and 4, among the multiple preset alternative blending parameters is determined as the $G$ alternative blending parameters, where the second alternative blending parameter is greater than the first alternative blending parameter.

At the encoding end, after the $G$ alternative blending parameters are determined, the first blending parameter is determined from the $G$ alternative blending parameters.

The manner for determining the first blending parameter from the $G$ alternative blending parameters is not limited in embodiment of the disclosure.

In some embodiments, any one of the $G$ alternative blending parameters is determined as the first blending parameter.

In some embodiments, the first blending parameter is determined from the $G$ alternative blending parameters according to the following steps S202-A121 and S202-A122.

S202-A121, for a $g^{th}$ alternative blending parameter in the $G$ alternative blending parameters, a cost corresponding to the $g^{th}$ alternative blending parameter is determined, where $g$ is a positive integer and $1 \leq g \leq G$.

S202-A122, the first blending parameter is determined from the $G$ alternative blending parameters according to costs corresponding to the $G$ alternative blending parameters.

In embodiments, a cost corresponding to each of the $G$ alternative blending parameters is determined, and then the first blending parameter is determined from the $G$ alternative blending parameters according to the cost.

In embodiments of the disclosure, the manner for determining the cost corresponding to each of the $G$ alternative blending parameters is the same. For ease of illustration, the $g^{th}$ alternative blending parameter is taken as an example for illustration.

The manner for determining the cost corresponding to the $g^{th}$ alternative blending parameter is not limited in embodiments of the disclosure.

In another possible implementation, the first weight derivation mode, the $g^{th}$ alternative blending parameter, and the $K$ first prediction modes are used as one combination, and a cost when predicting the first-component block by using the combination is determined. Exemplarily, S202-A121 include the following steps.

S202-A1211, weights for the first-component block corresponding to the current-component block are determined according to the first weight derivation mode and the $g^{th}$ alternative blending parameter.

S202-A1212, the first-component block is predicted according to the $K$ first prediction modes, to obtain $K$ prediction values of the first-component block.

S202-A1213, the $K$ prediction values of the first-component block are weighted according to the weights for the first-component block, to obtain a prediction value of the first-component block.

S202-A1214, the cost corresponding to the $g^{th}$ alternative blending parameter is determined according to the prediction value of the first-component block.

For the process of determining the weights for the first-component block corresponding to the current-component block according to the first weight derivation mode and the $g^{th}$ alternative blending parameter in S202-A1211, reference can be made to the elaborations of the foregoing embodiments.

For example, a first weight corresponding to the first-component block is determined according to the first weight derivation mode and the first-component block; the first weight is adjusted by using the $g^{th}$ alternative blending parameter, so as to obtain an adjusted first weight; the weights for the first-component block are determined according to the adjusted first weight.

According to the foregoing method, the cost corresponding to each of the $G$ alternative blending parameters can be determined, and then the first blending parameter is determined from the $G$ alternative blending parameters according to the cost.

For example, an alternative blending parameter with the minimum cost among the $G$ alternative blending parameters is determined as the first blending parameter.

In some embodiments, the first blending parameter is determined according to the size of the current-component block.

It can be seen from the above that, there is a certain correlation between the blending parameter and the block size, and therefore, in embodiments of the disclosure, the first blending parameter can also be determined according to the size of the current-component block.

In a possible implementation, a fixed blending parameter is determined as the first blending parameter according to the size of the current-component block.

For example, if the size of the current-component block is less than a first preset threshold, the first blending parameter is determined to be a first value.

For another example, if the size of the current-component block is greater than or equal to the first preset threshold, the first blending parameter is determined to be a second value, where the second value is less than the first value.

In another possible implementation, a value range of the first blending parameter is determined according to the size of the current-component block, and then the first blending parameter is determined to be a value within the value range.

For example, if the size of the current-component block is less than a first preset threshold, it is determined that the first blending parameter falls within the value range of the first blending parameter. For example, the first blending parameter is any one blending parameter, such as a minimum blending parameter, a maximum blending parameter, or an intermediate blending parameter, within the value range of the first blending parameter. For another example, the first blending parameter is a blending parameter with the minimum cost within the value range of the first blending parameter. For the method for determining a cost of a blending parameter, reference can be made to the illustration in other embodiments of the disclosure, which is not described again herein.

For another example, if the size of the current-component block is greater than or equal to the first preset threshold, it is determined that the first blending parameter falls within a value range of a second blending parameter. For example, the first blending parameter is any one blending parameter, such as a minimum blending parameter, a maximum blending parameter, or an intermediate blending parameter, within the value range of the second blending parameter. For another example, the first blending parameter is a blending parameter with the minimum cost within the value range of the second blending parameter. The minimum value in the value range of the second blending parameter is less than the minimum value in the value range of the first blending parameter, and the value range of the first blending parameter may or may not overlap with the value range of the second blending parameter, which is not limited in embodiments of the disclosure.

In the above case 1, after the first blending parameter is determined according to the foregoing steps, the foregoing step S202-A21 is performed to determine the weights of the prediction values according to the first blending parameter and the first weight derivation mode.

In embodiments of the disclosure, the manner for determining the weights of the prediction values according to the first blending parameter and the first weight derivation mode at least includes the manners described in following examples.

Example 1, when deriving the weights of the prediction values by using the first weight derivation mode, multiple intermediate variables need to be determined, and one or some of the multiple intermediate variables can be adjusted by using the first blending parameter. Then the weights of the prediction values are derived by using the adjusted variables.

Example 2, a second weight corresponding to the current-component block is determined according to the first weight derivation mode and the current-component block. The second weight is adjusted by using the first blending parameter to obtain an adjusted second weight. The weights of the prediction values are determined according to the adjusted second weight.

Then, prediction is performed on the current-component block according to the $K$ first prediction modes, so as to obtain $K$ prediction values; and the $K$ prediction values are weighted according to the weights of the prediction values, so as to obtain the prediction value of the current-component block.

The above has introduced the process of determining the prediction value of the current-component block corresponding to case 1 in which the first combination includes the first weight derivation mode and the $K$ first prediction modes but does not include a blending parameter.

The following will introduce the process of determining the prediction value of the current-component block corresponding to case 2.

In case 2, if the first combination includes the first weight derivation mode, the $K$ first prediction modes, and the second blending parameter, the foregoing step S202 includes the following. The current-component block is predicted according to the second blending parameter, the first weight derivation mode, and the $K$ first prediction modes, to obtain the prediction value of the current-component block.

In embodiments of the disclosure, there is no limitation on the manner for predicting the current-component block according to the second blending parameter, the first weight derivation mode, and the $K$ first prediction modes to obtain the prediction value of the current-component block. For example, prediction is performed on the current-component block according to the first weight derivation mode and the $K$ first prediction modes, to obtain a prediction value, and then the prediction value of the current-component block is determined according to the second blending parameter and the prediction value.

In some embodiments, the prediction value of the current-component block can be determined through the following steps S202-B1 to S202-B4.

S202-B1, weights of prediction values are determined according to the first weight derivation mode and the second blending parameter.

S202-B2, $K$ prediction values are determined according to the $K$ first prediction modes.

S202-B3, prediction is performed on the current-component block according to the $K$ first prediction modes, to obtain $K$ prediction values.

S202-B4, the $K$ prediction values are weighted according to weights of the $K$ prediction values, to obtain the prediction value of the current-component block.

There is no limitation on the execution order between S202-B1 and S202-B2, that is, S202-B1 can be performed before S202-B2, or can be performed after S202-B2, or can be performed in parallel with S202-B2.

In the above case 2, if the first combination includes the first weight derivation mode, the $K$ first prediction modes, and the second blending parameter, at the encoding end, the weights of the prediction values are determined according to the second blending parameter and the first weight derivation mode. The current-component block is predicted according to the $K$ first prediction modes, so as to obtain $K$ prediction values of the current-component block. Then, the $K$ prediction values of the current-component block are weighted by using the weights of the prediction values, so as to obtain the prediction value of the current-component block.

In embodiments of the disclosure, the manner for determining the weights of the prediction values according to the second blending parameter and the first weight derivation mode includes at least the manners described in the examples below.

Example 1, when deriving the weights of the prediction values by using the first weight derivation mode, multiple intermediate variables need to be determined, and one or some of the multiple intermediate variables can be adjusted by using the second blending parameter. Then the weights of the prediction values are derived by using the adjusted variables.

Example 2, a fourth weight corresponding to the current-component block is determined according to the first weight derivation mode and the current-component block. The fourth weight is adjusted by using the second blending parameter to obtain an adjusted fourth weight. The weights of the prediction values are determined according to the adjusted fourth weight.

According to the foregoing method, the weights of the prediction values can be determined according to the second blending parameter and the first weight derivation mode.

Then, prediction is performed on the current-component block according to the $K$ first prediction modes, so as to obtain $K$ prediction values; and the $K$ prediction values are weighted according to the weights of the prediction values, so as to obtain the prediction value of the current-component block.

The above has introduced the process of determining the prediction value of the current-component block corresponding to case 2 in which the first combination includes the first weight derivation mode, the *K* first prediction modes, and one blending parameter.

The following describes the process of determining the prediction value of the current-component block corresponding to case 3.

In case 3, if the first combination includes the first weight derivation mode and the *K* first prediction modes, and the first weight derivation mode includes the third blending parameter, the foregoing S202 includes the following. The current-component block is predicted according to the third blending parameter and the *K* first prediction modes, to obtain the prediction value of the current-component block.

In embodiments of the disclosure, there is no limitation on the implementation of predicting the current-component block by using the third blending parameter and the K first prediction modes to obtain the prediction value of the current-component block. For example, if the first weight derivation mode further includes other parameters, prediction is performed on the current-component block according to other parameters in the first weight derivation mode and the *K* first prediction modes, to obtain a prediction value; and then the prediction value of the current-component block is determined according to the third blending parameter and the prediction value.

In some embodiments, the prediction value of the current-component block can be determined through the following steps S202-C1 to S202-C4.

S202-C1, weights of prediction values are determined according to the first weight derivation mode.

S202-C2, *K* prediction values are determined according to the *K* first prediction modes.

S202-C3, prediction is performed on the current-component block according to the *K* first prediction modes, to obtain *K* prediction values.

S202-C4, the *K* prediction values are weighted according to weights of the *K* prediction values, to obtain the prediction value of the current-component block.

There is no limitation on the execution order between S202-C1 and S202-C2, that is, S202-C1 can be performed before S202-C2, or can be performed after S202-C2, or can be performed in parallel with S202-C2.

In the above case 3, if the first combination includes the first weight derivation mode and the *K* first prediction modes, at the encoding end, the weights of the prediction values are determined according to the first weight derivation mode. The current-component block is predicted according to the *K* first prediction modes, so as to obtain *K* prediction values of the current-component block. Then, the *K* prediction values of the current-component block are weighted by using the weights of the prediction values, so as to obtain the prediction value of the current-component block.

In embodiments of the disclosure, there is no limitation on the manner for determining the weights of the prediction values according to the first weight derivation mode. For example, an angle index, a distance index, and the third blending parameter are determined according to the first weight derivation mode, and the weights of the prediction values are determined according to the angle index, the distance index, the third blending parameter, and the size of a current-component block.

Then, prediction is performed on the current-component block according to the *K* first prediction modes, so as to obtain *K* prediction values; and *the K* prediction values are weighted according to the weights of the prediction values, so as to obtain the prediction value of the current-component block.

In embodiments of the disclosure, the prediction value of the current-component block can be determined according to any one of the foregoing case 1, case 2, and case 3.

Then, at the encoding end, a bitstream is obtained according to the prediction value of the current-component block.

Specifically, after the prediction value of the current-component block is determined according to the foregoing steps, a residual value of the current-component block is obtained according to the current-component block and the prediction value of the current-component block, the residual value of the current-component block is transformed to obtain a transformation coefficient, the transformation coefficient is quantized to obtain a quantization coefficient, and the quantization coefficient is encoded to obtain the bitstream.

In some embodiments, the candidate combination list includes one candidate combination, and at the encoding end, the candidate combination in the candidate combination list can be determined as the first combination. In this case, at the encoding end, skip signalling the first index into the bitstream, where the first index indicates the first combination.

In some embodiments, the candidate combination list includes multiple candidate combinations. In order to ensure consistency between the encoding and the decodign end, at the encoding end, the first combination is indicated to the decoding end by means of the first index, i. e. at the encoding end, the first index is signalled into the bitstream. In this way, at the decoding end, the first index is obtained by decoding the bitstream, then the first combination is determined from the candidate combination list according to the first index, and then prediction is performed on the current-component block by using the first weight derivation mode and the *K* first prediction modes in the first combination, so as to obtain the prediction value of the current-component block.

In some embodiments, at the encoding end, at least one flag is determined, and whether to determine the first combination is determined according to the at least one flag.

Optionally, the at least one flag includes at least one of: a sequence-level flag, a picture-level flag, a slice-level flag, a unit-level flag, or a block-level flag.

For example, the at least one flag includes a sequence-level flag, and the sequence-level flag indicates whether the combination-based encoding technical solution provided in embodiments of the disclosure is enabled for a current sequence.

In some embodiments, if the at least one flag includes a block-level flag, at the encoding end, if it is determined that the size of the current-component block satisfies a preset condition, the block-level flag is determined. In embodiments of the disclosure, no limitation is imposed on the preset condition above.

In some embodiments, the first combination is determined if it is determined that a first technology is not applied for encoding of the current-component block.

In the video encoding method provided in embodiments of the disclosure, at the encoding end, the first combination is determined, where the first combination includes the first weight derivation mode and the $K$ first prediction modes, and $K$ is a positive integer and $K > 1$; the current-component block is predicted according to the first weight derivation mode and the $K$ first prediction modes, to obtain the prediction value of the current-component block; and the bitstream is obtained according to the prediction value of the current-component block. In the disclosure, the first weight derivation mode and the $K$ first prediction modes are taken as a combination, so that the first weight derivation mode and the $K$ first prediction modes are indicated in the form of combination. In this way, there is no need to transmit separately syntax corresponding to the $K$ first prediction modes and syntax corresponding to the first weight derivation mode in the bitstream, which can save codewords, thereby improving encoding efficiency. In addition, in embodiments of the disclosure, even if the current-component block corresponds to multiple first-component CUs and prediction modes for the multiple first-component CUs are not completely the same, the first weight derivation mode and the $K$ first prediction modes in the first combination can still be determined accurately, thereby realizing accurate prediction of the current-component block by using the first weight derivation mode and the $K$ first prediction modes. In some embodiments, weights of prediction values are adjusted by using the first blending parameter or the second blending parameter in embodiments of the disclosure, and prediction is performed by using the adjusted weights of the prediction values, thereby improving accuracy of prediction.

It should be understood that, FIG. 16 to FIG. 20 are merely examples of the disclosure, and should not be construed as limitations on the disclosure.

Preferable implementations of the disclosure have been described in detail above with reference to the accompanying drawings. However, the disclosure is not limited to the details described in the foregoing implementations. Within the scope of the technical concept of the disclosure, various simple modifications can be made to the technical solutions of the disclosure, and these simple modifications all fall within the protection scope of the disclosure. For example, various technical features described in the foregoing implementations may be combined in any suitable manner without contradiction, and in order to avoid unnecessary redundancy, various possible combinations are not further described in the disclosure. For another example, various implementations of the disclosure may also be combined in any manner, and as long as the combinations do not depart from the idea of the disclosure, they should also be considered as contents disclosed in the disclosure.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation on the implementation of embodiments of the disclosure. In addition, the term "and/or" herein only describes an association between associated objects, which means that there can be three relationships. Specifically, $A$ and/or $B$ can mean $A$ alone, both $A$ and $B$ exist, and B alone. Besides, the character "/" herein generally indicates that the associated objects are in an "or" relationship.

The method embodiments of the disclosure are described in detail above with reference to FIG. 16 to FIG. 20, and the apparatus embodiments of the disclosure are described in detail below with reference to FIG. 21 to FIG. 23.

FIG. 21 is a schematic block diagram of a video decoding apparatus provided in an embodiment of the disclosure. The video decoding apparatus 10 is applied to the foregoing video decoder.

As illustrated in FIG. 21, the video decoding apparatus 10 includes a decoding unit 11 and a prediction unit 12. The decoding unit 11 is configured to decode a bitstream to determine a first combination, where the first combination includes a first weight derivation mode and $K$ first prediction modes, and $K$ is a positive integer and $K > 1$. The prediction unit 12 configured to predict a current-component block according to the first weight derivation mode and the $K$ first prediction modes, to obtain a prediction value of the current-component block, where the current-component block includes a second-component block or a third-component block.

In some embodiments, the decoding unit 11 is specifically configured to: decode the bitstream to determine a candidate combination list, where the candidate combination list includes at least one candidate combination, and any one of the at least one candidate combination includes one weight derivation mode and $K$ prediction modes; and determine the first combination according to the candidate combination list.

In some embodiments, the candidate combination list includes one candidate combination, and the decoding unit 11 is specifically configured to determine the candidate combination in the candidate combination list as the first combination.

In some embodiments, the candidate combination list includes multiple candidate combinations, and the decoding unit 11 is specifically configured to: decode the bitstream to obtain a first index, where the first index indicates the first combination; and determine a candidate combination corresponding to the first index in the candidate combination list as the first combination.

In some embodiments, the decoding unit 11 is specifically configured to decode the bitstream to determine a first-component block corresponding to the current-component block; and construct the candidate combination list based on the first-component block.

In some embodiments, the first-component block is a luma block in a current picture which is in the same space as the current-component block.

In some embodiments, the decoding unit 11 is specifically configured to: determine $R$ second combinations, where any one of the $R$ second combinations includes one weight derivation mode and $K$ prediction modes, and $R$ is a positive integer and $R > 1$; for any one of the $R$ second combinations, determine a cost corresponding to the second combination when predicting the first-component block by using the second combination; and construct the candidate combination list according to a cost corresponding to each of the $R$ second combinations.

In some embodiments, the decoding unit 11 is specifically configured to: determine weights for the first-component block according to the weight derivation mode in the second combination; predict the first-component block according to the $K$ prediction modes in the second combination to obtain $K$ prediction values of the first-component block; weight the $K$ prediction values of the first-component block according to the weights for the first-component block, to obtain a prediction value of the first-component block corresponding to the second combination; and determine the cost corresponding to the second combination according to the prediction value of the first-component block corresponding to the second combination and a reconstructed value of the first-component block.

In some embodiments, the decoding unit 11 is specifically configured to: determine, according to the weight derivation mode in the second combination, prediction values of the first-component block corresponding to the $K$ prediction modes in the second combination; determine costs corresponding to the $K$ prediction modes in the second combination according to the prediction values of the first-component block corresponding to *the K* prediction modes in the second combination and a reconstructed value of the first-component block; and determine the cost corresponding to the second combination according to the costs corresponding to the $K$ prediction modes in the second combination.

In some embodiments, the decoding unit 11 is specifically configured to: determine a sum of the costs corresponding to the $K$ prediction modes in the second combination as the cost corresponding to the second combination.

In some embodiments, the decoding unit 11 is specifically configured to: determine $P$ weight derivation modes and $Q$ prediction modes, where $P$ is a positive integer, and $Q$ is a positive integer and $Q \geq K;$ and construct the $R$ second combinations according to the $P$ weight derivation modes and the $Q$ prediction modes, where any one of the $R$ second combinations includes one of the $P$ weight derivation modes and $K$ prediction modes in the $Q$ prediction modes.

In some embodiments, the decoding unit 11 is specifically configured to: determine at least one of a candidate prediction mode list of the current-component block, alternative prediction mode lists corresponding to the $K$ first prediction modes, a prediction mode corresponding to the weight derivation mode, or a preset mode, where the candidate prediction mode list includes multiple candidate prediction modes, and an alternative prediction mode list corresponding to any one of the $K$ first prediction modes includes at least one alternative prediction mode; and determine the $Q$ prediction modes according to at least one of the candidate prediction mode list, the alternative prediction mode lists corresponding to the $K$ first prediction modes, or the prediction mode corresponding to the weight derivation mode.

In some embodiments, the decoding unit 11 is specifically configured to: determine at least one of a second prediction mode, a third prediction mode, a fourth prediction mode, or a fifth prediction mode, where the second prediction mode is applied to at least one of a first-component block, a second-component block, or a third-component block which is at a preset location; the third prediction mode is applied to at least one a first-component block, a second-component block, or a third-component block which has been decoded and neighbours the current-component block; the fourth prediction mode is applied to a first-component block corresponding to an internal preset region of the current-component block; and the fifth prediction mode is related to the first-component block corresponding to the current-component block; and determine the candidate prediction mode list of the current-component block according to at least one of the second prediction mode, the third prediction mode, the fourth prediction mode, or the fifth prediction mode.

In some embodiments, the decoding unit 11 is specifically configured to: determine a texture direction of the first-component block; and determine the fifth prediction mode according to the texture direction.

In some embodiments, the decoding unit 11 is specifically configured to: determine a prediction mode having a prediction direction parallel to the texture direction as the fifth prediction mode; and/or determine a prediction mode having a prediction direction perpendicular to the texture direction as the fifth prediction mode.

In some embodiments, the decoding unit 11 is specifically configured to: select multiple texture samples from the first-component block according to a preset manner for texture sample selection; determine texture directions corresponding to the multiple texture samples; and determine one or more of the texture directions corresponding to the multiple texture samples as the texture direction of the first-component block.

In some embodiments, the decoding unit 11 is specifically configured to: determine the most frequently appeared one or more of the texture directions corresponding to the multiple texture samples as the texture direction of the first-component block.

In some embodiments, the decoding unit 11 is specifically configured to: select the $P$ weight derivation modes from $M$ preset weight derivation modes, where $M$ is a positive integer and $M \geq P$.

In some embodiments, the prediction unit 12 is specifically configured to: determine a first blending parameter; and predict the current-component block according to the first blending parameter, the first weight derivation mode, and the $K$ first prediction modes, to obtain the prediction value of the current-component block.

In some embodiments, the prediction unit 12 is specifically configured to: determine weights of prediction values according to the first blending parameter and the first weight derivation mode; predict the current-component block according to the $K$ first prediction modes to obtain $K$ prediction values; and weight the $K$ prediction values according to weights of the prediction values, to obtain the prediction value of the current-component block.

In some embodiments, the first combination includes a second blending parameter, and the prediction unit 12 is specifically configured to predict the current-component block according to the second blending parameter, the first weight derivation mode, and the $K$ first prediction modes, to obtain the prediction value of the current-component block.

In some embodiments, the prediction unit 12 is specifically configured to: determine weights of prediction values according to the second blending parameter and the first weight derivation mode; predict the current-component block according to the $K$ first prediction modes to obtain $K$ prediction values; and weight the $K$ prediction values according to the weights of the prediction values, to obtain the prediction value of the current-component block.

In some embodiments, the first weight derivation mode includes a third blending parameter, and the prediction unit 12 is specifically configured to predict the current-component block according to the third blending parameter and the $K$ first prediction modes, to obtain the prediction value of the current-component block.

In some embodiments, the prediction unit 12 is specifically configured to: determine weights of prediction values according to the third blending parameter; predict the current-component block according to the $K$ first prediction modes to obtain $K$ prediction values; and weight the $K$ prediction values according to the weights of the prediction values, to obtain the prediction value of the current-component block.

In some embodiments, the decoding unit 11 is further configured to decode the bitstream to obtain at least one flag, where the at least one flag indicates whether to use the first combination to decode the current-component block; and decode the bitstream to determine the first combination if the at least one flag indicates to use the first combination to decode the current-component block.

In some embodiments, the at least one flag includes at least one of a sequence-level flag, a picture-level flag, a slice-level flag, a unit-level flag, or a block-level flag.

It should be understood that, the apparatus embodiments and the method embodiments may correspond to each other, and for similar elaborations, reference can be made to the method embodiments, which will not be described again herein to avoid redundancy. Specifically, the apparatus 10 illustrated in FIG. 21 may perform the decoding method at the decoding end of embodiments of the disclosure, and the foregoing and other operations and/or functions of various units in the apparatus 10 are respectively intended to implement corresponding processes in various methods such as the foregoing decoding method at the decoding end, which are not described again herein for brevity.

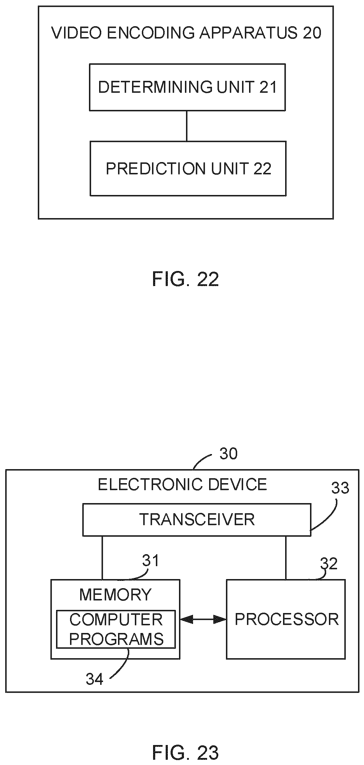

FIG. 22 is a schematic block diagram of a video encoding apparatus provided in an embodiment of the disclosure. The video encoding apparatus is applied to the foregoing encoder.

As illustrated in FIG. 22, the video encoding apparatus 20 can include a determining unit 21 and a prediction unit 22. The determining unit 21 is configured to determine a first combination, where the first combination includes a first weight derivation mode and K first prediction modes, and $K$ is a positive integer and $K > 1$. The prediction unit 22 is configured to predict a current-component block according to the first weight derivation mode and the $K$ first prediction modes, to obtain a prediction value of the current-component block, where the current-component block includes a second-component block or a third-component block.

In some embodiments, the determining unit 21 is specifically configured to: determine a candidate combination list, where the candidate combination list includes at least one candidate combination, and any one of the at least one candidate combination includes one weight derivation mode and $K$ prediction modes; and determine the first combination according to the candidate combination list.

In some embodiments, the prediction unit 22 is further configured to skip signalling a first index into a bitstream if the candidate combination list includes one candidate combination, where the first index indicates the first combination.

In some embodiments, the prediction unit 22 is further configured to signal a first index into the bitstream if the candidate combination list includes multiple candidate combinations, where the first index indicates the first combination.

In some embodiments, the determination unit 21 is specifically configured to determine a first-component block corresponding to the current-component block; and construct the candidate combination list based on the first-component block.

In some embodiments, the first-component block is a luma block in a current picture which is in the same space as the current-component block.

In some embodiments, the determination unit 21 is specifically configured to: determine $R$ second combinations, where any one of the $R$ second combinations includes one weight derivation mode and $K$ prediction modes, and $R$ is a positive integer and $R > 1$; for any one of the $R$ second combinations, determine a cost corresponding to the second combination when predicting the first-component block by using the second combination; and construct the candidate combination list according to a cost corresponding to each of the $R$ second combinations.

In some embodiments, the determining unit 21 is specifically configured to: determine weights for the first-component block according to the weight derivation mode in the second combination; predict the first-component block according to the $K$ prediction modes in the second combination to obtain $K$ prediction values of the first-component block; weight the $K$ prediction values of the first-component block according to the weights for the first-component block, to obtain a prediction value of the first-component block corresponding to the second combination; and determine the cost corresponding to the second combination according to the prediction value of the first-component block corresponding to the second combination and a reconstructed value of the first-component block.

In some embodiments, the determining unit 21 is specifically configured to: determine, according to the weight derivation mode in the second combination, prediction values of the first-component block corresponding to the $K$ prediction modes in the second combination; determine costs corresponding to the $K$ prediction modes in the second combination according to the prediction values of the first-component block corresponding to the $K$ prediction modes in the second combination and a reconstructed value of the first-component block; and determine the cost corresponding to the second combination according to the costs corresponding to the $K$ prediction modes in the second combination.

In some embodiments, the determining unit 21 is specifically configured to determine a sum of the costs corresponding to the $K$ prediction modes in the second combination as the cost corresponding to the second combination.

In some embodiments, the determining unit 21 is specifically configured to determine $P$ weight derivation modes and $Q$ prediction modes, where $P$ is a positive integer, and $Q$ is a positive integer and $Q \geq K$; and construct the $R$ second combinations according to the $P$ weight derivation modes and the $Q$ prediction modes, where any one of the $R$ second combinations includes one of the $P$ weight derivation modes and $K$ prediction modes in the $Q$ prediction modes.

In some embodiments, the determining unit 21 is specifically configured to: determine at least one of a candidate prediction mode list of the current-component block, alternative prediction mode lists corresponding to the $K$ first prediction modes, a prediction mode corresponding to the weight derivation mode, or a preset mode, where the candidate prediction mode list includes multiple candidate prediction modes, and an alternative prediction mode list corresponding to any one of the $K$ first prediction modes includes at least one alternative prediction mode; and determine the $Q$ prediction modes according to at least one of the candidate prediction mode list, the alternative prediction mode lists corresponding to the $K$ first prediction modes, or the prediction mode corresponding to the weight derivation mode.

In some embodiments, the determining unit 21 is specifically configured to: determine at least one of a second prediction mode, a third prediction mode, a fourth prediction mode, or a fifth prediction mode, where the second prediction mode is applied to at least one of a first-component block, a second-component block, or a third-component block which is at a preset location; the third prediction mode is applied to at least one a first-component block, a second-component block, or a third-component block which has been encoded and neighbours the current-component block; the fourth prediction mode is applied to a first-component block corresponding to an internal preset region of the current-component block; and the fifth prediction mode is related to the first-component block corresponding to the current-component block; and determine the candidate prediction mode list of the current-component block according to at least one of the second prediction mode, the third prediction mode, the fourth prediction mode, or the fifth prediction mode.

In some embodiments, the determining unit 21 is specifically configured to: determine a texture direction of the first-component block; and determine the fifth prediction mode according to the texture direction.

In some embodiments, the determining unit 21 is specifically configured to: determine a prediction mode that is parallel to an angle of the texture direction as the fifth prediction mode; and/or determine a prediction mode that is perpendicular to the angle of the texture direction as the fifth prediction mode.

In some embodiments, the determining unit 21 is specifically configured to: select multiple texture samples from the first-component block according to a preset manner for texture sample selection; determine texture directions corresponding to the multiple texture samples; and determine one or more of the texture directions corresponding to the multiple texture samples as the texture direction of the first-component block.

In some embodiments, the determining unit 21 is specifically configured to: determine the most frequently appeared one or more of the texture directions corresponding to the multiple texture samples as the texture direction of the first-component block.

In some embodiments, the determining unit 21 is specifically configured to: select the $P$ weight derivation modes from $M$ preset weight derivation modes, where $M$ is a positive integer and $M \geq P$.

In some embodiments, the determining unit 21 is specifically configured to: determine a first blending parameter; and predict the current-component block according to the first blending parameter, the first weight derivation mode, and the $K$ first prediction modes, to obtain the prediction value of the current-component block.

In some embodiments, the determining unit 21 is specifically configured to: determine weights of prediction values according to the first blending parameter and the first weight derivation mode; predict the current-component block according to the $K$ first prediction modes to obtain $K$ prediction values; and weight the $K$ prediction values according to weights of the prediction values, to obtain the prediction value of the current-component block.

In some embodiments, the first combination includes a second blending parameter, and the determining unit 21 is specifically configured to predict the current-component block according to the second blending parameter, the first weight derivation mode, and the $K$ first prediction modes, to obtain the prediction value of the current-component block.

In some embodiments, the determining unit 21 is specifically configured to determine weights of prediction values according to the second blending parameter and the first weight derivation mode; predict the current-component block according to the $K$ first prediction modes to obtain $K$ prediction values; and weight the $K$ prediction values according to the weights of the prediction values, to obtain the prediction value of the current-component block.

In some embodiments, the first weight derivation mode includes a third blending parameter, and in some embodiments, the determining unit 21 is specifically configured to predict the current-component block according to the third blending parameter and the $K$ first prediction modes, to obtain the prediction value of the current-component block.

In some embodiments, the determining unit 21 is specifically configured to: determine weights of prediction values according to the third blending parameter; predict the current-component block according to the $K$ first prediction modes to obtain $K$ prediction values; and weight the $K$ prediction values according to the weights of the prediction values, to obtain the prediction value of the current-component block.

In some embodiments, the determining unit 21 is further configured to determine at least one flag, where the at least one flag indicates whether to use the first combination to decode the current-component block; and determine the first combination if the at least one flag indicates to use the first combination to decode the current-component block.

In some embodiments, the at least one flag includes at least one of a sequence-level flag, a picture-level flag, a slice-level flag, a unit-level flag, or a block-level flag.

It should be understood that, the apparatus embodiments and the method embodiments may correspond to each other, and for similar elaborations, reference can be made to the method embodiments, which will not be described again herein to avoid redundancy. Specifically, the apparatus 20 illustrated in FIG. 22 may correspond to a corresponding entity for performing the encoding method at the encoding end according to embodiments of the disclosure. The foregoing and other operations and/or functions of various units in the apparatus 20 are respectively intended to implement corresponding processes in various methods such as the encoding method at the encoding end, which are not described again herein for brevity.

The apparatus and system of embodiments of the disclosure are described above from the perspective of functional units with reference to the accompanying drawings. It should be understood that, the functional unit may be implemented in the form of hardware, or may be implemented by an instruction in the form of software, or may be implemented by a combination of hardware and software unit. Specifically, each step of the method embodiments of the disclosure may be completed by an integrated logic circuit of hardware in a processor and/or an instruction in the form of software. The steps of the method disclosed in embodiments of the disclosure may be directly implemented by a hardware decoding processor, or may be performed by hardware and software units in the decoding processor. Optionally, the software unit may be located in a storage medium such as a random access memory (RAM), a flash memory, a read only memory (ROM), a programmable ROM (PROM), or an electrically erasable programmable memory, registers, and the like. The storage medium is located in a memory. The processor reads the information in the memory, and completes the steps of the foregoing method embodiments with the hardware of the processor.

FIG. 23 is a schematic block diagram of an electronic device provided in embodiments of the disclosure.

As illustrated in FIG. 23, the electronic device 30 may be a video encoder or a video decoder according to embodiments of the disclosure. The electronic device 30 may include a memory 33 and a processor 32. The memory 33 is configured to store computer programs 34 and transmit the program codes 34 to the processor 32. In other words, the processor 32 may invoke the computer programs 34 from the memory 33 to implement the method in embodiments of the disclosure.

For example, the processor 32 may be configured to perform the steps in the method 200 described above according to instructions in the computer programs 34.

In some embodiments of the disclosure, the processor 32 may include, but is not limited to: a general-purpose processor, a digital signal processor (DSP), an application specific integrated circuit (ASIC), a field programmable gate array (FPGA), or other programmable logic devices, discrete gates or transistor logic devices, discrete hardware components, etc.

In some embodiments of the disclosure, the memory 33 includes, but is not limited to: a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

In some embodiments of the disclosure, the computer programs 34 may be divided into one or more units, and the one or more units are stored in the memory 33 and executed by the processor 32 to complete the method provided in the disclosure. The one or more units may be a series of computer program instruction segments capable of performing a particular function, where the instruction segments describe the execution of the computer programs 34 in the electronic device 30.

As illustrated in FIG. 23, the electronic device 30 can further include a transceiver 33. The transceiver 33 can be connected to the processor 32 or to the memory 33.

The processor 32 can control the transceiver 33 to communicate with other devices, and specifically, can send information or data to other devices, or receive information or data sent by other devices. The transceiver 33 may further include an antenna, where one or more antennas may be provided.

It should be understood that, various components in the electronic device 30 are connected via a bus system. In addition to a data bus, the bus system further includes a power bus, a control bus, and a status signal bus.

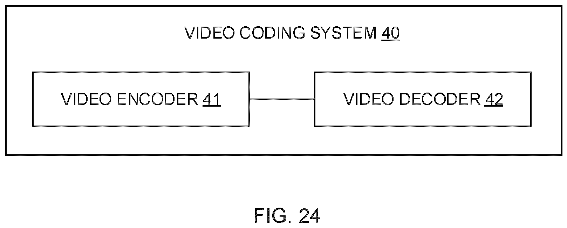

FIG. 24 is a schematic block diagram of a video coding system provided in embodiments of the disclosure.

As illustrated in FIG. 24, the video coding system 40 may include a video encoder 41 and a video decoder 42. The video encoder 41 is configured to perform the video encoding method in embodiments of the disclosure, and the video decoder 42 is configured to perform the video decoding method in embodiments of the disclosure.

The disclosure further provides a computer storage medium. The computer storage medium is configured to store computer programs. The computer programs, when executed by a computer, are operable with the computer to perform the method in the foregoing method embodiments. Alternatively, embodiments of the disclosure further provide a computer program product. The computer program product includes instructions which, when executed by a computer, are operable with the computer to perform the method in the foregoing method embodiments.

The disclosure further provides a bitstream. The bitstream is generated according to the encoding method.

When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure. For example, various functional units described in various embodiments of the disclosure may be integrated into one processing unit or may be present as a number of physically separated units, and two or more units may be integrated into one.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A video decoding method, comprising:

    decoding a bitstream to determine a first combination, wherein the first combination comprises a first weight derivation mode and $K$ first prediction modes, and $K$ is a positive integer and $K > 1$; and
    predicting a current-component block according to the first weight derivation mode and the $K$ first prediction modes, to obtain a prediction value of the current-component block, wherein the current-component block comprises a second-component block or a third-component block.

2. The method of claim 1, wherein decoding the bitstream to determine the first combination comprises:

    decoding the bitstream to determine a candidate combination list, wherein the candidate combination list comprises at least one candidate combination, and any one of the at least one candidate combination comprises one weight derivation mode and $K$ prediction modes; and
    determining the first combination according to the candidate combination list.

3. The method of claim 2, wherein the candidate combination list comprises one candidate combination, and determining the first combination according to the candidate combination list comprises:
    determining the candidate combination in the candidate combination list as the first combination.

4. The method of claim 2, wherein the candidate combination list comprises a plurality of candidate combinations, and determining the first combination according to the candidate combination comprises:

    decoding the bitstream to obtain a first index, wherein the first index indicates the first combination; and
    determining a candidate combination corresponding to the first index in the candidate combination list as the first combination.

5. The method of any of claims 2 to 4, wherein decoding the bitstream to determine the candidate combination list comprises:

    decoding the bitstream to determine a first-component block corresponding to the current-component block; and
    constructing the candidate combination list based on the first-component block.

6. The method of claim 5, wherein the first-component block is a first-component block in a current picture which is in the same space as the current-component block.

7. The method of claim 5, wherein constructing the candidate combination list based on the first-component block comprises:

    determining $R$ second combinations, wherein any one of the $R$ second combinations comprises one weight derivation mode and $K$ prediction modes, and $R$ is a positive integer and $R > 1$;
    for any one of the $R$ second combinations, determining a cost corresponding to the second combination when predicting the first-component block by using the second combination; and
    constructing the candidate combination list according to a cost corresponding to each of the $R$ second combinations.

8. The method of claim 7, wherein determining the cost corresponding to the second combination when performing predicting the first-component block by using the second combination comprises:

    determining weights for the first-component block according to the weight derivation mode in the second combination;

predicting the first-component block according to the *K* prediction modes in the second combination, to obtain *K* prediction values of the first-component block;

weighting the *K* prediction values of the first-component block according to the weights for the first-component block, to obtain a prediction value of the first-component block corresponding to the second combination; and

determining the cost corresponding to the second combination according to the prediction value of the first-component block corresponding to the second combination and a reconstructed value of the first-component block.

9. The method of claim 7, wherein determining the cost corresponding to the second combination when predicting the first-component block by using the second combination comprises:

determining, according to the weight derivation mode in the second combination, prediction values of the first-component block corresponding to the *K* prediction modes in the second combination;

determining costs corresponding to the *K* prediction modes in the second combination according to the prediction values of the first-component block corresponding to the *K* prediction modes in the second combination and a reconstructed value of the first-component block; and

determining the cost corresponding to the second combination according to the costs corresponding to the *K* prediction modes in the second combination.

10. The method of claim 9, wherein determining the cost corresponding to the second combination according to the costs corresponding to the *K* prediction modes in the second combination comprises:

determining a sum of the costs corresponding to the *K* prediction modes in the second combination as the cost corresponding to the second combination.

11. The method of any of claims 7 to 10, wherein determining the *R* second combinations comprises:

determining *P* weight derivation modes and *Q* prediction modes, wherein *P* is a positive integer, and *Q* is a positive integer and $Q \geq K$; and

constructing the *R* second combinations according to the *P* weight derivation modes and the *Q* prediction modes, wherein any one of the *R* second combinations comprises one of the *P* weight derivation modes and *K* prediction modes in the *Q* prediction modes.

12. The method of claim 11, wherein determining the *Q* prediction modes comprises:

determining at least one of a candidate prediction mode list of the current-component block, alternative prediction mode lists corresponding to the *K* first prediction modes, a prediction mode corresponding to the weight derivation mode, or a preset mode, wherein the candidate prediction mode list comprises a plurality of candidate prediction modes, and an alternative prediction mode list corresponding to any one of the *K* prediction modes comprises at least one alternative prediction mode; and

determining the *Q* prediction modes according to at least one of the candidate prediction mode list, the alternative prediction mode lists corresponding to the *K* prediction modes, or the prediction mode corresponding to the weight derivation mode.

13. The method of claim 11, wherein determining the candidate prediction mode list of the current-component block comprises:

determining at least one of a second prediction mode, a third prediction mode, a fourth prediction mode, or a fifth prediction mode, wherein the second prediction mode is applied to at least one of a first-component block, a second-component block, or a third-component block which is at a preset location; the third prediction mode is applied to at least one a first-component block, a second-component block, or a third-component block which has been decoded and neighbours the current-component block; the fourth prediction mode is applied to a first-component block corresponding to an internal preset region of the current-component block; and the fifth prediction mode is related to the first-component block corresponding to the current-component block; and

determining the candidate prediction mode list of the current-component block according to at least one of the second prediction mode, the third prediction mode, the fourth prediction mode, or the fifth prediction mode.

14. The method of claim 13, wherein determining the fifth prediction mode related to the first-component block corresponding to the current-component block comprises:

determining a texture direction of the first-component block corresponding to the current-component block; and determining the fifth prediction mode according to the texture direction.

15. The method of claim 14, wherein determining the fifth prediction mode according to the texture direction comprises:

   determining a prediction mode having a prediction direction parallel to the texture direction as the fifth prediction mode; and/or
   determining a prediction mode having a prediction direction perpendicular to the texture direction as the fifth prediction mode.

16. The method of claim 14, wherein determining the texture direction of the first-component block corresponding to the current-component block comprises:

   selecting a plurality of texture samples from the first-component block according to a preset manner for texture sample selection;
   determining texture directions corresponding to the plurality of texture samples; and
   determining one or more of the texture directions corresponding to the plurality of texture samples as the texture direction of the first-component block.

17. The method of claim 16, wherein determining one or more of the texture directions corresponding to the plurality of texture samples as the texture direction of the first-component block comprises:
   determining the most frequently appeared one or more of the texture directions corresponding to the plurality of texture samples as the texture direction of the first-component block.

18. The method of claim 10, wherein determining the $P$ weight derivation modes comprises:
   selecting the $P$ weight derivation modes from $M$ preset weight derivation modes, wherein M is a positive integer and $M \geq P$.

19. The method of any of claims 1 to 4, 6 to 10, and 12 to 18, wherein predicting the current-component block according to the first weight derivation mode and the $K$ first prediction modes to obtain the prediction value of the current-component block comprises:

   determining a first blending parameter; and
   predicting the current-component block according to the first blending parameter, the first weight derivation mode, and the $K$ first prediction modes, to obtain the prediction value of the current-component block.

20. The method of claim 19, wherein predicting the current-component block according to the first blending parameter, the first weight derivation mode, and the $K$ first prediction modes to obtain the prediction value of the current-component block comprises:

   determining weights of prediction values according to the first blending parameter and the first weight derivation mode;
   predicting the current-component block according to the $K$ first prediction modes to obtain $K$ prediction values; and
   weighting the $K$ prediction values according to the weights of the prediction values, to obtain the prediction value of the current-component block.

21. The method of any of claims 1 to 4, 6 to 10, and 12 to 18, wherein the first combination comprises a second blending parameter, and predicting the current-component block according to the first weight derivation mode and the $K$ first prediction modes to obtain the prediction value of the current-component block comprises:
   predicting the current-component block according to the second blending parameter, the first weight derivation mode, and the $K$ first prediction modes, to obtain the prediction value of the current-component block.

22. The method of claim 21, wherein predicting the current-component block according to the second blending parameter, the first weight derivation mode, and the $K$ first prediction modes to obtain the prediction value of the current-component block comprises:

   determining weights of prediction values according to the second blending parameter and the first weight derivation mode;

predicting the current-component block according to the *K* first prediction modes to obtain *K* prediction values; and

weighting the *K* prediction values according to the weights of the prediction values, to obtain the prediction value of the current-component block.

23. The method of any of claims 1 to 4, 6 to 10, and 12 to 18, wherein the first weight derivation mode comprises a third blending parameter, and predicting the current-component block according to the first weight derivation mode and the *K* first prediction modes to obtain the prediction value of the current-component block comprises:

predicting the current-component block according to the third blending parameter and the *K* first prediction modes, to obtain the prediction value of the current-component block.

24. The method of claim 23, wherein predicting the current-component block according to the third blending parameter and the *K* first prediction modes to obtain the prediction value of the current-component block comprises:

determining weights of prediction values according to the third blending parameter;

predicting the current-component block according to the *K* first prediction modes to obtain *K* prediction values; and

weighting the *K* prediction values according to the weights of the prediction values, to obtain the prediction value of the current-component block.

25. The method of any of claims 1 to 4, 6 to 10, and 12 to 18, further comprising:

decoding the bitstream to obtain at least one flag, wherein the at least one flag indicates whether to use the first combination to decode the current-component block; and

decoding the bitstream to determine the first combination comprises:

decoding the bitstream to determine the first combination, when the at least one flag indicates to use the first combination to decode the current-component block.

26. The method of claim 25, wherein the at least one flag comprises at least one of a sequence-level flag, a picture-level flag, a slice-level flag, a unit-level flag, or a block-level flag.

27. A video encoding method, comprising:

determining a first combination, wherein the first combination comprises a first weight derivation mode and *K* first prediction modes, and *K* is a positive integer and *K* > 1; and

predicting a current-component block according to the first weight derivation mode and the *K* first prediction modes, to obtain a prediction value of the current-component block, wherein the current-component block comprises a second-component block or a third-component block.

28. The method of claim 27, wherein determining the first combination comprises:

determining a candidate combination list, wherein the candidate combination list comprises at least one candidate combination, and any one of the at least one candidate combination comprises one weight derivation mode and *K* prediction modes; and

determining the first combination according to the candidate combination list.

29. The method of claim 28, wherein the method further comprises:

skipping signalling a first index into a bitstream when the candidate combination list comprises one candidate combination, wherein the first index indicates the first combination.

30. The method of claim 28, further comprising:

signalling a first index into a bitstream when the candidate combination list comprises a plurality of candidate combinations, where the first index indicates the first combination.

31. The method of any of claims 28 to 30, wherein determining the candidate combination list comprises:

determining a first-component block corresponding to the current-component block; and

constructing the candidate combination list based on the first-component block.

32. The method of claim 31, wherein the first-component block is a first-component block in a current picture which is in the same space as the current-component block.

33. The method of claim 31, wherein constructing the candidate combination list based on the first-component block comprises:

> determining $R$ second combinations, wherein any one of the $R$ second combinations comprises one weight derivation mode and $K$ prediction modes, and $R$ is a positive integer and $R > 1$;
> for any one of the $R$ second combinations, determining a cost corresponding to the second combination when predicting the first-component block by using the second combination; and
> constructing the candidate combination list according to a cost corresponding to each of the R second combinations.

34. The method of claim 33, wherein determining the cost corresponding to the second combination when performing predicting the first-component block by using the second combination comprises:

> determining weights for the first-component block according to the weight derivation mode in the second combination;
> predicting the first-component block according to the $K$ prediction modes in the second combination, to obtain $K$ prediction values of the first-component block;
> weighting the $K$ prediction values of the first-component block according to the weights for the first-component block, to obtain a prediction value of the first-component block corresponding to the second combination; and
> determining the cost corresponding to the second combination according to the prediction value of the first-component block corresponding to the second combination and a reconstructed value of the first-component block.

35. The method of claim 33, wherein determining the cost corresponding to the second combination when predicting the first-component block by using the second combination comprises:

> determining, according to the weight derivation mode in the second combination, prediction values of the first-component block corresponding to the $K$ prediction modes in the second combination;
> determining costs corresponding to the $K$ prediction modes in the second combination according to the prediction values of the first-component block corresponding to the $K$ prediction modes in the second combination and a reconstructed value of the first-component block; and
> determining the cost corresponding to the second combination according to the costs corresponding to the $K$ prediction modes in the second combination.

36. The method of claim 35, wherein determining the cost corresponding to the second combination according to the costs corresponding to the $K$ prediction modes in the second combination comprises:
determining a sum of the costs corresponding to the $K$ prediction modes in the second combination as the cost corresponding to the second combination.

37. The method of any of claims 33 to 36, wherein determining the $R$ second combinations comprises:

> determining $P$ weight derivation modes and $Q$ prediction modes, wherein $P$ is a positive integer, and $Q$ is a positive integer and $Q \geq K$; and
> constructing the $R$ second combinations according to the $P$ weight derivation modes and the $Q$ prediction modes, wherein any one of the $R$ second combinations comprises one of the $P$ weight derivation modes and $K$ prediction modes in the $Q$ prediction modes.

38. The method of claim 37, wherein determining the $Q$ prediction modes comprises:

> determining at least one of a candidate prediction mode list of the current-component block, alternative prediction mode lists corresponding to the $K$ first prediction modes, a prediction mode corresponding to the weight derivation mode, or a preset mode, wherein the candidate prediction mode list comprises a plurality of candidate prediction modes, and an alternative prediction mode list corresponding to any one of the $K$ prediction modes comprises at least one alternative prediction mode; and
> determining the $Q$ prediction modes according to at least one of the candidate prediction mode list, the alternative prediction mode lists corresponding to the $K$ prediction modes, or the prediction mode corresponding to the weight derivation mode.

39. The method of claim 11, wherein determining the candidate prediction mode list of the current-component block comprises:

determining at least one of a second prediction mode, a third prediction mode, a fourth prediction mode, or a fifth prediction mode, wherein the second prediction mode is applied to at least one of a first-component block, a second-component block, or a third-component block which is at a preset location; the third prediction mode is applied to at least one a first-component block, a second-component block, or a third-component block which has been encoded and neighbours the current-component block; the fourth prediction mode is applied to a first-component block corresponding to an internal preset region of the current-component block; and the fifth prediction mode is related to the first-component block corresponding to the current-component block; and determining the candidate prediction mode list of the current-component block according to at least one of the second prediction mode, the third prediction mode, the fourth prediction mode, or the fifth prediction mode.

40. The method of claim 39, wherein determining the fifth prediction mode related to the first-component block corresponding to the current-component block comprises:

determining a texture direction of the first-component block corresponding to the current-component block; and determining the fifth prediction mode according to the texture direction.

41. The method of claim 40, wherein the determining the fifth prediction mode according to the texture direction comprises:

determining a prediction mode that is parallel to an angle of the texture direction as the fifth prediction mode; and/or determining a prediction mode that is perpendicular to the angle of the texture direction as the fifth prediction mode.

42. The method of claim 40, wherein determining the texture direction of the first-component block corresponding to the current-component block comprises:

selecting a plurality of texture samples from the first-component block according to a preset manner for texture sample selection; determining texture directions corresponding to the plurality of texture samples; and determining one or more of the texture directions corresponding to the plurality of texture samples as the texture direction of the first-component block.

43. The method of claim 42, wherein determining one or more of the texture directions corresponding to the plurality of texture samples as the texture direction of the first-component block comprises: determining the most frequently appeared one or more of the texture directions corresponding to the plurality of texture samples as the texture direction of the first-component block.

44. The method of claim 37, wherein determining the $P$ weight derivation modes comprises: selecting the $P$ weight derivation modes from $M$ preset weight derivation modes, wherein $M$ is a positive integer and $M \geq P$.

45. The method of any of claims 27 to 30, 32 to 36, and 38 to 44, wherein predicting the current-component block according to the first weight derivation mode and the $K$ first prediction modes to obtain the prediction value of the current-component block comprises:

determining a first blending parameter; and predicting the current-component block according to the first blending parameter, the first weight derivation mode, and the $K$ first prediction modes, to obtain the prediction value of the current-component block.

46. The method of claim 45, wherein predicting the current-component block according to the first blending parameter, the first weight derivation mode, and the $K$ first prediction modes to obtain the prediction value of the current-component block comprises:

> determining weights of prediction values according to the first blending parameter and the first weight derivation mode;
> predicting the current-component block according to the $K$ first prediction modes to obtain $K$ prediction values; and
> weighting the $K$ prediction values according to the weights of the prediction values, to obtain the prediction value of the current-component block.

47. The method of any of claims 27 to 30, 32 to 36, and 38 to 44, wherein the first combination comprises a second blending parameter, and predicting the current-component block according to the first weight derivation mode and the $K$ first prediction modes to obtain the prediction value of the current-component block comprises:
predicting the current-component block according to the second blending parameter, the first weight derivation mode, and the K first prediction modes, to obtain the prediction value of the current-component block.

48. The method of claim 47, wherein predicting the current-component block according to the second blending parameter, the first weight derivation mode, and the $K$ first prediction modes to obtain the prediction value of the current-component block comprises:

> determining weights of prediction values according to the second blending parameter and the first weight derivation mode;
> predicting the current-component block according to the $K$ first prediction modes to obtain $K$ prediction values; and
> weighting the $K$ prediction values according to the weights of the prediction values, to obtain the prediction value of the current-component block.

49. The method of any of claims 27 to 30, 32 to 36, and 38 to 44, wherein the first weight derivation mode comprises a third blending parameter, and predicting the current-component block according to the first weight derivation mode and the $K$ first prediction modes to obtain the prediction value of the current-component block comprises:
predicting the current-component block according to the third blending parameter and the $K$ first prediction modes, to obtain the prediction value of the current-component block.

50. The method of claim 49, wherein predicting the current-component block according to the third blending parameter and the $K$ first prediction modes to obtain the prediction value of the current-component block comprises:

> determining weights of prediction values according to the third blending parameter;
> predicting the current-component block according to the $K$ first prediction modes to obtain $K$ prediction values; and
> weighting the $K$ prediction values according to the weights of the prediction values, to obtain the prediction value of the current-component block.

51. The method of any of claims 27 to 30, 32 to 36, and 38 to 44, further comprising:

> determining at least one flag, wherein at least one flag indicates whether to use the first combination to decode the current-component block; and
> determining the first combination comprises:
> determining the first combination when the at least one flag indicates to use the first combination to decode the current-component block.

52. The method of claim 51, wherein the at least one flag comprises at least one of a sequence-level flag, a picture-level flag, a slice-level flag, a unit-level flag, or a block-level flag.

53. A video decoding apparatus, comprising:

> a decoding unit configured to decode a bitstream to determine a first combination, wherein the first combination comprises a first weight derivation mode and $K$ first prediction modes, and $K$ is a positive integer and $K > 1$; and
> a prediction unit configured to predict a current-component block according to the first weight derivation mode and the $K$ first prediction modes, to obtain a prediction value of the current-component block.

**54.** A video coding apparatus, comprising:

a determining unit configured to determine a first combination, wherein the first combination comprises a first weight derivation mode and $K$ first prediction modes, and $K$ is a positive integer and $K > 1$; and
a prediction unit configured to predict a current-component block according to the first weight derivation mode and the $K$ first prediction modes, to obtain a prediction value of the current-component block.

**55.** An electronic device, comprising:

a memory configured to store computer programs; and
a processor configured to invoke and execute the computer programs stored in the memory, to implement the method of any of claims 1 to 26 or 27 to 52.

**56.** A video coding system, comprising:

a video decoder configured to implement the method of any of claims 1 to 26; and
a video encoder configured to implement the method of any of claims 27 to 52.

**57.** A computer-readable storage medium configured to store computer programs which are operable with a computer to implement the method of any of claims 1 to 26 or 27 to 52.

**58.** A bitstream, generated based on the method of any of claims 27 to 52.

FIG. 1

FIG. 2

FIG. 3

VIDEO DECODER 300

BITSTREAM

ENTROPY DECODING UNIT 310

INVERSE QUANTIZATION/ TRANSFORM UNIT 330

PREDICTION UNIT 320

INTER PREDICTION UNIT 321

INTRA PREDICTION UNIT 322

340

IN-LOOP FILTERING UNIT 350

DECODED PICTURE BUFFER 360

VIDEO DATA

FIG. 4

FIG. 5

FIG. 6A

FIG. 6B

FIG. 7A

FIG. 7B

FIG. 8A          FIG. 8B          FIG. 8C

FIG. 8D          FIG. 8E          FIG. 8F

FIG. 8G          FIG. 8H          FIG. 8I

0: PLANAR MODE
1: DC

FIG. 9

0: PLANAR MODE
1: DC

FIG. 10

FIG. 11

FIG. 12

FIRST PREDICTION MODE

FIRST
PREDICTION
BLOCK

CURRENT
BLOCK

WEIGHT
MATRIX

NEW
PREDICTION
BLOCK

SECOND
PREDICTION
BLOCK

SECOND PREDICTION MODE

FIG. 13

TEMPLATE

CURRENT
BLOCK

REFERENCE PICTURE

CURRENT PICTURE

FIG. 14

$Rec'_L$

LUMA

2N

2N

$Rec_C$

CHROMA

N

N

**FIG. 15**

DECODE BITSTREAM TO DETERMINE FIRST COMBINATION — S101

PREDICT CURRENT-COMPONENT BLOCK ACCORDING TO FIRST WEIGHT DERIVATION MODE AND K FIRST PREDICTION MODES, TO OBTAIN PREDICTION VALUE OF CURRENT-COMPONENT BLOCK — S102

**FIG. 16**

FIG. 17A          FIG. 17B          FIG. 17C          FIG. 17D

FIG. 17E

FIG. 17F

FIG. 18

FIG. 19A

FIG. 19B

```
┌─────────────────────────────────────────┐
│                                         │
│    DETERMINE FIRST COMBINATION          │  ∿  S201
│                                         │
└─────────────────────────────────────────┘
                    │
                    ▼
┌─────────────────────────────────────────┐
│   PREDICT CURRENT-COMPONENT BLOCK       │
│  ACCORDING TO FIRST WEIGHT DERIVATION   │
│  MODE AND K FIRST PREDICTION MODES, TO  │  ∿  S202
│  OBTAIN PREDICTION VALUE OF CURRENT-    │
│          COMPONENT BLOCK                 │
└─────────────────────────────────────────┘
```

FIG. 20

```
┌───────────────────────────────────────────┐
│  VIDEO DECODING APPARATUS 10              │
│                                           │
│        ┌───────────────────────┐          │
│        │   DECODING UNIT 11     │          │
│        └───────────────────────┘          │
│                    │                      │
│        ┌───────────────────────┐          │
│        │  PREDICTION UNIT 12    │          │
│        └───────────────────────┘          │
│                                           │
└───────────────────────────────────────────┘
```

FIG. 21

VIDEO ENCODING APPARATUS 20

DETERMINING UNIT 21

PREDICTION UNIT 22

FIG. 22

30

ELECTRONIC DEVICE

33

TRANSCEIVER

31

MEMORY

COMPUTER
PROGRAMS

PROCESSOR

32

34

FIG. 23

VIDEO CODING SYSTEM 40

VIDEO ENCODER 41 — VIDEO DECODER 42

FIG. 24

## INTERNATIONAL SEARCH REPORT

| International application No. |
|---|
| **PCT/CN2022/103734** |

**A.    CLASSIFICATION OF SUBJECT MATTER**

H04N 19/105(2014.01)i;H04N 19/107(2014.01)i;H04N 19/50(2014.01)i;H04N 19/119(2014.01)i

According to International Patent Classification (IPC) or to both national classification and IPC

**B.    FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNABS; VCN; CNKI: 编码, 解码, 预测, 权重, 加权, 组合, 一组, 多个, 候选, 指示, 标志, 标识, 索引, 分量, 块, 色度, 亮度, 代价, 纹理; VEN; ENTXT: encod+, decod+, prediction, weight+, group, combination, multi+, candidate, indicat+, index, block, chroma+, chrominance, luminance, cost, texture

**C.    DOCUMENTS CONSIDERED TO BE RELEVANT**

| Category* | Citation of document, with indication, where appropriate, of the relevant passages | Relevant to claim No. |
|---|---|---|
| X | WO 2022116113 A1 (GUANGDONG OPPO MOBILE TELECOMMUNICATIONS CORP., LTD.) 09 June 2022 (2022-06-09)<br>  description, paragraphs 0078-0149 and 0239-0249 | 1, 19-27, 45-58 |
| Y | WO 2022116113 A1 (GUANGDONG OPPO MOBILE TELECOMMUNICATIONS CORP., LTD.) 09 June 2022 (2022-06-09)<br>  description, paragraphs 0078-0149 and 0239-0249 | 2-18, 28-44 |
| Y | US 2020177878 A1 (LG ELECTRONICS INC.) 04 June 2020 (2020-06-04)<br>  description, paragraphs 0222-0228 | 2-18, 28-44 |
| A | CN 113170109 A (INTERDIGITAL VC HOLDINGS, INC.) 23 July 2021 (2021-07-23)<br>  entire document | 1-58 |
| A | WO 2022104498 A1 (GUANGDONG OPPO MOBILE TELECOMMUNICATIONS CORP., LTD.) 27 May 2022 (2022-05-27)<br>  entire document | 1-58 |

☑ Further documents are listed in the continuation of Box C.          ☑ See patent family annex.

| | | |
|---|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family | |

| Date of the actual completion of the international search | Date of mailing of the international search report |
|---|---|
| **16 March 2023** | **20 March 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/103734**

**C.    DOCUMENTS CONSIDERED TO BE RELEVANT**

| Category* | Citation of document, with indication, where appropriate, of the relevant passages | Relevant to claim No. |
|---|---|---|
| A | WO 2022117089 A1 (GUANGDONG OPPO MOBILE TELECOMMUNICATIONS CORP., LTD.) 09 June 2022 (2022-06-09)<br>entire document | 1-58 |

Form PCT/ISA/210 (second sheet) (July 2022)

**INTERNATIONAL SEARCH REPORT**
**Information on patent family members**

International application No.

**PCT/CN2022/103734**

| Patent document cited in search report | | | Publication date (day/month/year) | Patent family member(s) | | | Publication date (day/month/year) |
|---|---|---|---|---|---|---|---|
| WO | 2022116113 | A1 | 09 June 2022 | None | | | |
| US | 2020177878 | A1 | 04 June 2020 | WO | 2018236028 | A1 | 27 December 2018 |
| | | | | US | 11190762 | B2 | 30 November 2021 |
| CN | 113170109 | A | 23 July 2021 | US | 2022014778 | A1 | 13 January 2022 |
| | | | | EP | 3888357 | A1 | 06 October 2021 |
| | | | | WO | 2020112440 | A1 | 04 June 2020 |
| WO | 2022104498 | A1 | 27 May 2022 | CN | 114830651 | A | 29 July 2022 |
| WO | 2022117089 | A1 | 09 June 2022 | WO | 2022116317 | A1 | 09 June 2022 |

Form PCT/ISA/210 (patent family annex) (July 2022)